# EUROPEAN PATENT APPLICATION

(11) **EP 4 351 191 A1**
(43) Date of publication of application: **10.04.2024**
(21) Application number: 22815884.6
(22) Date of filing: 20.05.2022
(51) Int. Cl.: H04W 8/26, H04W 16/26, H04W 40/22, H04W 72/04, H04W 4/06

(54) **COMMUNICATION SYSTEM AND BASE STATION**

(30) Priority: 02.06.2021 JP 2021092762
(71) Applicant: MITSUBISHI ELECTRIC CORPORATION, Chiyoda-ku Tokyo 100-8310 (JP)
(72) Inventor: SHIMODA, Tadahiro, Tokyo 100-8310 (JP); MOCHIZUKI, Mitsuru, Tokyo 100-8310 (JP)
(74) Representative: Meissner Bolte Partnerschaft mbB
(86) International application number: PCT/JP2022/021015
(87) International publication number: WO 2022/255133

(57) **Abstract**

A communication system is configured with a central unit (IAB-Donor CU) and a distributed unit (IAB-Donor DU), includes a first base station that operates as a donor for integrated access and backhaul and one or more second base stations that operate as nodes (IAB-node) for the integrated access and backhaul, and the central unit performs address configuration for multicasting data from a central unit toward a communication terminal in a backhaul adaptation layer in which data transmitted and received by the communication terminal is routed, on the distributed unit and the second base stations.

## Description

### Field

The present disclosure relates to a radio communication technology.

### Background

The 3rd Generation Partnership Project (3GPP), which is a standard organization of mobile communication systems, has been studying a communication system called long term evolution (LTE) for radio sections and called system architecture evolution (SAE) for an entire system configuration including a core network and a radio access network (hereinafter, also collectively referred to as a network) (for example, Non Patent Literatures 1 to 5). The communication system is also referred to as a 3.9 generation (3.9 G) system.

As an access scheme of LTE, orthogonal frequency division multiplexing (OFDM) is used in a downlink direction, and single carrier frequency division multiple access (SC-FDMA) is used in an uplink direction. In addition, unlike wideband code division multiple access (W-CDMA), LTE does not provide circuit switching and provides only a packet communication system.

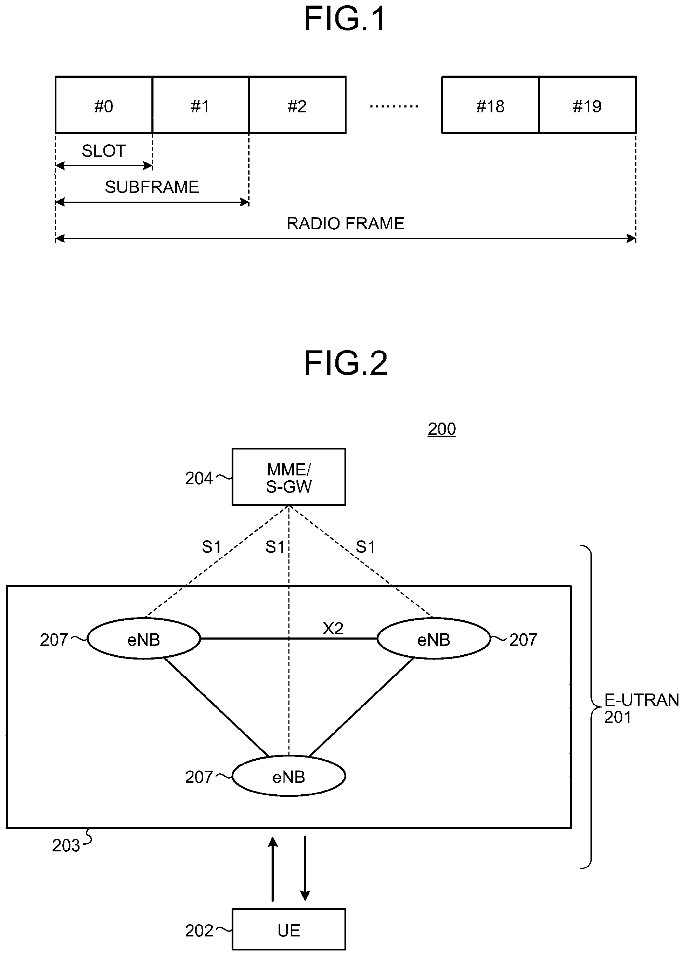

Decisions by 3GPP regarding a frame configuration in an LTE system described in Non Patent Literature 1 (Chapter 5) will be described with reference to FIG. 1. FIG. 1 is an explanatory diagram illustrating a configuration of a radio frame used in an LTE communication system. In FIG. 1, one radio frame is 10 ms. The radio frame is divided into 10 equally sized subframes. The subframe is divided into two equally sized slots. Downlink synchronization signals are included in first and sixth subframes in each radio frame. The synchronization signals are classified into a primary synchronization signal (P-SS) and a secondary synchronization signal (S-SS).

Decisions by 3GPP regarding a channel configuration in the LTE system are described in Non Patent Literature 1 (Chapter 5). It is assumed that also in a closed subscriber group (CSG) cell, the same channel configuration as that of a non-CSG cell is used.

A physical broadcast channel (PBCH) is a channel for downlink transmission from a base station device (hereinafter, sometimes simply referred to as a "base station") to a communication terminal device (hereinafter, sometimes simply referred to as a "communication terminal") such as a user equipment device (hereinafter, sometimes simply referred to as "user equipment"). A BCH transport block is mapped to four subframes in a 40-ms interval. There is no explicit signaling of 40-ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted on a per subframe basis.

A physical downlink control channel (PDCCH) is a channel for downlink transmission from a base station to a communication terminal. The PDCCH provides resource allocation information of a downlink shared channel (DL-SCH) which is one of transport channels to be described later, resource allocation information of a paging channel (PCH) which is one of the transport channels to be described later, and hybrid automatic repeat request (HARQ) information about the DL-SCH. The PDCCH carries an uplink scheduling grant. The PDCCH carries acknowledgement (Ack)/negative acknowledgement (Nack) which is a response signal to uplink transmission. The PDCCH is also referred to as an L1/L2 control signal.

A physical downlink shared channel (PDSCH) is a channel for downlink transmission from a base station to a communication terminal. The downlink shared channel (DL-SCH) which is a transport channel and the PCH which is a transport channel are mapped to the PDSCH.

A physical multicast channel (PMCH) is a channel for downlink transmission from a base station to a communication terminal. A multicast channel (MCH) which is a transport channel is mapped to the PMCH.

A physical uplink control channel (PUCCH) is a channel for uplink transmission from a communication terminal to a base station. The PUCCH carries Ack/Nack which is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in MIMO. The PMI is information on a precoding weight matrix used in MIMO. The CQI is quality information indicating quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) which is one of the transport channels is mapped to the PUSCH.

A physical hybrid ARQ (HARQ) indicator channel (PHICH) is a channel for downlink transmission from a base station to a communication terminal. The PHICH carries Ack/Nack which is a response signal to uplink transmission. A physical random access channel (PRACH) is a channel for uplink transmission from a communication terminal to a base station. The PRACH carries a random access preamble.

A downlink reference signal (RS) is a symbol known in the LTE communication system. The following five types of downlink reference signals are defined. The signals are cell-specific reference signal (CRS), an MBSFN reference signal, a data demodulation reference signal (DM-RS) which is a UE-specific reference signal, a positioning reference signal (PRS), and a channel state information reference signal (CSI-RS). As a measurement of a physical layer of a communication terminal, there is a measurement of reference signal received power (RSRP).

Similarly, an uplink reference signal is a symbol known in the LTE communication system. The following two types of uplink reference signals are defined. The signals are a data demodulation reference signal (DMRS) and a sounding reference signal (SRS).

Transport channels described in Non Patent Literature 1 (Chapter 5) will be described. Among downlink transport channels, a broadcast channel (BCH) is broadcast in the entire coverage area of the base station (cell). The BCH is mapped to the physical broadcast channel (PBCH).

Retransmission control by hybrid ARQ (HARQ) is applied to the downlink shared channel (DL-SCH). The DL-SCH can be broadcast in the entire coverage area of the base station (cell). The DL-SCH supports dynamic or semi-static resource allocation. The semi-static resource allocation is also referred to as persistent scheduling. The DL-SCH supports discontinuous reception (DRX) of a communication terminal in order to reduce power consumption of the communication terminal. The DL-SCH is mapped to the physical downlink shared channel (PDSCH).

The paging channel (PCH) supports DRX of a communication terminal in order to enable the communication terminal to reduce power consumption. The PCH is required to be broadcast in the entire coverage area of the base station (cell). The PCH is mapped to a physical resource such as the physical downlink shared channel (PDSCH) that can be dynamically used for traffic.

A multicast channel (MCH) is used for broadcast in the entire coverage area of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control by hybrid ARQ (HARQ) is applied to the uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH has a risk of collision. The RACH is mapped to the physical random access channel (PRACH).

The HARQ will be described. The HARQ is a technology for improving communication quality of a transmission path by a combination of automatic repeat request (ARQ) and error correction (forward error correction). The HARQ has an advantage that error correction effectively functions by retransmission even for a transmission path whose communication quality changes. In particular, it is also possible to further improve the quality in retransmission by combining a reception result of first transmission and a reception result of the retransmission.

An example of a retransmission method will be described. In a case where a receiver cannot correctly decode received data, in other words, in a case where a cyclic redundancy check (CRC) error occurs (CRC=NG), "Nack" is transmitted from the receiver to a transmitter. The transmitter that has received "Nack" retransmits the data. In a case where the receiver can correctly decode received data, in other words, in a case where a CRC error does not occur (CRC=OK), "Ack" is transmitted from the receiver to the transmitter. The transmitter that has received "Ack" transmits next data.

A logical channel described in Non Patent Literature 1 (Chapter 6) will be described. A broadcast control channel (BCCH) is a downlink channel for broadcast system control information. The BCCH which is a logical channel is mapped to the broadcast channel (BCH) or the downlink shared channel (DL-SCH) each of which is a transport channel.

A paging control channel (PCCH) is a downlink channel for transmitting changes in paging information and system information. The PCCH is used in a case when the network does not know the cell location of a communication terminal. The PCCH which is a logical channel is mapped to the paging channel (PCH) which is a transport channel.

A common control channel (CCCH) is a channel for transmission control information between a communication terminal and a base station. The CCCH is used in a case where the communication terminal has no RRC connection with the network. In the downlink direction, the CCCH is mapped to the downlink shared channel (DL-SCH) which is a transport channel. In the uplink direction, the CCCH is mapped to the uplink shared channel (UL-SCH) which is a transport channel.

A multicast control channel (MCCH) is a downlink channel for point-to-multipoint transmission. The MCCH is used for transmission of MBMS control information for one or several MTCHs from the network to a communication terminal. The MCCH is used only by a communication terminal that is receiving the MBMS. The MCCH is mapped to the multicast channel (MCH) which is a transport channel.

A dedicated control channel (DCCH) is a channel for transmitting dedicated control information between a communication terminal and the network on a point-to-point basis. The DCCH is used in a case where the communication terminal has an RRC connection. The DCCH is mapped to the uplink shared channel (UL-SCH) in uplink, and is mapped to the downlink shared channel (DL-SCH) in downlink.

A dedicated traffic channel (DTCH) is a point-to-point communication channel for transmitting user information to a dedicated communication terminal. The DTCH exists in both uplink and downlink. The DTCH is mapped to the uplink shared channel (UL-SCH) in uplink, and is mapped to the downlink shared channel (DL-SCH) in downlink.

A multicast traffic channel (MTCH) is a downlink channel for transmitting traffic data from the network to a communication terminal. The MTCH is a channel used only by a communication terminal that is receiving the MBMS. The MTCH is mapped to the multicast channel (MCH).

CGI represents a cell global identifier. ECGI represents an E-UTRAN cell global identifier. A closed subscriber group (CSG) cell is introduced into LTE, long term evolution advanced (LTE-A) described later, and universal mobile telecommunication system (UMTS).

Location tracking of communication terminals is performed in units of areas each including one or more cells. The location tracking is performed in order to track the location of a communication terminal to call the communication terminal, in other words, in order to enable the communication terminal to receive an incoming call, even in an idle state. An area for the location tracking of communication terminals is referred to as a tracking area.

Furthermore, in 3GPP, as Release 10, formulation of long term evolution advanced (LTE-A) standard is in progress (see Non Patent Literatures 3 and 4). LTE-A is based on an LTE radio section communication system, and is configured by adding some new technologies to the system.

Regarding the LTE-A system, in order to support wider transmission bandwidths up to 100 MHz, carrier aggregation (CA) for aggregating two or more component carriers (CCs) is under study. The CA is described in Non Patent Literature 1.

In a case where the CA is configured, a UE which is a communication terminal has only one RRC connection with a network (NW). In the RRC connection, one serving cell provides NAS mobility information and security input. This cell is referred to as a primary cell (PCell). In downlink, a carrier corresponding to the PCell is a downlink primary component carrier (DL PCC). In uplink, a carrier corresponding to the PCell is an uplink primary component carrier (UL PCC).

Depending on the capability of the UE, a secondary cell (SCell) is configured to form a set of serving cells with the PCell. In downlink, a carrier corresponding to the SCell is a downlink secondary component carrier (DL SCC). In uplink, a carrier corresponding to the SCell is an uplink secondary component carrier (UL SCC).

A set of serving cells including one PCell and one or more SCells is configured for one UE.

In addition, new technologies in LTE-A include a technology for supporting wider bands (wider bandwidth extension), a coordinated multiple point transmission and reception (CoMP) technology. The CoMP studied for LTE-A in 3GPP is described in Non Patent Literature 1.

In addition, use of a small eNB (hereinafter, sometimes referred to as a "small-scale base station device") configuring a small cell has been studied in 3GPP in order to cope with enormous traffic in the future. For example, a technology is under study with which a large number of small eNBs are installed to configure a large number of small cells, thereby improving spectral efficiency to increase communication capacity. Specifically, there is dual connectivity (abbreviated as DC) with which a UE is connected to two eNBs to perform communication. The DC is described in Non Patent Literature 1.

One of the eNBs that perform dual connectivity (DC) may be referred to as a "master eNB (abbreviated as MeNB)", and the other thereof may be referred to as a "secondary eNB (abbreviated as SeNB)".

The traffic volume of a mobile network is on the increase, and the communication speed is also increasing. When operations of LTE and LTE-A are fully started, the communication speed is expected to be further increased.

Furthermore, for increasingly advanced mobile communication, a fifth generation (hereinafter, sometimes referred to as "5G") radio access system has been studied whose service is aimed to be launched in or after 2020. For example, in Europe, 5G requirements are compiled by an organization called METIS (see Non Patent Literature 5).

For the 5G radio access system, the followings are exemplified as requirements: as compared with the LTE system, the system capacity is 1000 times, the data transmission speed is 100 times, the data processing latency is one-tenth (1/10), the number of simultaneously connected communication terminals is 100 times, and further reduction in power consumption and reduction in device cost are achieved.

In order to satisfy such requirements, 5G standards have been studied as Release 15 in 3GPP (see Non Patent Literatures 6 to 19). The technology of 5G radio sections is referred to as "new radio access technology" ("new radio" is abbreviated as "NR").

An NR system has been studied on the basis of the LTE system and the LTE-A system, but includes additions and changes from the LTE system and the LTE-A system in the following points.

As an access scheme of NR, OFDM is used in the downlink direction, and OFDM and DFT-spread-OFDM (DFT-s-OFDM) are used in the uplink direction.

In NR, frequencies higher than those in LTE can be used to improve the transmission speed and to reduce the processing latency.

In NR, cell coverage is ensured by forming a narrow beam-shaped transmission/reception range (beamforming) and changing a direction of the beam (beam sweeping).

In a frame configuration of NR, various subcarrier spacings, that is, various numerologies, are supported. Regardless of the numerologies, one subframe is 1 millisecond long, and one slot includes 14 symbols in NR. In addition, the number of slots included in one subframe is one in a numerology with a subcarrier spacing of 15 kHz, and increases in proportion to subcarrier spacings in other numerologies (see Non Patent Literature 13 (3GPP TS38.211)).

A downlink synchronization signal in NR is transmitted as a synchronization signal burst (hereinafter, sometimes referred to as an SS burst) from a base station at a predetermined period for a predetermined duration. The SS burst includes a synchronization signal block (hereinafter, sometimes referred to as an SS block) for each beam of the base station.

The base station transmits the SS blocks of respective beams within the duration of the SS burst while changing the beams. The SS block includes the P-SS, the S-SS, and the PBCH.

In NR, a phase tracking reference signal (PTRS) is added as a downlink reference signal of NR, and thereby an influence of phase noise is reduced. Regarding an uplink reference signal as well, the PTRS is added similarly to the downlink.

In NR, a slot format indication (SFI) has been added to information included in the PDCCH in order to perform flexible switching between the DL and the UL in a slot.

Furthermore, in NR, the base station sets a part of a carrier frequency band (hereinafter, sometimes referred to as bandwidth part (BWP)) in advance for a UE, and the UE performs transmission and reception with the base station in the BWP, thereby reducing power consumption in the UE.

In 3GPP, as a form of the DC, DC performed by an LTE base station and an NR base station connected to an EPC, DC performed by NR base stations connected to a 5G core system, and DC performed by an LTE base station and an NR base station connected to the 5G core system have been studied (see Non Patent Literatures 12, 16, and 19).

Furthermore, in 3GPP, support of a service (or may be application) using Side Link (SL) communication (also referred to as PC5 communication) in an Evolved Packet System (EPS) to be described later and a 5G core system has been studied (refer to Non Patent Literatures 1, 16, 20, 21, 22, and 23). In the SL communication, communication is performed between terminals. As the service using the SL communication, for example, there is a Vehicle-to-everything (V2X) service, a proximity service, or the like. In the SL communication, not only direct communication between terminals but also communication been a UE and a NW via a relay have been proposed (refer to Non Patent Literatures 20, 23, 26, and 27).

Furthermore, some new technologies are studied in the 3GPP. For example, multicast using an NR has been studied. In the multicast using the NR, for example, a multicast scheme that ensures reliability and dynamic switching between Point To Multipoint (PTM) transmission and Point To Point (PTP) transmission have been studied (refer to Non Patent Literatures 28, 29, and 30). Furthermore, multicast in a base station with a Central Unit (CU)/Distributed Unit (DU) separation configuration has been also studied (refer to Non Patent Literature 31).

As another example, Integrated Access and Backhaul (IAB) in which both of an access link that is a link between the UE and the base station and a backhaul link that is a link between the base stations are wirelessly performed has been studied (refer to Non Patent Literatures 16, 32, and 33).

### Citation List

### Non Patent Literature

Non Patent Literature 1: 3GPP TS 36.300 V16.5.0
Non Patent Literature 2: 3GPP S1-083461
Non Patent Literature 3: 3GPP TR 36.814 V9.2.0
Non Patent Literature 4: 3GPP TR 36.912 V16.0.0
Non Patent Literature 5: "Scenarios, requirements and KPIs for 5G mobile and wireless system", ICT-317669-METIS/D1.1
Non Patent Literature 6: 3GPP TR 23.799 V14.0.0
Non Patent Literature 7: 3GPP TR 38.801 V14.0.0
Non Patent Literature 8: 3GPP TR 38.802 V14.2.0
Non Patent Literature 9: 3GPP TR 38.804 V14.0.0
Non Patent Literature 10: 3GPP TR 38.912 V16.0.0
Non Patent Literature 11: 3GPP RP-172115
Non Patent Literature 12: 3GPP TS 37.340 V16.5.0
Non Patent Literature 13: 3GPP TS 38.211 V16.5.0
Non Patent Literature 14: 3GPP TS 38.213 V16.5.0
Non Patent Literature 15: 3GPP TS 38.214 V16.5.0
Non Patent Literature 16: 3GPP TS 38.300 V16.5.0
Non Patent Literature 17: 3GPP TS 38.321 V16.4.0
Non Patent Literature 18: 3GPP TS 38.212 V16.5.0
Non Patent Literature 19: 3GPP TS 38.331 V16.4.1
Non Patent Literature 20: 3GPP TR 23.703 V12.0.0
Non Patent Literature 21: 3GPP TS 23.501 V17.0.0
Non Patent Literature 22: 3GPP T S23.287 V16.5.0
Non Patent Literature 23: 3GPP TS 23.303 V16.0.0
Non Patent Literature 24: 3GPP TS 38.305 V16.4.0
Non Patent Literature 25: 3GPP TS 23.273 V17.0.0
Non Patent Literature 26: 3GPP R2-2009145
Non Patent Literature 27: 3GPP TR 38.836 V1.0.1
Non Patent Literature 28: 3GPP TR 23.757 V17.0.0
Non Patent Literature 29: 3GPP RP-201038
Non Patent Literature 30: 3GPP R2-2009337
Non Patent Literature 31: 3GPP R3-211029
Non Patent Literature 32: 3GPP RP-201293
Non Patent Literature 33: 3GPP TS 38.401 V16.5.0
Non Patent Literature 34: 3GPP TS 36.321 V16.4.0
Non Patent Literature 35: 3GPP TS 38.473 V16.5.0
Non Patent Literature 36: 3GPP TS 38.340 V16.4.0
Non Patent Literature 37: 3GPP TS 23.502 V17.0.0
Non Patent Literature 38: 3GPP TS 38.413 V16.5.0
Non Patent Literature 39: 3GPP TS 38.323 V16.3.0
Non Patent Literature 40: 3GPP TS 38.322 V16.2.0
Non Patent Literature 41: 3GPP R3-210017

### Summary of Invention

### Problem to be solved by the Invention

A 5G-scheme base station can support Integrated Access and Backhaul (IAB) (refer to Non Patent Literature 16 (TS38.300)). Furthermore, it has been proposed to perform multicasting using a base station supporting the IAB (hereinafter, may be referred to as IAB base station) (refer to Non Patent Literature 41 (R3-210017)). However, a detailed method for configuring the multicast in the IAB base station, in particular, a configuration of a Backhaul Adaptation Protocol (BAP) layer where routing between IAB nodes or the like is performed, or the like is not disclosed. Therefore, there is a problem in that multicast using the IAB base station cannot be realized.

In view of the above problems, one object of the present disclosure is to enable multicast transmission in a communication system to which integrated access and backhaul is applied.

### Means to Solve the Problem

A communication system according to the present disclosure includes: a first base station to operate as a donor for integrated access and backhaul, the first base station including a central unit and a distributed unit; and one or more second base stations to operate as nodes for the integrated access and backhaul, wherein the central unit performs address configuration for multicasting data from the central unit toward a communication terminal in a backhaul adaptation layer in which data transmitted and received by the communication terminal is routed, on the distributed unit and the second base stations.

### Effects of the Invention

According to the present disclosure, an effect is achieved such that multicast transmission is enabled in a communication system to which integrated access and backhaul is applied.

Objects, features, aspects, and advantages of the present disclosure will become more apparent from the following detailed description and the accompanying drawings.

### Brief Description of Drawings

FIG. 1 is an explanatory diagram illustrating a configuration of a radio frame used in an LTE communication system.
FIG. 2 is a block diagram illustrating an overall configuration of an LTE communication system 200 that has been discussed in 3GPP.
FIG. 3 is a block diagram illustrating an overall configuration of an NR communication system 210 that has been discussed in 3GPP.
FIG. 4 is a configuration diagram of DC performed by an eNB and a gNB connected to an EPC.
FIG. 5 is a configuration diagram of DC performed by gNBs connected to an NG core.
FIG. 6 is a configuration diagram of DC performed by an eNB and the gNB connected to the NG core.
FIG. 7 is a configuration diagram of DC performed by an eNB and the gNB connected to the NG core.
FIG. 8 is a block diagram illustrating a configuration of user equipment 202 illustrated in FIG. 2.
FIG. 9 is a block diagram illustrating a configuration of a base station 203 illustrated in FIG. 2.
FIG. 10 is a block diagram illustrating a configuration of an MME.
FIG. 11 is a block diagram illustrating a configuration of a 5GC unit.
FIG. 12 is a flowchart schematically illustrating a cell search to an idle state operation performed by a communication terminal (UE) in the LTE communication system.
FIG. 13 is a diagram illustrating an example of a configuration of a cell in an NR system.
FIG. 14 is a diagram illustrating an example of a list of BAP addresses according to a first embodiment.
FIG. 15 is a diagram illustrating an example of a BAP header according to the first embodiment.
FIG. 16 is a diagram illustrating another example of the BAP header according to the first embodiment.
FIG. 17 is a diagram illustrating still another example of the BAP header according to the first embodiment.
FIG. 18 is a diagram illustrating yet another example of the BAP header according to the first embodiment.
FIG. 19 is a diagram illustrating still yet another example of the BAP header according to the first embodiment.
FIG. 20 is a diagram illustrating still yet another example of the BAP header according to the first embodiment.
FIG. 21 is a diagram illustrating a first half of a sequence indicating an example of multicast configuration in an IAB base station according to the first embodiment.
FIG. 22 is a diagram illustrating a second half of the sequence indicating the example of the multicast configuration in the IAB base station according to the first embodiment.
FIG. 23 is a diagram illustrating an example of allocation of a multicast BAP address according to the first embodiment.
FIG. 24 is a diagram illustrating another example of the allocation of the multicast BAP address according to the first embodiment.
FIG. 25 is a diagram illustrating still another example of the allocation of the multicast BAP address according to the first embodiment.
FIG. 26 is a diagram illustrating yet another example of the allocation of the multicast BAP address according to the first embodiment.
FIG. 27 is a diagram illustrating a bitmap of the multicast BAP address according to the first embodiment.
FIG. 28 is a diagram illustrating still yet another example of the allocation of the multicast BAP address according to the first embodiment.
FIG. 29 is a diagram illustrating still yet another example of the allocation of the multicast BAP address according to the first embodiment.
FIG. 30 is a diagram illustrating still yet another example of the allocation of the multicast BAP address according to the first embodiment.
FIG. 31 is a diagram illustrating an example of an operation of duplication in a BAP layer according to a second embodiment.
FIG. 32 is a diagram illustrating another example of the operation of the duplication in the BAP layer according to the second embodiment.
FIG. 33 is a diagram illustrating still another example of the operation of the duplication in the BAP layer according to the second embodiment.
FIG. 34 is a diagram illustrating yet another example of the operation of the duplication in the BAP layer according to the second embodiment.
FIG. 35 is a diagram illustrating an example of an operation of duplication in a terminal IAB-node on a protocol stack from an IAB-donor CU to a UE according to the second embodiment.
FIG. 36 is a diagram illustrating an example in which a plurality of paths of data merge in the middle, according to a third embodiment.
FIG. 37 is a conceptual diagram in a case where a relay UE is connected to two gNBs in communication between a remote UE and an NW via the relay UE, according to a fourth embodiment.
FIG. 38 is a diagram illustrating a protocol stack in a case where the relay UE is connected to the two gNBs in the communication between the remote UE and the NW via the relay UE, according to the fourth embodiment.
FIG. 39 is a diagram illustrating another configuration method of the protocol stack in a case where the relay UE is connected to the two gNBs in the communication between the remote UE and the NW via the relay UE, according to the fourth embodiment.
FIG. 40 is a diagram illustrating still another configuration method of the protocol stack in a case where the relay UE is connected to the two gNBs in the communication between the remote UE and the NW via the relay UE, according to the fourth embodiment.
FIG. 41 is a sequence diagram illustrating an example of a method for configuring a DC in which the relay UE is connected to the two gNBs, according to the fourth embodiment.
FIG. 42 is a sequence diagram illustrating another example of the method for configuring the DC in which the relay UE is connected to the two gNBs, according to the fourth embodiment.
FIG. 43 is a conceptual diagram illustrating an example of a case where the remote UE is connected to the two gNBs in the communication between the remote UE and the NW via the relay UE, according to a fifth embodiment.
FIG. 44 is a conceptual diagram illustrating another example of the case where the remote UE is connected to the two gNBs in the communication between the remote UE and the NW via the relay UE, according to the fifth embodiment.
FIG. 45 is a conceptual diagram illustrating still another example of the case where the remote UE is connected to the two gNBs in the communication between the remote UE and the NW via the relay UE, according to the fifth embodiment.
FIG. 46 is a diagram illustrating a protocol stack in a case where the remote UE is connected to the two gNBs in the communication between the remote UE and the NW via the relay UE, according to the fifth embodiment.
FIG. 47 is a sequence diagram illustrating an example of the method for configuring the DC in which the remote UE is connected to the two gNBs, according to the fifth embodiment.
FIG. 48 is a diagram illustrating another configuration method of the protocol stack in a case where the remote UE is connected to the two gNBs in the communication between the remote UE and the NW via the relay UE, according to the fifth embodiment.
FIG. 49 is a sequence diagram illustrating an example of the method for configuring the DC in which the remote UE is connected to the two gNBs, according to the fifth embodiment.
FIG. 50 is a diagram illustrating still another configuration method of the protocol stack in a case where the remote UE is connected to the two gNBs in the communication between the remote UE and the NW via the relay UE, according to the fifth embodiment.
FIG. 51 is a sequence diagram illustrating an example of the method for configuring the DC in which the remote UE is connected to the two gNBs, according to the fifth embodiment.
FIG. 52 is a conceptual diagram illustrating an example in a case where the remote UE is connected to the single gNB with two paths in the communication between the remote UE and the NW via the relay UE, according to a sixth embodiment.
FIG. 53 is a conceptual diagram illustrating another example in a case where the remote UE is connected to the single gNB with the two paths in the communication between the remote UE and the NW via the relay UE, according to the sixth embodiment.
FIG. 54 is a diagram illustrating a protocol stack in a case where the remote UE configures the DC using the MN and the relay UE #S that is a substitute for the SN, in the communication between the remote UE and the NW, in the sixth embodiment.
FIG. 55 is a diagram illustrating a protocol stack between the MN and the relay UE #S according to the sixth embodiment.
FIG. 56 is a sequence diagram illustrating an example of the method for configuring the DC in which the remote UE is connected to the single gNB with the two paths, according to the sixth embodiment.
FIG. 57 is a diagram illustrating another configuration method of the protocol stack in a case where the remote UE configures the DC using the MN and the relay UE #S that is a substitute for the SN, in the communication between the remote UE and the NW, in the sixth embodiment.
FIG. 58 is a sequence diagram illustrating an example of the method for configuring the DC in which the remote UE is connected to the single gNB with the two paths, according to the sixth embodiment.

### Description of Embodiments

Hereinafter, a communication system and a base station according to each embodiment of the present disclosure will be described in detail with reference to the drawings.

### First Embodiment.

FIG. 2 is a block diagram illustrating an overall configuration of an LTE communication system 200 that has been discussed in 3GPP. FIG. 2 will be described. A radio access network is referred to as an evolved universal terrestrial radio access network (E-UTRAN) 201. A user equipment device (hereinafter referred to as "user equipment (UE)") 202 which is a communication terminal device can perform radio communication with a base station device (hereinafter referred to as "base station (E-UTRAN NodeB (eNB))") 203, and transmits and receives signals by radio communication.

Here, the "communication terminal device" includes not only a user equipment device such as a mobile phone terminal device that is movable, but also a non-moving device such as a sensor. In the following description, the "communication terminal device" may be simply referred to as a "communication terminal".

If a control protocol for the user equipment 202, for example, radio resource control (RRC), and a user plane (hereinafter, sometimes referred to as a U-plane), for example, a packet data convergence protocol (PDCP), radio link control (RLC), medium access control (MAC), or a physical layer (PHY), are terminated in the base station 203, the E-UTRAN includes one or a plurality of base stations 203.

Radio resource control (RRC) as a control protocol between the user equipment 202 and the base station 203 performs broadcast, paging, RRC connection management, and the like. As states of the base station 203 and the user equipment 202 in RRC, there are RRC_IDLE and RRC_CONNECTED.

In RRC_IDLE, public land mobile network (PLMN) selection, broadcast of system information (SI), paging, cell re-selection, mobility, and the like are performed. In RRC_CONNECTED, the user equipment has RRC connection and can transmit and receive data to and from a network. In addition, in RRC_CONNECTED, handover (HO), measurement of a neighbor cell, and the like are performed.

The base station 203 includes one or a plurality of eNBs 207. A system including an evolved packet core (EPC) which is a core network and the E-UTRAN 201 which is a radio access network is referred to as an evolved packet system (EPS). The EPC which is a core network and the E-UTRAN 201 which is a radio access network may be collectively referred to as a "network".

Each eNB 207 is connected via an S1 interface to an MME/S-GW unit (hereinafter, sometimes referred to as an "MME unit") 204 including a mobility management entity (MME) or a serving gateway (S-GW), or the MME and the S-GW, and control information is communicated between the eNB 207 and the MME unit 204. A plurality of MME units 204 may be connected to one eNB 207. The eNBs 207 are connected to each other via an X2 interface, and the control information is communicated between the eNBs 207.

The MME unit 204 is a higher-level device, specifically, a higher-level node, and controls connection between the eNB 207 which is a base station and the user equipment (UE) 202. The MME unit 204 configures the EPC which is a core network. The base station 203 configures the E-UTRAN 201.

The base station 203 may configure one cell or a plurality of cells. Each cell has a predetermined range as a coverage which is a range in which communication with the user equipment 202 is possible, and performs radio communication with the user equipment 202 within the coverage. In a case where one base station 203 configures a plurality of cells, each cell is configured to be able to communicate with the user equipment 202.

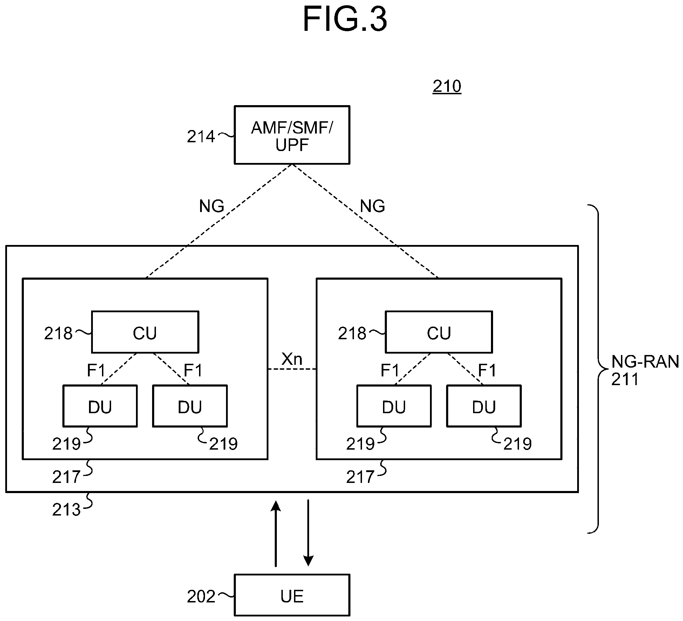

FIG. 3 is a block diagram illustrating an overall configuration of a 5G communication system 210 that has been discussed in 3GPP. FIG. 3 will be described. The radio access network is referred to as a next generation radio access network (NG-RAN) 211. The UE 202 can perform radio communication with an NR base station device (hereinafter referred to as an "NR base station (NG-RAN NodeB (gNB))") 213, and transmits and receives signals by radio communication. The core network is referred to as a 5G core (5GC).

If a control protocol for the UE 202, for example, radio resource control (RRC), and a user plane (hereinafter, sometimes referred to as a U-plane), for example, service data adaptation protocol (SDAP), packet data convergence protocol (PDCP), radio link control (RLC), medium access control (MAC), or physical layer (PHY), are terminated in the NR base station 213, the NG-RAN includes one or a plurality of NR base stations 213.

A function of radio resource control (RRC) as a control protocol between the UE 202 and the NR base station 213 is similar to that of LTE. As states of the NR base station 213 and the UE 202 in RRC, there are RRC_IDLE, RRC_CONNECTED, and RRC_INACTIVE.

RRC_IDLE and RRC_CONNECTED are similar to those in the LTE system. In RRC_INACTIVE, broadcast of system information (SI), paging, cell re-selection, mobility, and the like are performed while connection between the 5G core and the NR base station 213 is maintained.

Each gNB 217 is connected via an NG interface to an AMF/SMF/UPF unit (hereinafter, sometimes referred to as a "5GC unit") 214 including an access and mobility management function (AMF), a session management function (SMF), or a user plane function (UPF), or the AMF, the SMF, and the UPF. Control information and/or user data is communicated between each gNB 217 and the 5GC unit 214. The NG interface is a generic term for an N2 interface between each gNB 217 and the AMF, an N3 interface between each gNB 217 and the UPF, an N11 interface between the AMF and the SMF, and an N4 interface between the UPF and the SMF. A plurality of 5GC units 214 may be connected to one gNB 217. The gNBs 217 are connected to each other via an Xn interface, and control information and/or user data is communicated between the gNBs 217.

The 5GC unit 214 is a higher-level device, specifically, a higher-level node, and distributes paging signals to one or a plurality of base stations 203 and/or base stations 213. In addition, the 5GC unit 214 performs mobility control in an idle state. The 5GC unit 214 manages a tracking area list when the user equipment 202 is in the idle state, an inactive state, and an active state. The 5GC unit 214 starts a paging protocol by transmitting a paging message to a cell belonging to a tracking area in which the user equipment 202 is registered.

The NR base station 213 may also configure one or a plurality of cells similarly to the base station 203. In a case where one NR base station 213 configures a plurality of cells, each cell is configured to be able to communicate with the UE 202.

The gNB 217 may be divided into a central unit (hereinafter, sometimes referred to as a CU) 218 and a distributed unit (hereinafter, sometimes referred to as a DU) 219. One CU 218 is configured in the gNB 217. One or a plurality of DUs 219 are configured in the gNB 217. The CU 218 is connected to the DU 219 via the F1 interface, and control information and/or user data is communicated between the CU 218 and the DU 219.

A unified data management (UDM) function and a policy control function (PCF) described in Non Patent Literature 21 (3GPP TS23.501) may be included in the 5G communication system. The UDM and/or the PCF may be included in the 5GC unit 214 in FIG. 3.

A location management function (LMF) described in Non Patent Literature 24 (3GPP TS 38.305) may be provided in the 5G communication system. The LMF may be connected to a base station via the AMF as disclosed in Non Patent Literature 25 (3GPP TS 23.273).

A non-3GPP interworking function (N3IWF) described in Non Patent Literature 21 (3GPP TS23.501) may be included in the 5G communication system. The N3IWF may terminate an access network (AN) with the UE in non-3GPP access with the UE.

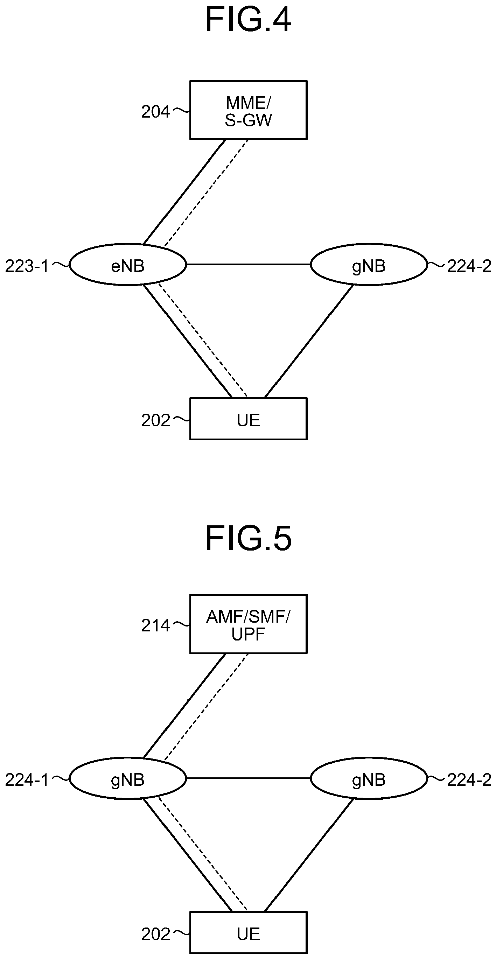

FIG. 4 is a diagram illustrating a configuration of DC performed by an eNB and a gNB connected to the EPC. In FIG. 4, solid lines each indicate U-plane connection, and broken lines each indicate C-plane connection. In FIG. 4, an eNB 223-1 serves as a master base station, and a gNB 224-2 serves as a secondary base station (this DC configuration is sometimes referred to as EN-DC). Although FIG. 4 illustrates an example in which the U-plane connection between the MME unit 204 and the gNB 224-2 is established via the eNB 223-1, the U-plane connection may be directly established between the MME unit 204 and the gNB 224-2.

FIG. 5 is a diagram illustrating a configuration of DC performed by gNBs connected to an NG core. In FIG. 5, solid lines each indicate U-plane connection, and broken lines each indicate C-plane connection. In FIG. 5, a gNB 224-1 serves as a master base station, and the gNB 224-2 serves as a secondary base station (this DC configuration is sometimes referred to as NR-DC). Although FIG. 5 illustrates an example in which the U-plane connection between the 5GC unit 214 and the gNB 224-2 is established via the gNB 224-1, the U-plane connection may be directly established between the 5GC unit 214 and the gNB 224-2.

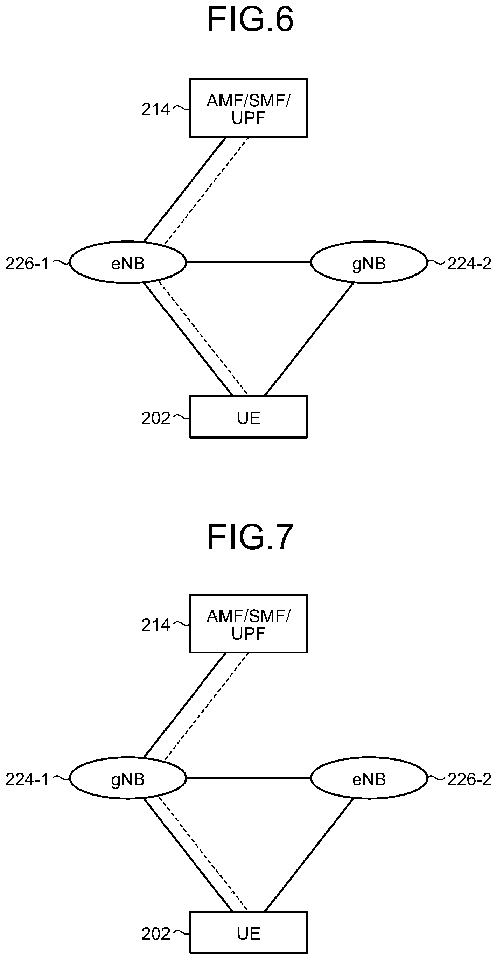

FIG. 6 is a diagram illustrating a configuration of DC performed by an eNB and the gNB connected to the NG core. In FIG. 6, solid lines each indicate U-plane connection, and broken lines each indicate C-plane connection. In FIG. 6, an eNB 226-1 serves as a master base station, and the gNB 224-2 serves as a secondary base station (this DC configuration is sometimes referred to as NG-EN-DC). Although FIG. 6 illustrates an example in which the U-plane connection between the 5GC unit 214 and the gNB 224-2 is established via the eNB 226-1, the U-plane connection may be directly established between the 5GC unit 214 and the gNB 224-2.

FIG. 7 is a diagram illustrating another configuration of DC performed by an eNB and the gNB connected to the NG core. In FIG. 7, solid lines each indicate U-plane connection, and broken lines each indicate C-plane connection. In FIG. 7, the gNB 224-1 serves as a master base station, and an eNB 226-2 serves as a secondary base station (this DC configuration is sometimes referred to as NE-DC). Although FIG. 7 illustrates an example in which the U-plane connection between the 5GC unit 214 and the eNB 226-2 is established via the gNB 224-1, the U-plane connection may be directly established between the 5GC unit 214 and the eNB 226-2.

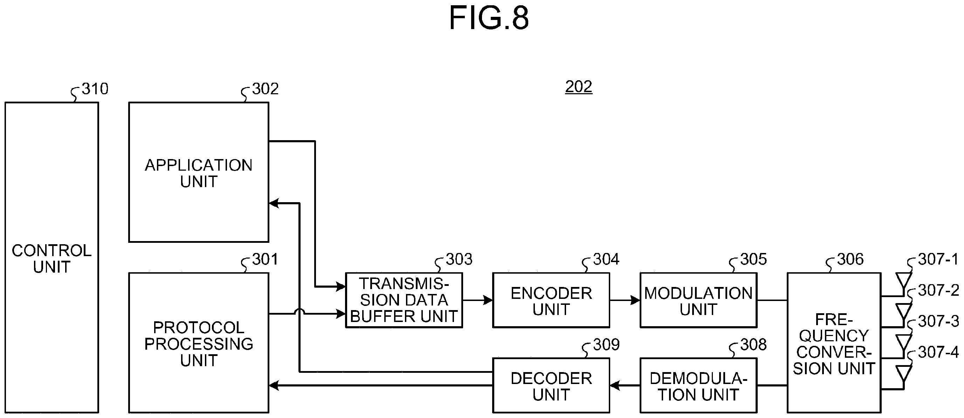

FIG. 8 is a block diagram illustrating a configuration of the user equipment 202 illustrated in FIG. 2. A transmission process performed by the user equipment 202 illustrated in FIG. 8 will be described. First, control data from a protocol processing unit 301 and user data from an application unit 302 are stored in a transmission data buffer unit 303. The data stored in the transmission data buffer unit 303 is passed to an encoder unit 304, and an encoding process such as error correction is performed thereon. There may be data output from the transmission data buffer unit 303 to a modulation unit 305 directly without being subjected to the encoding process. The data encoded by the encoder unit 304 is subjected to a modulation process by the modulation unit 305. The modulation unit 305 may perform precoding in MIMO. The modulated data is converted into a baseband signal, and then the baseband signal is output to a frequency conversion unit 306 to be converted into a radio transmission frequency. Thereafter, transmission signals are transmitted to the base station 203 from antennas 307-1 to 307-4. FIG. 8 exemplifies a case where the number of antennas is four, but the number of antennas is not limited to four.

The user equipment 202 executes a reception process as follows. A radio signal from the base station 203 is received by each of the antennas 307-1 to 307-4. The received signal is converted from a radio reception frequency into a baseband signal by the frequency conversion unit 306, and a demodulation process is performed thereon by a demodulation unit 308. The demodulation unit 308 may perform a weight calculation and a multiplication process. The demodulated data is passed to a decoder unit 309, and a decoding process such as error correction is performed thereon. Among pieces of the decoded data, the control data is passed to the protocol processing unit 301, and the user data is passed to the application unit 302. A series of processes of the user equipment 202 is controlled by a control unit 310. Therefore, although not illustrated in FIG. 8, the control unit 310 is connected to each of components 301 to 309. The control unit 310 is implemented by, for example, processing circuitry configured to include a processor and a memory. That is, the control unit 310 is implemented by the processor executing a program in which a series of processes of the user equipment 202 is described. The program in which a series of processes of the user equipment 202 is described is stored in the memory. Examples of the memory include a nonvolatile or volatile semiconductor memory such as a random access memory (RAM), a read only memory (ROM), or a flash memory. The control unit 310 may be implemented by dedicated processing circuitry such as a field programmable gate array (FPGA), an application specific integrated circuit (ASIC), or a digital signal processor (DSP). In FIG. 8, the number of antennas used by the user equipment 202 for transmission and the number of antennas used thereby for reception may be the same as or different from each other.

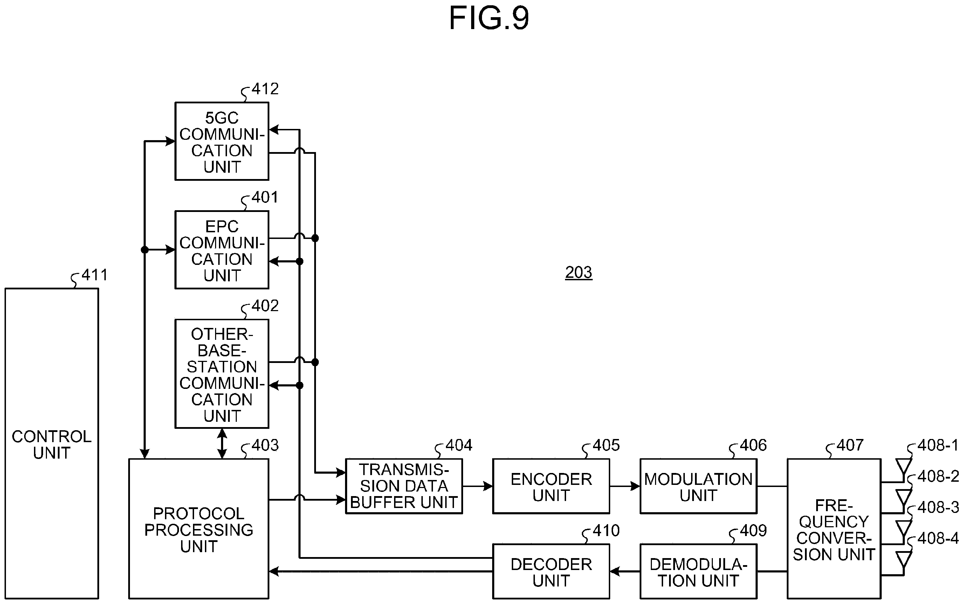

FIG. 9 is a block diagram illustrating a configuration of the base station 203 illustrated in FIG. 2. A transmission process performed by the base station 203 illustrated in FIG. 9 will be described. An EPC communication unit 401 transmits and receives data between the base station 203 and the EPC (such as the MME unit 204). A 5GC communication unit 412 transmits and receives data between the base station 203 and the 5GC (such as the 5GC unit 214). An other-base-station communication unit 402 transmits and receives data to and from other base stations. The EPC communication unit 401, the 5GC communication unit 412, and the other-base-station communication unit 402 each exchange information with a protocol processing unit 403. Control data from the protocol processing unit 403 and user data and control data from the EPC communication unit 401, the 5GC communication unit 412, and the other-base-station communication unit 402 are stored in a transmission data buffer unit 404.

The data stored in the transmission data buffer unit 404 is passed to an encoder unit 405, and an encoding process such as error correction is performed thereon. There may be data output from the transmission data buffer unit 404 to a modulation unit 406 directly without being subjected to the encoding process. The encoded data is subjected to a modulation process by the modulation unit 406. The modulation unit 406 may perform precoding in MIMO. The modulated data is converted into a baseband signal, and then the baseband signal is output to a frequency conversion unit 407 to be converted into a radio transmission frequency. Thereafter, transmission signals are transmitted from antennas 408-1 to 408-4 to one or a plurality of UEs 202. FIG. 9 exemplifies a case where the number of antennas is four, but the number of antennas is not limited to four.

The base station 203 executes a reception process as follows. Radio signals from one or a plurality of UEs 202 are received by the antennas 408. The received signals are each converted from a radio reception frequency into a baseband signal by the frequency conversion unit 407, and a demodulation process is performed thereon by a demodulation unit 409. The demodulated data is passed to a decoder unit 410, and a decoding process such as error correction is performed thereon. Among pieces of the decoded data, the control data is passed to the protocol processing unit 403, the 5GC communication unit 412, the EPC communication unit 401, or the other-base-station communication unit 402, and the user data is passed to the 5GC communication unit 412, the EPC communication unit 401, or the other-base-station communication unit 402. A series of processes of the base station 203 is controlled by a control unit 411.
Therefore, although not illustrated in FIG. 9, the control unit 411 is connected to each of components 401 to 410, and 412. Similarly to the control unit 310 of the user equipment 202 described above, the control unit 411 is implemented by processing circuitry configured to include a processor and a memory, or dedicated processing circuitry such as an FPGA, an ASIC, or a DSP. In FIG. 9, the number of antennas used by the base station 203 for transmission and the number of antennas used thereby for reception may be the same as or different from each other.

FIG. 9 is a block diagram illustrating the configuration of the base station 203, but the base station 213 may have a configuration similar thereto. In addition, in FIGS. 8 and 9, the number of antennas of the user equipment 202 and the number of antennas of the base station 203 may be the same as or different from each other.

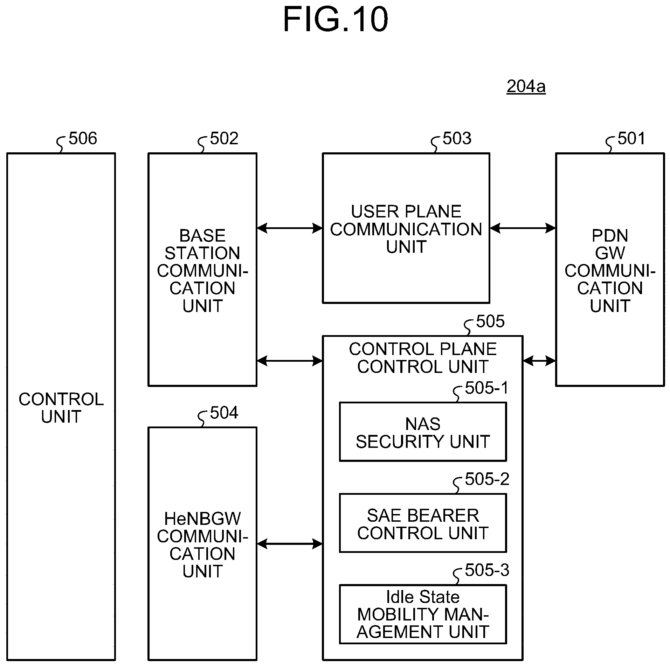

FIG. 10 is a block diagram illustrating a configuration of an MME. FIG. 10 illustrates a configuration of an MME 204a included in the MME unit 204 illustrated in FIG. 2 described above. A PDN GW communication unit 501 transmits and receives data between the MME 204a and a packet data network gate way (PDN GW). A base station communication unit 502 transmits and receives data between the MME 204a and the base station 203 via the S1 interface. In a case where data received from the PDN GW is user data, the user data is passed from the PDN GW communication unit 501 to the base station communication unit 502 via a user plane communication unit 503, and transmitted to one or a plurality of base stations 203. In a case where data received from the base station 203 is user data, the user data is passed from the base station communication unit 502 to the PDN GW communication unit 501 via the user plane communication unit 503, and transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

A HeNBGW communication unit 504 transmits and receives data between the MME 204a and a home-eNB gate way (HeNB GW). Control data received by the HeNBGW communication unit 504 from the HeNB GW is passed to the control plane control unit 505. The HeNBGW communication unit 504 transmits control data input from the control plane control unit 505 to the HeNB GW.

The control plane control unit 505 includes a NAS security unit 505-1, an SAE bearer control unit 505-2, an idle state mobility management unit 505-3, and the like, and performs overall processes on a control plane (hereinafter, sometimes referred to as a C-plane). The NAS security unit 505-1 provides security of a non-access stratum (NAS) message and the like. The SAE bearer control unit 505-2 performs management of system architecture evolution (SAE) bearers, and the like. The idle state mobility management unit 505-3 performs mobility management of an idle state (LTE-IDLE state or also simply referred to as idle), generation and control of a paging signal in the idle state, addition, deletion, update, and search of a tracking area of one or a plurality of UEs 202 under the management thereof, tracking area list management, and the like.

The MME 204a distributes paging signals to one or a plurality of base stations 203. In addition, the MME 204a performs mobility control in the idle state. The MME 204a manages a tracking area list when the user equipment 202 is in the idle state and an active state. The MME 204a starts a paging protocol by transmitting a paging message to a cell belonging to a tracking area in which the user equipment 202 is registered. The idle state mobility management unit 505-3 may manage CSG of the eNB 207 connected to the MME 204a, CSG IDs, and a whitelist.

A series of processes of the MME 204a is controlled by a control unit 506. Therefore, although not illustrated in FIG. 10, the control unit 506 is connected to each of components 501 to 505. Similarly to the control unit 310 of the user equipment 202 described above, the control unit 506 is implemented by processing circuitry configured to include a processor and a memory, or dedicated processing circuitry such as an FPGA, an ASIC, or a DSP.

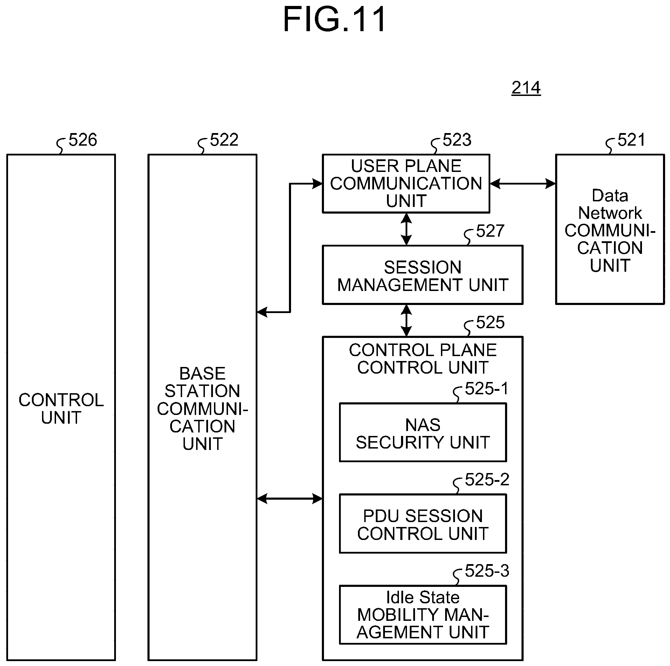

FIG. 11 is a block diagram illustrating a configuration of the 5GC unit. FIG. 11 illustrates a configuration of the 5GC unit 214 illustrated in FIG. 3 described above. FIG. 11 illustrates a case where a configuration of the AMF, a configuration of the SMF, and a configuration of the UPF are included in the 5GC unit 214 illustrated in FIG. 5. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213. In a case where data received from the data network is user data, the user data is passed from the data network communication unit 521 to the base station communication unit 522 via a user plane communication unit 523, and transmitted to one or a plurality of base stations 203 and/or base stations 213. In a case where data received from the base station 203 and/or the base station 213 is user data, the user data is passed from the base station communication unit 522 to the data network communication unit 521 via the user plane communication unit 523, and transmitted to the data network.

In a case where data received from the data network is control data, the control data is passed from the data network communication unit 521 to a session management unit 527 via the user plane communication unit 523. The session management unit 527 passes the control data to a control plane control unit 525. In a case where data received from the base station 203 and/or the base station 213 is control data, the control data is passed from the base station communication unit 522 to the control plane control unit 525. The control plane control unit 525 passes the control data to the session management unit 527.

The control plane control unit 525 includes a NAS security unit 525-1, a PDU session control unit 525-2, an idle state mobility management unit 525-3, and the like, and performs overall processes on a control plane (hereinafter, sometimes referred to as a C-plane). The NAS security unit 525-1 provides security of a non-access stratum (NAS) message, and the like. The PDU session control unit 525-2 performs management of a PDU session between the user equipment 202 and the 5GC unit 214, and the like. The idle state mobility management unit 525-3 performs mobility management of an idle state (RRC-IDLE state or also simply referred to as idle), generation and control of a paging signal in the idle state, addition, deletion, update, and search of a tracking area of one or a plurality of UEs 202 under the management thereof, tracking area list management, and the like.

A series of processes of the 5GC unit 214 is controlled by a control unit 526. Therefore, although not illustrated in FIG. 11, the control unit 526 is connected to each of components 521 to 523, 525, and 527. Similarly to the control unit 310 of the user equipment 202 described above, the control unit 526 is implemented by processing circuitry configured to include a processor and a memory, or dedicated processing circuitry such as an FPGA, an ASIC, or a DSP.

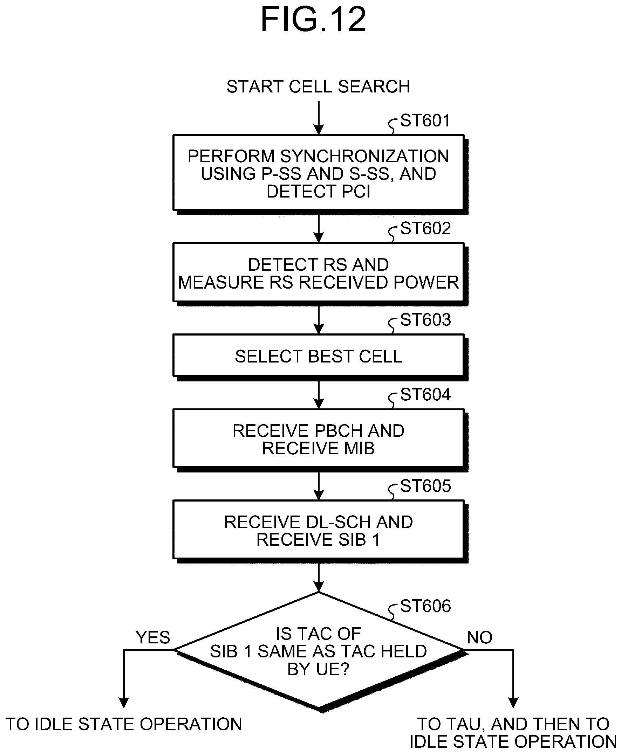

Next, an example of a cell search method in a communication system will be described. FIG. 12 is a flowchart schematically illustrating a cell search to an idle state operation performed by a communication terminal (UE) in the LTE communication system. When starting the cell search, in step ST601, the communication terminal synchronizes a slot timing and a frame timing using a primary synchronization signal (P-SS) and a secondary synchronization signal (S-SS) transmitted from a neighbor base station.

The P-SS and the S-SS are collectively referred to as a synchronization signal (SS). Synchronization codes that correspond one-to-one to PCIs are allocated to the synchronization signals (SSs), the PCIs being allocated on a per cell basis. As the number of PCIs, 504 different numbers are studied. The communication terminal performs synchronization using the 504 different numbers of PCIs and detects (specifies) a PCI of a synchronized cell.

Next, in step ST602, the communication terminal detects, for the synchronized cell, a cell-specific reference signal (CRS) which is a reference signal (RS) transmitted from the base station for each cell, and measures reference signal received power (RSRP). Codes that correspond one-to-one to the PCIs are used for reference signals (RSs). Separation from other cells can be performed by obtaining correlation using the codes. By deriving the code for the RS of the cell from the PCI specified in step ST601, it is possible to detect the RS and to measure the RS received power.

Next, in step ST603, the communication terminal selects a cell having the best RS reception quality, for example, a cell having the highest RS received power, that is, the best cell, from among the one or more cells detected up to step ST602.

Next, in step ST604, the communication terminal receives the PBCH of the best cell and obtains the BCCH which is broadcast information. A master information block (MIB) including cell configuration information is mapped to the BCCH on the PBCH. Accordingly, the MIB is obtained by receiving the PBCH to obtain the BCCH. Examples of the information of the MIB include a downlink (DL) system bandwidth (also referred to as transmission bandwidth configuration (dl-bandwidth)), the number of transmission antennas, and a system frame number (SFN).

Next, in step ST605, the communication terminal receives the DL-SCH of the cell on the basis of the cell configuration information of the MIB to obtain a system information block (SIB) 1 in the broadcast information BCCH. The SIB 1 includes information about access to the cell, information about cell selection, and scheduling information of other SIBs (SIB k; k is an integer equal to or greater than 2). The SIB 1 further includes a tracking area code (TAC).

Next, in step ST606, the communication terminal compares the TAC of the SIB 1 received in step ST605 with a TAC portion of a tracking area identity (TAI) in the tracking area list already held by the communication terminal. The tracking area list is also referred to as a TAI list. The TAI is identification information for identifying a tracking area, and includes a mobile country code (MCC), a mobile network code (MNC), and a tracking area code (TAC). The MCC is a country code. The MNC is a network code. The TAC is a code number of the tracking area.

If the TAC received in step ST605 is the same as the TAC included in the tracking area list as a result of the comparison in step ST606, the communication terminal enters an idle state operation in the cell. If the TAC received in step ST605 is not included in the tracking area list as a result of the comparison, the communication terminal requests, through the cell, a core network (EPC) including the MME or the like to change the tracking area in order to perform a tracking area update (TAU).

In the example illustrated in FIG. 12, from the cell search to the idle state operation in the LTE system are exemplified, but in the NR system, the best beam may be selected in addition to the best cell in step ST603. In addition, in the NR system, information on a beam, for example, a beam identifier may be acquired in step ST604. Furthermore, in the NR system, scheduling information of remaining minimum SI (RMSI) may be acquired in step ST604. In the NR system, the RMSI may be received in step ST605.

A device configuring a core network (hereinafter, sometimes referred to as a "core-network-side device") updates the tracking area list on the basis of an identification number (such as a UE-ID) of a communication terminal transmitted from the communication terminal together with a TAU request signal. The core-network-side device transmits the updated tracking area list to the communication terminal. The communication terminal rewrites (updates) the TAC list held by the communication terminal on the basis of the received tracking area list. Thereafter, the communication terminal enters an idle state operation in the cell.

The spread of smartphones and tablet terminal devices results in explosively increasing traffic in cellular radio communication, and there is a worldwide concern about a shortage of radio resources. In order to deal with the above to improve the spectral efficiency, downsizing of cells to advance spatial separation is under study.

In a conventional cell configuration, a cell configured by an eNB has a relatively wide range of coverage. A cell is conventionally configured to cover a certain area by such a relatively wide range of coverage of a plurality of cells configured by a plurality of eNBs.

In a case where cells are downsized, a cell configured by the eNB has a range of coverage narrower than the coverage of a cell configured by a conventional eNB. Accordingly, in order to cover a certain area similarly to conventional cases, a large number of eNBs configuring downsized cells as compared with the conventional eNBs are required.

In the following description, a cell having relatively large coverage such as the cell configured by a conventional eNB is referred to as a "macro cell", and an eNB configuring the macro cell is referred to as a "macro eNB". In addition, a cell having a relatively small coverage such as a downsized cell is referred to as a "small cell", and an eNB configuring the small cell is referred to as a "small eNB".

The macro eNB may be, for example, a "wide area base station" described in Non Patent Literature 7.

The small eNB may be, for example, a low power node, a local area node, a hotspot, or the like. In addition, the small eNB may be a pico eNB configuring a picocell, a femto eNB configuring a femtocell, a HeNB, a remote radio head (RRH), a remote radio unit (RRU), remote radio equipment (RRE), or a relay node (RN). Furthermore, the small eNB may be a "local area base station" or a "home base station" described in Non Patent Literature 7.

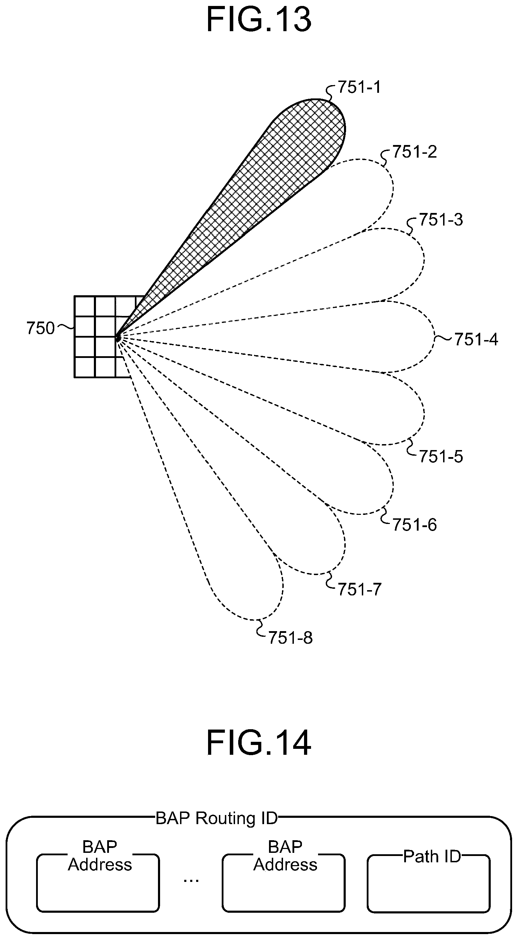

FIG. 13 illustrates an example of a configuration of a cell in NR. In the cell in NR, narrow beams are formed and transmitted in different directions. In the example illustrated in FIG. 13, a base station 750 performs transmission and reception to and from user equipment using a beam 751-1 at a certain time. The base station 750 performs transmission and reception to and from the user equipment using a beam 751-2 at another time. Thereafter, the base station 750 similarly performs transmission and reception to and from the user equipment using one or more of the beams 751-3 to 751-8. Thus, the base station 750 configures a cell with a wide range.

Although FIG. 13 illustrates an example in which the number of beams used by the base station 750 is eight, the number of beams may be different from eight. In addition, although the number of beams simultaneously used by the base station 750 is one in the example illustrated in FIG. 13, the number of beams may be two or more.

In 3GPP, sidelink (SL) is supported for device to device (D2D) communication and vehicle to vehicle (V2V) communication (see Non Patent Literatures 1 and 16). The SL is defined by a PC5 interface.

A physical channel (see Non Patent Literature 1) used for the SL will be described. A physical sidelink broadcast channel (PSBCH) carries information related to a system and synchronization, and is transmitted from a UE.

A physical sidelink discovery channel (PSDCH) carries a sidelink discovery message from a UE.

A physical sidelink control channel (PSCCH) carries control information from a UE for sidelink communication and V2X sidelink communication.

A physical sidelink shared channel (PSSCH) carries data from a UE for sidelink communication and V2X sidelink communication.

A physical sidelink feedback channel (PSFCH) carries HARQ feedback on the sidelink from a UE that has received PSSCH transmission to a UE that has transmitted the PSSCH.

A transport channel (see Non Patent Literature 1) used for the SL will be described. A sidelink broadcast channel (SL-BCH) has a predetermined transport format and is mapped to the PSBCH which is a physical channel.

A sidelink discovery channel (SL-DCH) has periodic broadcast transmission of a predetermined format having a fixed size. In addition, the SL-DCH supports both UE autonomous resource selection and resource allocation scheduled by eNB. In the UE autonomous resource selection, there is a collision risk, and when dedicated resources are allocated to a UE by an eNB, there is no collision. In addition, the SL-DCH supports HARQ combining but does not support HARQ feedback. The SL-DCH is mapped to the PSDCH which is a physical channel.

A sidelink shared channel (SL-SCH) supports broadcast transmission. The SL-SCH supports both UE autonomous resource selection and resource allocation scheduled by eNB. In the UE autonomous resource selection, there is a collision risk, and when dedicated resources are allocated to a UE by an eNB, there is no collision. In addition, the SL-SCH supports HARQ combining but does not support HARQ feedback. Furthermore, the SL-SCH supports dynamic link adaptation by changing transmission power, modulation, and coding. The SL-SCH is mapped to the PSSCH which is a physical channel.

A logical channel (see Non Patent Literature 1) used for the SL will be described. A sidelink broadcast control channel (SBCCH) is a sidelink channel for broadcasting sidelink system information from one UE to another UE. The SBCCH is mapped to the SL-BCH which is a transport channel.

A sidelink traffic channel (STCH) is a point-to-multipoint sidelink traffic channel for transmitting user information from one UE to another UE. The STCH is used only by a UE having a sidelink communication capability and a UE having a V2X sidelink communication capability. Point-to-point communication between two UEs having the sidelink communication capabilities is also realized by using the STCH. The STCH is mapped to the SL-SCH which is a transport channel.

A sidelink control channel (SCCH) is a sidelink control channel for transmitting control information from one UE to another UE. The SCCH is mapped to the SL-SCH which is a transport channel.

In 3GPP, support of V2X communication also in NR has been studied. The study of the V2X communication in NR has been progressed on the basis of the LTE system and the LTE-A system, but there are additions and changes to and from the LTE system and the LTE-A system in the following points.

In LTE, the SL communication uses broadcast only. In NR, as the SL communication, support of unicast and groupcast in addition to broadcast has been studied (see Non Patent Literature 22 (3GPP TS 23.287)).

Support of HARQ feedback (Ack/Nack), a CSI reporting, and the like in unicast communication and groupcast communication has been studied.

In order to support unicast and groupcast in addition to broadcast in the SL communication, support of PC5-S signaling has been studied (see Non Patent Literature 22 (3GPP TS 23.287)). For example, PC5-S signaling is implemented to establish a link for implementing SL, i.e., PC5 communication. The link is implemented in a V2X layer and is also referred to as a layer 2 link.

In addition, support of RRC signaling in the SL communication has been studied (see Non Patent Literature 22 (3GPP TS 23.287)). The RRC signaling in the SL communication is also referred to as PC5 RRC signaling. For example, it has been proposed to perform notifications, between UEs that perform PC5 communication, of capability of each UE, and of an AS layer configuration for performing the V2X communication using the PC5 communication.

In multicast communication using an NR, both of Point To Multipoint (PTM) and Point To Point (PTP) may be used. In the PTM and the PTP, a common PDCP entity may be used. The PTM and the PTP may have legs (combination of RLC and logical channel) different from each other. In the multicast communication, a PTM leg and a PTP leg may be dynamically switched and used. For example, MAC signaling may be used for dynamic switching.

A 5G-scheme base station can support Integrated Access and Backhaul (IAB) (refer to Non Patent Literature 16 (TS38.300)). The IAB base station may be constituted by an IAB-donor CU that is a CU of a base station that operates as an IAB donor that provides an IAB function, an IAB-donor DU that is a DU of the base station that operates as an IAB donor, and an IAB node connected with the IAB-donor DU and a UE using a radio interface. The plurality of IAB nodes may exist under the IAB-donor CU. The IAB nodes may be connected using the radio interface. That is, multi-stage connection of the IAB nodes may be performed. The IAB node is connected to the IAB-donor CU using an F1 interface (refer to Non Patent Literature 16 (TS38.300)).

In the connection between the IAB-donor DU and the IAB node and the connection between the IAB nodes, a Backhaul Adaptation Protocol (BAP) layer is provided. The BAP layer performs an operation for routing received data to the IAB-donor DU and/or the IAB node, mapping the received data to an RLC channel, or the like (refer to Non Patent Literature 36 (TS38.340)). In the routing, an address that is a BAP address may be used. The BAP address may be allocated to each IAB-donor DU and/or IAB node. The IAB-donor CU may allocate the BAP address. Data exchanged in communication using the IAB includes information about an IAB node that is a transmission destination, for example, the BAP address. The data includes information used to identify a data path, for example, a path ID. The information described above may be included as a BAP header, for example. The IAB-donor DU and/or the IAB node may perform routing described above, using the BAP address and/or the path ID.

In the multicast communication using the NR, the IAB base station may be used. In multicast using the IAB base station, an IAB node existing in the middle of a path from the IAB-donor CU to the UE may perform multicast transmission to another IAB node (hereinafter, may be referred to as child IAB node) to be a lower connection destination of the IAB node in the communication with the UE or may perform multicast transmission to the UE.

Among the one or plurality of child IAB nodes connected to the IAB-donor DU and/ the IAB node that performs multicast transmission, a child IAB node that is a multicast transmission target and a child IAB node that is not a multicast transmission target may be mixed.

However, in the multicast in the IAB base station, a configuration method about the BAP address used for the multicast to the IAB node is not disclosed in each of the Non Patent Literatures described above or the like. Therefore, there is a problem in that multicast using the IAB base station cannot be implemented.

A first embodiment discloses a method for solving such a problem.

In order to solve the above problem, in a communication system according to the present embodiment, a plurality of transmission destination BAP addresses can be configured for one piece of data. A plurality of destination BAP addresses may be configured, or a plurality of next-hop BAP addresses (refer to Non Patent Literature 35 (TS38.473)) may be configured. Regarding the plurality of BAP addresses, different BAP addresses may be respectively configured for different path IDs, or a plurality of different BAP addresses may be configured for the same path ID.

The IAB-donor CU may configure the plurality of transmission destination BAP addresses, for the IAB-donor DU and/or the IAB node. For the configuration, F1 signaling, for example, BAP MAPPING CONFIGURATION disclosed in Non Patent Literature 35 (TS38.473) may be used, or another signaling may be used. The configuration of the plurality of transmission destination BAP addresses may be included as a list. For example, in a BAP Routing ID (refer to Non Patent Literature 35 (TS38.473)) that is one of information elements of the F1 signaling, a list of the BAP addresses including the one or the plurality of BAP addresses may be provided. As another example, a next hop BAP address included in the F1 signaling may be configured as the list including the one or the plurality of BAP addresses. Both of the lists described above may be provided.

An identifier representing the BAP address may be provided. For example, an identifier associated with each of the transmission destination BAP address and/or the next hop BAP address configured from the IAB-donor CU may be provided, or one identifier corresponding to the plurality of transmission destination BAP addresses and/or next hop BAP addresses may be provided. Similarly, an identifier representing the one and/or the plurality of path IDs may be provided.

The IAB-donor CU may notify the IAB-donor DU and/or the IAB node of the identifier. The notification of the identifier may be included in a notification of the configuration of the transmission destination BAP address and/or the next hop BAP address to the IAB-donor DU and/or the IAB node by the IAB-donor CU, for example, the BAP MAPPING CONFIGURATION described above.

The identifier described above may be included in the BAP header. The IAB node may derive the transmission destination BAP address or the path ID, using the identifier. Thus, for example, it is possible to reduce a size of the BAP header, and as a result, it is possible to improve efficiency of the communication system. By including the single identifier corresponding to each of the plurality of transmission destination BAP addresses and/or the plurality of path IDs in the BAP header, for example, it is possible to further reduce the size of the BAP header, and as a result, it is possible to further improve the efficiency of the communication system.

The identifier described above may be uniquely given under the IAB-donor CU. As a result, for example, it is possible to avoid complexity of the communication system.

As another example, the identifier described above may be uniquely given between the IAB node and/or the IAB-donor DU and the child IAB node. The IAB node may change a value of the identifier indicating the transmission destination BAP address and/or the path ID included in the BAP header. For example, the IAB node may derive the transmission destination BAP address and/or the path ID, using the identifier included in the received BAP header. The IAB node may derive an identifier used for communication with a child IAB node corresponding to the derived transmission destination BAP address and/or path ID. The IAB node may replace the identifier included in the received BAP header with the derived identifier. The IAB node may perform transmission to the child IAB node using the BAP header including the derived identifier. Thus, for example, it is possible to reduce a bit width of the identifier, and as a result, it is possible to improve communication efficiency.

FIG. 14 illustrates an example of a list of the BAP addresses. An Information Element (IE) of the BAP Routing ID includes a plurality of BAP addresses and a single path ID. The plurality of BAP addresses may be destination BAP addresses.

For example, the information element of the BAP Routing ID having the list of the BAP address may be included in a Backhaul (BH) routing information added list, may be included in a BH routing information removed list, or may be included in both lists described above.

Information about the modified backhaul routing information may be provided. The information may be included, for example, in the BAP MAPPING CONFIGURATION described above. One piece or a plurality of pieces of the information may be provided. The information may be provided, for example, as a list such as a Backhaul (BH) routing information modified list. For example, the list may include the BAP address, the path ID, and the next hop BAP address. The information included in the list may be, for example, modified information. As a result, for example, a routing configuration processing amount of the IAB node can be reduced. The modified BAP address may be included as a list including one or a plurality of BAP addresses. Similarly, the modified next hop BAP address may be included as a list.

As another example, the list may include information about a BAP address to be added, may include information about a next hop BAP address to be added, may include information about a BAP address to be deleted, may include information about a next hop BAP address to be deleted, may include information about a path ID to be added, may include information about a path ID to be deleted, or may include a plurality of the above. Each piece of the information described above may be included as a list including one or a plurality of elements. As a result, for example, it is possible to reduce a size of the information about the modification in the backhaul routing information.

The plurality of BAP addresses may be included in configuration from the IAB-donor CU to the IAB-donor DU. The configuration may include a plurality of Transport Network Layer (TNL) addresses (refer to Non Patent Literature 35 (TS38.473)). The TNL address may be, for example an IP address. The IP address may be, for example, an IPv4 address, an IPv6, or an IPv6 prefix. The TNL address may include a multicast IP address. By including the plurality of TNL addresses, for example, it is possible to avoid complexity of multicast from the IAB-donor CU to the IAB node that directly communicates with the UE (hereinafter, may be referred to as terminal IAB-node). Note that the terminal IAB-node is an IAB node that is connected to the UE and can directly communicate with the UE. The plurality of UEs may be simultaneously connected to the terminal IAB-node. Furthermore, in addition to the UE, another IAB node (corresponding to child IAB node of the terminal IAB-node) may be connected to the terminal IAB-node.

The configuration from the IAB-donor CU to the IAB-donor DU may be performed, for example, by using an information element of traffic mapping information from an IP to a layer 2 (IP to layer2 Traffic Mapping Info) (refer to Non Patent Literature 35 (TS38.473)).

As an example of information included in the configuration, (1) to (5) will be disclosed below.
(1) A single IP address, a plurality of BAP addresses, and a plurality of combinations of next hop BAP addresses and RLC channel identifiers.
(2) A single IP address, a plurality of BAP addresses, a plurality of next hop BAP addresses, and a single RLC channel identifier.
(3) A plurality of combinations of IP addresses and BAP addresses and a plurality of combinations of next hop BAP addresses and RLC channel identifiers.
(4) A plurality of combinations of IP addresses and BAP addresses, a plurality of next hop BAP addresses, and a single RLC channel identifier.
(5) Combination of (1) to (4) described above.

The IP address included in (1) described above may be a multicast IP address. According to (1) described above, for example, multicast using the PTP can be performed for the IAB node.

The IP address included in (2) described above may be a multicast IP address. According to (2) described above, for example, multicast using the PTM can be performed for the IAB node.

The IP address included in (3) described above may be a unicast IP address. According to (3) described above, for example, multicast using the PTP can be performed for the IAB node.

The IP address included in (4) described above may be a unicast IP address. According to (4) described above, for example, multicast using the PTM can be performed for the IAB node.

The plurality of next hop BAP addresses may be included in the configuration from the IAB-donor CU to the IAB node. A plurality of pieces of information about the RLC channel identifier may be included. For example, by using a plurality of combinations of next hop BAP addresses and RLC channel identifiers, multicast using the PTP can be performed for the IAB node. As another example, by using a combination of the plurality of next hop BAP addresses and the single RLC channel identifier, multicast using the PTM can be performed for the IAB node.

The plurality of BAP addresses may be included in the BAP header. The plurality of path IDs may be included in the BAP header. Both of the plurality of BAP addresses and the plurality of path IDs may be included in the BAP header. Thus, for example, it is not necessary to transmit the same multicast data as many as the transmission destination IAB nodes, and as a result, it is possible to efficiently use a Uu interface.

The BAP header may include a single header or a plurality of headers. As an example in which the BAP header includes the plurality of headers, the BAP header may include two headers. One of the two headers (hereinafter, may be referred to as basic header) may have a fixed size. The other header (hereinafter, may be referred to as extension header) may have a variable size. The IAB node may acquire the basic header first. Thus, for example, the IAB node can quickly acquire the header.

As another example in which the BAP header includes the plurality of headers, the plurality of basic headers may be included. The IAB node may acquire the plurality of basic headers. As a result, for example, it is possible to avoid complexity of a BAP header acquisition process.

As examples of the information included in the BAP header, (A) to (M) will be disclosed below.
(A) One or a plurality of BAP addresses.
(B) Information about the number of BAP addresses.
(C) Information about the size of the BAP header.
(D) One or a plurality of path IDs.
(E) Information about the number of path IDs.
(F) Information about whether or not the number of included BAP addresses is plural.
(G) Information about whether or not the number of included path IDs is plural.
(H) Information about whether or not a subsequent header exists.
(I) Information about a size of the subsequent header.
(J) Information about the number of headers included in the BAP header.
(K) Padding.
(L) Information about the type of the BAP header.
(M) Combination of (A) to (L) described above.

The BAP address included in (A) described above may be, for example, a destination BAP address. The IAB node may perform routing to the one or the plurality of child IAB nodes, using the information of (A) described above. By providing the one or the plurality of BAP addresses in the BAP header, for example, it is possible for the IAB node to quickly perform routing to the plurality of child IAB nodes.

The information about the number in (B) described above may be the number of BAP addresses included in the BAP header or may be a value obtained by subtracting a predetermined value, for example, one from the number. The IAB node may acquire information about the transmission destination BAP address, using the value in (B) described above. Thus, for example, the IAB node can quickly acquire the BAP address included in the BAP header. As another example, in a case where the basic header and the extension header are used as the BAP header, by using the value obtained by subtracting one from the number of BAP addresses included in the BAP header as (B) described above, an effect similar to the above can be obtained.

The information about the size in (C) described above may be given in bit units, may be given in octet units, or may be given in units of a plurality of octets (for example, may be two octets, three octets, or more). The IAB node may acquire the BAP header, using the information in (C) described above. As a result, for example, erroneous acquisition of the BAP header by the IAB node can be prevented.

The path ID included in (D) described above may be, for example, all or some of path IDs used for the transmission from the IAB-donor CU. The IAB node may perform routing to the one or the plurality of child IAB nodes, using the information in (D) described above. By providing the plurality of path IDs in the BAP header, for example, it is possible for the IAB node to quickly perform routing to the plurality of child IAB nodes. Furthermore, it is possible to reduce the number of BAP-PDUs transmitted from the IAB-donor DU and/or the IAB node, and as a result, it is possible to reduce a processing amount of the IAB-donor DU and/or the IAB node.

(E) described above may be, for example, the number of path IDs included in the BAP header or may be a value obtained by subtracting a predetermined value, for example, one from the number. The IAB node may acquire the information about the path ID, using the value in (E) described above. As a result, for example, the IAB node can quickly acquire the path ID included in the BAP header. As another example, in a case where the basic header and the extension header are used as the BAP header, by using the value obtained by subtracting one from the number of path IDs included in the BAP header as (E) described above, an effect similar to the above can be obtained.

For example, (F) described above may be represented as information including whether or not the BAP header includes the plurality of BAP addresses. The IAB node may determine whether or not to continue to acquire the BAP address, using the information. As a result, for example, it is possible to avoid complexity of a BAP address acquisition process.

For example, (G) described above may be represented as information including whether or not the BAP header includes the plurality of path IDs. The IAB node may determine whether or not to continue to acquire the path ID, using the information. As a result, for example, it is possible to avoid complexity of a path ID acquisition process.

For example, (H) described above may be information representing whether or not the BAP header includes the subsequent header. The information may be, for example, represented as information including affirmative or negative. The BAP header including the information in (H) described above may be, for example, the basic header or may be the extension header. The subsequent header of the basic header may be the extension header. The subsequent header of the extension header may be another extension header. In a case where the basic header is followed by the extension header, the sizes of the basic header and the extension header may be the same or may be different from each other. In a case where the basic header is followed by the extension header and is further followed by the another extension header, the size of each header may be the same or different from each other. For example, the IAB node may continue the BAP header acquisition process using the fact that the information in (H) described above is affirmative or may end the BAP header acquisition process, using the fact that the information in (H) described above is negative. As a result, for example, it is possible to avoid complexity of a BAP header process by the IAB node.

The information about the size in (I) described above may be given in bit units, may be given in octet units, or may be given in units of a plurality of octets (for example, may be two octets, three octets, or four octets). The IAB node may acquire the subsequent header, using the information in (I) described above. As a result, for example, erroneous acquisition of the subsequent header by the IAB node can be prevented.

The information about the number in (J) described above may be, for example, the number of included headers or may be the number of subsequent headers excluding the header. The IAB node may acquire the subsequent header, using the information in (J) described above. As a result, for example, erroneous acquisition of the subsequent header by the IAB node can be prevented.

For example, (K) described above may be provided after each of the one or the plurality of BAP addresses included in the BAP header, may be provided after each of the one or the plurality of path IDs, or may be provided at the beginning and/or the end of the header. For example, (K) described above may be provided such that the size of the BAP header is in one-octet units, may be provided such that the size of the BAP header is in two-octet units, or may be provided such that the size of the BAP header is in units equal to or more than three octets. As a result, for example, it is possible to avoid the complexity of the BAP header acquisition.

(L) described above may be, for example, information indicating a header in which a single BAP address and a single path ID are included, information indicating a header in which a plurality of combinations of the BAP addresses and the path IDs are included, information indicating a header in which the plurality of BAP addresses and the single path ID are included, information indicating that the single BAP address and the plurality of path IDs are included, information indicating that only the single or the plurality of BAP addresses is included, or information indicating that only the single or the plurality of path IDs is included. The IAB-donor DU may use a plurality of types of BAP headers. The IAB node may determine the type of the header, using the information in (L) described above. As a result, for example, it is possible to improve flexibility of the communication system.

As an example of (M) described above, a combination of the plurality of types of headers may be used. For example, a combination of a header including a plurality of combinations of the BAP addresses and the path IDs and a header including the plurality of BAP addresses and the single path ID may be used. As a result, for example, it is possible to improve flexibility of the communication system.

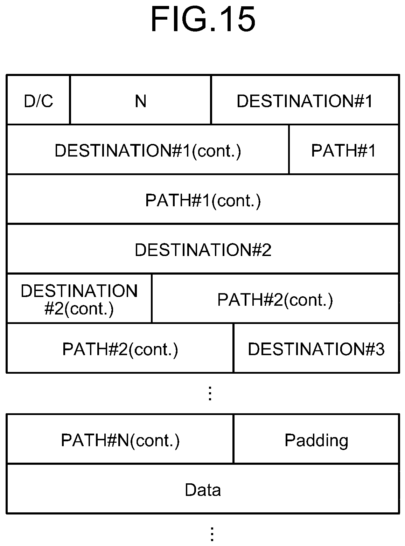

FIG. 15 is a diagram illustrating an example of the BAP header. FIG. 15 illustrates an example of a variable length header including the plurality of BAP addresses and path IDs. In FIG. 15, the numbers (N) of BAP addresses and path IDs are included. N pairs of the destination (DESTINATION) BAP addresses and path (PATH) IDs are included in the BAP header. At the end of the BAP header, padding for setting the BAP header to be in octet units is included. The IAB node acquires a combination of the destination BAP address and the path ID, using the value of N included in the BAP header.

In FIG. 15, an example in which the numbers of BAP addresses and path IDs are included in the BAP header is illustrated. However, the size of the BAP header may be included. As a result, for example, the IAB node can quickly acquire the BAP header.

In FIG. 15, an example in which the combinations of the BAP addresses and the path IDs are included in order is illustrated. However, all the path IDs may be included after all the BAP addresses. As a result, for example, the IAB node can quickly acquire the BAP address.

As another example of FIG. 15, all the BAP addresses may be included after all the path IDs. As a result, for example, the IAB node can quickly acquire the path ID.

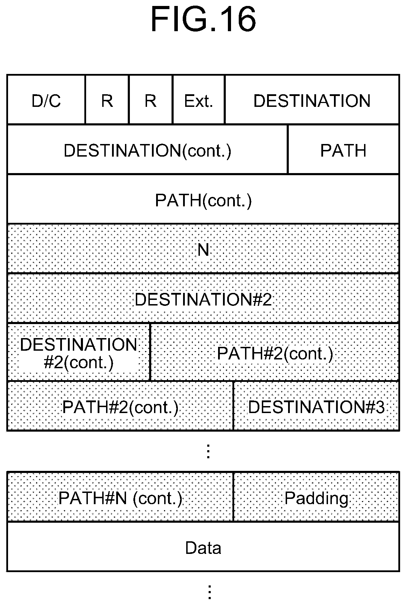

FIG. 16 is a diagram illustrating another example of the BAP header. FIG. 16 illustrates an example of a basic header with a fixed length and an extension header with a variable length, including the plurality of BAP addresses and path IDs. In FIG. 16, a white region in the BAP header is the basic header, and a gray region is the extension header that is the subsequent header.

In the basic header illustrated in FIG. 16, information about whether or not there is a subsequent header and a first destination BAP address and a first path ID are included. The IAB node acquires the first destination BAP address and path ID and acquires information (Ext.) about whether or not there is the subsequent header, from the basic header. The IAB node acquires the subsequent header, using the fact that the information is affirmative.

In the subsequent header illustrated in FIG. 16, the number (N) of combinations of the destination BAP addresses and the path IDs and combinations of second and subsequent destination BAP addresses and path IDs are included. Furthermore, at the end of the subsequent header, padding for setting the subsequent header to be in octet units is included. The value of N included in the subsequent header may be a number obtained by excluding the destination BAP addresses and the path IDs included in a basic BAP header or may be a number including the destination BAP addresses and the path IDs. The IAB node may grasp the numbers of destination BAP addresses and the path IDs included in the subsequent header or may grasp the size of the subsequent header, using the value of N described above. For example, since the size of the basic header can be set to the fixed length by providing the subsequent header, the basic header can be quickly acquired.

In FIG. 16, an example in which the numbers of the BAP addresses and the path IDs are included in the BAP header is illustrated. However, the size of the BAP header may be included. As a result, for example, the IAB node can quickly acquire the BAP header.

In the extension header in FIG. 16, an example in which the combinations of the BAP addresses and the path IDs are sequentially included is illustrated. However, all the path IDs may be included after all the BAP addresses. As a result, for example, the IAB node can quickly acquire the BAP address.

As another example of the extension header in FIG. 16, all the BAP addresses may be included after all the path IDs. As a result, for example, the IAB node can quickly acquire the path ID.

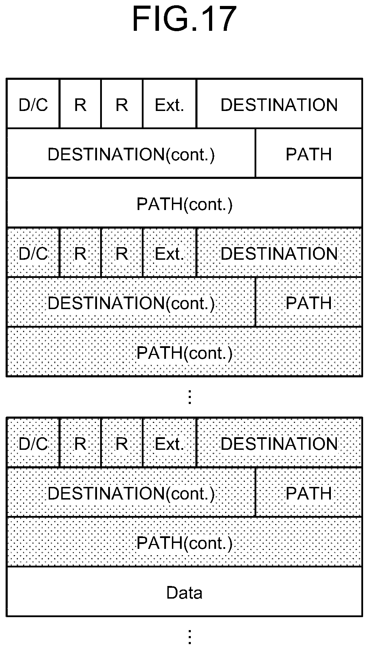

FIG. 17 is a diagram illustrating still another example of the BAP header. FIG. 17 illustrates an example of a basic header with a fixed length and one or a plurality of extension headers with a fixed length. In FIG. 17, a white region in the BAP header is the basic header, and a gray region is the extension header.

Since the basic header illustrated in FIG. 17 is similar to that in FIG. 16, description thereof is omitted.

In each of the plurality of extension headers illustrated in FIG. 17, information about whether or not there is a subsequent header and the combination of the destination BAP address and the path ID are included. The IAB node acquires the destination BAP address and the path ID, and also acquires the information about whether or not there is the subsequent header, from the extension header. The IAB node acquires the subsequent header, using the fact that the information is affirmative. As illustrated in FIG. 17, a configuration of the extension header may be the same as that of the basic header. As a result, for example, a processing amount related to the acquisition and/or the process of the extension header can be reduced.

In the last extension header illustrated in FIG. 17, the information about whether or not there is the subsequent header and the combination of the destination BAP address and the path ID are included. The IAB node acquires the destination BAP address and the path ID, and also acquires the information about whether or not there is the subsequent header, from the extension header. The IAB node stops the acquisition of the subsequent header, using the fact that the information included in the last extension header is negative.

An example has been described in which the information indicating which one of the data PDU/control PDU (D/C) is included in the extension header in FIG. 17. However, the information does not need to be included. A reserved bit may be included, instead of the information. As a result, for example, it is possible to improve expandability in the future.

As illustrated in FIG. 17, the D/C may be included in the extension header. As a result, for example, it is possible to avoid complexity of a header generation process by the IAB-donor DU. The IAB node may ignore the D/C included in the extension header. As a result, for example, it is possible to quickly execute a header acquisition process by the IAB node.

The same path ID may be configured for the plurality of BAP addresses. As a result, for example, it is possible to reduce the size of the BAP header, and it is possible to reduce the number of path IDs used in the IAB base station.

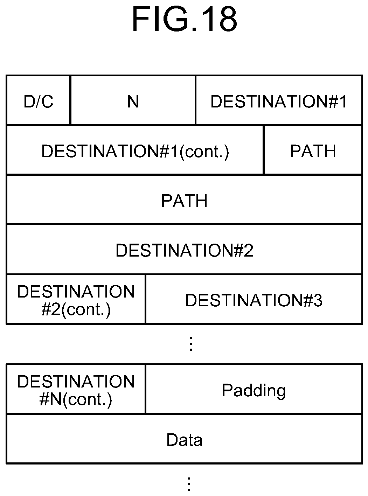

FIG. 18 is a diagram illustrating yet another example of the BAP header. FIG. 18 illustrates an example of a variable length header, including a plurality of BAP addresses and one path ID. The BAP header illustrated in FIG. 18 includes the number (N) of destination BAP addresses. At the end of the BAP header, padding for setting the BAP header to be in octet units is included. The IAB node acquires the one or plurality of destination BAP addresses and the single path ID, using the value of N included in the BAP header.

In FIG. 18, an example in which the number of destination BAP addresses is included in the BAP header is illustrated. However, the size of the BAP header may be included. As a result, for example, the IAB node can quickly acquire the BAP header.

In FIG. 18, a case has been illustrated in which the second and subsequent BAP addresses are included after the path ID. However, the path ID may be included after the last BAP address. As a result, for example, it is possible to avoid complexity of implementation of the BAP header process.

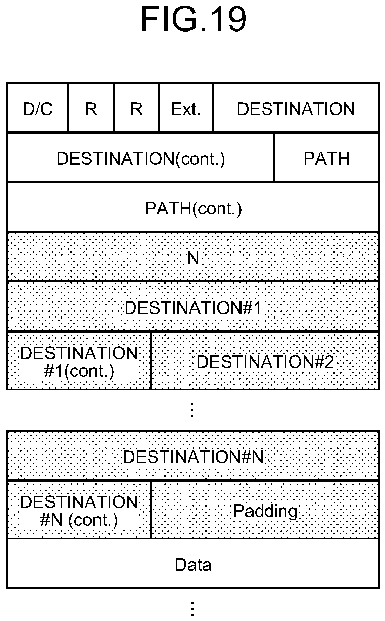

FIG. 19 is still yet another example of the BAP header. FIG. 19 illustrates an example of a basic header with a fixed length and an extension header with a variable length, including a plurality of BAP addresses and a single path ID. In FIG. 19, a white region in the BAP header is the basic header, and a gray region is the extension header.

In the basic header illustrated in FIG. 19, information about whether or not there is a subsequent header and the first destination BAP address and path ID are included. The IAB node acquires the first destination BAP address and path ID and acquires information about whether or not there is the subsequent header, from the basic header. The IAB node acquires the subsequent header, using the fact that the information is affirmative.

In the subsequent header illustrated in FIG. 19, the number (N) of destination BAP addresses and second and subsequent destination BAP addresses are included. Furthermore, at the end of the subsequent header, padding for setting the subsequent header to be in octet units is included. The value of N included in the subsequent header may be a number obtained by excluding the destination BAP addresses included in the basic BAP header or may be a number including the destination BAP addresses. The IAB node may grasp the number of destination BAP addresses included in the subsequent header or may grasp the size of the subsequent header, using the value of N described above. For example, since the size of the basic header can be set to the fixed length by providing the subsequent header, the basic header can be quickly acquired.

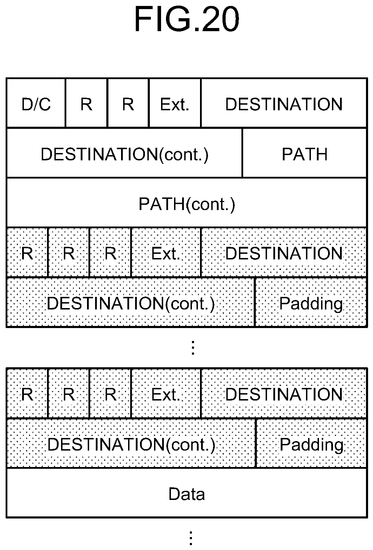

FIG. 20 is a diagram illustrating still yet another example of the BAP header. FIG. 20 illustrates an example of a basic header with a fixed length and one or a plurality of extension headers with a fixed length. In FIG. 20, a white region in the BAP header is the basic header, and a gray region is the extension header.

Since the basic header illustrated in FIG. 20 is similar to that in FIG. 19, description thereof is omitted.

In the extension header illustrated in FIG. 20, the information about whether or not there is a subsequent header and the destination BAP address are included. The IAB node acquires the destination BAP address and the information about whether or not there is the subsequent header, from the extension header. The IAB node acquires the subsequent header, using the fact that the information is affirmative.

In the last extension header illustrated in FIG. 20, the information about whether or not there is a subsequent header and the destination BAP address are included. The IAB node acquires the destination BAP address and the information about whether or not there is the subsequent header, from the extension header. The IAB node stops the acquisition of the subsequent header, using the fact that the information included in the last extension header is negative.

In the example illustrated in FIG. 20, a case is illustrated where the size of the extension header is set to two octets. However, the size may be three octets, which is the same as the basic header. For example, 10 bits subsequent to the destination BAP address in the extension header may be padding. As a result, for example, it is possible to avoid the complexity of the BAP header acquisition process by the IAB node.

The IAB node may modify the BAP header. For example, the IAB node may delete partial information included in the BAP header. The partial information may be, for example, a BAP address that is not configured for the node, may be a path ID that is not configured for the node, or may be a combination of the above. As a result, for example, it is possible to reduce the size of the BAP header. The BAP header may be deleted in a BAP layer that executes a transmission process or may be deleted in a BAP layer that executes a reception process.

As another solution, grouping of the IAB nodes may be performed. The BAP address may be used for the grouping. For example, a multicast BAP address may be provided. The IAB-donor CU may allocate the BAP address to the IAB node. The IAB-donor DU and/or the IAB node may perform multicast transmission to the child IAB node, using the multicast BAP address. As a result, for example, it is possible to quickly perform multicast transmission.

The multicast BAP address may be provided for each service or content of the multicast. As a result, for example, each device of the communication system can quickly recognize the service or the content related to the multicast.

The multicast BAP address may be provided in a predetermined range in a range of values that can be taken as the BAP address. For example, a range of the BAP address in which all the first four bits are "one" may be provided as the multicast BAP address. As a result, for example, each device of the communication system can quickly recognize whether or not the BAP address is for multicast.

The IAB-donor CU may perform configuration for the IAB-donor DU and/or the IAB node, for example, configuration about routing, using the F1 signaling. For example, the F1 signaling may be BAP mapping configuration (BAP MAPPING CONFIGURATION) signaling (refer to Non Patent Literature 35 (TS38.473)) or may be another signaling.

The configuration may include information about routing of the BAP layer. The IAB-donor CU may include the information in the configuration. The configuration may be performed for each of the PTM leg and the PTP leg. The information about the routing of the BAP layer may include information used to identify routing, for example, an identifier of the routing, may include information about the BAP address of the IAB-donor DU and/or the IAB node (refer to Non Patent Literature 35 (TS38.473)), may include information about a next hop destination, for example the BAP address of the child IAB node, may include information about the BAP address of the IAB node that is directly connected to the UE for receiving the multicast data, or may include information about a path from the IAB-donor CU to the UE, for example, information about an identifier of the path. As a result, for example, the IAB-donor DU and/or the IAB node can smoothly perform routing of the multicast data to the UE.

The configuration may include a plurality of pieces of the information about the routing of the BAP layer. For example, information about routing in transmission using the PTM leg and information about routing in transmission using the PTP leg may be included. The plurality of pieces of information about the routing in the transmission using the PTP leg may be included, or the plurality of pieces of information about the routing in the transmission using the PTM leg may be included. The IAB node may perform switching between routing destinations, using the information included in the BAP header, for example, information about DESTINATION and/or the path ID. As a result, for example, the IAB node can dynamically change the routing destination.

The configuration may include information about an area where multicast can be transmitted. The IAB node may control beams and/or transmission power so that a transmission range of the multicast data falls within the area, using the information. As a result, for example, it is possible to prevent transmission of the multicast data to the outside of the transmittable area.

The configuration may include information about a transmission method. The information may include information indicating that the PTM leg is used or may include information indicating that the PTP leg is used. The information may be provided for each transmission destination child IAB node and/or UE. The IAB-donor DU and/or the IAB node may determine a leg to be used for transmission to the child IAB node and/or the UE, using the information. As a result, for example, the IAB-donor DU and/or the IAB node can quickly determine the leg to be used for the transmission.

A predetermined mode may be provided for the transmission method from the IAB-donor DU and/or the IAB node to the child IAB node and/or the UE. For example, there may be a mode for performing transmission to both of the child IAB node and the UE using the PTM leg, there may be a mode for performing transmission to the UE using the PTM leg and to the child IAB node using the PTP leg, there may be a mode for performing transmission to the UE using the PTP leg and to the child IAB node using the PTM leg, and there may be a mode for performing transmission to both of the child IAB node and the UE using the PTP leg. As another example, there may be a mode for enabling to use both of the PTP leg and the PTM leg for the UE, there may be a mode for performing transmission to the UE using only the PTP leg, there may be a mode for performing transmission to the UE using only the PTM leg, there may be a mode for enabling to use both of the PTP leg and the PTM leg for the child IAB node, there may be a mode for performing transmission to the child IAB node using only the PTP leg, there may be a mode for performing transmission to the child IAB node using only the PTM leg, and a combination of the above, for example, a combination of each mode regarding the transmission to the UE and each mode regarding the transmission to the child IAB node may be used. The mode can be configured for each child IAB node and/or the UE. The mode may be determined by the IAB-donor CU, and the IAB-donor CU may notify the IAB-donor DU and/or the IAB node of the mode. The mode may be included in the configuration described above. The IAB-donor DU and/or the IAB node may determine a leg used for the transmission to the child IAB node and/or the UE, using the information about the mode. Thus, for example, the IAB-donor DU and/or the IAB node can quickly determine the leg used for the transmission, and as a result, it is possible to reduce a processing amount in a transmission process from the IAB-donor DU and/or the IAB node.

In the routing using the IAB node, multicast data received using the PTM leg may be transmitted using the PTP leg, multicast data received using the PTP leg may be transmitted using the PTM leg, multicast data received using the PTM leg may be transmitted using the PTM leg, or multicast data received using the PTP leg may be transmitted using the PTP leg. As a result, for example, it is possible to improve flexibility of the communication system.

The routing of the BAP layer may be determined using the information about the area where the multicast can be transmitted. For example, the IAB node that performs routing of the multicast may be determined from among the IAB nodes of which transmission ranges are included in the area. As a result, for example, it is possible to prevent transmission of the multicast data to the outside of the transmittable area.

A core NW device may determine the information about the area where the multicast can be transmitted. The core NW device may notify the IAB-donor CU of the information. As another example, the core NW device may notify the IAB-donor CU of information about an IAB node belonging to the area. The IAB-donor CU may determine the IAB node that performs routing, using the information described above. As a result, for example, the IAB-donor CU can appropriately select the IAB node in the area where the multicast can be transmitted.

The IAB-donor DU and/or the IAB node may determine an identifier to be allocated to the child IAB node and/or the UE. The identifier may be, for example, a G-RNTI and/or a SC-RNTI (refer to Non Patent Literature 34 (TS36.321)) or may be a C-RNTI. The IAB-donor DU and/or the IAB node may notify the IAB-donor CU of the identifier. The notification may be made using the F1 signaling, for example, UL RRC MESSAGE TRANSFER (refer to Non Patent Literature 35 (TS38.473)) signaling.

The multicast BAP address may be associated with the G-RNTI and/or the SC-RNTI described above. For example, the IAB-donor CU may determine the multicast BAP address, using the G-RNTI and/or the SC-RNTI described above. For example, the IAB-donor DU and/or the IAB node may set, as a transmission destination of the data of which the BAP address of the next hop destination is the multicast BAP address, the child IAB node and/or the UE allocated to the G-RNTI described above. As a result, for example, it is possible to improve the efficiency of the communication system.

The single or the plurality of BAP addresses may be allocated to the same IAB node. The multicast BAP address may be included in the BAP address allocated to the IAB node.

The IAB-donor CU may configure the plurality of BAP addresses for the IAB node. For example, RRC signaling, for example, RRC reconfiguration (RRCReconfiguration) may be used for the configuration. For example, the plurality of BAP addresses may be configured for an information element of BAP configuration (bap-config) included in the signaling of the RRC reconfiguration. The configuration from the IAB-donor CU to the IAB node may be performed via a parent IAB node of the IAB node. Note that the parent IAB node is an IAB node to which the IAB node is connected. The IAB-donor CU may transmit the RRC signaling to be notified to the IAB node, to the parent IAB node. For example, DL RRC MESSAGE TRANSFER signaling may be used for the transmission. The parent IAB node may acquire signaling to be transmitted to the IAB node, using the signaling. The parent IAB node may acquire information to be configured for the IAB node, for example, a BAP address to be allocated to the IAB node, using the signaling. As a result, for example, the parent IAB node can grasp the multicast BAP address to be allocated to the IAB node.

The IAB-donor CU may notify the IAB node of information about an IAB node existing under the IAB node. For example, the notification may be made using the F1 signaling, for example, the BAP MAPPING CONFIGURATION signaling, or may be made using the RRC signaling, for example, the RRC reconfiguration signaling. The information may include, for example, information about one or a plurality of BAP addresses to be allocated to the subordinate IAB node. As a result, for example, the IAB node can acquire the information about the BAP address allocated to the subordinate IAB node, and as a result, it is possible to smoothly execute a routing process.

The information may include information about a layer of the subordinate IAB node. The layer may be, for example, a layer based on the IAB node, may be a layer based on the IAB-donor CU, or may be a layer based on the IAB-donor DU.

Another example of the information about the layer may be a layer based on the UE. Information used to identify the reference UE, for example, a UE identifier may be included. The IAB node may schedule the child IAB node and/or the UE, using the information. As a result, for example, it is possible to reduce a delay of the multicast.

The information about the layer may include information about a device that is the reference of the layer (for example, IAB-donor CU, IAB-donor DU, and UE). The IAB node may acquire the information about the device to be the reference of the layer, using the information. As a result, for example, it is possible to reduce a probability of a malfunction related to a multicast transmission process.

The single or the plurality of TNL addresses (refer to Non Patent Literature 35 (TS38.473)) may be allocated to the same IAB node. The TNL address may be allocated, for example, to the terminal IAB-node. The TNL address may be, for example, an IPv4 address, an IPv6, or an IPv6 prefix. The TNL address may include a multicast IP address.

The multicast BAP address may be used as the destination BAP address. As a result, for example, it is possible to reduce the size of the BAP header.

The multicast BAP address may be used as the next hop BAP address. As a result, for example, a signaling size of routing configuration from the CU to the IAB node can be reduced.

In the multicast using the IAB base station, a unicast BAP address, that is, a normal BAP address may be used. For example, the unicast BAP address may be used to transmit the multicast data to an IAB node to which the multicast BAP address cannot be allocated, or the unicast BAP address may be used to transmit the multicast data to an IAB node to which the multicast BAP address is allocated. As a result, for example, it is possible to improve the flexibility of the communication system.

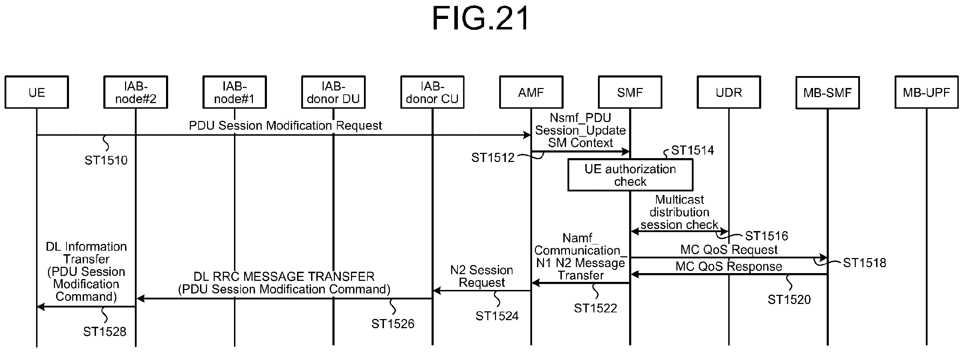

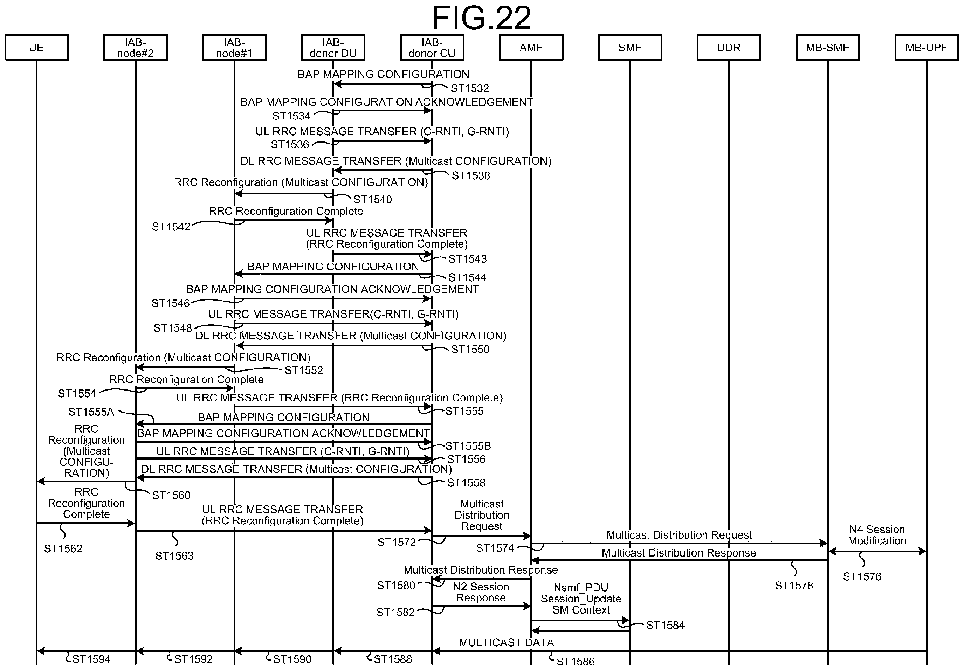

FIGS. 21 and 22 are sequences for configuring the multicast in the IAB base station. FIG. 21 illustrates a first half of the sequence, and FIG. 22 illustrates a second half of the sequence. That is, in the configuration of the multicast in the IAB base station, first, steps ST1510 to ST1528 illustrated in FIG. 21 are executed, and next, steps ST1532 to ST1594 illustrated in FIG. 22 are executed. In the example illustrated in FIGS. 21 and 22, the UE is connected to the IAB-donor CU via an IAB node #2, an IAB node #1, and the IAB-donor DU. In the example illustrated in FIGS. 21 and 22, it is assumed that the UE have acquired information about multicast in advance.

In step ST1510 illustrated in FIG. 21, the UE issues a PDU session modification request to an AMF. The request may be issued using NAS signaling. The request may include information about multicast that the UE desires to receive. In step ST1512, the AMF notifies an SMF that the PDU session modification request has been issued. The notification may be made, for example, using a service operation of Nsmf_PDUSession_UpdateSMContext (refer to Non Patent Literature 37 (TS23.502)). The notification may include the information about the multicast that the UE desires to receive. In step ST1514, the SMF checks whether or not the UE can receive the multicast. In step ST1516, the SMF inquires the information about the multicast of a Unified Data Repository (UDR) (refer to Non Patent Literature 21 (TS23.501)) and acquires the information from the UDR. In step ST1518, the SMF requests information about QoS of the multicast from a multicast/broadcast SMF (MB-SMF) (refer to Non Patent Literature 28 (TR23.757)) for. In step ST1520, the MB-SMF notifies the SMF of a response to the request. The response may include the information about the QoS of the multicast.

In step ST1522 illustrated in FIG. 21, the SMF requests the AMF to transmit a message to the base station. The request may be issued using a service operation of Namf_Communication_N1N2MessageTransfer (refer to Non Patent Literature 37 (TS23.502)). The request may include a request for generating a multicast context in the base station. In step ST1524, the AMF requests the IAB-donor CU to modify the PDU session. For the request, for example, signaling of the PDU Session Resource Modify Request (refer to Non Patent Literature 38 (TS38.413)) may be used. The request may include information about a multicast session. The IAB-donor CU may acquire the information about the multicast session, using the information.

In step ST1526 illustrated in FIG. 21, the IAB-donor CU notifies the IAB node #2 of the PDU session modification request. The request may include information about a multicast session. The notification may be issued via the IAB-donor DU and the IAB node #1. The notification may be issued using the F1 signaling, for example, the DL RRC MESSAGE TRANSFER. In step ST1528, the IAB node #2 notifies the UE of the PDU session modification request. The UE may acquire the information about the multicast session, using the information in step ST1528. The UE may modify the information about the PDU session.

In steps ST1532 to ST1562 illustrated in FIG. 22, configuration about multicast transmission is performed between the IAB base station and the UE.

In step ST1532 illustrated in FIG. 22, the IAB-donor CU configures the information about the routing for the IAB-donor DU. The IAB-donor CU may determine information necessary for the configuration, in response to reception of the request in step ST1524. For example, the IAB-donor CU may determine the PDU session related to the multicast and the IAB node used for the routing, using information included in the request received in step ST1524. The information about the routing may include information about a BAP address of the IAB-donor DU, may include information about a path, for example, information about the IAB node directly connected to the UE, may include information about a BAP address of the next hop destination, or may include information about an identifier of an RLC channel to be used. The information may include a TNL address of the IAB node. The BAP address may be a multicast BAP address. The TNL address may be given as a multicast IP address. For the configuration in step ST1532, the F1 signaling, for example, the BAP MAPPING CONFIGURATION signaling may be used. In the signaling, the plurality of BAP addresses may be given. For example, the plurality of BAP addresses may be included in the information element (IE) of the BAP Routing ID included in the signaling. The BAP address of the IAB node may be included in the plurality of BAP addresses. In the signaling, the plurality of TNL addresses may be given. For example, a plurality of destination IAB TNL addresses may be included in an information element of traffic mapping information from an IP to a layer 2 (IP to layer2 Traffic Mapping Info) (refer to Non Patent Literature 35 (TS38.473)) included in the signaling. In step ST1534, the IAB-donor DU notifies the IAB-donor CU of a response to step ST1532. In the example illustrated in FIG. 22, a notification of an acknowledgement response is provided. For the notification in step ST1534, the F1 signaling, for example, signaling of BAP MAPPING CONFIGURATION ACKNOWLEDGEMENT may be used. In step ST1536, the IAB-donor DU notifies the IAB-donor CU of an identifier to be allocated to the child IAB node that is the IAB node #1 in the example illustrated in FIG. 22. The identifier may be a C-RNTI, a G-RNTI, or a SC-RNTI or may include the plurality of identifiers described above. The notification may include the information about RRC configuration used for communication with the IAB node #1 by the IAB-donor DU. The IAB-donor DU may issue the notification in step ST1536, in response to the reception in step ST1532. For the notification, the F1 signaling, for example, UL RRC MESSAGE TRANSFER may be used.

In step ST1538 illustrated in FIG. 22, the IAB-donor CU notifies the IAB-donor DU of RRC configuration used for multicast communication with the IAB node #1. For the notification, the F1 signaling, for example, the signaling of the DL RRC MESSAGE TRANSFER may be used. In step ST1540, the IAB-donor DU performs the configuration about the multicast, for the IAB node #1. The configuration may include configuration about the PTM leg or may include configuration about the PTP leg. For the configuration, for example, the signaling of the RRC reconfiguration may be used. Step ST1540 may include information about an identifier of the IAB node #1, for example, information about the C-RNTI, the G-RNTI, and/or the SC-RNTI, may include information about the BAP address, may include information about RLC configuration, may include information about MAC configuration, may include information about PHY configuration, or may include information about a logical channel, for example, information used to identify the logical channel. The BAP address may include information about a BAP address of the IAB node #1, may include information about a next hop destination, for example, a BAP address of the IAB node #2, or may include information about a BAP address of the IAB node that is directly connected to the UE that receives the multicast data, for example, the information about the BAP address of the IAB node #2. The plurality of BAP addresses may be included as the BAP address of the IAB node #1, the plurality of BAP addresses may be included as the BAP address of the next hop destination, or the plurality of BAP addresses may be included as the BAP address of the IAB node directly connected to the UE that receives the multicast data. A multicast BAP address may be included in the BAP address described above. The information described above may be included as the information about each of the PTM leg and the PTP leg. In step ST1542, the IAB node #1 notifies the IAB-donor DU of completion of the configuration about the multicast. For example, for the notification, signaling of RRC reconfiguration complete (RRCReconfigurationComplete) may be used. In step ST1443, the IAB-donor DU notifies the IAB-donor CU of information about the RRC reconfiguration completion of the IAB node #1. For the notification, the F1 signaling, for example, the signaling of the UL RRC MESSAGE TRANSFER may be used. The IAB-donor CU may recognize that multicast configuration for the IAB node #1 has been completed, in response to ST1543.

In step ST1544 illustrated in FIG. 22, the IAB-donor CU configures the information about the routing, for the IAB node #1. The information about the routing may include the information about the BAP address of the IAB node #1, may include the information about the path, for example, the information about the IAB node directly connected to the UE, may include the information about the BAP address of the next hop destination, or may include the information about the identifier of the RLC channel to be used. The BAP address may be a multicast BAP address. For the configuration in step ST1544, the F1 signaling, for example, the BAP MAPPING CONFIGURATION signaling may be used. In the signaling, the plurality of BAP addresses may be given. For example, the plurality of BAP addresses may be included in the information element (IE) of the BAP Routing ID included in the signaling. The BAP address of the IAB node may be included in the plurality of BAP addresses. In step ST1546, the IAB node #1 notifies the IAB-donor CU of a response to step ST1544. In the example illustrated in FIG. 22, a notification of an acknowledgement response is provided. For the notification in step ST1546, the F1 signaling, for example, the signaling of the BAP MAPPING CONFIGURATION ACKNOWLEDGEMENT may be used. In step ST1548, the IAB node #1 notifies the IAB-donor CU of an identifier to be allocated to the child IAB node that is the IAB donor #2 in the example illustrated in FIG. 22. The identifier may be a C-RNTI, a G-RNTI, or a SC-RNTI or may include the plurality of identifiers described above. The notification may include information about RRC configuration used for communication with the IAB node #2 by the IAB node #1. The IAB node #1 may issue the notification in step ST1548 in response to the reception in step ST1540, may issue the notification in step ST1548 in response to the reception in step ST1544, or may issue the notification in step ST1548 in response to both of the reception in step ST1540 and the reception in step ST1544. For the notification, the F1 signaling, for example, UL RRC MESSAGE TRANSFER may be used.

In step ST1550 illustrated in FIG. 22, the IAB-donor CU notifies the IAB node #1 of RRC configuration used for multicast communication with the IAB node #2. For the notification, the F1 signaling, for example, the signaling of the DL RRC MESSAGE TRANSFER may be used. In step ST1552, the IAB node #1 performs configuration about multicast, for the IAB node #2. The configuration may include configuration about the PTM leg or may include configuration about the PTP leg. For the configuration, for example, the signaling of the RRC reconfiguration may be used. Step ST1552 may include information about an identifier of the IAB node #2, for example, the C-RNTI, the G-RNTI, and/or the SC-RNTI, may include information about the BAP address, may include information about the RLC configuration, may include information about the MAC configuration, may include information about the PHY configuration, and may include information about a logical channel, for example, information used to identify the logical channel. The BAP address may include the information about the BAP address of the IAB node #2, may include the information about the BAP address of the next hop destination, and may include the information about the BAP address of the IAB node directly connected to the UE that receives the multicast data. The plurality of BAP addresses may be included as the BAP address of the IAB node #2, the plurality of BAP addresses may be included as the BAP address of the next hop destination, and the plurality of BAP addresses may be included as the BAP address of the IAB node directly connected to the UE that receives the multicast data. A multicast BAP address may be included in the BAP address described above. The information described above may be included as the information about each of the PTM leg and the PTP leg. In step ST1554, the IAB node #2 notifies the IAB node #1 of completion of the configuration about the multicast. For example, for the notification, the signaling of the RRC reconfiguration completion may be used. In step ST1555, the IAB node #1 notifies the IAB-donor CU of the information about the RRC reconfiguration completion of the IAB node #2. For the notification, the F1 signaling, for example, the signaling of the UL RRC MESSAGE TRANSFER may be used. The IAB-donor CU may recognize that the multicast configuration for the IAB node #2 has been completed, in response to step ST1555.

In step ST1555A illustrated in FIG. 22, the IAB-donor CU configures the information about the routing, for the IAB node #2. The information about the routing may include the information about the BAP address of the IAB node #2, may include the information about the path, for example, information indicating that the IAB node #2 is the terminal IAB-node, and may include the information about the identifier of the RLC channel to be used. The BAP address may be a multicast BAP address. For the configuration in step ST1555A, the F1 signaling, for example, the BAP MAPPING CONFIGURATION signaling may be used. In the signaling, the plurality of BAP addresses may be given. For example, the plurality of BAP addresses may be included in the information element (IE) of the BAP Routing ID included in the signaling. The BAP address of the IAB node may be included in the plurality of BAP addresses. In step ST1555B, the IAB node #2 notifies the IAB-donor CU of a response to step ST1555A. In the example illustrated in FIG. 22, a notification of an acknowledgement response is provided. For the notification in step ST1555B, the F1 signaling, for example, the signaling of the BAP MAPPING CONFIGURATION ACKNOWLEDGEMENT may be used.

In step ST1556 illustrated in FIG. 22, the IAB node #2 notifies the IAB-donor CU of an identifier to be allocated to the UE. The identifier may be a C-RNTI, a G-RNTI, or a SC-RNTI or may include the plurality of identifiers described above. The notification may include information about RRC configuration used for communication with the UE by the IAB node #2. The IAB node #2 may issue the notification in step ST1556, in response to the reception in step ST1554. For the notification, the F1 signaling, for example, UL RRC MESSAGE TRANSFER may be used.

In step ST1558 illustrated in FIG. 22, the IAB-donor CU notifies the IAB node #2 of the RRC configuration used for the multicast communication with the UE. For the notification, the F1 signaling, for example, the signaling of the DL RRC MESSAGE TRANSFER may be used. In step ST1560, the IAB node #2 performs the configuration about the multicast, for the UE. The configuration may include configuration about the PTM leg and may include configuration about the PTP leg. For the configuration, for example, the signaling of the RRC reconfiguration may be used. In step ST1560, information about an identifier of the UE, for example, the C-RNTI, the G-RNTI, and/or the SC-RNTI may be included, the information about the RLC configuration may be included, the information about the MAC configuration may be included, the information about the PHY configuration may be included, and the information about the logical channel, for example, the information used to identify the logical channel may be included. The information described above may be included as the information about each of the PTM leg and the PTP leg. In step ST1562, the UE notifies the IAB node #2 of completion of the configuration about the multicast. For example, for the notification, the signaling of the RRC reconfiguration completion may be used. In step ST1563, the IAB node #2 notifies the IAB-donor CU of the information about the completion of the RRC reconfiguration of the UE. For the notification, the F1 signaling, for example, the signaling of the UL RRC MESSAGE TRANSFER may be used. The IAB-donor CU may recognize that multicast configuration for the UE has been completed, in response to step ST1563.

In step ST1572 illustrated in FIG. 22, the IAB-donor CU requests the AMF to perform multicast distribution. The request may include information used to identify the UE and may include information used to identify the multicast. In step ST1574, the AMF requests the MB-SMF to perform multicast distribution. In step ST1576, modification of session information related to the multicast distribution is performed between the MB-SMF and a multicast/broadcast UPF (MB-UPF) (refer to Non Patent Literature 28 (TR23.757)). In step ST1578, the MB-SMF notifies the AMF of a response to the multicast distribution request. In step ST1580, the AMF notifies the IAB-donor CU of the response to the multicast distribution request.

In step ST1582 illustrated in FIG. 22, the IAB-donor CU notifies the AMF of a response to the modification of the session information related to the multicast distribution. In step ST1584, the AMF notifies the SMF of the response to the modification of the session information. For the notification, for example, a process of Nsmf_PDUSession_UpdateSMContext (refer to Non Patent Literature 37 (TS23.502)) may be used.

In step ST1586 illustrated in FIG. 22, the MB-UPF transmits multicast data to the IAB-donor CU. In step ST1588, the IAB-donor CU transfers the data to the IAB-donor DU. In step ST1590, the IAB-donor DU transfers the data to the IAB node #1. In step ST1592, the IAB node #1 transfers the data to the IAB node #2. In step ST1594, the IAB node #2 transfers the data to the UE. In steps ST1590 to ST1594, the PTP leg may be used, the PTM leg may be used, or both described above may be used.

In FIGS. 21 and 22, a case where the number of IAB-donor CUs is one is illustrated. However, the plurality of IAB-donor CUs may be provided. For example, an IAB-donor CU for C-Plane (IAB-donor CU-CP) and an IAB-donor CU for U-Plane (IAB-donor CU-UP) may be provided. The plurality of IAB-donor CU-UPs may be provided. As a result, for example, it is possible to reduce a load by distributing a processing amount of the IAB-donor CU.

The IAB-donor DU and/ the IAB node for the C-plane may be provided, or the IAB-donor DU and/or the IAB node for the U-plane may be provided. The IAB-donor DU and/or the IAB node may be connected to the IAB-donor CU-CP and the IAB-donor CU-UP. As a result, for example, it is possible to improve flexibility of the communication system.

The IAB-donor CU-CP may notify the IAB-donor CU-UP information about the IAB-donor DU that transmits data. The notification may include information about the terminal IAB-node. The notification may be issued using signaling (for example, E1 signaling) between the CU-CP and the CU-UP. The IAB-donor CU-UP may perform routing on the IAB-donor DU that is a data transmission destination or may transmit the data to the IAB-donor DU, using the notification. As a result, for example, it is possible to prevent a malfunction related to the data transmission from the IAB-donor CU-UP to the IAB-donor DU.

The IAB-donor DU and/or the IAB node for the C-plane may be provided, or the IAB-donor DU and/or the IAB node for the U-plane may be provided. The IAB-donor DU and/or the IAB node may be connected to the IAB-donor CU-CP and the IAB-donor CU-UP. As a result, for example, it is possible to improve flexibility of the communication system.

In the signaling exchanged between the IAB-donor CU and the IAB-donor DU and/or the IAB node in FIGS. 21 and 22, the IAB-donor CU may be replaced with the IAB-donor CU-CP. Similarly, in the signaling exchanged between the IAB-donor CU and the UE, the IAB-donor CU may be replaced with the IAB-donor CU-CP. As a result, for example, it is possible to avoid complexity of the communication system.

The configuration sequence illustrated in FIGS. 21 and 22 may be used to change a multicast path. For example, the path may be changed when a UE that receives multicast is added and/or deleted, may be changed in a case where a communication path between the IAB nodes is blocked by an obstacle or the like, or may be changed in a case where the communication path is restored from being blocked. Thus, for example, it is possible to change the path of the multicast using the IAB node, and as a result, it is possible to improve the flexibility of the communication system.

At the time of the multicast path change, a BAP address of the IAB node related to the change may be included in the Backhaul (BH) Routing Information Added List, may be included in the Backhaul (BH) Routing Information Removed List, may be included in the Backhaul (BH) Routing Information Modified List, or may be included in some of the above. For example, by including the BAP address in the backhaul routing information modified list, it is possible to reduce an F1 signaling amount related to the change of the multicast path.

For the configuration from the IAB-donor CU to the IAB-donor DU, the multicast BAP address may be used. For example, the multicast BAP address may be included in a BAP address included in the information element of the traffic mapping information from the IP to the layer 2 (IP to layer2 Traffic Mapping Info) (refer to Non Patent Literature 35 (TS38.473)).

The following (a) to (e) will be disclosed as examples of information included in the configuration using the multicast BAP address.
(a) A single IP address, a single or a plurality of BAP addresses, a single or a plurality of next hop BAP addresses, and a plurality of RLC channel identifiers.
(b) A single IP address, a single or a plurality of BAP addresses, a single or a plurality of next hop BAP addresses, and a single RLC channel identifier.
(c) A plurality of IP addresses, a single or a plurality of BAP addresses, a single or a plurality of next hop BAP addresses, and a plurality of RLC channel identifiers.
(d) A plurality of IP addresses, a single or a plurality of BAP addresses, a single or a plurality of next hop BAP addresses, and a single RLC channel identifier.
(e) Combination of (a) to (d) described above.

The IP address included in (a) described above may be a multicast IP address. The BAP address and/or the next hop BAP address included in (a) described above may include the multicast BAP address. According to (a) described above, for example, it is possible to perform multicast using the PTP for the IAB node.

The IP address included in (b) described above may be a multicast IP address. The BAP address and/or the next hop BAP address included in (b) described above may include the multicast BAP address. According to (b) described above, for example, multicast using the PTM can be performed for the IAB node.

The IP address included in (c) described above may be a unicast IP address. The BAP address and/or the next hop BAP address included in (c) described above may include the multicast BAP address. According to (c) described above, for example, it is possible to perform multicast using the PTP for the IAB node.

The IP address included in (d) described above may be the unicast IP address. The BAP address and/or the next hop BAP address included in (d) described above may include the multicast BAP address. According to (d) described above, for example, it is possible to perform multicast using the PTM for the IAB node.

The multicast BAP address may be included in the configuration from the IAB-donor CU to the IAB node. The multicast BAP address may be included as the next hop BAP address, for example. For example, by using the single or the plurality of next hop BAP addresses and the plurality of RLC channel identifiers, it is possible to perform multicast using the PTP for the IAB node. As another example, by using a combination of the single or the plurality of next hop BAP addresses and the single RLC channel identifier, multicast using the PTM can be performed for the IAB node.

The following (A) to (G) will be disclosed as examples of a method for allocating the multicast BAP address to the IAB node.
(A) Allocate to the terminal IAB-node.
(B) Allocate to the child IAB node for each parent IAB node.
(C) Allocate each IAB node to each bit of the BAP address.
(D) Allocate the same BAP address to the IAB nodes in the same layer.
(E) Allocate the same BAP address to the IAB nodes in and under a predetermined layer.
(F) Allocate the same BAP address to IAB nodes to be a path from the IAB-donor CU to the UE.
(G) Combination of (A) to (F) described above.

As the method of (A) described above, the multicast BAP address may be allocated to the terminal IAB-node. The terminal IAB-node to which the multicast BAP address is allocated may include the terminal IAB-node to which the child IAB node is connected. As a result, for example, multicast transmission to many IAB nodes is enabled. As another example, the terminal IAB-node may be only a terminal IAB-node that is not connected to the child IAB node. As a result, for example, it is possible to avoid complexity of a process in the BAP layer of the terminal IAB-node.

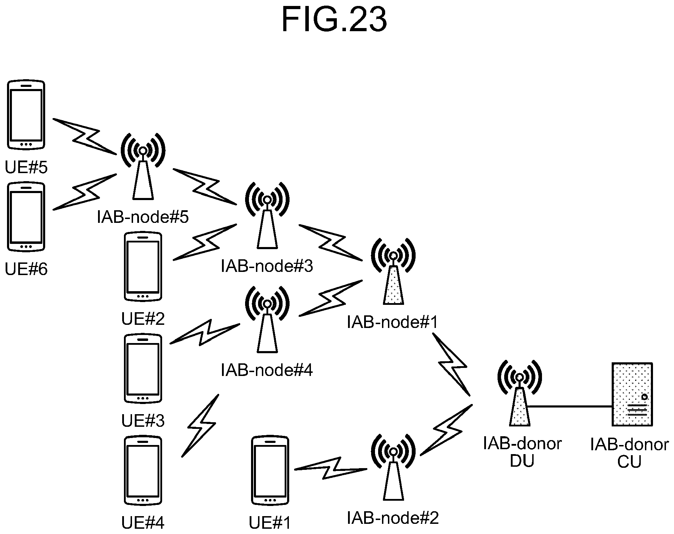

FIG. 23 is a diagram illustrating an example of allocation of the multicast BAP address in the IAB base station. FIG. 23 illustrates an example in which the multicast BAP address is also allocated to the terminal IAB-node as the parent IAB node to which the child IAB node is connected. In FIG. 23, UEs #1 to #6 indicate UEs that receive multicast, unhatched IAB nodes #2 to #5 indicate IAB nodes to which the multicast BAP address is allocated, and a hatched IAB node #1 indicates an IAB node to which the multicast BAP address is not allocated.

In the example illustrated in FIG. 23, each of the IAB nodes #2 to #5 is a terminal IAB-node that is connected to the UE that receives multicast. Therefore, the multicast BAP addresses are allocated to the IAB nodes #2 to #5. That is, the multicast BAP address is also allocated to the IAB node #3 that is a parent IAB node of the IAB node #5. Note that, in the example illustrated in FIG. 23, the IAB node #3 is connected to the UE #2 and the IAB node #5 as a child IAB node. In this connection form, the IAB node #3 is the terminal IAB-node as viewed from the UE #2 and is the parent IAB node as viewed from the IAB node #5.

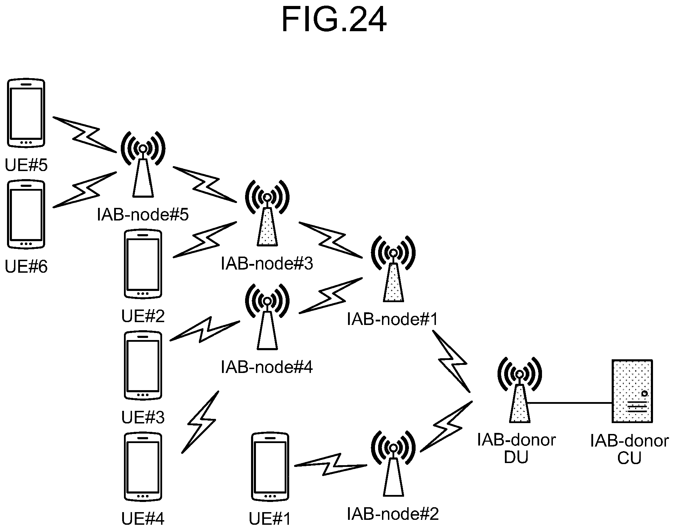

FIG. 24 is a diagram illustrating another example of the allocation of the multicast BAP address in the IAB base station. FIG. 24 illustrates an example in which the multicast BAP address is allocated to only the terminal IAB-node that is not connected to the child IAB node. In FIG. 24, UEs #1 to #6 indicate the UEs that receive multicast, unhatched IAB nodes #2, #4, and #5 indicate IAB nodes to which the multicast BAP address is allocated, and hatched IAB nodes #1 and #3 indicate IAB nodes to which the multicast BAP address is not allocated.

In the example illustrated in FIG. 24, each of the IAB nodes #2 to #5 is connected to the UE that receives the multicast. However, the IAB node #3 is also connected to the IAB node #5 to be a child IAB node. Therefore, the multicast BAP address is not allocated to the IAB node #3, and the multicast BAP addresses are allocated to the IAB nodes #2, #4, and #5. That is, in the example illustrated in FIG. 24, the multicast BAP address is allocated to the IAB node that is connected to the UE and is not connected to another IAB node (child IAB node).

As the method of (B) described above, allocation to the child IAB node may be performed for each parent IAB node. Thus, for example, the configuration of the next hop BAP address from the IAB-donor CU to the parent IAB node can be performed using a small number of BAP addresses, and as a result, it is possible to reduce the size of the F1 signaling between the IAB-donor CU and the parent IAB node.

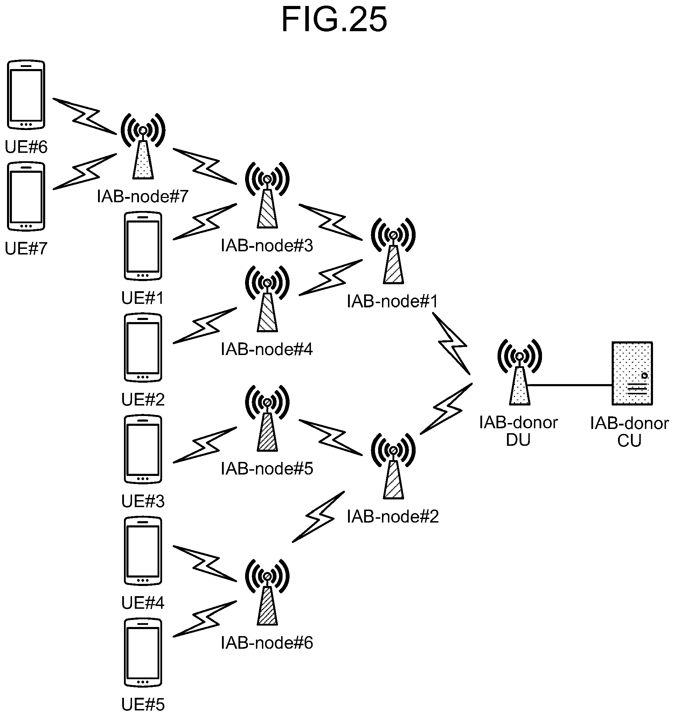

FIG. 25 is a diagram illustrating an example of the allocation of the multicast BAP address in the IAB base station. FIG. 25 illustrates an example in which the same multicast BAP address is allocated to the child IAB nodes connected to the same parent IAB node. In FIG. 25, UEs #1 to #7 indicate the UEs that receive the multicast, and a dot-hatched IAB node #7 indicates an IAB node to which the multicast BAP address is not allocated. In FIG. 25, IAB nodes with positive-slope hatching, IAB nodes with negative-slope hatching, and IAB nodes hatched with positive-slope lines with narrow intervals indicate IAB nodes to which different multicast BAP addresses are allocated, respectively. In other words, the same multicast BAP address is allocated to the IAB nodes with the same hatching pattern, of the IAB nodes #1 to #6.

The same BAP address may be allocated to multicast contents. Thus, for example, it is possible to reduce the number of BAP addresses used for the multicast, and as a result, it is possible to increase the number of IAB nodes accommodated in the communication system.

A different RLC channel may be used for each multicast content. The different RLC channels may be used, for example, in a case where the same BAP address is allocated to the multicast contents. As a result, for example, while it is possible to reduce the number of BAP addresses used for the multicast, it is possible to identify the multicast content.

The same path ID may be used for the multicast contents. Thus, for example, it is possible to reduce the number of path IDs used for the multicast, and as a result, it is possible to increase the number of IAB nodes accommodated in the communication system.

A different RLC channel may be used for each multicast content. The different RLC channels may be used, for example, in a case where the same path ID is allocated to the multicast contents. As a result, for example, while it is possible to reduce the number of path IDs used for the multicast, it is possible to identify the multicast content.

Different multicast BAP addresses may be allocated to child IAB nodes respectively connected to different parent IAB nodes. As a result, for example, it is possible to quickly determine the IAB node to be a multicast transmission target in the communication system.

As another example, the same multicast BAP address may be allocated to the child IAB nodes respectively connected to the different parent IAB nodes. The multicast BAP address may be used as the next hop BAP address, for example. In a case where the multicast BAP address is used as the next hop BAP address, a value of the next hop BAP address may be determined in a standard. Thus, for example, it is not necessary to configure the multicast BAP address as the next hop BAP address, from the IAB-donor CU to the IAB-donor DU and/or the IAB node, and as a result, it is possible to reduce the size of the F1 signaling.

As the method of (C) described above, each IAB node may be allocated to each bit of the BAP address. The IAB-donor CU may notify the IAB node of information about a bit position of the BAP address to be allocated to the IAB node. The IAB node may recognize a bit position to be allocated to the IAB node, using the information. The IAB node may determine whether or not the IAB node is included in a destination, using a value of the bit of the BAP address included in the BAP header. As a result, for example, the IAB node can quickly determine whether or not the IAB node is included in the destination.

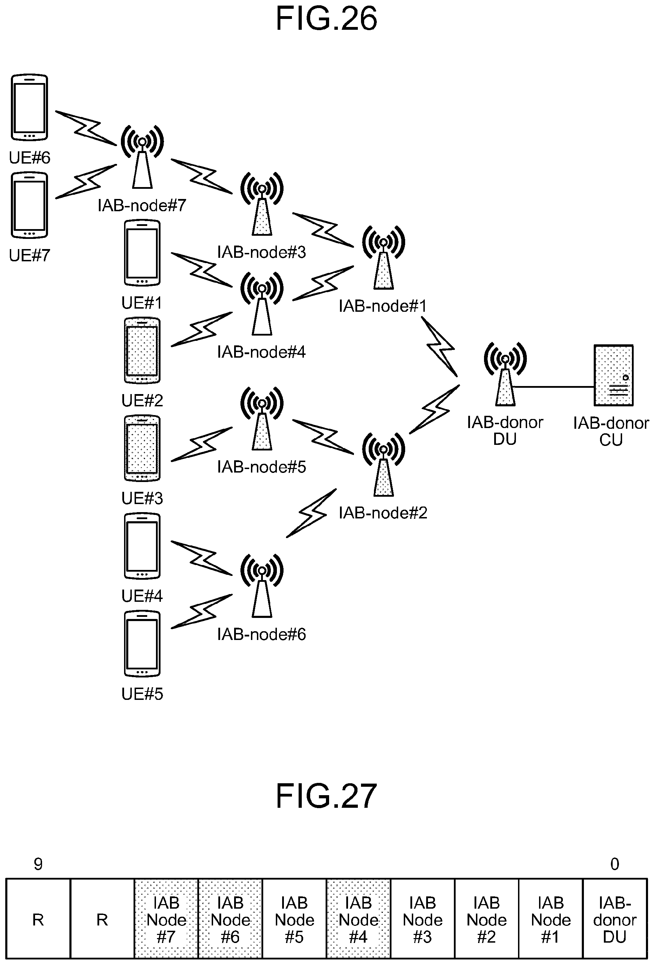

FIG. 26 is a diagram illustrating still another example of the allocation of the multicast BAP address in the IAB base station. FIG. 26 illustrates an example in which unhatched UEs #1 and #4 to #7 indicate the UEs that receive the multicast and hatched UEs #2 and #3 indicate the UEs that do not receive the multicast. In the example illustrated in FIG. 26, the multicast BAP address is allocated to the terminal IAB-node that is connected to the UE that receives the multicast. In FIG. 26, the hatched IAB nodes #1 to #3 and #5 indicate the IAB nodes to which the multicast BAP address is not allocated, and the unhatched IAB nodes #4, #6, and #7 indicate the IAB nodes to which the multicast BAP address is allocated.

FIG. 27 is a diagram illustrating a bitmap of the multicast BAP address allocated in FIG. 26. The multicast BAP address in the example illustrated in FIG. 27 includes 10 bits including a bit 0 to a bit 9. In the example illustrated in FIG. 27, the bit 0 (LSB) is allocated to the IAB-donor DU, and the bits 1 to 7 are respectively allocated to the IAB nodes #1 to #7. The bits 8 and 9 are empty bits. The bit may be a reserved bit. As a result, for example, it is possible to improve expandability in the future.

The multicast BAP addresses are allocated to the IAB nodes #4, #6, and #7 in FIG. 26. In this case, "1" is allocated to the bits 4, 6, and 7 in FIG. 27, and "0" is allocated to the other bits. Note that, in FIG. 27, the bits to which "1" is allocated are hatched. Therefore, the multicast BAP address allocated in the examples in FIGS. 26 and 27 is expressed as "0011010000" in binary notation.

In FIG. 27, an example in a case where the multicast BAP address includes 10 bits is illustrated. However, the number of bits may be a predetermined number of bits. The predetermined number of bits may be the number of bits different from 10 bits. As a result, for example, it is possible to improve flexibility of the communication system.

In FIG. 27, an example is illustrated in which upper two bits of the multicast BAP address are empty bits. However, a predetermined bit pattern may be allocated. The bit pattern may be a predetermined bit pattern indicating the multicast BAP address. The bit pattern may include bits the number of which is different from two. The IAB-donor DU and/or the IAB node may determine that the BAP address is the multicast BAP address, in response to the fact that a value of the predetermined bit position of the BAP address matches the bit pattern. As a result, for example, it is possible to reduce a processing amount of the communication system.

Different path IDs may be allocated to the same destination BAP address. For example, the different path IDs may be allocated to the respective paths to the terminal IAB-node. As another example, the different path IDs may be allocated to the respective different multicast contents. By allocating the path ID to each multicast content, for example, the IAB node can quickly identify the multicast content.

The same path ID may be allocated to different destination BAP addresses. As a result, for example, it is possible to reduce the number of path IDs used for the multicast. A different RLC channel may be used for each multicast content. As a result, for example, while it is possible to reduce the number of path IDs used for the multicast, it is possible to identify the multicast content.

The method of (C) described above may be used for unicast. As a result, for example, in the unicast, the IAB node can quickly determine that the IAB node is the destination.

As the method of (D) described above, the same BAP address may be allocated to the IAB nodes in the same layer. The layer described above may be a layer based on the IAB-donor CU.

The multicast BAP address allocated to the IAB nodes in the same layer may be configured as the next hop BAP address. As a result, for example, it is possible to quickly execute the routing process by the IAB node.

The multicast BAP address allocated to the IAB nodes in the same layer may be configured as the transmission destination BAP address. The plurality of BAP addresses may be configured as the transmission destination BAP address. For example, in a case where the layers of the terminal IAB-nodes are different from each other, the plurality of BAP addresses may be configured as the transmission destination BAP address. The plurality of BAP addresses may be included in the BAP header. The IAB node and/or the IAB-donor DU may perform scheduling using the plurality of BAP addresses included in the BAP header. For example, in a case where the IAB node is the terminal IAB-node and is connected to the child IAB node, the IAB node may transmit the multicast data to the UE after a predetermined time has elapsed from the transmission to the child IAB node. The predetermined time may be determined using a layer of an IAB node to be the BAP address target included in the destination BAP header. As a result, for example, it is possible to reduce a reception time difference between the UEs connected to the terminal IAB-nodes in the different layers, for the same multicast data.

The same BAP address may be allocated to the child IAB nodes connected to the different parent IAB nodes. As a result, for example, it is possible to reduce the number of used BAP addresses.

A predetermined BAP address indicating the layer may be provided. The BAP address may be determined in advance in a standard or may be determined by the IAB-donor CU. The single or the plurality of IAB nodes may be associated with the predetermined BAP address. The single or the plurality of IAB nodes may be the IAB nodes in the same layer.

The IAB-donor CU may determine the association described above and notify the IAB-donor DU and/or the IAB node of the association described above. The notification may include the BAP address and information about a BAP address of a target IAB node. The notification may be included in the F1 interface, for example, the signaling of the BAP MAPPING CONFIGURATION disclosed in Non Patent Literature 35 (TS38.473). The notification may include information about the layer, instead of the BAP address or may include both of the BAP address and the information about the layer. The notification may include information about the layer of the IAB-donor DU and/or the IAB node. The IAB-donor DU and/or the IAB node may perform routing using the information. As a result, for example, it is possible to avoid complexity of the routing process by the IAB node.

The IAB-donor DU and/or the IAB node may autonomously perform the association described above. The IAB-donor DU and/or the IAB node may derive a layer of a subordinate IAB node, using the information about the layer of the IAB-donor DU and/or the IAB node. The IAB-donor CU may notify the IAB-donor DU and/or the IAB node of the information about the layer of the IAB-donor CU. As a result, for example, it is possible to quickly execute the routing process by the IAB node.

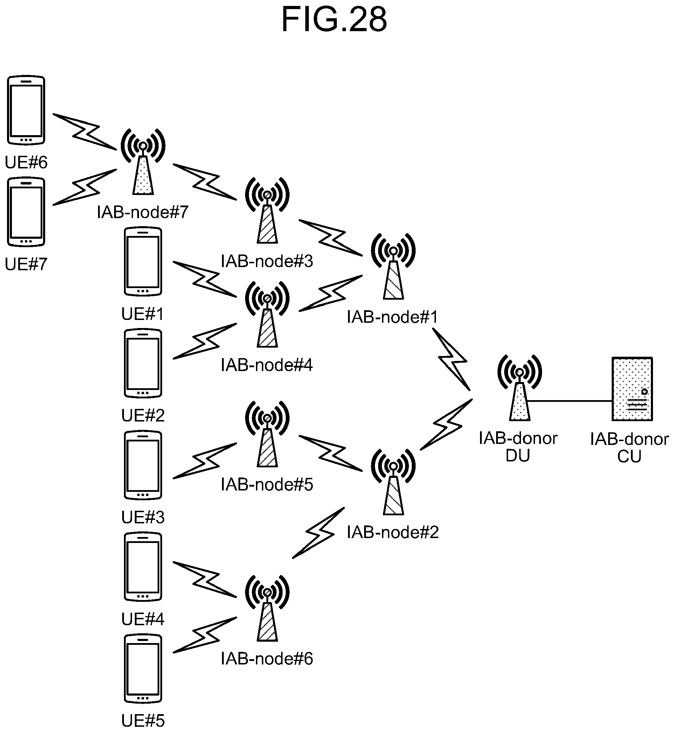

FIG. 28 is a diagram illustrating yet another example of the allocation of the multicast BAP address in the IAB base station. FIG. 28 illustrates an example in which the same BAP address is allocated to the IAB nodes in the same layer. The layer in FIG. 28 is a layer based on the IAB-donor DU. In FIG. 28, UEs #1 to #7 indicate the UEs that receive the multicast, and a dot-hatched IAB node #7 indicates an IAB node to which the multicast BAP address is not allocated. In FIG. 28, an IAB node with negative-slope lines and an IAB node with positive-slope lines respectively indicate IAB nodes of a first layer and a second layer.

Different BAP addresses may be allocated to the child IAB nodes respectively connected to the different parent IAB nodes. As a result, for example, it is possible to avoid the complexity of the communication system.

As another method of (D) described above, the layer described above may be a layer based on the UE. The same IAB node may include BAP addresses corresponding to a plurality of layers. For example, in a case where the multiple UEs respectively belong to the different layers with reference to the IAB-donor CU, the same IAB node may include the BAP addresses corresponding to the plurality of layers. The same BAP address may be allocated to the IAB nodes in the same layer. As another example, the IAB node may include a BAP address corresponding to the deepest layer, among the layers with reference to the one or the plurality of subordinate UEs. The IAB node may use information about the layer in scheduling. As a result, for example, it is possible to reduce a delay in data transmission from the IAB node to the UE. As another example, the IAB node may include a BAP address corresponding to the shallowest layer, among the layers with reference to the one or the plurality of subordinate UEs.

As the method of (E) described above, the same BAP address may be allocated to the IAB nodes in and under a predetermined layer. The same BAP address may be allocated to the IAB node preceding to the predetermined layer. As a result, for example, it is possible to reduce radio resources in the multicast communication using the IAB base station. The layer may be a layer based on the IAB-donor CU. As another example, the layer may be a layer based on the UE.

As the method of (F) described above, the same BAP address may be allocated to the IAB nodes to be the path from the IAB-donor CU to the UE.

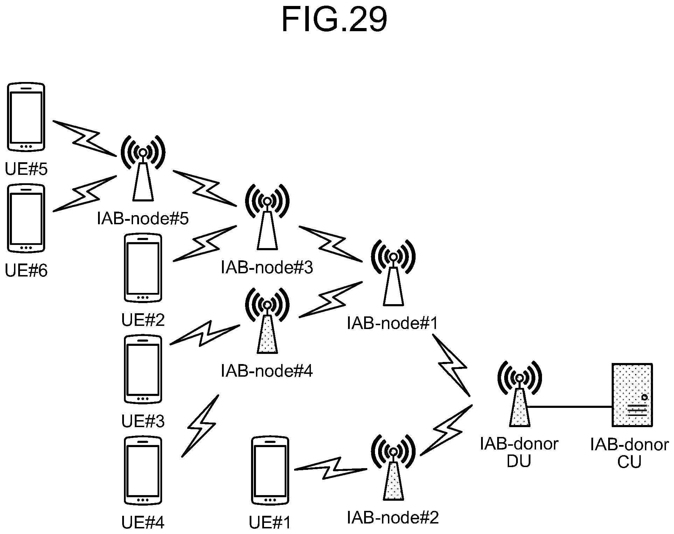

FIG. 29 is a diagram illustrating an example in which the same BAP address is allocated to the IAB nodes to be the path from the IAB-donor CU to the UE. FIG. 29 illustrates an example in which the multicast BAP address is allocated to the IAB nodes #1, #3, and #5 to be a path to the UE #5. In FIG. 29, UEs #1 to #6 indicate the UEs that receive the multicast, hatched IAB nodes #2 and #4 indicate IAB nodes to which the multicast BAP address is not allocated, and unhatched IAB nodes #1, #3, and #5 indicate IAB nodes to which the multicast BAP address is allocated. The same BAP address is allocated to the IAB nodes #1, #3, and #5 as the multicast BAP address.

As an example of (G) described above, a combination of (A) and (B) may be used. For example, the multicast BAP address allocated to the terminal IAB-node in (A) described above may be used as the destination BAP address, and the multicast BAP address allocated to the child IAB node in (B) described above may be used as the next hop BAP address. As a result, for example, it is possible to avoid the complexity of the multicast transmission by the IAB node.

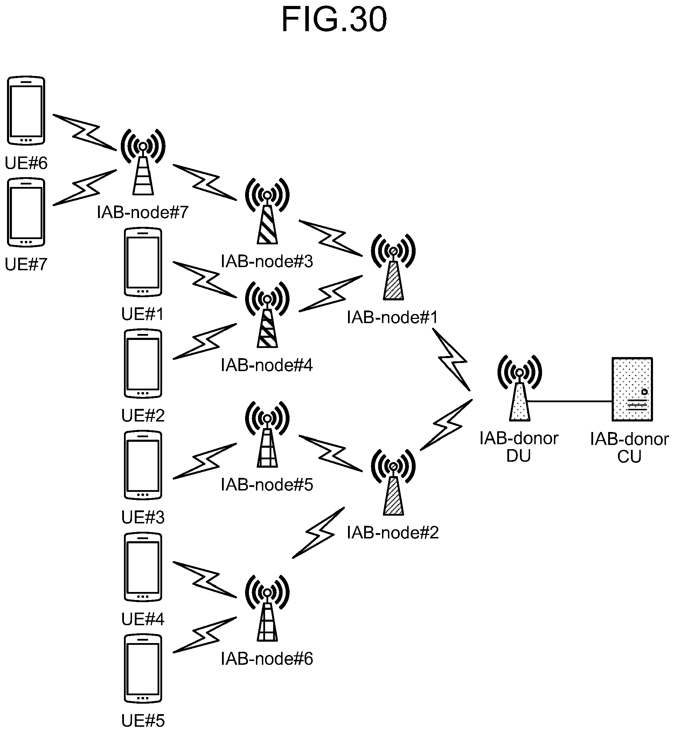

FIG. 30 is a diagram illustrating an example in which the multicast BAP address is allocated to the terminal IAB-node and the child IAB nodes connected to the same parent IAB node. In FIG. 30, UEs #1 to #7 indicate the UEs that receive the multicast. In FIG. 30, a BAP address for the terminal IAB-node is allocated to the IAB nodes #4 to #7 with horizontal lines. A BAP address allocated to the child IAB nodes connected to the same parent IAB node is allocated to the IAB nodes #1 and #2 with positive-slope lines, the IAB nodes #3 and #4 with negative-slope lines, and the IAB nodes #5 and #6 with vertical lines. In FIG. 30, both BAP addresses described above are allocated to the IAB nodes #4 to #6. Specifically, the BAP address for the terminal IAB-node and the BAP address allocated to the child IAB node of which the parent IAB node is the IAB node #1 are allocated to the IAB node #4. The BAP address for the terminal IAB-node and the BAP address allocated to the child IAB node of which the parent IAB node is the IAB node #2 are allocated to the IAB nodes #5 and #6.

The IAB node may transmit a BAP-PDU received from the parent IAB node to the child IAB node. The operation may be performed, for example, in a case where the child IAB node is connected to the IAB node. As a result, for example, in a case where the IAB node is included in the destination BAP address, multicast transmission to the child IAB node is enabled.

The IAB node may transfer the BAP-PDU received from the parent IAB node to an upper layer. The IAB node may remove the BAP header from the BAP-PDU. The operation may be performed, for example, in a case where the IAB node is the terminal IAB-node. As a result, for example, the multicast to the UE is enabled.

The IAB node may perform both operations described above. Both operations described above may be performed, for example, in a case where the IAB node is the terminal IAB-node, that is, the IAB node is connected to the UE and is also connected to the child IAB node. The IAB node may duplicate a BAP-PDU as disclosed in a second embodiment. As a result, for example, it is possible to perform multicast transmission from the IAB node to the child IAB node and the UE.

In the multicast transmission from the IAB base station, switching between the PTM leg and the PTP leg may be performed. The switching may be determined by the IAB-donor CU or may be determined by the IAB node directly connected to the UE. The IAB-donor CU and/or the IAB node may make the determination, using information about a PDCP sequence number (SN), for example, information about a PDCP SN of which transmission to the UE has been acknowledged. The IAB node may notify the IAB-donor CU of the determination result. The IAB-donor CU may determine a leg to be used in the multicast, using the determination result by the IAB-donor CU and/or the IAB node.

As another example related to the switching, the switching may be determined by the IAB-donor DU or may be determined by the IAB node existing in the middle of the path to the UE. The IAB-donor DU and/or the IAB node may make the determination, using the information about the RLC SN, for example, the information about the RLC SN of which transmission to the UE has been acknowledged. The IAB-donor DU and/or the IAB node may notify the IAB-donor CU of the determination result. The IAB-donor CU may determine a leg to be used in the multicast, using the determination result by the IAB-donor CU and/or the IAB node.

As another example related to the switching, the UE may determine the switching. For example, the UE may make determination, using a multicast reception status (for example, PDCP SN, RLC SN). The UE may notify the base station of a switching request or may notify the base station of information about the multicast reception status. The UE may be able to autonomously transmit the notification to the base station. For the notification, a PDCP status report (refer to Non Patent Literature 39 (TS38.323)) may be used. The IAB-donor CU may switch the PTM/PTP, using the information received from the UE.

As another example, the UE may use PRACH or may use the RRC signaling for the notification. The IAB-donor DU and/or the IAB node that directly communicates with the UE may transfer the notification from the UE, to the IAB-donor CU. The IAB-donor DU and/or the IAB node may perform the transfer, using the F1 signaling. As a result, for example, the IAB-donor DU and/or the IAB node can notify the IAB-donor CU of a PTM/PTP switching request from the UE. The IAB-donor CU may switch the PTM/PTP, using the notification transferred from the IAB-donor DU and/or the IAB node.

For the F1 signaling described above, for example, the signaling of the UL RRC MESSAGE TRANSFER (refer to Non Patent Literature 35 (TS38.473)) may be used, or new signaling may be used. The new signaling may include, for example, information indicating that the PTM/PTP switching request has been issued from the UE, may include information about a leg before switching, may include information about a leg after switching, may include information about the multicast reception status of the UE related to the leg, or may include the plurality of pieces of information of the above. As an example of the information about the multicast reception status, information about expiration of a timer used in a PDCP layer (for example, t-reordering described in Non Patent Literature 39) may be used, information indicating that the number of missing PDCP Service Data Units (SDU) and/or the PDCP PDUs related to the multicast becomes equal to or more than a predetermined value may be used, information about expiration of a timer used in an RLC layer (for example, t-reassembly described in Non Patent Literature 40) may be used, or information indicating that the number of missing RLC Service Data Units (SDU) and/or the RLC PDUs related to the multicast becomes equal to or more than a predetermined value may be used. The predetermined information described above may be determined in advance in a standard, or the IAB-donor CU may determine the predetermined information to perform a notification or broadcast thereof to the UE. As the timer used in the PDCP layer described above, a new timer may be provided. As the timer used in the RLC layer described above, a new timer may be provided. The information described above may be included as a cause, in the F1 signaling, for example. For example, the information about the multicast reception status may be included as a cause for the PTM/PTP leg switching request from the UE. As a result, for example, the IAB-donor CU can acquire a detailed status of the UE.

In the RRC signaling described above, information similar to that of the F1 signaling described above may be included. As a result, for example, an effect similar to the above is obtained.

The IAB-donor CU may notify the IAB-donor DU and/or the IAB node of information about activation/deactivation of the leg. For the notification, the F1 signaling, for example, UE CONTEXT SETUP REQUEST disclosed in Non Patent Literature 35 (TS38.473) may be used, or UE CONTEXT MODIFICATION REQUEST may be used. The IAB-donor DU and/or the IAB node may notify the child IAB node and/or the UE of the information about the activation/deactivation of the leg. The notification may be issued, for example, using the MAC signaling. As a result, for example, it is possible to quickly notify the child IAB node and/or the UE of the information.

As another solution, the multicast transmission between the IAB nodes does not need to be performed. For example, PTM transmission between the IAB nodes does not need to be performed. As a result, for example, it is possible to avoid the complexity of the communication system.

A combination of the solutions disclosed in the first embodiment may be used. For example, the BAP header having the plurality of destination BAP addresses may include the multicast BAP address, and the plurality of destination BAP addresses configured from the IAB-donor CU may include the multicast BAP address. As a result, for example, it is possible to improve the flexibility of the multicast transmission.

According to the first embodiment, it is possible to configure the BAP address in the multicast between the IAB nodes, and as a result, it is possible to perform the multicast using the IAB base station.

### Second Embodiment.

In the multicast using the IAB base station, data may be duplicated. For example, in the multicast using the PTP, in a case where the multicast data is transmitted to the UE and the child IAB node, the data may be duplicated.

However, a subject that duplicates the data is not disclosed in each of the Non Patent Literatures described above or the like. As a result, in the multicast using the IAB base station, there is a possibility that inconsistency between devices occurs and a malfunction of the communication system occurs.

In the second embodiment, a method for solving such a problem is disclosed.

In order to solve the problem described above, in the communication system according to the present embodiment, the IAB-donor CU duplicates the multicast data. The duplication may be performed in the PDCP layer. The IAB-donor CU may transmit the data duplicated in the PDCP layer to each UE. The IAB-donor DU and/or the IAB node may be used for the transmission.

Other solutions are disclosed. The IAB-donor DU and/or the IAB node may duplicate the multicast data. The IAB-donor DU and/or the IAB node may perform the duplication in the BAP layer.

The duplication in the BAP layer may be performed in a transmission-side BAP layer. For example, in the multicast using the PTP, the multicast data may be duplicated in the transmission-side BAP layer. As a result, for example, a memory buffer usage amount of the IAB node can be reduced.

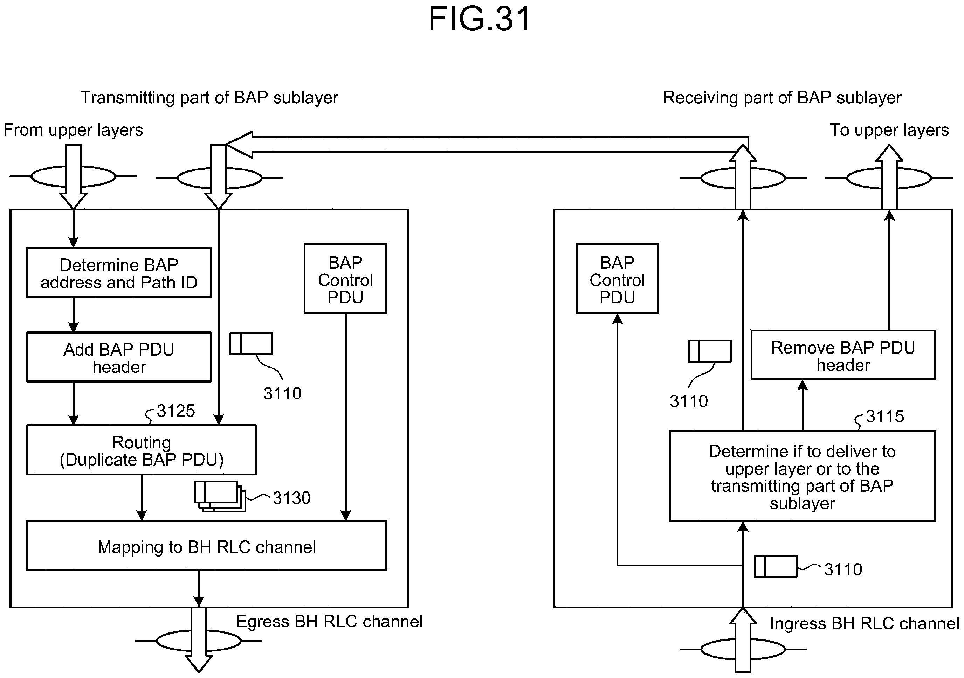

FIG. 31 is a diagram illustrating an example of an operation of the duplication in the BAP layer. FIG. 31 is an example of a BAP layer operation in the IAB node connected to the plurality of child IAB nodes. The BAP layer illustrated in FIG. 31 includes a reception-side BAP layer and the transmission-side BAP layer. In FIG. 31, an example is illustrated in which the duplication in the BAP layer is performed in the transmission-side BAP layer.

In FIG. 31, a received BAP-PDU 3110 is input from an input-side BH RLC channel into the reception-side BAP layer. A functional unit 3115 included in the reception-side BAP determines whether to transfer the BAP-PDU to an upper layer or to the transmission-side BAP layer. In the example illustrated in FIG. 31, the BAP-PDU 3110 is transferred to the transmission-side BAP layer.

In FIG. 31, the BAP-PDU 3110 input to the transmission-side BAP layer is input to a routing functional unit 3125. The routing functional unit 3125 determines a transmission destination child IAB node and duplicates the BAP-PDU 3110 to generate a plurality of BAP-PDUs 3130. The generated BAP-PDUs 3130 are mapped to an output-side BH RLC channel. The respective generated BAP-PDUs 3130 may be transmitted to different IAB nodes.

The duplication in the BAP layer may be performed in the reception-side BAP layer. For example, in the terminal IAB-node to which the child IAB node is connected, the duplication of the multicast data by the reception-side BAP layer may be performed. As a result, for example, it is possible to avoid complexity of a multicast data transmission process in the terminal IAB-node to which the child IAB node is connected. As another example, in the PTP transmission from the terminal IAB-node to the UE, the duplication of the multicast data by the reception-side BAP layer may be performed. As a result, for example, it is possible to avoid complexity of design of the communication system.

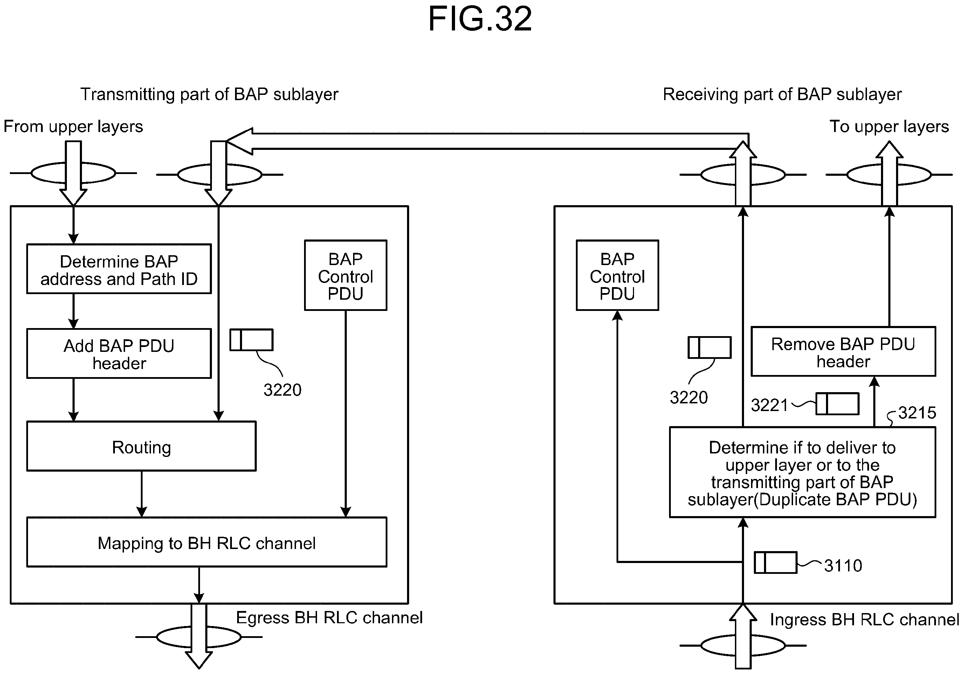

FIG. 32 is a diagram illustrating another example of the operation of the duplication in the BAP layer. FIG. 32 is an example of a BAP layer operation in the terminal IAB-node to which the child IAB node is connected. The BAP layer illustrated in FIG. 32 includes a reception-side BAP layer and a transmission-side BAP layer. In FIG. 32, an example is illustrated in which the duplication in the BAP layer is performed in the reception-side BAP layer.

In FIG. 32, the received BAP-PDU 3110 is input from an input-side BH RLC channel into the reception-side BAP layer. A functional unit 3215 included in the reception-side BAP determines whether to transfer the BAP-PDU to an upper layer or to the transmission-side BAP layer. If necessary, the BAP-PDU 3110 is duplicated in the BAP layer. In the example illustrated in FIG. 32, the BAP-PDU 3110 is duplicated to generate a BAP-PDU 3220 to be transferred to the transmission-side BAP layer and a BAP-PDU 3221 to be transferred to the upper layer.

In FIG. 32, the BAP-PDU 3220 input to the transmission-side BAP layer is mapped to the output-side BH RLC channel through routing.

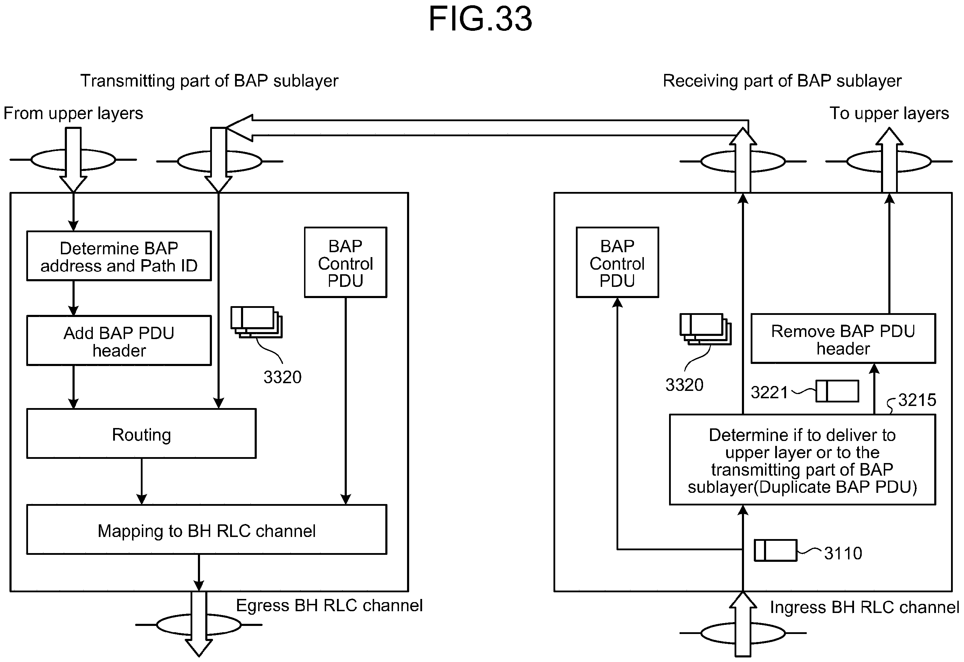

FIG. 33 is a diagram illustrating still another example of the operation of the duplication in the BAP layer. FIG. 33 is an example of a BAP layer operation in the terminal IAB-node to which the plurality of child IAB nodes are connected. The BAP layer illustrated in FIG. 33 includes the reception-side BAP layer and the transmission-side BAP layer. In FIG. 33, an example is illustrated in which the duplication in the BAP layer is performed in the reception-side BAP layer.

In FIG. 33, the received BAP-PDU 3110 is input from the input-side BH RLC channel into the reception-side BAP layer. A functional unit 3215 included in the reception-side BAP determines whether to transfer the BAP-PDU to an upper layer or to the transmission-side BAP layer. If necessary, the BAP-PDU 3110 is duplicated in the BAP layer. In the example illustrated in FIG. 33, the BAP-PDU 3110 is duplicated to generate the plurality of BAP-PDUs 3320 to be transferred to the transmission-side BAP layer and the BAP-PDU 3221 to be transferred to the upper layer. The functional unit 3215 may perform the duplication using routing information of the routing functional unit in the transmission-side BAP layer or may include routing information similar to the routing information of the routing functional unit in the transmission-side BAP layer.

In FIG. 33, the plurality of BAP-PDUs 3320 input to the transmission-side BAP layer are mapped to the output-side BH RLC channel through routing.

The duplication in the BAP layer may be performed in both of the transmission-side BAP layer and the reception-side BAP layer. For example, in the terminal IAB-node to which the plurality of child IAB nodes are connected, the duplication may be performed in both of the transmission-side BAP layer and the reception-side BAP layer. For example, the duplication in the reception-side BAP layer may generate the BAP-PDU for the child IAB node and the BAP-PDU for the UE, or the duplication in the transmission-side BAP layer may duplicate the BAP-PDU for the plurality of child IAB nodes. As a result, for example, a memory buffer usage amount of the IAB node can be reduced.

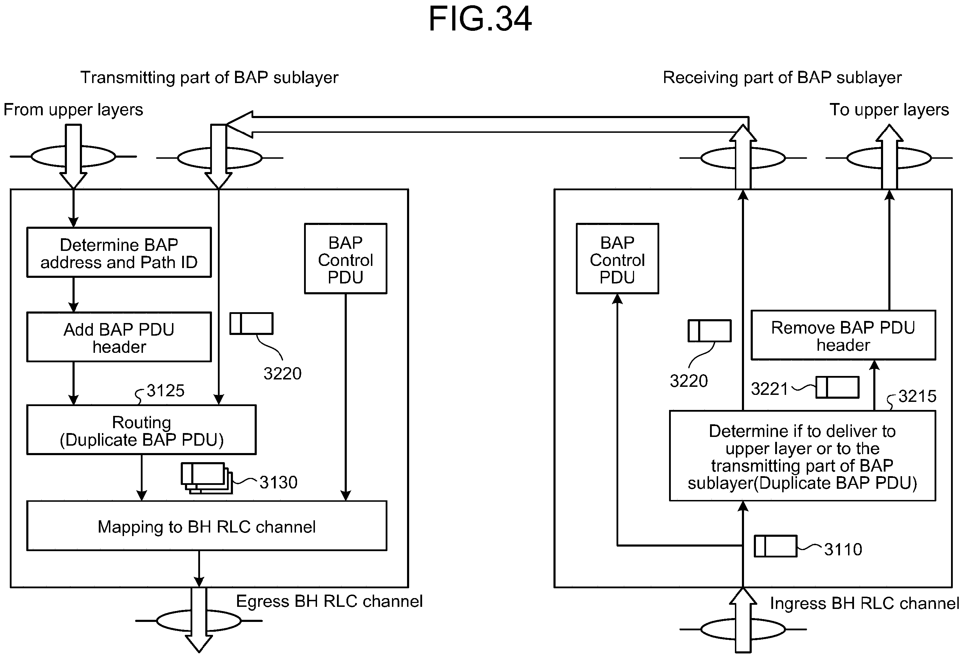

FIG. 34 is a diagram illustrating an example of the operation of the duplication in the BAP layer. FIG. 34 is an example of the BAP layer operation in the terminal IAB-node to which the plurality of child IAB nodes are connected. The BAP layer illustrated in FIG. 34 includes the reception-side BAP layer and the transmission-side BAP layer. In FIG. 34, an example is illustrated in which the duplication in the BAP layer is performed in the transmission-side BAP layer and the reception-side BAP layer.

In FIG. 34, the received BAP-PDU 3110 is input from the input-side BH RLC channel into the reception-side BAP layer. A functional unit 3215 included in the reception-side BAP determines whether to transfer the BAP-PDU to an upper layer or to the transmission-side BAP layer. If necessary, the BAP-PDU 3110 is duplicated in the BAP layer. In the example illustrated in FIG. 34, the BAP-PDU 3110 is duplicated to generate a BAP-PDU 3220 to be transferred to the transmission-side BAP layer and a BAP-PDU 3221 to be transferred to the upper layer.

In FIG. 34, the BAP-PDU 3220 input to the transmission-side BAP layer is input to a routing functional unit 3125. The routing functional unit 3125 determines a transmission destination child IAB node and duplicates the BAP-PDU 3220 to generate a plurality of BAP-PDUs 3130. The generated BAP-PDUs 3130 are mapped to an output-side BH RLC channel.

As another example of the method for performing the duplication in the BAP layer in both of the transmission-side BAP layer and the reception-side BAP layer, the duplication may be performed in both of the transmission-side BAP layer and the reception-side BAP layer, in the plurality of child IAB nodes and the terminal IAB-node to which the plurality of UEs are connected. For example, the duplication in the reception-side BAP layer may generate the BAP-PDU for the child IAB node and the plurality of BAP-PDUs for the plurality of UEs, or the duplication in the transmission-side BAP layer may duplicate the BAP-PDUs for the plurality of child IAB nodes. As a result, for example, it is possible to avoid complexity of the communication system.

The duplication of the multicast data in the IAB-donor DU and/or the IAB node may be performed in the upper layer. For example, the duplication may be performed in an IP layer. As a result, for example, a memory buffer usage amount of the IAB node can be reduced. As another example, the duplication may be performed in a UDP layer. As a result, for example, the memory buffer usage amount of the IAB node can be further reduced. As another example, the duplication may be performed in a GTP-u layer. As a result, for example, the memory buffer usage amount of the IAB node can be further reduced.

As another example, the duplication of the multicast data may be performed at the time of transfer from a reception-side GTP-u layer of the IAB node to a transmission-side RLC layer of the IAB node. As a result, for example, the memory buffer usage amount of the IAB node can be further reduced.

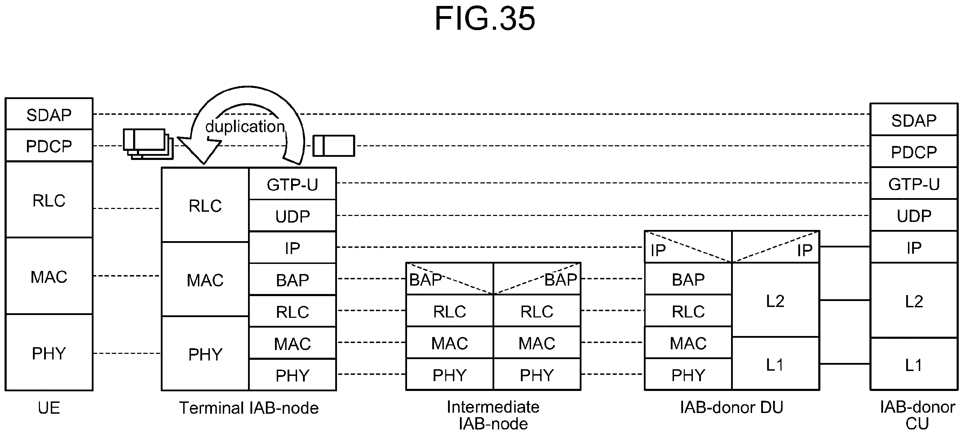

FIG. 35 is a diagram illustrating an example of an operation for duplicating the multicast data between the reception side and the transmission side of the terminal IAB-node, on a protocol stack from the IAB-donor CU to the UE via the IAB-donor DU, an intermediate IAB node, and the terminal IAB-node. In the example illustrated in FIG. 35, the multicast data is duplicated after a GTP-u process on the reception side of the terminal IAB-node and is input to the transmission-side RLC layer.

A new layer that duplicates the multicast data may be provided. For example, the layer may be provided above the GTP-u layer of the terminal IAB-node, may be provided above the BAP layer of the IAB node in the middle of the terminal IAB-node, or may be provided above the IP layer of the IAB-donor DU. The duplication of the multicast data in the IAB-donor DU and/or the IAB node may be performed in the layer. As a result, for example, it is possible to avoid complexity of the communication system.

According to the second embodiment, it is possible to prevent the inconsistency between the devices in the multicast using the IAB base station, and as a result, a malfunction of the communication system can be prevented.

### Third Embodiment.

In the multicast using the IAB base station, a plurality of data paths may be merged in the middle. The paths may be merged in the terminal IAB-node or in the IAB node which is not the terminal IAB-node.

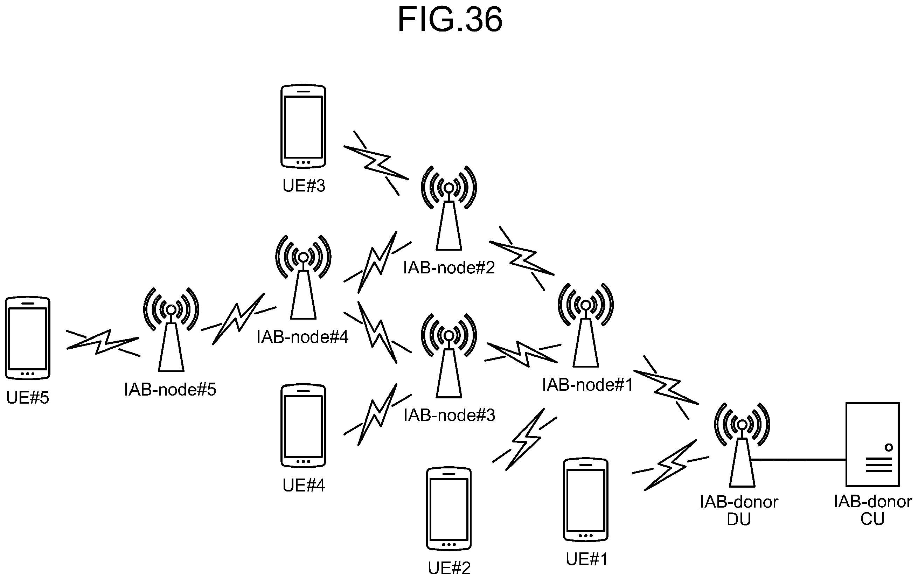

FIG. 36 is a diagram illustrating an example in which the plurality of data paths merge in the middle. In FIG. 36, at the IAB node #4 that is not the terminal IAB-node, a path from the IAB node #2 and a path from the IAB node #3 merge.

However, the IAB node #4 that is not the terminal IAB-node cannot refer to a PDCP header. Therefore, in a case where the node where the paths merge is the IAB node that is not the terminal IAB-node, it is not possible for the IAB node to determine identity of the multicast data. Therefore, a packet duplication method (refer to Non Patent Literature 39 (TS38.323)) cannot be applied to improve efficiency in the multicast. This causes a problem of insufficiency of the radio resources.

In the third embodiment, a method for solving such a problem is disclosed.

In order to solve the problem described above, in the communication system according to the present embodiment, only multicast data arrived from one path is transmitted to the child IAB node. The IAB node may discard multicast data arrived from another path.

The discard may be performed in a case where the multicast data from the one path has arrived. The IAB node may hold the multicast data arrived from the other path, until the multicast data from the one path arrives. For example, in a case where the multicast data from the one path does not arrive for a predetermined time period, the IAB node may transmit the multicast data arrived from the other path to the child IAB node. As a result, for example, it is possible to improve reliability of the multicast transmission.

The IAB-donor CU may notify the IAB node of information about PDCP configuration. For example, the information may include a bearer identifier or may include information about the RLC channel. For the notification of the information, the RRC signaling, for example, the RRC reconfiguration may be used. The notification may be issued via a parent IAB node related to each path of the IAB node. The IAB node may acquire the information about the PDCP configuration of the multicast data, using the information. As a result, for example, the IAB node can recognize that the pieces of data received from the plurality of paths are the same multicast content data.

A plurality of prior-hop BAP addresses (prior-hop BAP address: refer to Non Patent Literature 35 (TS38.473)) may be provided. A plurality of ingress backhaul RLC channel identifiers (Ingress Backhaul RLC Channel ID: refer to Non Patent Literature 35 (TS38.473)) may be provided. A plurality of combinations of the single prior-hop BAP address and the one or the plurality of ingress backhaul RLC channel identifiers may be provided. The plurality of prior-hop BAP addresses and/or the plurality of ingress backhaul RLC channel identifiers may be provided for one piece of mapping information. As a result, for example, the IAB node can quickly recognize that the pieces of multicast data received from the plurality of paths are the same multicast content data.

The IAB-donor CU may determine from which path the multicast data to be transmitted to the child IAB node is received by the IAB node. The IAB-donor CU may notify the IAB node of information indicating from which path the multicast data to be transmitted to the child IAB node is transmitted. The notification may be issued using the RRC signaling, may be issued using the MAC signaling, or may be issued using L1/L2 signaling.

As another example, the IAB node or the UE may determine from which path the multicast data to be transmitted to the child IAB node is received by the IAB node. The IAB node and/or the UE may notify the IAB-donor CU of the multicast data from which path is transmitted to the child IAB node. Thus, for example, the path of the multicast data can be determined based on a reception environment to the IAB node and/or the UE, and as a result, communication quality can be improved.

Among the plurality of prior-hop BAP addresses and/or the plurality of ingress backhaul RLC channel identifiers described above, a valid prior-hop BAP address and/or ingress backhaul RLC channel identifier may be configured. The configuration may be performed by the IAB-donor CU, the IAB node, or the UE. In a case where the IAB-donor CU performs the configuration, the notification described above may be used. The IAB node may transmit the multicast data from the valid prior-hop BAP address and/or ingress backhaul RLC channel identifier to the child IAB node. As a result, for example, it is possible to avoid complexity of path selection for the multicast.

The pieces of multicast data arrived from two or more paths may be transmitted to the child IAB node. To determine from which path the multicast data to be transmitted to the child IAB node has arrived, the method described above may be used. As a result, for example, while reducing a usage amount of the radio resource, it is possible to secure redundancy of the multicast transmission.

The pieces of multicast data arrived from the single or the plurality of paths, to be transmitted to the child IAB node, may be data of a path that has arrived at the IAB node first. As a result, for example, quick communication of the multicast is enabled.

As another solution, the pieces of multicast data from the plurality of paths may be directly transmitted to the child IAB node. Thus, for example, it is possible to secure the redundancy of the multicast, and as a result, it is possible to improve the reliability of the communication system.

As another solution, merging of multicast transmission paths need not be performed. For example, the merging need not be performed in the IAB node other than the terminal IAB-node, in the terminal IAB-node, or in both of the above. As a result, for example, it is possible to avoid the complexity of the communication system.

According to the third embodiment, it is possible to efficiently use the radio resources in the multicast data transmission.

### Fourth Embodiment.

In 3GPP, support of various services using SL communication in both of EPSs and 5G core systems has been studied (refer to Non Patent Literatures 1, 16, 20, 21, 22, and 23). In the SL communication, communication is performed between terminals. Furthermore, in the SL communication, not only direct communication between the terminals, but also communication between a UE and an NW via a relay is proposed (refer to Non Patent Literature 20 (3GPP TR23.703), Non Patent Literature 23 (3GPP TS23.303), and Non Patent Literature 27 (3GPP TR38.836)). The relay between the UE and the NW may be referred to as a UE-to-NW relay or a UE-NW relay. In the present disclosure, a UE that relays between the UE and the NW may be referred to as a relay UE.

For example, it may be needed to perform communication not only between a Radio Access Network (RAN) node (for example, gNB) and a UE in a coverage of the RAN node but also between the RAN node and a more distant UE. In such a case, a method using the UE-NW relay is considered. For example, the communication between the gNB and the UE (may be referred to as remote UE) is performed via the relay UE. Communication between the gNB and the relay UE is performed with a Uu, and communication between the relay UE and the remote UE is performed with PC5. Here, a UE connected to the NW via at least one relay UE is referred to as the remote UE.

In a communication system for supporting such communication via a relay, how to improve communication quality between the UE and the NW becomes a problem. In order to improve the communication quality, there has been a method called Dual Connectivity (DC) in which the UE is connected to two base stations and performs communication (refer to Non Patent Literature 12 (TS37.340)). However, a conventional DC method discloses only a case where the UE is directly connected to the base station. In the communication between the remote UE and the NW via the relay UE, communication not only over the Uu but also over the PC5 is needed, unlike the direct communication between the remote UE and the NW. Therefore, there is a problem in that simply using the conventional method of the direct communication between the remote UE and the NW cannot be applied to the communication between the remote UE and the NW via the relay UE. Furthermore, the dual connectivity method of the communication between the remote UE and the NW via the relay UE is not disclosed in any standards or the like formulated so far.

In the fourth embodiment, a method for solving such a problem is disclosed.

In order to solve the above problem, in the present embodiment, the relay UE is connected to the plurality of base stations, in the communication between the remote UE and the NW performed via the relay UE. The plural may be, for example, two. In the communication between the remote UE and the NW via the relay UE, the relay UE is connected to the two base stations. Here, a method in which the relay UE or the remote UE is connected to the two base stations in the communication between the remote UE and the NW performed via the relay UE may be simply referred to as the DC. The two base stations may be referred to as a Master Node (MN) and a Secondary Node (SN) below. The MN has control plane (C-Plane) connection with a Core Network (CN). The MN may be a Master Cell Group (MCG). For example, a cell group may include the MNs. The SN may be a Secondary Cell Group (SCG). For example, a cell group may include the SNs.

The relay UE is connected to the plurality of gNBs, with respect to a Radio Bearer (RB) for the communication between the remote UE and the NW. The radio bearer may be, for example, a Signaling Radio Bearer (SRB). For example, the SRB may be an SRB 2 among a plurality of SRBs 0 to 2. The SRBs 0 and 1 can simplify a communication establishment process, by performing communication using a single gNB. The radio bearer may be, for example, a data radio bearer (DRB). Communication quality of the bearer for data communication can be improved.

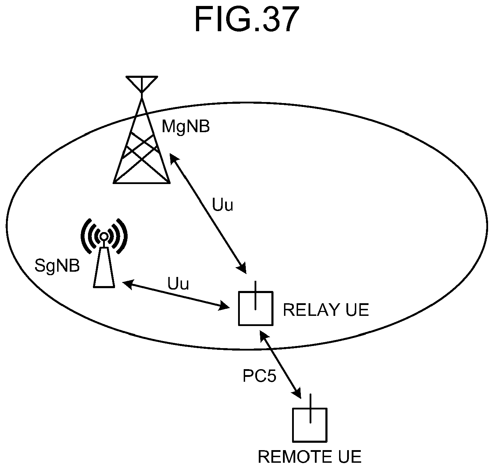

FIG. 37 is a conceptual diagram in a case where the relay UE is connected to the two gNBs in the communication between the remote UE and the NW via the relay UE, according to the fourth embodiment. In the example illustrated in FIG. 37, the Uu interface connects the relay UE and a Master gNB (MgNB) and connects the relay UE and a Secondary gNB (SgNB), and the PC5 connects the relay UE and the remote UE. Note that the MgNB corresponds to the MN described above, and the SgNB corresponds to the SN described above. The remote UE is connected to the MgNB and/or the SgNB, via the relay UE. In the communication between the remote UE and the NW, communication is performed between the relay UE and the MgNB and/or the SgNB, and communication is performed between the relay UE and the remote UE.

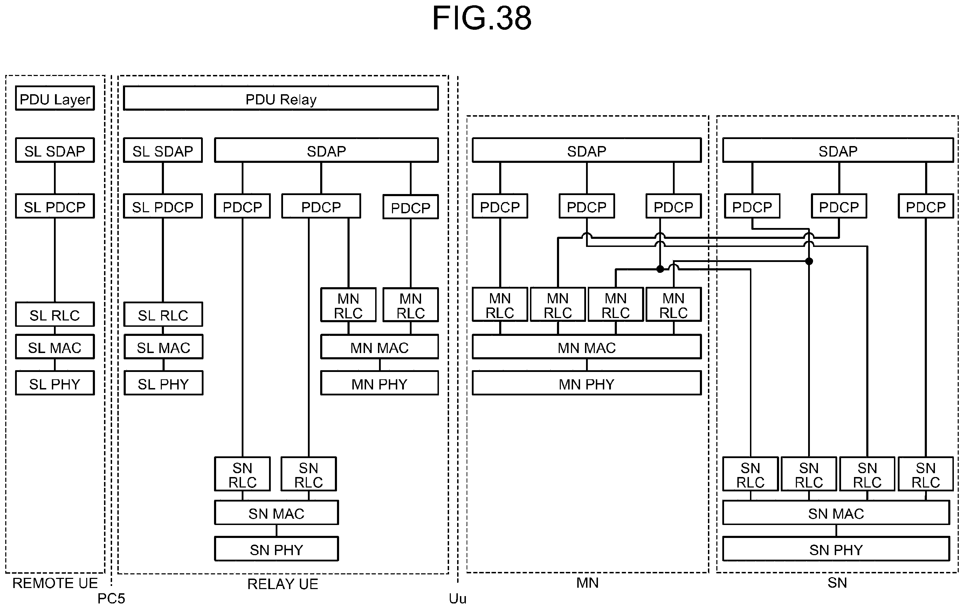

A protocol configuration in a case where the relay UE is connected to the two gNBs, in the communication between the remote UE and the NW via the relay UE, is disclosed. FIG. 38 is a diagram illustrating a protocol stack in a case where the relay UE is connected to the two gNBs in the communication between the remote UE and the NW via the relay UE, according to the fourth embodiment. A user plane (U-plane) is illustrated.

The MN and the SN have Uu protocols. The Uu protocols include SDAP, PDCP, RLC, MAC, and PHY. In FIG. 38, as a bearer for the DC, both of an MN termination bearer and an SN termination bearer, an MCG bearer, an SCG bearer, and a split bearer are illustrated together. Protocols corresponding to these bearers are configured. The single PDCP may be configured for the MN termination bearer, and the single PDCP may be configured for the SN termination bearer. In DC configuration, these bearers can be configured.

The relay UE has two Uu protocols for the MN and for the SN. The Uu protocols include SDAP, PDCP, RLC, MAC, and PHY. The bearer for the MN is the MCG bearer or the split bearer. The bearer for the SN is the SCG bearer or the split bearer. Protocols corresponding to these bearers are configured. The single PDCP may be configured for the MN termination bearer, and the single PDCP may be configured for the SN termination bearer. The relay UE terminates the DC between the MN and/or the SN and the relay UE.

The relay UE and the remote UE have a PC5 (also referred to as SL) protocol. The PC5 protocols are PC5 SDAP (SL SDAP), PC5 PDCP (SL PDCP), PC5 RLC (SL RLC), PC5 MAC (SL MAC), and PC5 PHY (SL PHY).

A PDU layer is configured between a UPF, the relay UE, and the remote UE.

The bearer is disclosed. The RB is configured between the MN and the remote UE. The RB configures a bearer for DC between the MN and/or the SN and the relay UE, and configures a single SL bearer between the relay UE and the remote UE. Note that the SL bearer may be referred to as a PC5 bearer. The bearer for the DC terminated in the PDCP is referred to as the MN termination bearer in a case of the MN and is referred to as the SN termination bearer in a case of the SN. As the bearer for DC, a bearer including an RLC bearer of the MN is referred to as the MCG bearer, a bearer including an RLC bearer of the SN is referred to as the SCG bearer, and a bearer including RLC bearers of both of the MN and the SN is referred to as the split bearer. The RB may be configured between the MN and the relay UE, and the SL bearer may be configured between the relay UE and the remote UE. The RB between the MN and the relay UE may configure the bearer for the DC between the MN and/or the SN and the relay UE.

Data from the NW to the remote UE is mapped to a Uu bearer in the MN and/or the SN, and is subjected to processes of the SDAP and the PDCP. Data output from the SDAP of the Uu is mapped to the MCG bearer, the SCG bearer, or the split bearer, and is input to the PDCP. Data output from the PDCP is mapped to the RLC bearer corresponding to each bearer, and is transmitted to the relay UE through the protocols of the RLC, the MAC, and the PHY. Data received from the MN and/or the SN by the relay UE is transferred to the PDU layer through the protocol of the Uu corresponding to each bearer. Which bearer is used as the bearer for the DC by the relay UE, for example, the MN termination bearer, the SN termination bearer, the MCG bearer, the SCG bearer, or the split bearer, is configured. Data is mapped to the SL bearer in the PDU layer, and is transmitted to the remote UE through the PC5 protocol. Data received from the relay UE by the remote UE is transferred to the PDU layer through the PC5 protocol.

Data from the remote UE to the NW is transmitted to the relay UE through the PC5 protocol by the remote UE. The data received from the remote UE by the relay UE is transferred to the PDU layer through the PC5 protocol and is mapped to the bearer of the Uu in the PDU layer, and is subjected to the processes of the SDAP and the PDCP. Data output from the SDAP of the Uu is mapped to the MCG bearer, the SCG bearer, or the split bearer, and is input to the PDCP. Data output from the SDAP of the Uu may be input to the PDCP, and may be mapped to the MCG bearer, the SCG bearer, or the split bearer in the PDCP. Data output from the PDCP is mapped to the RLC bearer corresponding to each bearer and is transmitted to the MN and/or the SN through the protocols of the RLC, the MAC, and the PHY. The data received from the relay UE by the MN and/or the SN is transferred to the PDU layer through the protocol of the Uu corresponding to each bearer.

For a protocol of the C-Plane, it is satisfactory if the RRC and SL RRC are provided instead of the SDAP and the SL SDAP of the MN, the relay UE, and the remote UE. It is preferable to provide the RRC corresponding to the SRB and the SL RRC corresponding to an SL SRB. In a case where the DC is configured for the SRB, only the MN termination bearer may be configured. The DC of the SRB is enabled.

This enables the communication between the remote UE and the NW via the relay UE that is connected to the two gNBs.

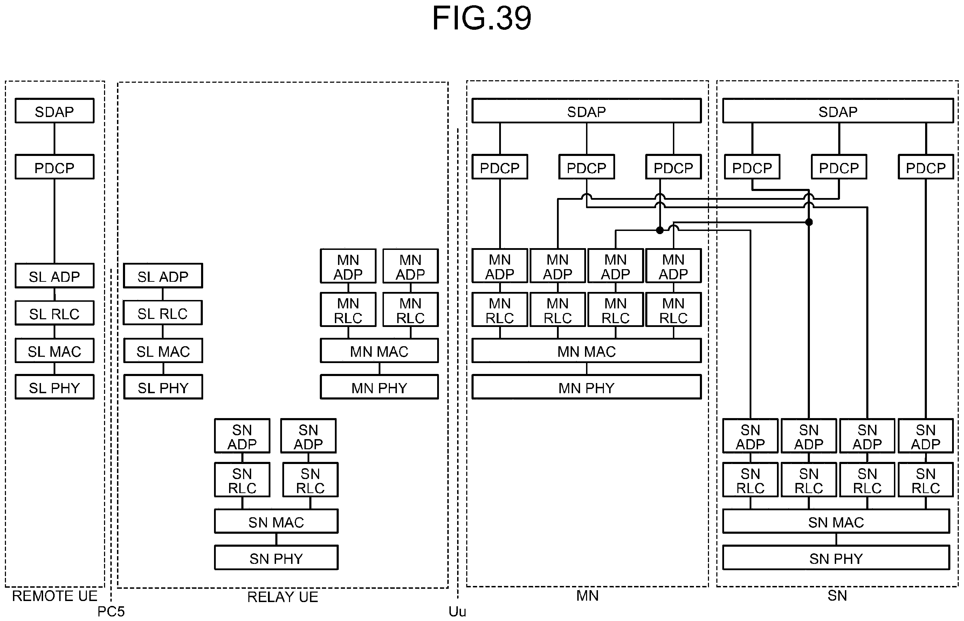

Another method of the protocol configuration in a case where the relay UE is connected to the two gNBs, in the communication between the remote UE and the NW via the relay UE, is disclosed. FIG. 39 is a diagram illustrating another configuration method of the protocol stack in a case where the relay UE is connected to the two gNBs, in the communication between the remote UE and the NW via the relay UE, according to the fourth embodiment. The U-Plane is described. Differences from the FIG. 38 will be mainly described.

As in the example in FIG. 38, the MN and the SN have the protocol of the Uu for the DC. In addition to the components illustrated in the example in FIG. 38, an adaptation protocol (ADP) is configured between the RLC and the PDCP. The ADP may be configured as a sublayer of the RLC. The relay UE has two Uu protocols for the MN and for the SN. The Uu protocols include the ADP, the RLC, the MAC, and the PHY.

The relay UE has the PC5 protocol between the relay UE and the remote UE. A PC5 ADP may be configured above the PC5 RLC. It is preferable that the PC5 ADP have, for example, a mapping function between the Uu bearer and the PC5 bearer. The PC5 ADP may be configured as a sublayer of the PC5 RLC. The PC5 ADP does not need to be configured. For example, in a case where the mapping between the Uu bearer and the PC5 bearer is limited to one-to-one mapping, the PC5 ADP need not be included. The protocol configuration can be simplified. The PC5 protocols include the PC5 ADP (SL ADP), the PC5 RLC, the PC5 MAC, and the PC5 PHY. The PC5 SDAP and the PC5 PDCP need not be provided.

The remote UE includes the PC5 protocol between the remote UE and the relay UE. Similarly to the relay UE, the PC5 protocols include the PC5 RLC, the PC5 MAC, and the PC5 PHY. A PC5 ADP may be configured above the PC5 RLC. The PC5 SDAP and the PC5 PDCP need not be provided. Furthermore, the remote UE includes the Uu protocol between the remote UE and the MN and/or the SN. The Uu protocols are the SDAP and the PDCP. The remote UE connects the ADP of the PC5 and the PDCP of the Uu. In a case where the ADP of the PC5 is not configured, the RLC of the PC5 and the PDCP of the Uu are connected.

The bearer is disclosed. The RB is configured between the MN and the remote UE. In the RB, the bearer for the DC is configured between the MN and/or the SN and the relay UE. It is preferable that the RLC bearer be configured as the bearer for DC in the relay UE. The RLC channel may be configured. The single SL bearer is configured between the relay UE and the remote UE. It is preferable that the SL bearer be an SL RLC bearer. The SL bearer may be an SL RLC channel. The SL RLC bearer is also referred to as a PC5 RLC bearer. The SL RLC channel is also referred to as a PC5 RLC channel.

Bearer mapping in communication from the NW to the remote UE is disclosed. In the communication from the NW to the remote UE, the MN and the SN have a function for mapping the RB between the NW and the remote UE to the RLC bearer of the Uu for the DC. The RLC bearer of the Uu for the DC is the MCG bearer, the SCG bearer, or the split bearer. The number of remote UEs connected to the relay UE is not limited to one and may be plural. The number of RBs between the remote UE and the NW is not limited to one and may be plural. The RBs of the one or the plurality of remote UEs connected to the relay UE and/or the single or the plurality of RBs between the remote UE and the NW may be mapped to the RLC bearer of the Uu for the DC. An ADP of the Uu configured in the MN and the SN may have the function described above. Functions in a case where the DC is configured and functions in a case where the DC is not configured may be aggregated in the ADP. In this case, the configurations of the MN and the SN can be simplified.

The MN and the SN may add an identifier of the remote UE and an identifier of the RB (RB identifier: RB ID) between the remote UE and the NW, in the communication from the NW to the remote UE. In a case where the RB is the SRB, the RB ID may be an SRB ID. In a case where the RB is the DRB, the RB ID may be a DRB ID. In this way, the relay UE can recognize the transmission destination remote UE and the RB for the communication between the remote UE and the NW.

The MN and the SN may add information about the bearer used for the DC, in the communication from the NW to the remote UE. The information about the bearer used for the DC includes, for example, an identifier indicating an end of the bearer, and/or an identifier indicating a type of the bearer, and/or an identifier indicating that the bearer is for the MN or the SN, or the like. In this way, the relay UE or the remote UE can recognize the end, the type, or the like of the bearer used for the DC.

The ADP of the Uu configured in the MN and the SN may have the addition functions described above. Functions in a case where the DC is configured and functions in a case where the DC is not configured may be aggregated in the ADP. In this case, the configurations of the MN and the SN can be simplified.

The relay UE has a function for mapping the RLC bearer of the Uu for the DC to the RLC bearer of the PC5, in the communication from the NW to the remote UE. For the mapping, the remote UE identifier and the RB identifier added by the ADPs of the MN and the SN may be used. For the mapping, the information about the bearer used for the DC added by the ADPs of the MN and the SN may be used. In this way, the relay UE can map the MCG bearer, the SCG bearer, or the split bearer for the DC to the RLC bearer of the PC5. An ADP of the Uu configured in the relay UE may have the functions described above. Functions in a case where the DC is configured and functions in a case where the DC is not configured may be aggregated in the ADP. In this case, the configuration of the relay UE can be simplified.

When performing mapping to the RLC bearer of the PC5, the relay UE may delete some or all of the remote UE identifier, the RB identifier, the information about the bearer used for the DC, and the like added by the MN and the SN. In the mapping to the RLC bearer of the PC5 to the remote UE, some or all of the identifiers and the information need not be added.

The remote UE has a function for mapping the RLC bearer of the PC5 and the RLC bearer of the Uu for the DC to the RB between the NW and the remote UE, in the communication from the NW to the remote UE. For the mapping, the remote UE identifier and the RB identifier added by the MN and the SN may be used. For the mapping, the information about the bearer used for the DC added by the MN and the SN may be used.

Bearer mapping in the communication from the remote UE to the NW is disclosed. The remote UE has a function for mapping the RB between the NW and the remote UE to the RLC bearer of the PC5, in the communication from the remote UE to the NW. The remote UE may add the identifier of the RB between the remote UE and the NW and the identifier of the base station, in the communication from the NW to the remote UE. The number of base stations may be plural. For example, the identifiers may be added in a case where the relay UE is connected to the plurality of base stations. Information indicating whether or not the number of base stations is plural or information indicating whether or not the number of identifiers of the base stations is plural may be added. The identifier of the base station may be an identifier of the MN and/or the SN. For example, it is applicable to a case where the DC is configured. In this way, for example, in a case where the relay UE performs transmission to the plurality of base stations, the relay UE, the MN, or the SN can recognize the transmission destination base station and the RB for communication between the remote UE and the NW.

The remote UE may add the information about the bearer used for the DC, in the communication from the remote UE to the NW. The information about the bearer used for the DC includes, for example, an identifier indicating an end of the bearer, and/or an identifier indicating a type of the bearer, and/or an identifier indicating that the bearer is for the MN or the SN, or the like. In this way, the relay UE, the MN, or the SN can recognize the end, the type, or the like of the bearer used for the DC.

An ADP of the SL configured in the remote UE may have the addition functions described above. Functions in a case where the DC is configured and functions in a case where the DC is not configured may be aggregated in the SL ADP. The configuration of the remote UE can be simplified.

The relay UE has a function for mapping the RLC bearer of the PC5 to the RLC bearer of the Uu for the DC, in the communication from the remote UE to the NW. For the mapping, the base station identifier, the RB identifier, the information about the bearer for the DC, or the like added by the remote UE may be used. The RLC bearer of the Uu for the DC is the MCG bearer, the SCG bearer, or the split bearer. The number of remote UEs connected to the relay UE is not limited to one and may be plural. An ADP of the Uu configured in the relay UE may have the functions described above. Functions in a case where the DC is configured and functions in a case where the DC is not configured may be aggregated in the ADP. In this case, the configuration of the relay UE can be simplified.

When performing mapping to the RLC bearer of the Uu for the DC, the relay UE may delete some or all of the identifier of the base station, the RB identifier, the information about the bearer used for the DC, and the like added by the remote UE. In the mapping to the RLC bearer of the Uu for the DC to the base station, some or all of the identifiers and the information need not be added.

The relay UE may add the identifier of the remote UE and the identifier of the RB between the remote UE and the NW, in the communication from the remote UE to the NW. In a case where the RB is the SRB, the RB ID may be an SRB ID. In a case where the RB is the DRB, the RB ID may be a DRB ID. In this way, the MN and the SN can recognize a transmission source remote UE and the RB for communication between the remote UE and the NW. The ADP of the Uu configured in the relay UE may have the addition functions described above. Functions in a case where the DC is configured and functions in a case where the DC is not configured may be aggregated in the ADP. In this case, the configuration of the relay UE can be simplified.

The MN and the SN have a function for mapping the RLC bearer of the Uu for the DC to the RB between the NW and the remote UE, in the communication from the remote UE to the NW. The number of remote UEs connected to the relay UE is not limited to one and may be plural. The number of RBs between the remote UE and the NW is not limited to one and may be plural. The RLC bearer of the Uu for the DC may be mapped to the RBs of the single or the plurality of remote UEs connected to the relay UE and/or the single or the plurality of RBs between the remote UE and the NW. For the mapping, the remote UE identifier, the RB identifier, the information about the bearer used for the DC, or the like added by the remote UE or the ADP of the relay UE may be used. In this way, the MN and the SN can transfer the MCG bearer, the SCG bearer, or the split bearer for the DC to the PDCP of the RB for the communication between the remote UE and the NW. An ADP of the Uu configured in the MN and the SN may have the function described above. Functions in a case where the DC is configured and functions in a case where the DC is not configured may be aggregated in the ADP. In this case, the configurations of the MN and the SN can be simplified.

For the protocol of the C-Plane, it is satisfactory if the RRC is provided instead of the SDAP of the MN and the remote UE. It is preferable to provide the RRC corresponding to the SRB. In a case where the DC is configured for the SRB, only the MN termination bearer may be configured. The DC of the SRB is enabled.

This enables the communication between the remote UE and the NW via the relay UE that is connected to the two gNBs.

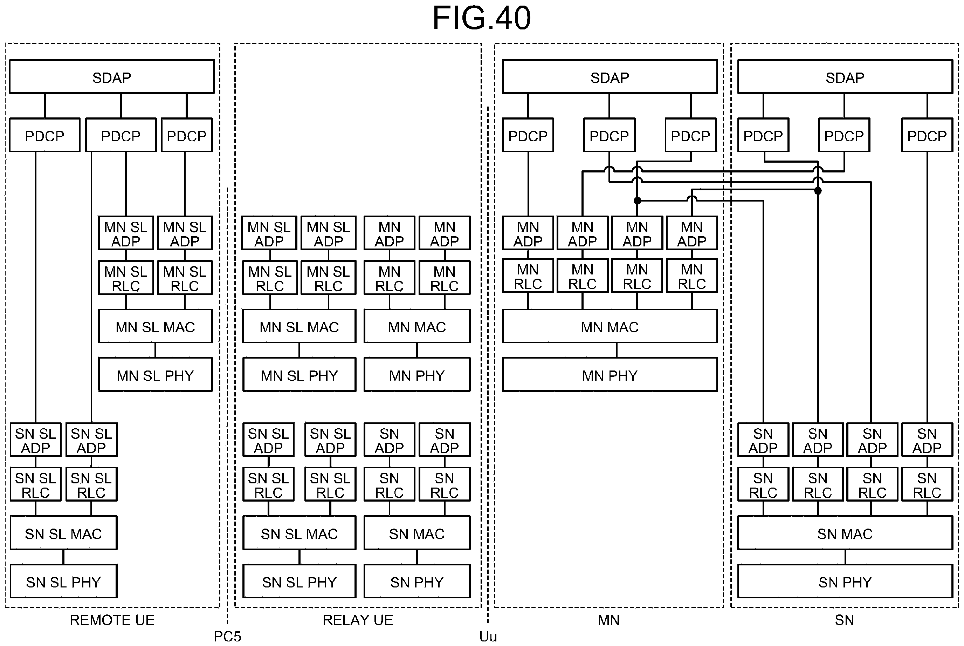

Another method of the protocol configuration in a case where the relay UE is connected to the two gNBs, in the communication between the remote UE and the NW via the relay UE, is disclosed. FIG. 40 is a diagram illustrating still another configuration method of the protocol stack in a case where the relay UE is connected to the two gNBs in the communication between the remote UE and the NW via the relay UE, according to the fourth embodiment. The U-Plane is described. Differences from the FIG. 39 will be mainly described.

As in the example in FIG. 39, the MN and the SN have the protocol of the Uu for the DC. As in the example in FIG. 39, the relay UE has the two Uu protocols for the MN and the SN. Furthermore, the relay UE includes the two PC5 protocols between the relay UE and the remote UE. The PC5 protocols are PC5 protocols for the MN and for the SN. The PC5 protocol may be a PC5 protocol for the DC. The PC5 protocols include the PC5 RLC, the PC5 MAC, and the PC5 PHY. A PC5 ADP may be configured above the PC5 RLC. The PC5 SDAP and the PC5 PDCP need not be provided. The remote UE includes the two PC5 protocols between the remote UE and the relay UE. The PC5 protocols are PC5 protocols for the MN and for the SN. The PC5 protocol may be a PC5 protocol for the DC. The PC5 protocols include the PC5 RLC, the PC5 MAC, and the PC5 PHY. A PC5 ADP may be configured above the PC5 RLC. The PC5 SDAP and the PC5 PDCP need not be provided. Furthermore, the remote UE includes the Uu protocol between the remote UE and the MN and/or the SN. The Uu protocols include the PC5 SDAP and the PC5 PDCP. The remote UE connects the PDCP or the ADP of the PC5 to the PDCP of the Uu. The single PDCP may be configured for the MN termination bearer, and the single PDCP may be configured for the SN termination bearer. The remote UE terminates the DC.

The bearer is disclosed. The RB is configured between the MN and the remote UE. In the RB, the bearer for the DC is configured between the MN and/or the SN and the relay UE. The SL bearer for the DC is configured between the relay UE and the remote UE. It is preferable that the SL bearer be an SL RLC bearer. The SL bearer may be an SL RLC channel.

Bearer mapping in communication from the NW to the remote UE is disclosed. It is preferable to appropriately apply the bearer mapping method disclosed in the example in FIG. 39. Here, differences from the method disclosed in the example in FIG. 39 will be mainly disclosed.

The relay UE has a function for mapping the RLC bearer of the Uu for the DC to the RLC bearer of the PC5 for the DC, in the communication from the NW to the remote UE. An RLC bearer of the Uu for the MN is mapped to an RLC bearer of the PC5 for the MN. An RLC bearer of the Uu for the SN is mapped to an RLC bearer of the PC5 for the SN. For the mapping, the remote UE identifier and the RB identifier added by the ADPs of the MN and the SN may be used. For the mapping, the information about the bearer used for the DC added by the ADPs of the MN and the SN may be used. In this way, the relay UE can map the MCG bearer, the SCG bearer, or the split bearer for the DC to the RLC bearer of the PC5 for the DC. An ADP of the Uu configured in the relay UE may have the functions described above. Functions in a case where the DC is configured and functions in a case where the DC is not configured may be aggregated in the ADP. In this case, the configuration of the relay UE can be simplified.

When performing mapping to the RLC bearer of the PC5, the relay UE may delete some or all of the remote UE identifier, the RB identifier, the information about the bearer used for the DC, and the like added by the MN and the SN. In the mapping to the RLC bearer of the PC5 to the remote UE, Some or all of the identifiers and the information need not be added.

The remote UE has a function for mapping the RLC bearer of the PC5 for the MN and the RLC bearer of the PC5 for the SN to the RB between the NW and the remote UE, in the communication from the NW to the remote UE. For the mapping, the remote UE identifier and the RB identifier added by the DP of the MN and the SN may be used. For the mapping, the information about the bearer used for the DC added by the MN and the SN may be used.

Bearer mapping in the communication from the remote UE to the NW is disclosed. It is preferable to appropriately apply the bearer mapping method disclosed in the example in FIG. 39. Here, differences from the method disclosed in the example in FIG. 39 will be mainly disclosed. The remote UE has a function for mapping the RB between the NW and the remote UE to the RLC bearer of the PC5 for the DC, in the communication from the remote UE to the NW. The RLC bearer of the PC5 for the DC is the MCG bearer, the SCG bearer, or the split bearer. The remote UE may add the identifier of the RB between the remote UE and the NW and the identifier of the base station, in the communication from the NW to the remote UE. The number of base stations may be plural. For example, the identifiers may be added in a case where the relay UE is connected to the plurality of base stations. Information indicating whether or not the number of base stations is plural or information indicating whether or not the number of identifiers of the base stations is plural may be added. The identifier of the base station may be an identifier of the MN and/or the SN. For example, it is applicable to a case where the DC is configured. In this way, in a case where the relay UE performs transmission to the plurality of base stations, the relay UE, the MN, or the SN can recognize the transmission destination base station and the RB for communication between the remote UE and the NW.

An ADP of the SL configured in the remote UE may have the addition functions described above. Functions in a case where the DC is configured and functions in a case where the DC is not configured may be aggregated in the SL ADP. The configuration of the remote UE can be simplified.

The relay UE has a function for mapping the RLC bearer of the PC5 for the DC to the RLC bearer of the Uu for the DC, in the communication from the remote UE to the NW. The RLC bearer of the Uu for the DC is the MCG bearer, the SCG bearer, or the split bearer. The RLC bearer of the PC5 for the MN is mapped to the RLC bearer of the Uu for the MN. The RLC bearer of the PC5 for the SN is mapped to the RLC bearer of the Uu for the SN. The MCG bearer of the PC5 is mapped to the MCG bearer of the Uu. The SCG bearer of the PC5 is mapped to the SCG bearer of the Uu. The split bearer of the PC5 is mapped to the split bearer of the Uu. For the mapping, the identifier of the base station, the RB identifier, the information about the bearer used for the DC, or the like added by the remote UE may be used. The number of remote UEs connected to the relay UE is not limited to one and may be plural. An ADP of the Uu configured in the relay UE may have the functions described above. Functions in a case where the DC is configured and functions in a case where the DC is not configured may be aggregated in the ADP. In this case, the configuration of the relay UE can be simplified.

When performing mapping to the RLC bearer of the Uu for the DC, the relay UE may delete some or all of the identifier of the base station, the RB identifier, the information about the bearer used for the DC, and the like added by the remote UE. In the mapping to the RLC bearer of the Uu for the DC to the base station, some or all of the identifiers and the information need not be added.

For the protocol of the C-Plane, it is satisfactory if the RRC is provided instead of the SDAP of the MN and the remote UE. It is preferable to provide the RRC corresponding to the SRB. In a case where the DC is configured for the SRB, only the MN termination bearer may be configured. The DC of the SRB is enabled.

This enables the communication between the remote UE and the NW via the relay UE that is connected to the two gNBs.

A configuration method for connecting the relay UE to the plurality of gNBs in the communication from the remote UE and the NW performed via the relay UE is disclosed. In the present embodiment, a method for configuring the DC in which the relay UE is connected to the two gNBs is disclosed.

The MN configures the DC with respect to the relay UE. The MN configures the DC with respect to the RB between the relay UE and the MN. The RB may be used for the communication between the remote UE and the MN. The RB may be the SRB and/or the DRB. The SRB may be the SRB 2. The RB may be used for the communication between the relay UE and the MN. For example, the RB may be applied to a UE-NW relay of a layer 3.

The MN performs DC configuration of the Uu with respect to the relay UE. The relay UE is the end of the DC. It is preferable that the relay UE in which the DC is configured be RRC-connected to the MN. Furthermore, the MN may start the DC configuration for the relay UE, in a state where the relay UE is RRC-connected to the MN. The relay UE in which the DC is configured is connected to the CN via the MN in the C-Plane.

The MN transmits, to the SN, an addition request of the SN with respect to the RB between the relay UE and the MN for the communication between the remote UE and the MN. It is preferable to transmit the addition request using Xn signaling. An S-Node addition request message may be used.

Seventeen information examples to be included in the addition request of the SN will be disclosed.
(1) Information about the relay UE.
(2) Information about the remote UE.
(3) RRC configuration information between the MN and the remote UE.
(4) RRC configuration information between the MN and the relay UE.
(5) SL RRC configuration information between the remote UE and the relay UE.
(6) RB information between the MN and the remote UE.
(7) RB information between the MN and the relay UE.
(8) SL bearer information between the remote UE and the relay UE.
(9) Information about the PDU between the relay UE and the CN.
(10) Information about the PDU between the remote UE and the CN.
(11) Information indicating bearer termination to be requested from the SN.
(12) Bearer type information to be requested from the SN.
(13) Identifier of the MN.
(14) Information about a QoS required for communication.
(15) Information about network slicing.
(16) Information about tracing.
(17) Combination of (1) to (16).
   (1) is information about the relay UE for configuring the DC. For example, the identifier of the relay UE may be used. For example, a capability of the relay UE may be used. (2) is information about the remote UE that communicates with the NW. The information about the remote UE may be, for example, the identifier of the remote UE. For example, a capability of the remote UE may be used.
   For example, (3) may be cell group configuration information configured to the remote UE by the MN. For example, (4) may be cell group configuration information configured to the relay UE by the MN. (5) is the RRC configuration information of the SL between the remote UE and the relay UE. For example, (5) may be RRC information configured from the remote UE to the relay UE and/or from the relay UE to the remote UE.
   (6) is information about the RB, between the MN and the remote UE, that configures the DC. For example, the identifier of the RB may be used. For example, if the RB for configuring the DC is the SRB, an identifier of the SRB may be used. For example, if the RB for configuring the DC is the DRB, an identifier of the DRB may be used. It is possible to specify the RB for configuring the DC. For example, the information may be PDCP configuration information. For example, if the RB for configuring the DC is the DRB, SDAP configuration information may be used. (7) is information about the RB, between the MN and the relay UE, for configuring the DC. Examples of the information about the RB are similar to those of (6).
   (8) is information about the SL bearer between the relay UE and the remote UE in the communication between the remote UE and the NW via the relay UE. The SL bearer may be an SL RB. For example, an identifier of the SL RB may be used. For example, if the SL SRB is configured as the SL RB, an identifier of the SL SRB may be used. For example, if an SL DRB is configured as the SL RB, an identifier of the SL DRB may be used. For example, the information may be SL PDCP configuration information. For example, if the SL DRB is configured as the SL RB, SL SDAP configuration information may be used. The SL bearer may be the SL RLC bearer. For example, an identifier of the SL RLC bearer may be used. For example, the information may be configuration information of the SL RLC, the SL MAC, and/or the SL PHY. For example, the information may be configuration information of a logical channel of the SL.
   (9) is information about the PDU between the relay UE and the CN, configured for the communication between the remote UE and the NW via the relay UE. For example, an identifier of the PDU session may be used. For example, information about a QoS required for the PDU session may be used. (10) is information about the PDU between the remote UE and the CN, configured for the communication between the remote UE and the NW via the relay UE. For example, an identifier of the PDU session may be used. For example, information about a QoS required for the PDU session may be used.
   (11) is information indicating an end of the bearer for the DC. For example, the information may be information indicating one of the MN termination bearer or the SN termination bearer. (12) is information indicating the type of the bearer for the DC. For example, the type of the bearer is the MCG bearer, the SCG bearer, the split bearer, or the like. (13) is the identifier of the MN connected to the relay UE. An identifier of a PCell may be used. It is possible to specify the MN that is a transmission source of the addition request of the SN.
   (14) is information about a QoS required for the communication between the remote UE and the NW. Alternatively, information about a QoS required for the communication between the relay UE and the NW or information about a QoS required for the communication between the remote UE and the relay UE may be used. The information about the QoS includes, for example, a resource type, a packet loss rate, an allowable delay, a priority, or the like required for the communication. (15) is, for example, an identifier of the network slicing, or the like. (16) is information about execution of a trace function. For example, the information includes information indicating whether or not to execute the trace function, information about a node for collecting traced information, information to be collected, information about Minimization of Drive Tests (MDT), or the like.

As the trace function, a case where the remote UE is indirectly connected to the NW via the relay UE may be included. For example, as the trace function, information indicating which base station the remote UE is connected to, information about the relay UE connected to the remote UE, information indicating which base station the relay UE is connected to, RLF information between the remote UE and the relay UE, RLF information between the relay UE and the base station, information about the MDT of the remote UE, information about the MDT of the relay UE, or the like may be collected. These pieces of information may be communicated between the remote UE and the relay UE, between the remote UE and the base station, between the relay UE and the base station, between the base stations such as between the MN and the SN, between a previously connected base station and a base station to be newly connected, and between the base station and the node for collecting the information about the tracing.

In this way, the MN can transmit the SN addition request for the DC, to the SN. Furthermore, by receiving the SN addition request from the MN, for example, the SN can recognize for which relay UE the DC is. The SN may perform the configuration for the DC with respect to the relay UE, using the information received from the MN.

The SN performs DC configuration with respect to the relay UE. The SN performs the configuration for the DC between the relay UE and the SN. The SN may perform the DC configuration using information included in an SN addition request message received from the MN. As the DC configuration between the SN and the relay UE, configuration indicated in an information example to be included in configuration for the DC to be described later may be performed. In the information examples included in the configuration for the DC to be described later, information about the SN may be configured. For example, RRC configuration between the SN and the relay UE may be used. The RRC configuration may be, for example, configuration regarding an RLC bearer between the SN and the relay UE. For example, configuration of a cell group between the SN and the relay UE may be used.

The SN transmits a response message to the addition request of the SN, to the MN. In a case where the SN performs DC configuration, the SN transmits an SN addition request acknowledgment response message to the MN. It is preferable to perform transmission using the Xn signaling. An S-Node addition request acknowledge message may be used as the SN addition request acknowledgment response message. It is preferable to include DC configuration information for the relay UE, in the message. For example, the DC configuration information may be information about the configuration of the cell group between the SN and the relay UE. Furthermore, the message may include a part of the information examples included in the SN addition request disclosed above. For example, the information example includes the information about the relay UE, the information about the PDU between the relay UE and the CN, the information about the PDU between the remote UE and the CN, the information indicating the bearer end, the bearer type information, or the like.

The SN may configure the SL between the relay UE and the remote UE. The SN configures the SL between the relay UE and the remote UE, for the DC. The SN may configure the SL using information included in the SN addition request message received from the MN. As the DC configuration between the relay UE and the remote UE, configuration of the SL bearer to be described later may be performed. In the information examples included in the configuration of the SL bearer to be described later, the information about the SN may be configured. The configuration of the SL may be the RRC configuration of the SL between the remote UE and the relay UE. For example, the SL RRC configuration from the remote UE to the relay UE and/or from the relay UE to the remote UE may be used. The SL RRC configuration may be, for example, the configuration about the RLC bearer of the SL between the relay UE and the remote UE.

The configuration information of the SL between the relay UE and the remote UE may be included in an acknowledgment response message to the SN addition request transmitted from the SN to the MN. For example, the RRC configuration information of the SL between the remote UE and the relay UE may be included. The MN may modify the configuration of the SL between the remote UE and the relay UE, using the information received from the SN. The MN may modify the SL bearer between the remote UE and the relay UE, using the information received from the SN. In this way, it is possible to consider the configuration information of the SN. It is possible to consider a radio propagation environment and a load status of the SN, and it is possible to improve communication quality between the remote UE and the NW via the relay UE.

In a case where the SN cannot perform the DC configuration for the relay UE, the SN transmits an SN addition request rejection response message to the MN. It is preferable to perform transmission using the Xn signaling. An S-Node addition request reject message may be used as the SN addition request rejection response message. A notification of the message including, for example, the information about the relay UE and cause information may be provided.

The MN transmits the configuration for the DC to the relay UE. Four information examples included in the configuration for the DC are disclosed.
(1) Information about the RB.
(2) Information about the RLC bearer of the Uu.
(3) Identifier of the SN.
(4) Combination of (1) to (3).

The information about the RB in (1) is information about the configuration of the RB. Five information examples about the configuration of the RB are disclosed.
(1-1) Information about the SRB to be configured.
(1-2) Information about the DRB to be configured.
(1-3) Information about SDAP configuration.
(1-4) Information about PDCP configuration.
(1-5) Combination of (1-1) to (1-4).

For example, (1-1) may be an identifier of the SRB to be configured. For example, the configuration information of the SRB may be used. For example, (1-2) may be an identifier of the DRB to be configured. For example, the configuration information of the DRB may be used. For example, (1-3) may be configured in a case where the RB to be configured is the DRB. (1-3) may be associated with the DRB identifier. For example, (1-4) may be configured in a case where the RB to be configured is the SRB and/or the DRB. (1-4) may be associated with the SRB identifier and/or the DRB identifier. As the information about the PDCP configuration, for example, information about an RLC bearer to be connected may be included. The information about the RLC bearer may be, for example, an identifier of the logical channel. For example, information indicating the type of the bearer for the DC may be used. For example, information about the cell group may be used.

For the information about the RB in (1), RB configuration that has been already configured may be used. The RB configuration may be modification of the RB configuration that has been already configured. It is preferable to include information indicating the RB configuration that has been already configured. The information indicating the RB configuration may be the identifier of the RB. For example, if the RB is the SRB, the identifier of the SRB may be used, and for example, if the RB is the DRB, the identifier of the DRB may be used.

The MN transmits the RB configuration to the relay UE. The MN may transmit the RB configuration to the relay UE with the RRC signaling. An RRCReconfiguration message including the RB configuration may be transmitted. RadioBearerConfig information including the RB configuration may be transmitted.

The information about the RLC bearer of the Uu in (2) may be the information about the Uu RLC bearer for the DC. Not the Uu RLC bearer configuration but Uu RLC channel configuration may be used. Here, the configuration of the Uu RLC bearer is used for description unless otherwise specified.

Seven information examples to be included in the Uu RLC bearer configuration for the DC are disclosed.
(2-1) Identifier of the corresponding RB.
(2-2) Configuration information of the Uu RLC bearer for the MCG.
(2-3) Configuration information of the Uu RLC bearer for the SCG.
(2-4) Information indicating the bearer termination.
(2-5) Information indicating the type of the bearer.
(2-6) Identifier of the Uu RLC bearer.
(2-7) Combination of (2-1) to (2-6).

(2-1) is preferably the identifier of the RB corresponding to the RLC bearer of the Uu for performing the configuration for the DC. For example, (2-2) may be the configuration information of the RLC. For example, configuration information of the logical channel may be used. For example, the identifier of the logical channel may be used. The configuration information of the Uu RLC bearer for the MCG may be included in configuration information of the MCG. For example, (2-3) may be the configuration information of the RLC. For example, configuration information of the logical channel may be used. For example, the identifier of the logical channel may be used. The configuration information of the Uu RLC bearer for the SCG may be included in the configuration information of the SCG. For example, (2-4) may be the information indicating one of the MN termination bearer or the SN termination bearer. For example, (2-5) may be information indicating any one of the MCG bearer, the SCG bearer, or the split bearer.

The MN transmits the Uu RLC bearer configuration to the relay UE. RRC Reconfiguration may be used for the Uu RLC bearer configuration. The configuration may be modification of the Uu RLC bearer configuration that has been already configured. The message to be transmitted may include the information indicating the Uu RLC bearer configuration that has been already configured.

In a case of performing the configuration for the DC with respect to the relay UE, the MN may use configuration information for the DC between the relay UE and the SN, received from the SN. It is possible to consider the load status or the like of the SN.

The MN does not configure the DC with respect to the remote UE. The remote UE does not need to recognize the DC configuration of the relay UE.

In a case where the type of the DC configuration is SN termination, the PDU session may be modified. In the modification, a PDU session modification process is executed between the MN and the CN. The PDU session may be modified in a case where the RB for configuring the DC is the DRB. In a case of an L3 relay, the PDU session between the relay UE and the NW is modified. In a case of an L2 relay, the PDU session between the remote UE and the NW is modified. In the PDU session modification process, a PDU session ID of which a notification is performed in the DRB configuration may be used. A PDU session ID of which a notification is provided in the SDAP configuration may be used. In this case, nodes of the MN and the CN can specify the PDU session to be modified.

Data communication between the remote UE and the NW is performed via the bearer for the DC (RLC bearer) between the MN/SN and the relay UE. Data communication between the relay UE and the remote UE is performed using the SL bearer.

The method for configuring the DC disclosed above may be applied to a case where the relay UE terminates the DC. For example, the method may be applied to the protocol example disclosed in FIG. 38.

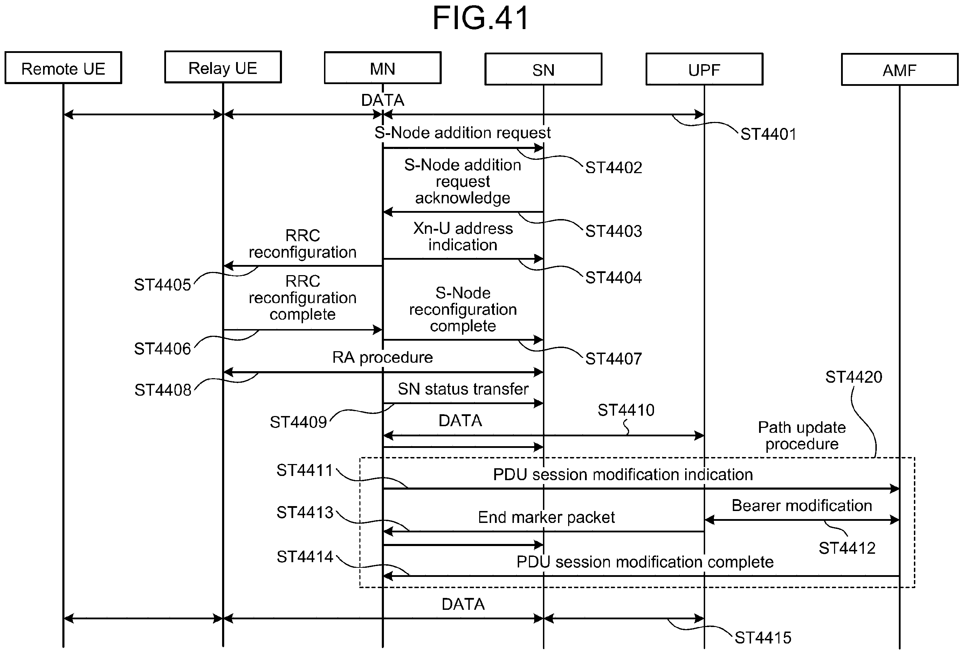

FIG. 41 is a sequence diagram illustrating an example of a method for configuring a DC in which the relay UE is connected to the two gNBs, according to the fourth embodiment. In the DC, communication is performed between the remote UE and the NW via the relay UE. In step ST4401, data is exchanged between the remote UE, the relay UE, the MN and the UPF. The MN determines to configure the DC with respect to the relay UE. For example, the relay UE measures a neighbor gNB and reports a measurement result to the MN. The MN determines an SN used for the DC from the measurement result. In step ST4402, the MN transmits the SN addition request message to the SN. The MN requests the SN to perform addition as the SN for the DC with respect to the relay UE. The SN addition request message is transmitted using the Xn signaling. The S-Node addition request message may be used as the SN addition request message. It is preferable to include the information example of the SN addition request disclosed above in the SN addition request message.

The SN that has received the SN addition request message from the MN recognizes the relay UE that performs the DC configuration, the information about the communication between the remote UE for performing the DC configuration and the NW, bearer termination to be required, the bearer type for the DC to be required, or the like, from the information about the SN addition request and performs the configuration for the DC with respect to the relay UE. For example, the configuration for the DC may be the RRC configuration between the SN and the relay UE. In step ST4403, the SN transmits an SN addition request response message to the MN. In this example, an acknowledgement response is transmitted. As the SN addition request response message, the S-Node addition request acknowledge message may be used. The SN addition request response message may include the RRC configuration between the SN and the relay UE. The MN that has received the SN addition request response message recognizes that the SN has performed the DC configuration with respect to the relay UE. Furthermore, the MN recognizes the RRC configuration between the SN and the relay UE.

In step ST4404, the MN notifies the SN of a Xn-U address indication message. For example, the MN configures an address used for the DC between the MN and the SN and transmits the address to the SN in step ST4404. As a result, the MN and the SN can share the address used for the DC and exchange data.

In step ST4405, the MN transmits the configuration for the DC, to the relay UE. The RRC signaling is used for the transmission. The configuration may be performed using the RRC reconfiguration message. It is preferable that the configuration for the DC include the information example of the configuration for the DC described above. As configuration regarding the SCG of the information about the configuration for the DC, the RRC configuration information received from the SN may be used. By receiving the configuration for the DC from the MN, the relay UE can configure the DC for the MN and the SN. The relay UE that has performed the DC configuration for the MN and the SN transmits a DC configuration response to the MN, in step ST4406. In this example, an acknowledgement response is transmitted. The RRC signaling is used for the transmission. An RRC reconfiguration complete message may be used. The MN that has received the DC configuration response recognizes that the relay UE has completed the DC configuration using the MN and the SN.

In step ST4407, the MN transmits an SN configuration completion message to the SN. For the transmission, the Xn signaling is used. An S-Node reconfiguration complete message may be transmitted. By receiving the message, the SN recognizes that the MN and the relay UE have completed the SN configuration for the DC.

In step ST4408, the relay UE starts an RA process on the SN and communicates with the SN while maintaining communication with the MN.

The MN performs SN status transfer to the SN in step ST4409, and transfers the data from the UPF to the SN in step ST4410. In a case of the SN termination bearer, it is necessary to change a path between the UPF and the gNB from the MN to the SN. In this case, a path update process in step ST4420 is executed. In the path update process, PDU session modification indication message transmission in step ST4411, bearer modification message transmission in step ST4412, end marker packet transmission in step ST4413, and PDU session modification completion message transmission in step ST4414 are performed between the MN, the UPF, the AMF, and the SN, and a path of the U-Plnae is changed from the MN to the SN.

In this way, the DC is performed between the relay UE, the MN, and the SN. For example, in a case of an SN termination SCG bearer, data communication is performed between the relay UE, the SN, and the UPF. The relay UE is PC5-connected to the remote UE. Therefore, for example, in a case of the SN termination SCG bearer, in step ST4415, data communication is performed between the remote UE, the relay UE, the SN, and the UPF.

For example, in a case of the MN termination SCG bearer, data communication is performed between the remote UE, the relay UE, the SN, the MN, and the UPF. For example, in a case of an SN termination MCG bearer, data communication is performed between the remote UE, the relay UE, the MN, the SN, and the UPF. For example, in a case of an MN termination split bearer, data communication is performed between the remote UE, the relay UE, the SN, the MN, and the UPF. For example, in a case of an SN termination split bearer, data communication is performed between the remote UE, the relay UE, the MN, the SN, and the UPF.

In this way, it is possible to configure the DC in which the relay UE is connected to the two gNBs.

Another example of the method for configuring the DC in which the relay UE is connected to the two gNBs is disclosed. The SL bearer between the remote UE and the relay UE may be modified. In a case where the SL bearer between the remote UE and the relay UE is modified, the MN notifies the relay UE and the remote UE of the modification of the SL bearer. The SL bearer may be modified during the DC configuration process on the relay UE or may be modified after the DC configuration process.

The MN configures the SL bearer between the remote UE and the relay UE, with respect to the relay UE. The configuration of the SL bearer may be configuration for modifying the SL bearer. Three configuration information examples of the SL bearer are disclosed.
(1) Information about the SL RB.
(2) Information about the RLC bearer of the SL.
(3) Combination of (1) and (2).

The information about the SL RB in (1) is information about configuration of the SL RB. Five information examples about the configuration of the SL RB are disclosed.
(1-1) Information about the SL SRB to be configured.
(1-2) Information about the SL DRB to be configured.
(1-3) Information about SL SDAP configuration.
(1-4) Information about SL PDCP configuration.
(1-5) Combination of (1-1) to (1-4).

For example, (1-1) may be the identifier of the SL SRB to be configured. For example, configuration information of the SL SRB may be used. For example, (1-2) may be the identifier of the SL DRB to be configured. For example, configuration information of the SL DRB may be used. For example, (1-3) may be configured in a case where the SL RB to be configured is the SL DRB. The information may be associated with the SL DRB identifier. For example, (1-4) may be configured in a case where the SL RB to be configured is the SL SRB and/or the SL DRB. The information may be associated with the SL SRB identifier and/or the SL DRB identifier. As the information about the SL PDCP configuration, for example, information about the SL RLC bearer to be connected may be included. The information about the SL RLC bearer may be, for example, the identifier of the logical channel. For example, information indicating the type of the bearer for the DC may be used. For example, information about the cell group may be used.

For the information about the SL RB in (1), SL RB configuration that has been already configured may be used. The SL RB configuration may be modification of the SL RB configuration that has been already configured. It is preferable to include information indicating the SL RB configuration that has been already configured. The information indicating the SL RB configuration may be the identifier of the SL RB. For example, if the SL RB is the SL SRB, the information may be the identifier of the SL SRB, and for example, if the SL RB is the SL DRB, the information may be the identifier of the SL DRB.

The MN transmits the SL RB configuration to the relay UE. The MN may transmit the SL RB configuration to the relay UE, with the RRC signaling. An RRCReconfiguration message including the SL RB configuration may be transmitted. Alternatively, an RRCReconfiguration message of the SL (RRCReconfigurationSidelink) including the SL RB configuration may be transmitted. The RadioBearerConfig information of the SL (SL-RadioBearerConfig) including the SL RB configuration may be transmitted.

(2) may be configuration of an SL RLC channel, not the SL RLC bearer configuration. Here, the configuration of the SL RLC bearer is described unless otherwise specified.

Four information examples to be included in the SL RLC bearer configuration are disclosed.
(2-1) Identifier of the corresponding RB.
(2-2) Configuration information of the SL RLC bearer.
(2-3) Identifier of the SL RLC bearer.
(2-4) Combination of (2-1) to (2-3).

It is preferable that (2-1) be the identifier of the RB corresponding to the RLC bearer of the SL. For example, (2-2) may be the configuration information of the RLC. For example, configuration information of the logical channel may be used. For example, the identifier of the logical channel may be used.

The MN transmits the SL RLC bearer configuration to the relay UE. For the transmission of the SL RLC bearer configuration, the RRCReconfiguration may be used. The configuration may be modification of the SL RLC bearer configuration that has been already configured. The message to be transmitted may include information indicating the SL RLC bearer configuration that has been already configured.

The MN may transmit, to the relay UE, the configuration information of the SL bearer by including the RB configuration of the Uu and/or the RLC bearer configuration of the Uu in the RRC message or in another RRC message.

The MN configures the SL bearer between the remote UE and the relay UE, with respect to the remote UE. The configuration of the SL bearer may be configuration for modifying the SL bearer. The SL bearer may be modified. It is preferable to appropriately apply the example disclosed above as the configuration information of the SL bearer.

The MN transmits the SL RB configuration to the remote UE. The MN may transmit the SL RB configuration to the remote UE, with the RRC signaling. The RRCReconfiguration message including the configuration may be transmitted. Alternatively, the RRCReconfiguration message of the SL including the configuration may be transmitted. The RadioBearerConfig information of the SL including the configuration may be transmitted.

The MN transmits the SL RLC bearer configuration to the remote UE. For the transmission of the SL RLC bearer configuration, the RRCReconfiguration may be used. The configuration may be modification of the SL RLC bearer configuration that has been already configured. Information indicating the SL RLC bearer configuration that has been already configured may be included.

In a case of configuring the SL bearer between the remote UE and the relay UE, the MN may use the configuration information of the SL bearer between the remote UE and the relay UE received from the SN. It is possible to consider the load status or the like of the SN.

In this way, it is possible to configure the SL bearer between the remote UE and the relay UE used for the communication between the remote UE and the NW. The SL bearer configuration between the remote UE and the relay UE may be modified along with the configuration of the DC in which the relay UE is connected to the two gNBs. It is possible to configure the SL bearer suitable for the configuration of the DC in which the relay UE is connected to the two gNBs. For example, it is possible to configure the SL bearer between the remote UE and the relay UE, suitable for increasing a communication capacity between the relay UE and the NW by the DC. The communication capacity between the remote UE and the NW via the relay UE can be increased.

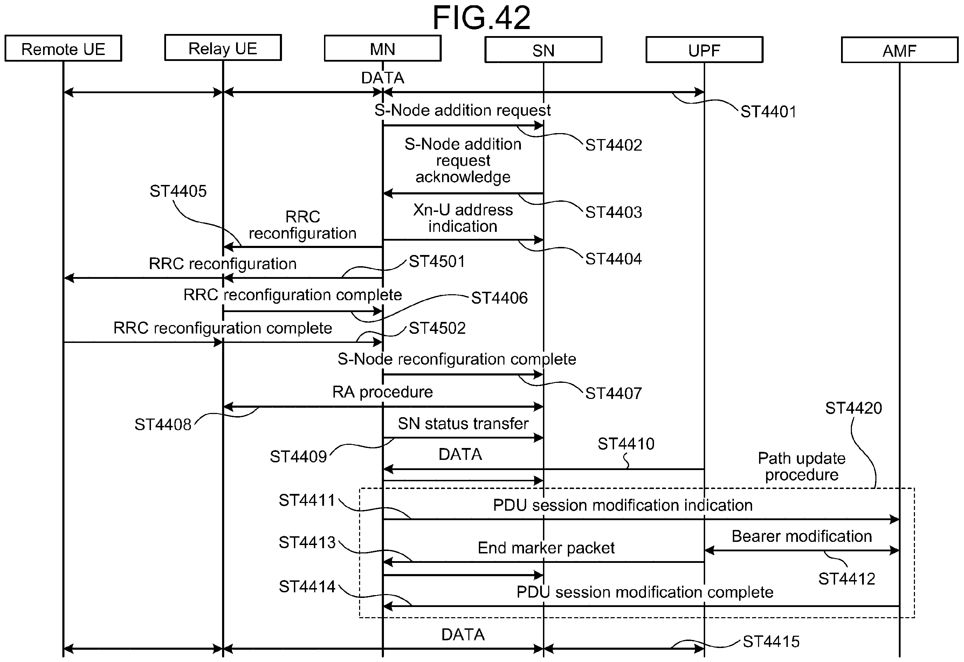

FIG. 42 is a sequence diagram illustrating another example of the method for configuring the DC in which the relay UE is connected to the two gNBs, according to the fourth embodiment. A case is illustrated where the SL bearer configuration is modified during the DC configuration process on the relay UE. In FIG. 42, steps common to those in FIG. 41 are denoted by the same step numbers as those therein, and common description is omitted. In a case where it is necessary to modify the SL bearer between the remote UE and the relay UE, the MN configures the SL bearer for the relay UE and the remote UE.

In step ST4405, the MN transmits the configuration of the SL bearer between the remote UE and the relay UE, to the relay UE. It is preferable that the configuration of the SL bearer include the configuration information of the SL bearer disclosed above. The configuration of the SL bearer from the MN to the relay UE may be transmitted together with the DC configuration from the MN to the relay UE disclosed in FIG. 41 or may be included in the DC configuration and transmitted. Alternatively, the transmission may be separately performed. In this example, the configuration is transmitted together with the DC configuration or is included in the DC configuration and transmitted, in the same RRC message. The relay UE that has received the SL bearer configuration can configure the SL bearer for the SL communication with the remote UE.

In step ST4406, the relay UE transmits a completion message of the SL bearer configuration between the remote UE and the relay UE, to the MN. The completion of the configuration of the SL bearer from the relay UE to the MN may be transmitted together with the DC configuration completion from the relay UE to the MN disclosed in FIG. 41 or may be included in the DC configuration completion and transmitted. Alternatively, the transmission may be separately performed. In this example, the completion of the configuration is transmitted together with the DC configuration completion or is included in the DC configuration completion and transmitted, in the same RRC message.

In step ST4501 subsequent to step ST4405 described above, the MN transmits the configuration of the SL bearer between the remote UE and the relay UE, to the remote UE. It is preferable that the configuration of the SL bearer include the configuration information of the SL bearer disclosed above. The configuration of the SL bearer from the MN to the remote UE is transmitted with the RRC signaling. The RRC reconfiguration message may be used. The remote UE that has received the SL bearer configuration can configure the SL bearer for the SL communication with the relay UE.

In step ST4502, the remote UE transmits the completion message of the SL bearer configuration between the remote UE and the relay UE, to the MN. The completion of the SL bearer configuration from the remote UE to the MN is transmitted with the RRC signaling. In the transmission, the RRC reconfiguration complete message may be used.

In this way, the SL bearer between the remote UE and the relay UE can be modified. For example, according to the DC configuration between the relay UE and the MN and the SN, in a case where it is necessary to modify the SL bearer configuration between the remote UE and the relay UE, it is preferable to execute the process in FIG. 42. The configuration of the SL bearer between the remote UE and the relay UE suitable for the DC configuration is enabled.

Another example of the method for configuring the DC in which the relay UE is connected to the two gNBs is disclosed. The MN configures the DC with respect to the relay UE and the remote UE. The MN configures the DC with respect to the RB between the MN and the remote UE. The RB is for communication between the remote UE and the MN. The RB may be the SRB and/or the DRB. The SRB may be the SRB 2. The MN configures the RLC bearer of the Uu for the DC with respect to the relay UE.

It is preferable that the relay UE and the MN be RRC-connected. It is preferable that the remote UE and the MN be RRC-connected. The remote UE in which the DC is configured is connected to the CN via the MN in the C-Plane.

The MN transmits the addition request of the SN to the RB for the communication between the remote UE and the MN, to the SN. It is preferable to transmit the addition request using Xn signaling. An S-Node addition request message may be used.

As information included in the SN addition request in the example of the DC configuration method, 17 pieces of information to be included in the SN addition request disclosed above may be appropriately applied.

The SN performs the configuration for the DC, with respect to the relay UE. The SN may perform the configuration for the DC with respect to the relay UE, using the information received from the MN. The SN transmits a response message to the addition request of the SN, to the MN. In a case where the SN performs DC configuration, the SN transmits an SN addition request acknowledgment response message to the MN. It is preferable to perform transmission using the Xn signaling. An S-Node addition request acknowledge message may be used as the SN addition request acknowledgment response message. In a case where the SN cannot perform the DC configuration for the relay UE, the SN transmits an SN addition request rejection response message to the MN. It is preferable to perform transmission using the Xn signaling. An S-Node addition request reject message may be used as the SN addition request rejection response message. As the information included in the SN addition request response message, information included in the SN addition request response message disclosed above may be appropriately applied.

The MN transmits the configuration for the DC to the relay UE. Five information examples included in the configuration for the DC are disclosed.
(1) Information about the RB.
(2) Information about the RLC bearer of the Uu.
(3) Identifier of the SN.
(4) Information about ADP configuration.
(5) Combination of (1) to (4).

As these five pieces of information included in the configurations for the DC, it is preferable to appropriately apply the information disclosed above, specifically, the four information examples included in the configuration for the DC when the MN transmits the configuration for the DC to the relay UE.

Note that, (1) is the information about the RB for the communication between the remote UE and the MN. The MN does not configure the RB as the DC configuration with respect to the relay UE. In a case where the RB that configures the DC is the SRB, the SRB is not configured. In a case where the RB that configures the DC is the DRB, the DRB is not configured. The information about the RB in (1) may be, for example, only the identifier of the RB.

(4) is the information about the configuration of the ADP configured between the RLC and the PDCP. The information about the ADP configuration includes, for example, information about a mapping function of the ADP, information about an RB to be configured, information about ab RLC bearer to be connected, or the like. The information about the configuration of the ADP may be included in the information about the RLC bearer of the Uu. By including the information about the configuration of the ADP in the information about the RLC bearer of the Uu, an information amount can be reduced. In this way, the MN can configure the ADP with respect to the relay UE.

The MN configures the SL bearer between the remote UE and the relay UE, with respect to the relay UE. The configuration of the SL bearer may be configuration for modifying the SL bearer, and the SL bearer may be modified. Three configuration information examples of the SL bearer are disclosed.
(1) Information about the RLC bearer of the SL.
(2) Information about the ADP configuration of the SL.
(3) Combination of (1) and (2).

As the information about the RLC bearer of the SL, it is preferable to appropriately apply the information disclosed above, specifically, "(2) the information about the RLC bearer of the SL" described above used when the MN configures the SL bearer between the remote UE and the relay UE, with respect to the relay UE.

The information about the ADP configuration of the SL is information about configuration of the PC5 ADP configured between the PC5 RLC and the PC5 PDCP. It is preferable that the information be configured in a case where the PC5 ADP is configured. The information about the ADP configuration includes, for example, the information about the mapping function of the ADP, the information about the RB to be configured, the information about the SL RLC bearer to be connected, or the like. The information about the configuration of the PC5 ADP may be included in the information about the RLC bearer of the SL. By including the information about the configuration of the PC5 ADP in the information about the RLC bearer of the SL, an information amount can be reduced. In this way, the MN can configure the ADP of the SL with respect to the relay UE.

The MN does not need to configure the SL RB with respect to the relay UE. The information about the SL RB need not be transmitted. The configuration of the SL PDCP and the SL SDAP need not be performed. The MN configures the single SL RLC bearer for the DC, with respect to the relay UE.

In a case where the MN performs the configuration for the DC with respect to the relay UE and/or the configuration of the SL bearer between the remote UE and the relay UE, the configuration for the DC between the relay UE and the SN received from the SN and/or the configuration information of the SL bearer between the remote UE and the relay UE may be used. It is possible to consider the load status or the like of the SN.

The MN transmits the configuration for the DC to the remote UE. A single information example included in the configuration for the DC is disclosed.
(1) Information about the RB.

As the information about the RB, it is preferable to appropriately apply the information disclosed above, specifically, "(1) the information about the RB" described above used when the MN transmits the configuration for the DC to the relay UE.

The MN transmits the RB configuration to the remote UE. The MN may transmit the RB configuration with the RRC signaling. An RRCReconfiguration message including the RB configuration may be transmitted. RadioBearerConfig information including the RB configuration may be transmitted.

The MN configures the SL bearer between the remote UE and the relay UE, with respect to the remote UE. The configuration of the SL bearer may be configuration for modifying the SL bearer, and the SL bearer may be modified. Three configuration information examples of the SL bearer are disclosed.
(1) Information about the RLC bearer of the SL.
(2) Information about the ADP configuration of the SL.
(3) Combination of (1) and (2).

As the information about the RLC bearer of the SL and the information about the ADP configuration of the SL, it is preferable to appropriately apply the information disclosed above.

The MN does not need to configure the SL RB with respect to the remote UE. The information about the SL RB need not be transmitted. The configuration of the SL PDCP and the SL SDAP need not be performed. The MN configures the single SL RLC bearer for the DC, with respect to the remote UE.

In a case where the MN performs the configuration for the DC with respect to the remote UE and/or the configuration of the SL bearer between the remote UE and the relay UE, the configuration for the DC between the relay UE and the SN received from the SN and/or the configuration information of the SL bearer between the remote UE and the relay UE may be used. It is possible to consider the load status or the like of the SN.

In a case where the type of the DC configuration is SN termination, the PDU session may be modified. In the modification, a PDU session modification process is executed between the MN and the CN. It is preferable to appropriately apply the method disclosed above to the modification of the PDU session.

Data communication between the remote UE and the NW is performed using the bearer for DC (RLC bearer) between the MN/SN and the relay UE and the SL bearer between the relay UE and the remote UE.

The method for configuring the DC described above may be applied to a case where the relay UE maps the RLC bearer for the DC and the SL bearer. For example, the method may be applied to the protocol example disclosed in FIG. 39 described above.

As a sequence example in another example of the method for configuring the DC in which the relay UE is connected to the two gNBs, the sequence example disclosed in FIG. 42 described above may be appropriately applied.

Another example of the method for configuring the DC in which the relay UE is connected to the two gNBs is disclosed. The MN configures the DC with respect to the relay UE and the remote UE. The MN configures the DC with respect to the RB between the MN and the remote UE. The RB is for communication between the remote UE and the MN. The RB may be the SRB and/or the DRB. The SRB may be the SRB 2.

The MN configures the RLC bearer of the Uu for the DC with respect to the relay UE.

The MN configures the SL bearer for the DC between the relay UE and the remote UE. The number of SL bearers for the DC may be two. The two SL bearers may be an SL bearer for the MN and an SL bearer for the SN.

It is preferable that the relay UE and the MN be RRC-connected. It is preferable that the remote UE and the MN be RRC-connected. The remote UE in which the DC is configured is connected to the CN via the MN in the C-Plane.

The MN transmits the addition request of the SN to the RB for the communication between the remote UE and the MN, to the SN. It is preferable to transmit the addition request using Xn signaling. An S-Node addition request message may be used.

As information included in the SN addition request in the example of the DC configuration method, 17 pieces of information to be included in the SN addition request disclosed above may be appropriately applied.

The SN performs the configuration for the DC, with respect to the relay UE. The SN may perform the configuration for the DC with respect to the relay UE, using the information received from the MN. The SN transmits a response message to the addition request of the SN, to the MN. In a case where the SN performs DC configuration, the SN transmits an SN addition request acknowledgment response message to the MN. It is preferable to perform transmission using the Xn signaling. An S-Node addition request acknowledge message may be used as the SN addition request acknowledgment response message. In a case where the SN cannot perform the DC configuration for the relay UE, the SN transmits an SN addition request rejection response message to the MN. It is preferable to perform transmission using the Xn signaling. An S-Node addition request reject message may be used as the SN addition request rejection response message. As the information included in the SN addition request response message, information included in the SN addition request response message disclosed above may be appropriately applied.

The MN transmits the configuration for the DC to the relay UE. As the information included in the configuration for the DC, it is preferable to appropriately apply the information disclosed above.

The MN configures the SL bearer between the remote UE and the relay UE, with respect to the relay UE. The configuration of the SL bearer may be configuration for modifying the SL bearer, and the SL bearer may be modified. As the configuration information of the SL bearer, it is preferable to appropriately apply the information disclosed above.

The number of RLC bearers of the SL may be one. Alternatively, the plurality of RLC bearers of the SL may be used. As the configuration of the SL bearer for the DC, the two RLC bearers of the SL may be configured. In that case, it is preferable to use information about the two RLC bearers of the SL for the DC. The two RLC bearers of the SL for the DC may be an RLC bearer of the SL for the MN and an RLC bearer of the SL for the SN.

The number of SL ADPs may be one. Alternatively, the plurality of SL ADPs may be used. As the configuration of the SL bearer for the DC, the two SL ADPs may be configured. In that case, it is preferable to use information about the configuration of the two SL ADPs for the DC. The two SL ADPs for the DC may be an SL ADP for the MN and an SL ADP for the SN.

The configuration of the SL bearer may be included in the configuration for the DC. The configuration information of the SL bearer may be included in the configuration information for the DC.

The MN does not need to configure the SL RB with respect to the relay UE. The information about the SL RB need not be transmitted. The configuration of the SL PDCP and the SL SDAP need not be performed. The MN configures the two SL RLC bearers for the DC, with respect to the relay UE.

In a case where the MN performs the configuration for the DC with respect to the relay UE and/or the configuration of the SL bearer between the remote UE and the relay UE, the configuration for the DC between the relay UE and the SN received from the SN and/or the configuration information of the SL bearer between the remote UE and the relay UE may be used. It is possible to consider the load status or the like of the SN.

The MN transmits the configuration for the DC to the remote UE. As the information included in the configuration for the DC, it is preferable to appropriately apply the information disclosed above.

The MN configures the SL bearer between the remote UE and the relay UE, with respect to the remote UE. The configuration of the SL bearer may be configuration for modifying the SL bearer, and the SL bearer may be modified. As the configuration information of the SL bearer, it is preferable to appropriately apply the information disclosed above.

The number of RLC bearers of the SL may be one. Alternatively, the plurality of RLC bearers of the SL may be used. As the configuration of the SL bearer for the DC, the two RLC bearers of the SL may be configured. In that case, it is preferable to use information about the two RLC bearers of the SL for the DC. The two RLC bearers of the SL for the DC may be an RLC bearer of the SL for the MN and an RLC bearer of the SL for the SN.

The number of SL ADPs may be one. Alternatively, the plurality of SL ADPs may be used. As the configuration of the SL bearer for the DC, the two SL ADPs may be configured. In that case, it is preferable to use information about the configuration of the two SL ADPs for the DC. The two SL ADPs for the DC may be an SL ADP for the MN and an SL ADP for the SN.

The configuration of the SL bearer may be included in the configuration for the DC. The configuration information of the SL bearer may be included in the configuration information for the DC.

The MN does not need to configure the SL RB with respect to the remote UE. The information about the SL RB need not be transmitted. The configuration of the SL PDCP and the SL SDAP need not be performed. The MN configures the two SL RLC bearers for the DC, with respect to the remote UE.

In a case where the MN performs the configuration for the DC with respect to the remote UE and/or the configuration of the SL bearer between the remote UE and the relay UE, the configuration for the DC between the relay UE and the SN received from the SN and/or the configuration information of the SL bearer between the remote UE and the relay UE may be used. It is possible to consider the load status or the like of the SN.

In a case where the type of the DC configuration is SN termination, the PDU session may be modified. In the modification, a PDU session modification process is executed between the MN and the CN. It is preferable to appropriately apply the method disclosed above to the modification of the PDU session.

Data communication between the remote UE and the NW is performed using the bearer for DC (RLC bearer) between the MN/SN and the relay UE and the two SL RLC bearers for the DC between the relay UE and the remote UE.

The method for configuring the DC disclosed above may be applied to a case where the remote UE terminates the DC. For example, the method may be applied to the protocol example disclosed in FIG. 40 described above.

As a sequence example in another example of the method for configuring the DC in which the relay UE is connected to the two gNBs, the sequence example disclosed in FIG. 42 described above may be appropriately applied.

Another example of the method for configuring the DC in which the relay UE is connected to the two gNBs is disclosed. The method for configuring the DC in a case where the relay UE terminates the DC and the method for configuring the DC in a case where the remote UE terminates the DC may be combined.

The MN performs the configuration for the DC with respect to the relay UE. As a result, the one or more bearers for the DC between the MN and the relay UE are mapped to the single SL bearer between the relay UE and the remote UE. Next, the MN performs the configuration for the DC with respect to the remote UE. Furthermore, the MN configures the two SL bearers for the DC between the relay UE and the remote UE. As a result, the RLC bearers of the MN and the SN between the MN and the relay UE are mapped to the SL RLC bearers of the MN and the SN between the relay UE and the remote UE. The relay UE may perform the mapping in the PDU layer.

In a case where it is necessary to modify the RB from the MN to the remote UE, the RB may be configured. For example, in a case where the RB is modified to the split bearer, the RB may be configured. The PDCP configuration may be modified to that for the split bearer.

In this way, the data communication between the remote UE and the NW is performed using the bearer for the DC (RLC bearer) between the MN/SN and the relay UE and the two SL RLC bearers for the DC between the relay UE and the remote UE.

Another example of the method for configuring the DC in which the relay UE is connected to the two gNBs is disclosed. The method for configuring the DC in a case where the relay UE maps the RLC bearer for the DC and the SL bearer and the method for configuring the DC in a case where the remote UE terminates the DC may be combined.

The MN performs the configuration for the DC with respect to the relay UE. The MN performs the configuration for the DC with respect to the remote UE. As a result, the one or more RLC bearers for the DC between the MN and the relay UE are mapped to the single SL RLC bearer between the relay UE and the remote UE. Next, the MN performs the configuration for the DC with respect to the remote UE. Furthermore, the MN configures the two SL bearers for the DC between the relay UE and the remote UE. As a result, the RLC bearers of the MN and the SN between the MN and the relay UE are mapped to the SL RLC bearers of the MN and the SN between the relay UE and the remote UE. The relay UE may perform the mapping in an ADP layer.

In a case where it is necessary to modify the RB from the MN to the remote UE, the RB may be configured. For example, in a case where the RB is modified to the split bearer, the RB may be configured. The PDCP configuration may be modified to that for the split bearer.

In this way, the data communication between the remote UE and the NW is performed using the bearer for the DC (RLC bearer) between the MN/SN and the relay UE and the two SL RLC bearers for the DC between the relay UE and the remote UE.

As a sequence example in a case where a DC configuration method in a case where the relay UE terminates the DC and a DC configuration method in a case where the remote UE terminates the DC are combined or in a case where a DC configuration method in a case where the relay UE maps the RLC bearer for the DC and the SL bearer and a DC configuration method in a case where the remote UE terminates the DC are combined, the sequence example disclosed in FIG. 41 described above and the sequence example disclosed in FIG. 42 may be appropriately applied.

Combining the DC configuration method in a case where the relay UE terminates the DC and the DC configuration method in a case where the remote UE terminates the DC enables flexible DC configuration. For example, in a case where a load is high in PC5 communication between the relay UE and the remote UE, it is preferable to perform the DC configuration of a case where the relay UE terminates the DC. The flexible DC configuration is enabled.

In this way, it is possible to configure the DC in indirect communication between the remote UE and the NW via the relay UE. In the indirect communication between the remote UE and the NW via the relay UE, communication using the plurality of gNBs is enabled. As a result, performance improvement such as high speed and large capacity, low delay, or high reliability is achieved.

### Fifth embodiment.

In a fifth embodiment, another method for solving the problems described in the fourth embodiment is disclosed.

In the communication between the remote UE and the NW performed via the relay UE, the remote UE is connected to the plurality of base stations. The plural may be two. In the communication between the remote UE and the NW performed via the relay UE, the remote UE is connected to the two base stations. The remote UE may configure the DC in the communication between the remote UE and the NW performed via the relay UE, using the two base stations. The connection between the remote UE and the base station may be direct connection or may be indirect connection via the relay UE. Indirect connection via at least the single relay UE is included.

The remote UE is connected to the plurality of gNBs, with respect to the radio bearer for the communication between the remote UE and the NW. The radio bearer may be, for example, the SRB. For example, the radio bearer may be the SRB 2. The SRBs 0 and 1 can simplify a communication establishment process, by performing communication using a single gNB. The radio bearer may be, for example, the DRB. Communication quality of the bearer for data communication can be improved.

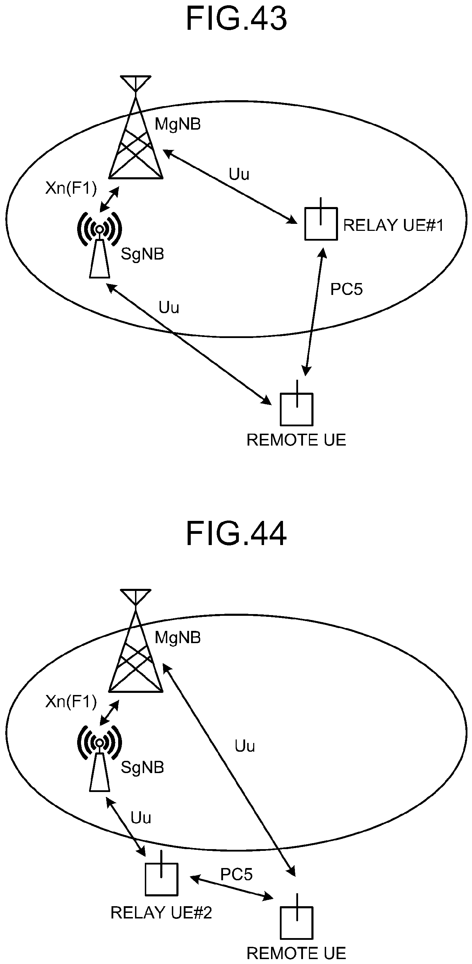

FIG. 43 is a conceptual diagram illustrating an example of a case where the remote UE is connected to the two gNBs in the communication between the remote UE and the NW via the relay UE, according to the fifth embodiment. In the example illustrated in FIG. 43, the remote UE is connected to the MgNB via a relay UE #1 and directly connected to the SgNB. The MgNB and the relay UE #1 are connected by the Uu, and the relay UE #1 and the remote UE are connected by the PC5. The SgNB and the remote UE are connected by the Uu. The MgNB and the SgNB are connected by Xn. It is preferable that the remote UE and the MgNB be RRC-connected. It is preferable that the relay UE #1 and the MgNB be RRC-connected.

FIG. 44 is a conceptual diagram illustrating still another example of the case where the remote UE is connected to the two gNBs in the communication between the remote UE and the NW via the relay UE, according to the fifth embodiment. In the example illustrated in FIG. 44, the remote UE is directly connected to the MgNB and is connected to the SgNB via a relay UE #2. The MgNB and the remote UE are connected by the Uu. The SgNB and the relay UE #2 are connected by the Uu, and the relay UE #2 and the remote UE are connected by the PC5. The MgNB and the SgNB are connected by the Xn. It is preferable that the remote UE and the MgNB be RRC-connected. It is preferable that the relay UE #2 and the SgNB be RRC-connected.

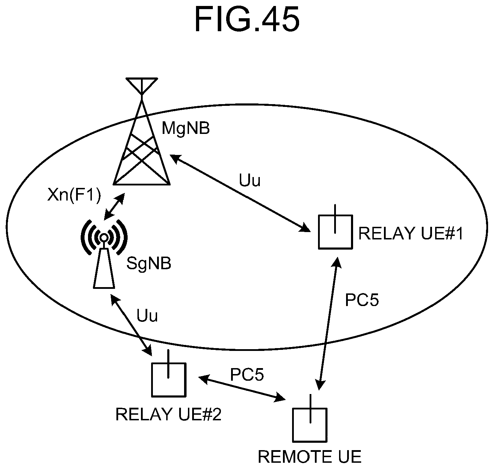

FIG. 45 is a conceptual diagram illustrating still another example of the case where the remote UE is connected to the two gNBs in the communication between the remote UE and the NW via the relay UE, according to the fifth embodiment. In the example illustrated in FIG. 45, the remote UE is connected to the MgNB via the relay UE #1 and is connected to the SgNB via the relay UE #2. The MgNB and the relay UE #1 are connected by the Uu, and the relay UE #1 and the remote UE are connected by the PC5. The SgNB and the relay UE #2 are connected by the Uu, and the relay UE #2 and the remote UE are connected by the PC5. The MgNB and the SgNB are connected by the Xn. It is preferable that the remote UE and the MgNB be RRC-connected. It is preferable that the relay UE #1 and the MgNB be RRC-connected. It is preferable that the relay UE #2 and the SgNB be RRC-connected.

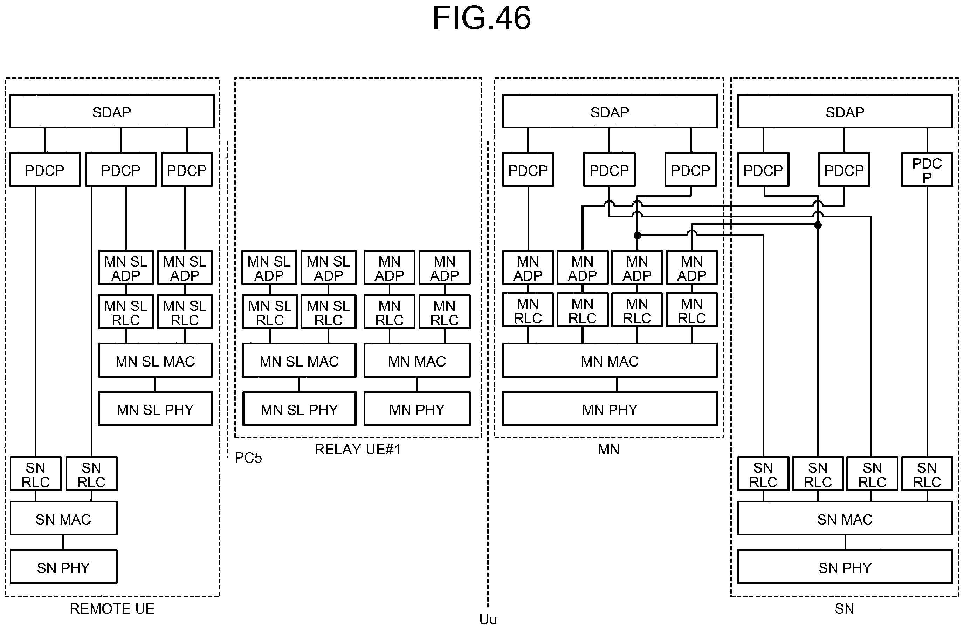

A protocol configuration in a case where the remote UE is connected to the two gNBs, in the communication between the remote UE and the NW via the relay UE, is disclosed. FIG. 46 is a diagram illustrating a protocol stack in a case where the remote UE is connected to the two gNBs in the communication between the remote UE and the NW via the relay UE, according to the fifth embodiment. A case is illustrated where the remote UE is connected to the MgNB via the relay UE #1 and is directly connected to the SgNB. The U-Plane is described.

The MN and the SN have the protocol of the Uu for the DC. The Uu protocols include SDAP, PDCP, RLC, MAC, and PHY. In the protocol of the Uu for the MN, the ADP is configured between the RLC and the PDCP. The ADP may be configured as a sublayer of the RLC. As in the fourth embodiment described above, in FIG. 46, as the bearer for the DC, both of the MN termination bearer and the SN termination bearer, the MCG bearer, the SCG bearer, and the split bearer are illustrated together. Protocols corresponding to these bearers are configured. The single PDCP may be configured for the MN termination bearer, and the single PDCP may be configured for the SN termination bearer. In DC configuration, these bearers can be configured.

The relay UE #1 has the protocol of the Uu for the MN. The protocols of the Uu are the RLC, the MAC, and the PHY. In the protocol of the Uu for the MN, the ADP is configured between the RLC and the PDCP. The ADP may be configured as a sublayer of the RLC. The bearer for the MN is the MCG bearer or the split bearer. Protocols corresponding to these bearers are configured.

The relay UE #1 has the PC5 protocol between the relay UE #1 and the remote UE. The PC5 protocol may be used for the MN. The PC5 protocols are the PC5 RLC, the PC5 MAC, and the PC5 PHY. The PC5 ADP (SL ADP) may be configured above the PC5 RLC (SL RLC). It is preferable that the PC5 ADP have, for example, a mapping function between the Uu bearer and the PC5 bearer. The PC5 ADP may be configured as a sublayer of the PC5 RLC. The PC5 SDAP and the PC5 PDCP need not be provided.

The remote UE has the PC5 protocol between the remote UE and the relay UE #1. The PC5 protocol may be used for the MN. Similarly to the relay UE #1, the PC5 protocols are the PC5 RLC, the PC5 MAC, and the PC5 PHY. A PC5 ADP may be configured above the PC5 RLC. The PC5 SDAP and the PC5 PDCP need not be provided. Furthermore, the remote UE has the protocol of the Uu between the remote UE and the SN. The protocols of the Uu are the RLC, the MAC, and the PHY. The bearer for the SN is the SCG bearer or the split bearer. Furthermore, the remote UE includes the Uu protocol between the remote UE and the MN and/or the SN. The protocols of the Uu are the SDAP and the PDCP for the DC. The remote UE connects the PDCP or the ADP of the PC5 for the MN and the PDCP of the Uu and connects the RLC of the Uu for the SN and the PDCP of the Uu. The single PDCP may be configured for the MN termination bearer, and the single PDCP may be configured for the SN termination bearer. The remote UE terminates the DC.

The bearer is disclosed. The RB is configured between the MN and the remote UE. In the RB, the bearer for the MN is configured between the MN and the relay UE #1. The bearer for the MN is the MCG bearer or the split bearer. It is preferable that the MCG bearer or the split bearer be the RLC bearer. The RLC channel may be used.
The single SL bearer is configured between the relay UE #1 and the remote UE. It is preferable that the SL bearer be the SL RLC bearer for the MN. The SL bearer may be an SL RLC channel. The bearer for the SN is configured between the SN and the remote UE. The bearer for the SN is the SCG bearer or the split bearer. It is preferable that the SCG bearer or the split bearer be the RLC bearer. The RLC channel may be used.

Bearer mapping in communication from the NW to the remote UE is disclosed. In the communication from the NW to the remote UE, the MN and the SN have a function for mapping the RB between the NW and the remote UE to the RLC bearer of the Uu for the DC. The RLC bearer of the Uu for the DC is the MCG bearer, the SCG bearer, or the split bearer. The number of remote UEs connected to the relay UE #1 is not limited to one and may be plural. The number of RBs between the remote UE and the NW is not limited to one and may be plural.

In the MN, the RBs of the one or the plurality of remote UEs connected to the relay UE #1 and/or the one or the plurality of RBs between the remote UE and the NW may be mapped to the RLC bearer of the Uu for the DC. The ADP of the Uu configured in the MN may have the function described above. Functions in a case where the DC is configured and functions in a case where the DC is not configured may be aggregated in the ADP. In this case, the configuration of the MN can be simplified.

The MN may add the identifier of the remote UE and the identifier of the RB between the remote UE and the NW, in the communication from the NW to the remote UE. In a case where the RB is the SRB, the RB ID may be an SRB ID. In a case where the RB is the DRB, the RB ID may be a DRB ID. In this way, the relay UE #1 can recognize the transmission destination remote UE and the RB for the communication between the remote UE and the NW.

The MN may add information about the bearer used for the DC, in the communication from the NW to the remote UE. The information about the bearer used for the DC includes, for example, an identifier indicating an end of the bearer, and/or an identifier indicating a type of the bearer, and/or an identifier indicating that the bearer is for the MN or the SN, or the like. In this way, the relay UE #1 or the remote UE can recognize the end, the type, or the like of the bearer used for the DC.

The ADP of the Uu configured in the MN may have the addition functions described above. Functions in a case where the DC is configured and functions in a case where the DC is not configured may be aggregated in the ADP. In this case, the configuration of the MN can be simplified.

The relay UE #1 has a function for mapping the RLC bearer of the Uu for the MN to the RLC bearer of the PC5 for the MN, in the communication from the NW to the remote UE. For the mapping, the remote UE identifier and the RB identifier added by the ADP of the MN may be used. For the mapping, the information about the bearer used for the DC added by the MN may be used. In this way, the relay UE #1 can map the MCG bearer or the split bearer for the MN to the RLC bearer of the PC5 for the MN. An ADP of the Uu configured in the relay UE #1 may have the functions described above. Functions in a case where the DC is configured and functions in a case where the DC is not configured may be aggregated in the ADP. In this case, the configuration of the relay UE #1 can be simplified.

When performing mapping to the RLC bearer of the PC5, the relay UE #1 may delete some or all of the remote UE identifier, the RB identifier, the information about the bearer used for the DC, and the like added by the MN. In the mapping to the RLC bearer of the PC5 to the remote UE, some or all of the identifiers and the information need not be added.

The remote UE has a function for mapping the RLC bearer of the PC5 for the MN and the RLC bearer of the Uu for the SN to the RB between the NW and the remote UE, in the communication from the NW to the remote UE. For the mapping, the remote UE identifier and the RB identifier added by the MN may be used. For the mapping, the information about the bearer used for the DC added by the MN may be used.

Bearer mapping in the communication from the remote UE to the NW is disclosed. The remote UE has a function for mapping the RB between the NW and the remote UE to the RLC bearer of the PC5 for the DC and the RLC bearer of the Uu, in the communication from the remote UE to the NW. The RLC bearer of the PC5 for the DC is the RLC bearer of the PC5 for the MN. The RLC bearer of the PC5 for the MN is the MCG bearer or the split bearer. The RLC bearer of the Uu for the DC is the RLC bearer of the Uu for the SN. The RLC bearer of the Uu for the SN is the SCG bearer or the split bearer. The remote UE may add the identifier of the RB between the remote UE and the NW and the identifier of the base station, in the communication from the NW to the remote UE. The number of base stations may be plural. For example, the identifiers may be added in a case where the relay UE is connected to the plurality of base stations. Information indicating whether or not the number of base stations is plural or information indicating whether or not the number of identifiers of the base stations is plural may be added. The identifier of the base station may be an identifier of the MN and/or the SN. For example, it is applicable to a case where the DC is configured. In this way, in a case where the relay UE performs transmission to the plurality of base stations, it is possible to recognize the transmission destination base station and the RB for communication between the remote UE and the NW.

The remote UE may add the information about the bearer used for the DC, in the communication from the remote UE to the NW. The information about the bearer used for the DC includes, for example, an identifier indicating an end of the bearer, and/or an identifier indicating a type of the bearer, and/or an identifier indicating that the bearer is for the MN or the SN, or the like. In this way, the relay UE, the MN, or the SN can recognize the end, the type, or the like of the bearer used for the DC.

An ADP of the SL configured in the remote UE may have the addition functions described above. Functions in a case where the DC is configured and functions in a case where the DC is not configured may be aggregated in the SL ADP. The configuration of the remote UE can be simplified.

The relay UE #1 has a function for mapping the RLC bearer of the PC5 for the MN to the RLC bearer of the Uu for the MN, in the communication from the remote UE to the NW. The RLC bearer of the Uu for the MN is the MCG bearer or the split bearer. The MCG bearer of the PC5 is mapped to the MCG bearer of the Uu. The split bearer of the PC5 is mapped to the split bearer of the Uu. For the mapping, the identifier of the base station, the RB identifier, or the like added by the remote UE may be used. For the mapping, the information about the bearer used for the DC added by the remote UE or the like may be used. The number of remote UEs connected to the relay UE #1 is not limited to one and may be plural. An ADP of the Uu configured in the relay UE #1 may have the functions described above. Functions in a case where the DC is configured and functions in a case where the DC is not configured may be aggregated in the ADP. In this case, the configuration of the relay UE #1 can be simplified.

When performing mapping to the RLC bearer of the Uu, the relay UE #1 may delete some or all of the remote UE identifier, the RB identifier, the information about the bearer used for the DC, and the like added by the remote UE. In the mapping to the RLC bearer of the Uu to the MN, some or all of the identifiers and the information need not be added.

The relay UE #1 may add the identifier of the remote UE and the identifier of the RB between the remote UE and the NW, in the communication from the remote UE to the NW. In a case where the RB is the SRB, the RB ID may be an SRB ID. In a case where the RB is the DRB, the RB ID may be a DRB ID. In this way, the MN can recognize a transmission source remote UE and the RB for the communication between the remote UE and the NW. The ADP of the Uu for the MN configured in the relay UE #1 may have the addition functions described above. Functions in a case where the DC is configured and functions in a case where the DC is not configured may be aggregated in the ADP. In this case, the configuration of the relay UE can be simplified.

The MN and the SN have a function for mapping the RLC bearer of the Uu for the DC to the RB between the NW and the remote UE, in the communication from the remote UE to the NW. The number of remote UEs connected to the relay UE #1 is not limited to one and may be plural. The number of RBs between the remote UE and the NW is not limited to one and may be plural. The RLC bearer of the Uu for the DC may be mapped to the RBs of the single or the plurality of remote UEs connected to the relay UE #1 and/or the single or the plurality of RBs between the remote UE and the NW. For the mapping, the remote UE identifier, the RB identifier, the information about the bearer used for the DC, or the like added by the remote UE or the ADP of the Uu for the MN of the relay UE #1 may be used. In this way, the MN and the SN can transfer the MCG bearer, the SCG bearer, or the split bearer for the DC to the PDCP of the RB for the communication between the remote UE and the NW. An ADP of the Uu configured in the MN and the SN may have the function described above. Functions in a case where the DC is configured and functions in a case where the DC is not configured may be aggregated in the ADP. In this case, the configurations of the MN and the SN can be simplified.

For the protocol of the C-Plane, it is satisfactory if the RRC is provided instead of the SDAP of the MN and the remote UE. It is preferable to provide the RRC corresponding to the SRB. In a case where the DC is configured for the SRB, only the MN termination bearer may be configured. The DC of the SRB is enabled.

In this way, the remote UE connected to the two gNBs is enabled to communicate with the NW via the relay UE.

A configuration method for connecting the remote UE to the plurality of gNBs in the communication from the remote UE and the NW performed via the relay UE is disclosed. In the present embodiment, a method for configuring the DC in which the remote UE is connected to the two gNBs is disclosed.

A case is disclosed where the remote UE is connected to the MgNB via the relay UE #1 and is directly connected to the SgNB.

The MN configures the DC with respect to the remote UE. The MN configures the DC with respect to the RB between the MN and the remote UE. The RB may be used for the communication between the remote UE and the MN. The RB may be the SRB and/or the DRB. The SRB may be the SRB 2.

The MN configures the RLC bearer of the Uu for the DC with respect to the remote UE. The RLC bearer of the Uu for the DC may be the RLC bearer between the SN and the remote UE.

The MN configures the RLC bearer of the Uu for the DC between the MN and the relay UE #1. The configuration is used for the DC configuration for the RB between the MN and the remote UE. If the RLC bearer of the Uu for the DC is not modified from an existing RLC bearer of the Uu, new configuration need not be performed.

The MN configures the SL bearer for the DC between the relay UE #1 and the remote UE. The SL bearer for the DC may be the single SL bearer. The SL bearer may be the SL bearer for the MN. The SL bearer may be the SL RLC bearer.

It is preferable that the relay UE #1 and the MN be RRC-connected. It is preferable that the remote UE and the MN be RRC-connected. Furthermore, the MN may start the DC configuration for the remote UE, in a state where the remote UE is RRC-connected to the MN. The remote UE in which the DC is configured is connected to the CN via the MN in the C-Plane.

The MN transmits the addition request of the SN to the RB for the communication between the remote UE and the MN, to the SN. It is preferable to transmit the addition request using Xn signaling. An S-Node addition request message may be used.

As the information included in the addition request of the SN, it is preferable to appropriately apply the 17 information examples included in the addition request of the SN disclosed above. It is preferable that the relay UE in the information examples be replaced with the relay UE #1.

In this way, the MN can transmit the SN addition request for the DC, to the SN. Furthermore, by receiving the SN addition request from the MN, the SN can recognize for which remote UE the DC is, for example. The SN may perform the configuration for the DC with respect to the remote UE, using the information received from the MN.

The SN performs the configuration for the DC, with respect to the relay UE. The SN transmits a response message to the addition request of the SN, to the MN. In a case where the SN performs DC configuration, the SN transmits an SN addition request acknowledgment response message to the MN. It is preferable to perform transmission using the Xn signaling. An S-Node addition request acknowledge message may be used as the SN addition request acknowledgment response message. In a case where the SN cannot perform the DC configuration for the relay UE, the SN transmits an SN addition request rejection response message to the MN. It is preferable to perform transmission using the Xn signaling. An S-Node addition request reject message may be used as the SN addition request rejection response message. As the information included in the SN addition request response message, information included in the SN addition request response message disclosed in the fourth embodiment may be appropriately applied.

The MN transmits the configuration for the DC to the relay UE #1. Five information examples included in the configuration for the DC are disclosed.
(1) Information about the RB.
(2) Information about the RLC bearer of the Uu.
(3) Identifier of the SN.
(4) Information about ADP configuration.
(5) Combination of (1) to (4).

As the five pieces of information included in the configuration for the DC, it is preferable to appropriately apply the information example included in the configuration for the DC disclosed above.

Note that, (1) is the information about the RB for the communication between the remote UE and the MN. The MN does not perform the configuration of the RB as the configuration of the DC with respect to the relay UE #1. In a case where the RB that configures the DC is the SRB, the SRB is not configured. In a case where the RB that configures the DC is the DRB, the DRB is not configured. The information about the RB in (1) may be, for example, only the identifier of the RB.

(2) is information about the RLC bearer of the Uu for the DC. The MN does not need to perform configuration for the SCG with respect to the relay UE #1. Since the relay UE #1 is not connected to the SN in the DC in this example, the relay UE #1 does not need to receive information about the SCG.

Similarly, in (3), the MN does not need to transmit the identifier of the SN to the relay UE #1. Since the relay UE #1 is not connected to the SN in the DC in this example, the relay UE #1 does not need to receive the identifier of the SN.

The MN configures the SL bearer between the remote UE and the relay UE #1, with respect to the relay UE #1. The configuration of the SL bearer may be configuration for modifying the SL bearer, and the SL bearer may be modified. Three configuration information examples of the SL bearer are disclosed.
(1) Information about the RLC bearer of the SL.
(2) Information about the ADP configuration of the SL.
(3) Combination of (1) and (2).

As the configuration information of the SL bearer, it is preferable to appropriately apply the configuration information example of the SL bearer disclosed above.

The MN does not need to configure the SL RB with respect to the relay UE #1. The information about the SL RB need not be transmitted. The configuration of the SL PDCP and the SL SDAP need not be performed. The MN may configure the single SL bearer for the DC, with respect to the relay UE #1. The configuration of the SL bearer for the DC may be the configuration of the SL bearer for the MN.

In a case where the MN performs the configuration for the DC with respect to the relay UE #1 and/or the configuration of the SL bearer between the remote UE and the relay UE #1, the MN may use the configuration information for the DC between the remote UE and the SN received from the SN. It is possible to consider the load status or the like of the SN.

The MN transmits the configuration for the DC to the remote UE. Five information examples included in the configuration for the DC are disclosed.
(1) Information about the RB.
(2) Information about the RLC bearer of the Uu.
(3) Identifier of the SN.
(4) Information about ADP configuration.
(5) Combination of (1) to (4).

As the five pieces of information included in the configuration for the DC, it is preferable to appropriately apply the information example included in the configuration for the DC disclosed above.

Note that, (2) is information about the RLC bearer of the Uu for the DC. The MN does not need to perform configuration for the MCG with respect to the remote UE. Since the remote UE is connected to the MN via the relay UE #1 in the DC, the remote UE does not need to receive information about the MCG.

The MN configures the SL bearer between the remote UE and the relay UE #1, with respect to the remote UE. The configuration of the SL bearer may be configuration for modifying the SL bearer, and the SL bearer may be modified. Three configuration information examples of the SL bearer are disclosed.
(1) Information about the RLC bearer of the SL.
(2) Information about the ADP configuration of the SL.
(3) Combination of (1) and (2).

As the configuration information of the SL bearer, it is preferable to appropriately apply the configuration information example of the SL bearer disclosed above.

The number of RLC bearers of the SL may be one. As the configuration of the SL bearer for the DC, the RLC bearer of the SL for the MN may be configured.

The number of ADP configurations of the SL may be one. As the ADP configuration of the SL for the DC, the ADP of the SL for the MN may be configured.

The configuration of the SL bearer may be included in the configuration for the DC. The configuration information of the SL bearer may be included in the configuration information for the DC.

The MN does not need to configure the SL RB with respect to the remote UE. The information about the SL RB need not be transmitted. The configuration of the SL PDCP and the SL SDAP need not be performed. The MN may configure the single SL bearer for the DC, with respect to the remote UE. The configuration of the SL bearer for the DC may be the configuration of the SL bearer for the MN.

In a case where the MN performs the configuration for the DC with respect to the remote UE and/or the configuration of the SL bearer between the remote UE and the relay UE #1, the MN may use the configuration information for the DC between the remote UE and the SN received from the SN. It is possible to consider the load status or the like of the SN.

In a case where the type of the DC configuration is SN termination, the PDU session may be modified. In the modification, a PDU session modification process is executed between the MN and the CN. It is preferable to appropriately apply the method disclosed above to the modification of the PDU session.

The data communication between the remote UE and the NW is performed using the MCG bearer between the remote UE and the MN via the relay UE #1, the SCG bearer between the remote UE and the SN, and the split bearers between the remote UE and the MN via the relay UE #1 and between the remote UE and the SN.

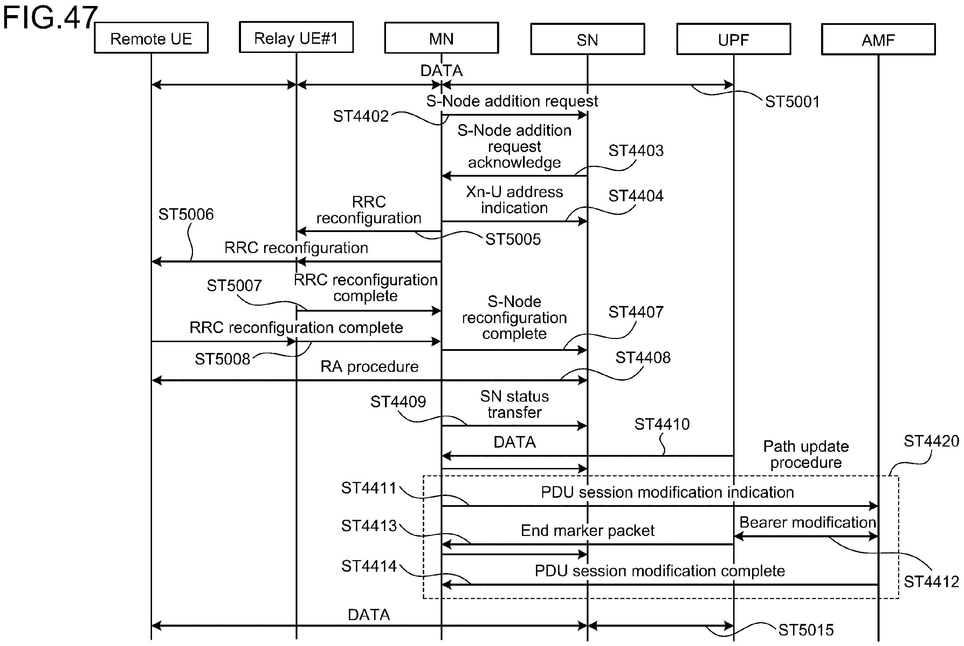

FIG. 47 is a sequence diagram illustrating an example of the method for configuring the DC in which the remote UE is connected to the two gNBs, according to the fifth embodiment. A case is disclosed where the remote UE is connected to the MgNB via the relay UE #1 and is directly connected to the SgNB. In FIG. 47, steps common to those in FIG. 41 are denoted by the same step numbers, and common description is omitted. In step ST5001, data communication is performed between the remote UE, the relay UE #1, the MN, and the UPF.

The MN determines to configure the DC with respect to the remote UE. For example, the MN configures measurement of the neighbor gNB with respect to the remote UE. The remote UE performs the configured measurement and reports the measurement result to the MN. In addition, the MN may configure measurement of a neighbor relay UE with respect to the remote UE. The remote UE may perform the configured measurement and report the measurement result to the MN. The MN determines an SN used for the DC from the measurement result.

In step ST4402, the MN transmits an SN addition request message to the SN determined to be used for the DC. The MN requests the SN to perform addition as the SN for the DC with respect to the remote UE. The SN addition request message is transmitted using the Xn signaling. The S-Node addition request message may be used as the SN addition request message. It is preferable to include the information example of the SN addition request disclosed above in the SN addition request message.

The SN that has received the SN addition request message from the MN recognizes the remote UE that performs the DC configuration, the information about the communication between the remote UE for performing the DC configuration and the NW, bearer termination to be required, the bearer type for the DC to be required, or the like, from the information of the SN addition request and performs configuration for the DC with respect to the remote UE. For example, the configuration for the DC may be the RRC configuration between the SN and the remote UE. In step ST4403, the SN transmits an SN addition request response message to the MN. In this example, an acknowledgement response is transmitted. As the SN addition request response message, the S-Node addition request acknowledge message may be used. The SN addition request response message may include the RRC configuration between the SN and the remote UE. The MN that has received the SN addition request response message recognizes that the SN has performed the DC configuration with respect to the remote UE. Furthermore, the MN recognizes the RRC configuration between the SN and the remote UE.

In step ST4404, the MN notifies the SN of a Xn-U address indication message. For example, the MN configures an address used for the DC between the MN and the SN and transmits the address to the SN in step ST4404. As a result, the MN and the SN can share the address used for the DC and exchange data.

In step ST5005, the MN transmits the configuration for the DC and the configuration of the SL bearer, to the relay UE #1. The configuration of the SL bearer and the configuration for the DC may be transmitted together, or the configuration of the SL bearer may be included in the configuration for the DC and transmitted. Alternatively, the configuration for the DC and the configuration of the SL bearer may be separately transmitted. The RRC signaling is used for the transmission. The configuration may be performed using the RRC reconfiguration message. It is preferable that the configuration for the DC include the information example of the configuration for the DC described above. It is preferable that the configuration of the SL bearer include the configuration information of the SL bearer disclosed above. By receiving the configuration for the DC and the SL bearer configuration from the MN, the relay UE #1 can perform configuration for the DC between the MN and the relay UE #1 and configuration of the SL bearer between the remote UE and the relay UE #1. The configuration may be modification.

The relay UE #1 that has performed these configurations transmits a DC configuration response and an SL bearer configuration response to the MN, in step ST5007. In this example, an acknowledgement response is transmitted. The RRC signaling is used for the transmission. An RRC reconfiguration complete message may be used. The MN that has received the DC configuration response and the SL bearer configuration response recognizes that the relay UE #1 has completed the DC configuration and the SL bearer configuration.

In step ST5006 subsequent to step ST5005 described above, the MN transmits the configuration for the DC and the configuration of the SL bearer to the remote UE. The configuration of the SL bearer and the configuration for the DC may be transmitted together, or the configuration of the SL bearer may be included in the configuration for the DC and transmitted. Alternatively, the configuration for the DC and the configuration of the SL bearer may be separately transmitted. The RRC signaling is used for the transmission. The RRC reconfiguration message may be used. It is preferable that the configuration for the DC include the information example of the configuration for the DC described above. As configuration regarding the SCG of the information about the configuration for the DC, the RRC configuration information received from the SN may be used. It is preferable that the configuration of the SL bearer include the configuration information of the SL bearer disclosed above. By receiving the configuration for the DC and the SL bearer configuration from the MN, the remote UE can perform configuration for the DC between the MN and the remote UE and configuration of the SL bearer between the remote UE and the relay UE #1. The configuration may be modification.

The remote UE that has performed these configurations transmits the DC configuration response and the SL bearer configuration response to the MN, in step ST5008. In this example, an acknowledgement response is transmitted. The RRC signaling is used for the transmission. An RRC reconfiguration complete message may be used. The MN that has received the DC configuration response and the SL bearer configuration response recognizes that the remote UE has completed the DC configuration and the SL bearer configuration.

In step ST4407, the MN transmits an SN configuration completion message to the SN. For the transmission, the Xn signaling is used. An S-Node reconfiguration complete message may be transmitted. By receiving the message, the SN recognizes that the MN and the remote UE have completed the SN configuration for the DC.

In step ST4408, the remote UE starts the RA process on the SN and communicates with the SN while maintaining communication with the MN.

The MN performs SN status transfer to the SN in step ST4409, and transfers the data from the UPF to the SN in step ST4410. In a case of the SN termination bearer, it is necessary to change a path between the UPF and the gNB from the MN to the SN. In this case, a path update process in step ST4420 is executed. As a result, in step ST5015, data communication is performed between the remote UE, the SN, and the UPF.

In this way, the DC is performed between the MN and the SN vie the remote UE and the relay UE #1. For example, in a case of an SN termination SCG bearer, data communication is performed between the remote UE, the SN, and the UPF.

For example, in a case of the MN termination SCG bearer, data communication is performed between the MN and the UPF via the remote UE, the SN, and the relay UE #1. For example, in a case of the SN termination MCG bearer, data communication is performed between the MN, the SN, and the UPF via the remote UE and the relay UE #1. For example, in a case of the MN termination split bearer, data communication is performed between the MN and the UPF via the remote UE, the SN, and the relay UE. For example, in a case of the SN termination split bearer, data communication is performed between the MN, the SN, and the UPF via the remote UE and the relay UE #1.

RRC signaling may be performed between the SN and the remote UE. The RRC signaling may be performed using an SRB3. After starting the communication between the remote UE and the SN in step ST4408, the remote UE may transmit an RRC message to the SN using the SRB3, and the SN may transmit an RRC message to the remote UE. The RRC message using the SRB 3 may be, for example, a message regarding the SN. For example, the RRC message may be a message such as SCG bearer configuration change, an SN measurement report, or transmission of information about a filer of the SCG bearer. In this way, the RRC message can be directly communicated between the SN and the remote UE without communication through the MN. Therefore, it is possible to reduce a signaling amount and reduce a delay.

In this way, it is possible to configure the DC in which the remote UE is connected to the MgNB via the relay UE #1 and is directly connected to the SgNB.

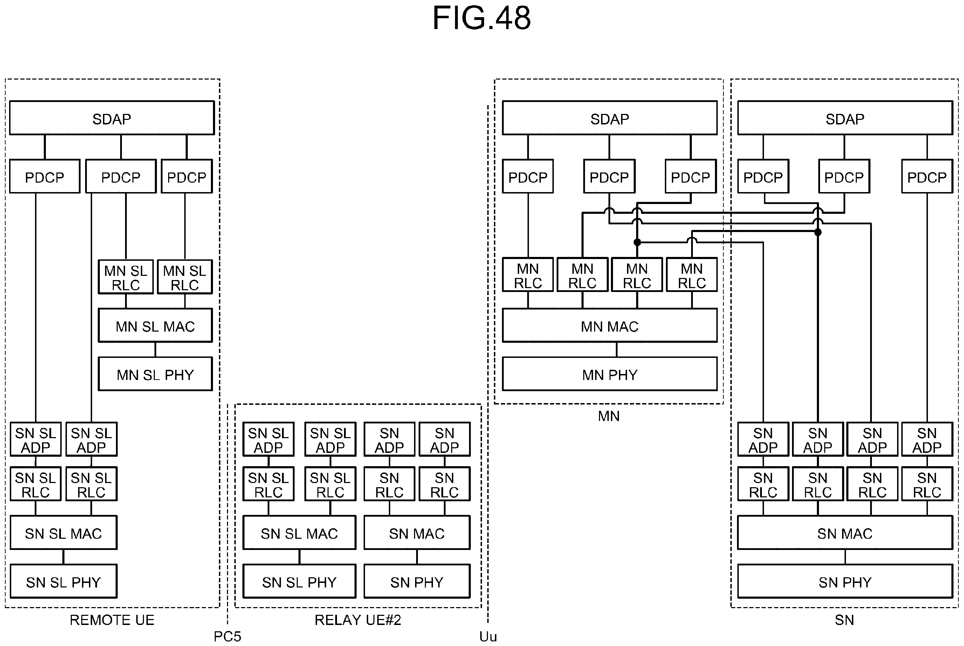

Another method of the protocol configuration in a case where the remote UE is connected to the two gNBs, in the communication between the remote UE and the NW via the relay UE, is disclosed. FIG. 48 is a diagram illustrating another configuration method of the protocol stack in a case where the remote UE is connected to the two gNBs in the communication between the remote UE and the NW via the relay UE, according to the fifth embodiment. A case is illustrated where the remote UE is directly connected to the MgNB and is connected to the SgNB via the relay UE #2. The U-Plane is described.

The MN and the SN have the protocol of the Uu for the DC. The Uu protocols include SDAP, PDCP, RLC, MAC, and PHY. In the protocol of the Uu for the SN, the ADP is configured between the RLC and the PDCP. The ADP may be configured as a sublayer of the RLC. FIG. 48 illustrates both of the MN termination bearer and the SN termination bearer as the bearers for the DC. Furthermore, the MCG bearer, the SCG bearer, and the split bearer are also illustrated. Protocols corresponding to these bearers are configured. The single PDCP may be configured for the MN termination bearer, and the single PDCP may be configured for the SN termination bearer. In DC configuration, these bearers can be configured.

The relay UE #2 has the protocol of the Uu for the SN. The protocols of the Uu are the RLC, the MAC, and the PHY. In the protocol of the Uu for the SN, the ADP is configured between the RLC and the PDCP. The ADP may be configured as a sublayer of the RLC. The bearer for the MN is the MCG bearer or the split bearer. Protocols corresponding to these bearers are configured.

The relay UE #2 has the PC5 protocol between the relay UE #2 and the remote UE. The PC5 protocol may be used for the SN. The PC5 protocols are the PC5 RLC, the PC5 MAC, and the PC5 PHY. A PC5 ADP may be configured above the PC5 RLC. It is preferable that the PC5 ADP have, for example, a mapping function between the Uu bearer and the PC5 bearer. The PC5 ADP may be configured as a sublayer of the PC5 RLC. The PC5 SDAP and the PC5 PDCP need not be provided.

The remote UE has the PC5 protocol between the remote UE and the relay UE #2. The PC5 protocol may be used for the SN. Similarly to the relay UE #2, the PC5 protocols are the PC5 RLC, the PC5 MAC, and the PC5 PHY. A PC5 ADP may be configured above the PC5 RLC. The PC5 SDAP and the PC5 PDCP need not be provided. Furthermore, the remote UE has the protocol of the Uu between the remote UE and the MN. The protocols of the Uu are the RLC, the MAC, and the PHY. The bearer for the MN is the SCG bearer or the split bearer. Furthermore, the remote UE includes the Uu protocol between the remote UE and the MN and/or the SN. The protocols of the Uu are the SDAP and the PDCP for the DC. The remote UE connects the PDCP or the ADP of the PC5 for the SN and the PDCP of the Uu and connects the RLC of the Uu for the MN and the PDCP of the Uu. The single PDCP may be configured for the MN termination bearer, and the single PDCP may be configured for the SN termination bearer. The remote UE terminates the DC.

The bearer is disclosed. The RB is configured between the MN and the remote UE. In the RB, the bearer for the SN is configured between the SN and the relay UE #2. The bearer for the SN is the SCG bearer or the split bearer. It is preferable that the SCG bearer or the split bearer be the RLC bearer. The RLC channel may be used. The single SL bearer is configured between the relay UE #2 and the remote UE. It is preferable that the SL bearer be the SL RLC bearer for the SN. The SL bearer may be an SL RLC channel. The bearer for the MN is configured between the MN and the remote UE. The bearer for the MN is the MCG bearer or the split bearer. It is preferable that the MCG bearer or the split bearer be the RLC bearer. The RLC channel may be used.

Bearer mapping in communication from the NW to the remote UE is disclosed. In the communication from the NW to the remote UE, the MN and the SN have a function for mapping the RB between the NW and the remote UE to the RLC bearer of the Uu for the DC. The RLC bearer of the Uu for the DC is the MCG bearer, the SCG bearer, or the split bearer. The number of remote UEs connected to the relay UE #2 is not limited to one and may be plural. The number of RBs between the remote UE and the NW is not limited to one and may be plural.

The RBs of the one or the plurality of remote UEs connected to the relay UE #2 and/or the one or the plurality of RBs between the remote UE and the NW may be mapped to the RLC bearer of the Uu for the DC. The ADP of the Uu configured in the SN may have the function described above. Functions in a case where the DC is configured and functions in a case where the DC is not configured may be aggregated in the ADP. In this case, the configuration of the SN can be simplified.

The SN may add the identifier of the remote UE and the identifier of the RB between the remote UE and the NW, in the communication from the NW to the remote UE. In a case where the RB is the SRB, the RB ID may be an SRB ID. In a case where the RB is the DRB, the RB ID may be a DRB ID. In this way, the relay UE #2 can recognize the transmission destination remote UE and the RB for the communication between the remote UE and the NW.

The SN may add the information about the bearer used for the DC, in the communication from the NW to the remote UE. The information about the bearer used for the DC includes, for example, an identifier indicating an end of the bearer, and/or an identifier indicating a type of the bearer, and/or an identifier indicating that the bearer is for the MN or the SN, or the like. In this way, the relay UE #2 or the remote UE can recognize the end, the type, or the like of the bearer used for the DC.

The ADP of the Uu configured in the SN may have the addition functions described above. Functions in a case where the DC is configured and functions in a case where the DC is not configured may be aggregated in the ADP. In this case, the configuration of the SN can be simplified.

The relay UE #2 has a function for mapping the RLC bearer of the Uu for the SN to the RLC bearer of the PC5 for the SN, in the communication from the NW to the remote UE. For the mapping, the remote UE identifier and the RB identifier added by the ADP of the SN may be used. For the mapping, the information about the bearer used for the DC added by the SN may be used. In this way, the relay UE #2 can map the SCG bearer or the split bearer for the SN to the RLC bearer of the PC5 for the SN. An ADP of the Uu configured in the relay UE #2 may have the functions described above. Functions in a case where the DC is configured and functions in a case where the DC is not configured may be aggregated in the ADP. In this case, the configuration of the relay UE #2 can be simplified.

When performing mapping to the RLC bearer of the PC5, the relay UE #2 may delete some or all of the remote UE identifier, the RB identifier, the information about the bearer used for the DC, and the like added by the SN. In the mapping to the RLC bearer of the PC5 to the remote UE, some or all of the identifiers and the information need not be added.

The remote UE has a function for mapping the RLC bearer of the Uu for the MN and the RLC bearer of the PC5 for the SN to the RB between the NW and the remote UE, in the communication from the NW to the remote UE. For the mapping, the remote UE identifier and the RB identifier added by the SN may be used. For the mapping, the information about the bearer used for the DC added by the SN may be used.

Bearer mapping in the communication from the remote UE to the NW is disclosed. The remote UE has a function for mapping the RB between the NW and the remote UE to the RLC bearer of the Uu for the DC and the RLC bearer of the PC5, in the communication from the remote UE to the NW. The RLC bearer of the Uu for the DC is the RLC bearer of the Uu for the MN. The RLC bearer of the Uu for the MN is the MCG bearer or the split bearer. The RLC bearer of the PC5 for the DC is the RLC bearer of the PC5 for the SN. The RLC bearer of the PC5 for the SN is the SCG bearer or the split bearer. The remote UE may add the identifier of the RB between the remote UE and the NW and the identifier of the base station, in the communication from the NW to the remote UE. The number of base stations may be plural. For example, the identifiers may be added in a case where the relay UE is connected to the plurality of base stations. Information indicating whether or not the number of base stations is plural or information indicating whether or not the number of identifiers of the base stations is plural may be added. The identifier of the base station may be an identifier of the MN and/or the SN. For example, it is applicable to a case where the DC is configured. In this way, in a case where the relay UE performs transmission to the plurality of base stations, it is possible to recognize the transmission destination base station and the RB for communication between the remote UE and the NW.

The remote UE may add the information about the bearer used for the DC, in the communication from the remote UE to the NW. The information about the bearer used for the DC includes, for example, an identifier indicating an end of the bearer, and/or an identifier indicating a type of the bearer, and/or an identifier indicating that the bearer is for the MN or the SN, or the like. In this way, the relay UE, the MN, or the SN can recognize the end, the type, or the like of the bearer used for the DC.

An ADP of the SL configured in the remote UE may have the addition functions described above. Functions in a case where the DC is configured and functions in a case where the DC is not configured may be aggregated in the SL ADP. The configuration of the remote UE can be simplified.

The relay UE #2 has a function for mapping the RLC bearer of the PC5 for the SN to the RLC bearer of the Uu for the SN, in the communication from the remote UE to the NW. The RLC bearer of the Uu for the SN is the SCG bearer or the split bearer. The SCG bearer of the PC5 is mapped to the SCG bearer of the Uu. The split bearer of the PC5 is mapped to the split bearer of the Uu. For the mapping, the identifier of the base station, the RB identifier, the information about the bearer for the DC, or the like added by the remote UE may be used. The number of remote UEs connected to the relay UE #2 is not limited to one and may be plural. An ADP of the Uu configured in the relay UE #2 may have the functions described above. Functions in a case where the DC is configured and functions in a case where the DC is not configured may be aggregated in the ADP. In this case, the configuration of the relay UE #2 can be simplified.

When performing mapping to the RLC bearer of the Uu, the relay UE #2 may delete some or all of the remote UE identifier, the RB identifier, the information about the bearer used for the DC, and the like added by the remote UE. In the mapping to the RLC bearer of the Uu to the SN, some or all of the identifiers and the information need not be added.

The relay UE #2 may add the identifier of the remote UE and the identifier of the RB between the remote UE and the NW, in the communication from the remote UE to the NW. In a case where the RB is the SRB, the RB ID may be an SRB ID. In a case where the RB is the DRB, the RB ID may be a DRB ID. In this way, the SN can recognize a transmission source remote UE and the RB for the communication between the remote UE and the NW. The ADP of the Uu for the SN configured in the relay UE #2 may have the addition functions described above. Functions in a case where the DC is configured and functions in a case where the DC is not configured may be aggregated in the ADP. In this case, the configuration of the relay UE #2 can be simplified.

The MN and the SN have a function for mapping the RLC bearer of the Uu for the DC to the RB between the NW and the remote UE, in the communication from the remote UE to the NW. The number of remote UEs connected to the relay UE #2 is not limited to one and may be plural. The number of RBs between the remote UE and the NW is not limited to one and may be plural. The RLC bearer of the Uu for the DC may be mapped to the RBs of the single or the plurality of remote UEs connected to the relay UE #2 and/or the single or the plurality of RBs between the remote UE and the NW. For the mapping, the remote UE identifier, the RB identifier, the information about the bearer used for the DC, or the like added by the remote UE or the ADP of the Uu for the SN of the relay UE #2 may be used. In this way, the MN and the SN can transfer the MCG bearer, the SCG bearer, or the split bearer for the DC to the PDCP of the RB for the communication between the remote UE and the NW. An ADP of the Uu configured in the MN and the SN may have the function described above. Functions in a case where the DC is configured and functions in a case where the DC is not configured may be aggregated in the ADP. In this case, the configurations of the MN and the SN can be simplified.

For the protocol of the C-Plane, it is satisfactory if the RRC is provided instead of the SDAP of the MN and the remote UE. It is preferable to provide the RRC corresponding to the SRB. In a case where the DC is configured for the SRB, only the MN termination bearer may be configured. The DC of the SRB is enabled.

In this way, the remote UE connected to the two gNBs is enabled to communicate with the NW via the relay UE.

A configuration method for connecting the remote UE to the plurality of gNBs in the communication from the remote UE and the NW performed via the relay UE is disclosed. In the present embodiment, a method for configuring the DC in which the remote UE is connected to the two gNBs is disclosed.

A case is disclosed where the remote UE is directly connected to the MgNB and is connected to the SgNB via the relay UE #2.

The MN configures the DC with respect to the remote UE. The MN configures the DC with respect to the RB between the MN and the remote UE. The RB may be used for the communication between the remote UE and the MN. The RB may be the SRB and/or the DRB. The SRB may be the SRB 2.

The MN configures the RLC bearer of the Uu for the DC with respect to the remote UE. The RLC bearer of the Uu for the DC may be the RLC bearer between the MN and the remote UE.

The MN configures the RLC bearer of the Uu for the DC between the SN and the relay UE #2. The configuration is used for the DC configuration for the RB between the MN and the remote UE. If the RLC bearer of the Uu for the DC is not modified from an existing RLC bearer of the Uu, new configuration need not be performed.

The MN configures the SL bearer for the DC between the relay UE #2 and the remote UE. The SL bearer for the DC may be the single SL bearer. The SL bearer may be the SL bearer for the SN. The SL bearer may be the SL RLC bearer.

It is preferable that the relay UE #2 and the SN be RRC-connected. It is preferable that the remote UE and the MN be RRC-connected. Furthermore, the MN may start the DC configuration for the remote UE, in a state where the remote UE is RRC-connected to the MN. The remote UE in which the DC is configured is connected to the CN via the MN in the C-Plane.

The MN transmits the addition request of the SN to the RB for the communication between the remote UE and the MN, to the SN. It is preferable to transmit the addition request using Xn signaling. An S-Node addition request message may be used.

As the information included in the addition request of the SN, it is preferable to appropriately apply the 17 information examples included in the addition request of the SN disclosed above. It is preferable that the relay UE in the information example be replaced with the relay UE #2.

However, since the MN and the remote UE are connected without communication through the relay UE #2, the configuration information between the MN and the relay UE #2 need not be provided. For example, the MN does not transmit (4), (7), and (9) of the 17 information examples included in the SN addition request disclosed above, to the SN.

Among the 17 information examples included in the SN addition request disclosed above, the information about the relay UE in (1) may include information indicating via which relay UE the SN performs the DC configuration with the remote UE. Furthermore, the information about the configuration of the relay UE may be included. Furthermore, the measurement result of the relay UE #2 by the remote UE may be included. Furthermore, the measurement result of the SN by the relay UE #2 may be included.

In this way, the MN can transmit the SN addition request for the DC, to the SN. Furthermore, by receiving the SN addition request from the MN, for example, the SN can recognize which remote UE the DC is for, via which relay UE the SN is connected to the remote UE, or the like. The SN may perform configuration for the DC with respect to the remote UE via the relay UE, using the information received from the MN. The configuration for the DC with respect to the remote UE via the relay UE may be the configuration for the DC between the SN and the relay UE.

The SN performs the configuration for the DC with respect to the remote UE via the relay UE. The SN transmits a response message to the addition request of the SN, to the MN. In a case where the SN performs DC configuration, the SN transmits an SN addition request acknowledgment response message to the MN. It is preferable to perform transmission using the Xn signaling. An S-Node addition request acknowledge message may be used as the SN addition request acknowledgment response message. In a case where the SN cannot perform the DC configuration for the relay UE, the SN transmits an SN addition request rejection response message to the MN. It is preferable to perform transmission using the Xn signaling. An S-Node addition request reject message may be used as the SN addition request rejection response message. As the information included in the SN addition request response message, information included in the SN addition request response message disclosed above may be appropriately applied.

The SN transmits the configuration for the DC to the relay UE #2. Five information examples included in the configuration for the DC are disclosed.
(1) Information about the RB.
(2) Information about the RLC bearer of the Uu.
(3) Identifier of the SN.
(4) Information about ADP configuration.
(5) Combination of (1) to (4).

As the five pieces of information included in the configuration for the DC, it is preferable to appropriately apply the information example included in the configuration for the DC disclosed above.

Note that, (1) is the information about the RB for the communication between the remote UE and the MN. The SN does not configure the RB as the configuration of the DC, with respect to the relay UE #2. In a case where the RB that configures the DC is the SRB, the SRB is not configured. In a case where the RB that configures the DC is the DRB, the DRB is not configured. The information about the RB in (1) may be, for example, only the identifier of the RB.

(2) is information about the RLC bearer of the Uu for the DC. The SN does not need to perform the configuration for the MCG with respect to the relay UE #2. Since the relay UE #2 is not connected to the MN in the DC in this example, the relay UE #2 does not need to receive the information about the MCG.

The SN configures the SL bearer between the remote UE and the relay UE #2, with respect to the relay UE #2. In a case where there is an existing SL bearer between the remote UE and the relay UE #2, the SL bearer may be modified. The configuration of the SL bearer may be configuration for modifying the SL bearer. Three configuration information examples of the SL bearer are disclosed.
(1) Information about the RLC bearer of the SL.
(2) Information about the ADP configuration of the SL.
(3) Combination of (1) and (2).

As the configuration information of the SL bearer, it is preferable to appropriately apply the configuration information example of the SL bearer disclosed above.

The SN does not need to configure the SL RB with respect to the relay UE #2. The information about the SL RB need not be transmitted. The configuration of the SL PDCP and the SL SDAP need not be provided. The SN may configure the single SL bearer for the DC, with respect to the relay UE #2. The configuration of the SL bearer for the DC may be the configuration of the SL bearer for the SN.

The MN transmits the configuration for the DC to the remote UE. Five information examples included in the configuration for the DC are disclosed.
(1) Information about the RB.
(2) Information about the RLC bearer of the Uu.
(3) Identifier of the SN.
(4) Information about ADP configuration.
(5) Combination of (1) to (4).

As the five pieces of information included in the configuration for the DC, it is preferable to appropriately apply the information example included in the configuration for the DC disclosed above.

Note that, (2) is information about the RLC bearer of the Uu for the DC. The MN does not need to perform the configuration for the SCG with respect to the remote UE. Since the remote UE is connected to the SN via the relay UE #2 in the DC, the remote UE does not need to receive the information about the SCG.

The MN transmits the configuration of the SL bearer between the remote UE and the relay UE #2, to the remote UE. In a case where there is an existing SL bearer between the remote UE and the relay UE #2, the SL bearer may be modified. The configuration of the SL bearer may be configuration for modifying the SL bearer. Three configuration information examples of the SL bearer are disclosed.
(1) Information about the RLC bearer of the SL.
(2) Information about the ADP configuration of the SL.
(3) Combination of (1) and (2).

As the configuration information of the SL bearer, it is preferable to appropriately apply the configuration information example of the SL bearer disclosed above.

The number of RLC bearers of the SL may be one. As the configuration of the SL bearer for the DC, the RLC bearer of the SL for the SN may be configured.

The number of ADP configurations of the SL may be one. As the ADP configuration of the SL for the DC, the ADP of the SL for the SN may be configured.

The configuration of the SL bearer may be included in the configuration for the DC. The configuration information of the SL bearer may be included in the configuration information for the DC.

The MN does not need to configure the SL RB with respect to the remote UE. The information about the SL RB need not be transmitted. The configuration of the SL PDCP and the SL SDAP need not be performed. The MN may configure the single SL bearer for the DC, with respect to the remote UE. The configuration of the SL bearer for the DC may be the configuration of the SL bearer for the MN.

In a case where the MN performs the configuration for the DC with respect to the remote UE and/or the configuration of the SL bearer between the remote UE and the relay UE #2, the configuration for the DC between the relay UE #2 and the SN received from the SN and/or the configuration information of the SL bearer between the remote UE and the relay UE #2 may be used. It is possible to consider the load status or the like of the SN. For example, the MN may assume that the configuration information of the SL bearer between the remote UE and the relay UE #2 be the same as the configuration information of the SL bearer between the remote UE and the relay UE #2 transmitted from the SN to the relay UE #2. The configuration of the SL bearer of the remote UE is the same as that in the relay UE #2, and it is possible to reduce malfunctions in the SL communication.

The MN may transmit information about the relay UE #2 to the remote UE. The information about the relay UE #2 may be included in the configuration of the SL bearer between the remote UE and the relay UE #2. The information about the relay UE #2 may be, for example, the identifier of the relay UE #2. For example, the information may be the identifier of the SN connected to the relay UE #2. In this way, the remote UE can recognize the relay UE #2 connected for the DC.

The remote UE that has received the configuration information of the SL bearer for the DC from the MN establishes PC5 connection with the relay UE #2. The remote UE that has established the PC5 connection with the relay UE #2 configures the SL bearer for the DC between the remote UE and the relay UE #2. The relay UE #2 that has established the PC5 connection with the remote UE configures the SL bearer for the DC between the remote UE and the relay UE #2. The remote UE may notify the relay UE #2 of the SL RRC configuration. The relay UE #2 may notify the remote UE of the SL RRC configuration.

In a case where the type of the DC configuration is SN termination, the PDU session may be modified. In this case, the PDU session modification process is executed between the MN and the CN. It is preferable to appropriately apply the method disclosed above to the modification of the PDU session.

The data communication between the remote UE and the NW is performed using the MCG bearer between the remote UE and the MN, the SCG bearer between the remote UE and the SN via the relay UE #2, and the split bearers between the remote UE and the MN and between the remote UE and the SN via the relay UE #2.

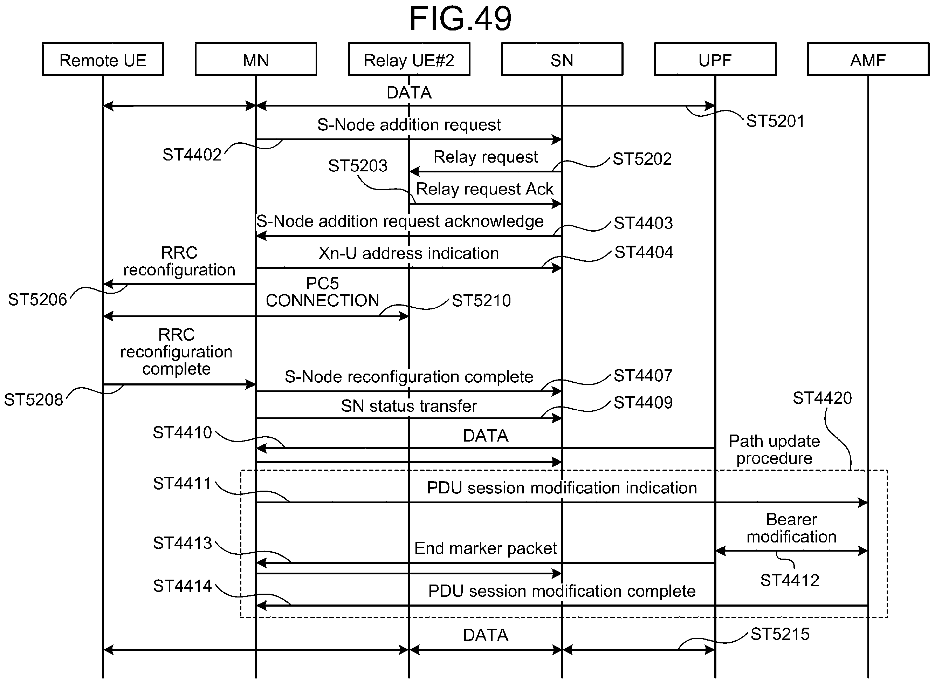

FIG. 49 is a sequence diagram illustrating an example of the method for configuring the DC in which the remote UE is connected to the two gNBs, according to the fifth embodiment. A case is disclosed where the remote UE is directly connected to the MgNB and is connected to the SgNB via the relay UE #2. In FIG. 49, steps common to those in FIG. 41 are denoted by the same step numbers, and common description is omitted. In step ST5201, data communication is performed between the remote UE, the MN, and the UPF.

The MN determines to configure the DC with respect to the remote UE. For example, the MN configures measurement of the neighbor gNB with respect to the remote UE. The remote UE performs the configured measurement and reports the measurement result to the MN. In addition, the MN may configure measurement of a neighbor relay UE with respect to the remote UE. The remote UE may perform the configured measurement and report the measurement result to the MN.

The remote UE may include information about a gNB connected to the relay UE in the report of the measurement result of the relay UE. For example, an identifier of the gNB may be included. In this way, the MN that has received the report of the measurement result of the relay UE from the remote UE can recognize the gNB connected to the relay UE.

The gNB may transmit an identifier of the relay UE connected to the gNB, to the neighbor gNB. The gNB can recognize the relay UE connected to the neighbor gNB. In this way, the MN that has received the report of the measurement result of the relay UE from the remote UE can recognize the gNB connected to the relay UE.

The MN determines the SN used for the DC, using the measurement result from the remote UE.

In step ST4402, the MN transmits an SN addition request message to the SN determined to be used for the DC. The MN requests the SN to perform addition as the SN for the DC with respect to the remote UE. The SN addition request message is transmitted using the Xn signaling. The S-Node addition request message may be used as the SN addition request message. It is preferable to include the information example of the SN addition request disclosed above in the SN addition request message.

The SN that has received the SN addition request message from the MN recognizes the remote UE that performs the DC configuration, the information about the communication between the remote UE for performing the DC configuration and the NW, the bearer termination to be required, the bearer type for the DC to be required, or the like, from the information of the SN addition request and performs the configuration for the DC with respect to the relay UE #2.

In step ST5202, the SN transmits the configuration for the DC and the configuration of the SL bearer, to the relay UE #2. The configuration of the SL bearer and the configuration for the DC may be transmitted together, or the configuration of the SL bearer may be included in the configuration for the DC and transmitted. Alternatively, the configuration for the DC and the configuration of the SL bearer may be separately transmitted. The RRC signaling is used for the transmission. A Relay request message may be used for the transmission of the configuration. It is preferable that the configuration for the DC include the information example of the configuration for the DC described above. It is preferable that the configuration of the SL bearer include the configuration information of the SL bearer disclosed above. By receiving the configuration for the DC and the SL bearer configuration from the SN, the relay UE #2 can perform the configuration for the DC between the SN and the relay UE #2 and the configuration of the SL bearer between the remote UE and the relay UE #2. The configuration may be modification.

The relay UE #2 that has performed these configurations transmits the DC configuration response and the SL bearer configuration response to the SN, in step ST5203. In this example, an acknowledgement response is transmitted. The RRC signaling is used for the transmission. The acknowledgement response to be transmitted may be a Relay request Ack message. The SN that has received the DC configuration response and the SL bearer configuration response recognizes that the relay UE #2 has completed the DC configuration and the SL bearer configuration.

In step ST4403, the SN transmits an SN addition request response message to the MN. In this example, an acknowledgement response is transmitted. The SN addition request response message may include the configuration for the DC between the SN and the remote UE and/or the SL bearer configuration. Some of these pieces of information may be included. The MN that has received the SN addition request response message recognizes that the SN has performed the DC configuration and the SL bearer configuration on the remote UE via the remote UE #2.

In step ST4404, the MN notifies the SN of a Xn-U address indication message. For example, the MN configures an address used for the DC between the MN and the SN and transmits the message to the SN in step ST4404. As a result, the MN and the SN can share the address used for the DC and exchange data.

In step ST5206, the MN transmits the configuration for the DC and the configuration of the SL bearer, to the remote UE. The configuration of the SL bearer and the configuration for the DC may be transmitted together, or the configuration of the SL bearer may be included in the configuration for the DC and transmitted. Alternatively, the configuration for the DC and the configuration of the SL bearer may be separately transmitted. The RRC signaling is used for the transmission. The RRC reconfiguration message may be used for the transmission. It is preferable that the configuration for the DC include the information example included in the configuration for the DC, disclosed above. As the configuration about the SCG of the information included in the configuration for the DC, the configuration for the DC received from the SN may be used. It is preferable that the configuration of the SL bearer include the configuration information of the SL bearer disclosed above. As the configuration about the SCG of the SL bearer configuration, the SL bearer configuration received from the SN may be used. By receiving the configuration for the DC and the SL bearer configuration from the MN, the remote UE can perform configuration for the DC between the MN and the remote UE and configuration of the SL bearer between the remote UE and the relay UE #2.

The remote UE that has performed these configurations transmits the DC configuration response and the SL bearer configuration response to the MN, in step ST5208. In this example, an acknowledgement response is transmitted. The RRC signaling is used for the transmission. In the transmission of the acknowledgement response, the RRC reconfiguration complete message may be used. The MN that has received the DC configuration response and the SL bearer configuration response recognizes that the remote UE has completed the DC configuration and the SL bearer configuration.

The remote UE establishes the PC5 connection with the relay UE #2 in step ST5210, while maintaining the communication with the MN. For the establishment of the PC5 connection, PC5-S signaling may be used. PC5 RRC signaling may be used. The remote UE establishes the PC5 connection using the SL bearer configuration with the relay UE #2 received from the MN. This enables the data communication between the remote UE and the relay UE #2.

As another method, after transmitting the DC configuration response and the SL bearer configuration response in step ST5208 first, the remote UE may establish the PC5 connection with the relay UE #2. A process for the DC between the MN, the SN, and the UPF can be executed at an early stage.

In step ST4407, the MN transmits an SN configuration completion message to the SN. For the transmission, the Xn signaling is used. In the transmission, the S-Node reconfiguration complete message may be used. By receiving the message, the SN recognizes that the MN and the remote UE have completed the configuration for the DC.

The MN performs SN status transfer to the SN in step ST4409, and transfers the data from the UPF to the SN in step ST4410. In a case of the SN termination bearer, it is necessary to change a path between the UPF and the gNB from the MN to the SN. In this case, a path update process in step ST4420 is executed. As a result, data communication is performed between the remote UE, the relay UE #2, the SN, and the UPF, in step ST5215.

In this way, the DC is performed between the remote UE, the MN, and the SN via the relay UE #2. For example, in a case of the SN termination SCG bearer, data communication is performed between the remote UE, the SN via the relay UE #2, and the UPF.

For example, in a case of the MN termination SCG bearer, data communication is performed between the remote UE, the SN via the relay UE #2, the MN, and the UPF. For example, in a case of the SN termination MCG bearer, data communication is performed between the remote UE, the MN, the SN via the relay UE #2, and the UPF. For example, in a case of the MN termination split bearer, data communication is performed between the remote UE, the SN via the relay UE #2, the MN, and the UPF. For example, in a case of the SN termination split bearer, data communication is performed between the remote UE, the MN, the SN via the relay UE #2, and the UPF.

The RRC signaling may be performed between the SN and the remote UE, via the relay UE #2. The RRC signaling may be performed using an SRB3. After starting the communication between the remote UE and the relay UE #2 in step ST5210, the remote UE may transmit the RRC message to the SN via the relay UE #2 using the SRB 3, and the SN may transmit the RRC message to the remote UE via the relay UE #2. The RRC message using the SRB 3 may be, for example, a message regarding the SN. For example, the RRC message may be a message such as SCG bearer configuration change, an SN measurement report, or transmission of information about a filer of the SCG bearer. For example, the message may be a message such as configuration change of the SL bearer between the remote UE and the relay UE #2, the measurement report of the relay UE, or transmission of the information about the filer of the SL bearer. In this way, the RRC message can be directly communicated between the SN and the remote UE without communication through the MN. Therefore, it is possible to reduce a signaling amount and reduce a delay.

In this way, it is possible to configure the DC in which the remote UE is directly connected to the MgNB and is connected to the SgNB via the relay UE #2.

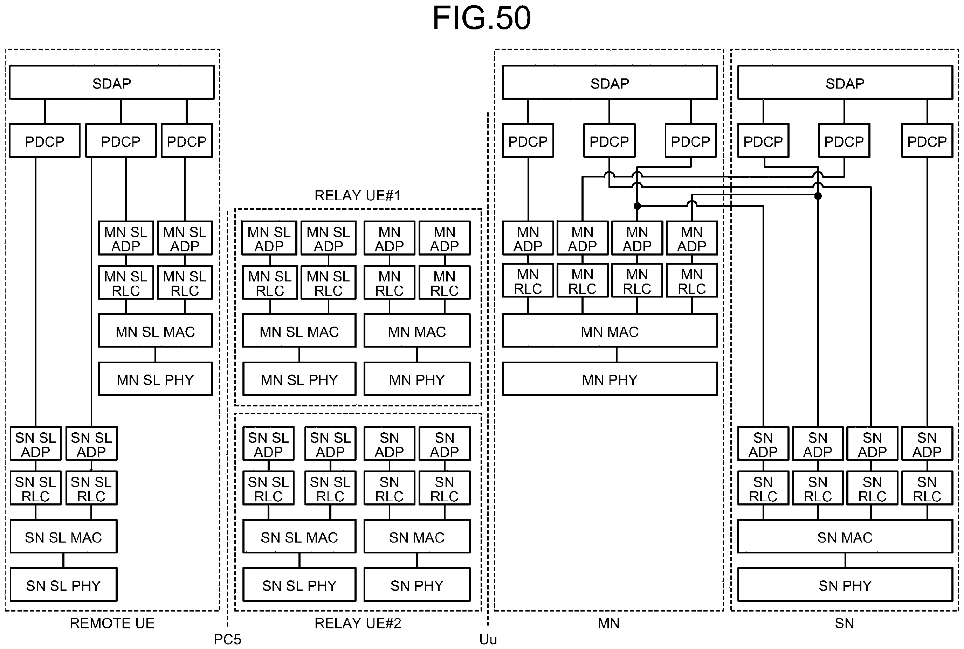

Another method of the protocol configuration in a case where the remote UE is connected to the two gNBs, in the communication between the remote UE and the NW via the relay UE, is disclosed. FIG. 50 is a diagram illustrating still another configuration method of the protocol stack in a case where the remote UE is connected to the two gNBs in the communication between the remote UE and the NW via the relay UE, according to the fifth embodiment. A case is illustrated where the remote UE is connected to the MgNB via the relay UE #1 and is connected to the SgNB via the relay UE #2. The U-Plane is described.

The MN and the SN have the protocol of the Uu for the DC. The Uu protocols include SDAP, PDCP, RLC, MAC, and PHY. In the protocol of the Uu for the MN, the ADP is configured between the RLC and the PDCP. The ADP may be configured as a sublayer of the RLC. In FIG. 50, as a bearer for the DC, both of the MN termination bearer and the SN termination bearer, the MCG bearer, the SCG bearer, and the split bearer are also illustrated. Protocols corresponding to these bearers are configured. The single PDCP may be configured for the MN termination bearer, and the single PDCP may be configured for the SN termination bearer. In DC configuration, these bearers can be configured.

The relay UE #1 has the protocol of the Uu for the MN. It is preferable to appropriately apply the protocol of the relay UE #1 disclosed in the example in FIG. 46. The relay UE #1 has the PC5 protocol between the relay UE #1 and the remote UE. It is preferable to appropriately apply the protocol of the relay UE #1 disclosed in the example in FIG. 46.

The relay UE #2 has the protocol of the Uu for the SN. It is preferable to appropriately apply the protocol of the relay UE #2 disclosed in the example in FIG. 48. The relay UE #2 has the PC5 protocol between the relay UE #2 and the remote UE. It is preferable to appropriately apply the protocol of the relay UE #2 disclosed in the example in FIG. 48.

The remote UE has the PC5 protocol between the remote UE and the relay UE #1. The PC5 protocol may be used for the MN. Similarly to the relay UE #1, the PC5 protocols are the PC5 RLC, the PC5 MAC, and the PC5 PHY. A PC5 ADP may be configured above the PC5 RLC. The PC5 SDAP and the PC5 PDCP need not be provided. The remote UE has the PC5 protocol between the remote UE and the relay UE #2. The remote UE may use the PC5 protocol for the SN. Similarly to the relay UE #2, the PC5 protocols are the PC5 RLC, the PC5 MAC, and the PC5 PHY. A PC5 ADP may be configured above the PC5 RLC. The PC5 SDAP and the PC5 PDCP need not be provided.

Furthermore, the remote UE includes the Uu protocol between the remote UE and the MN and/or the SN. The protocols of the Uu are the SDAP and the PDCP for the DC. The remote UE connects the PDCPs or the ADPs of the PC5 for the MN and for the SN and the PDCP of the Uu. The single PDCP may be configured for the MN termination bearer, and the single PDCP may be configured for the SN termination bearer. The remote UE terminates the DC.

The bearer is disclosed. The RB is configured between the MN and the remote UE. In the RB, the bearers for the relay are configured between the MN and the relay UE #1 and between the SN and the relay UE #2. It is preferable that the bearer for the relay be the RLC bearer. The RLC channel may be used. The SL bearers are configured between the relay UE #1 and the remote UE and between the relay UE #2 and the remote UE. It is preferable that the SL bearer be an SL RLC bearer. The SL bearer may be an SL RLC channel. The bearer for DC is configured between the MN and the remote UE.

Bearer mapping in communication from the NW to the remote UE is disclosed. In the communication from the NW to the remote UE, the MN and the SN have a function for mapping the RB between the NW and the remote UE to the RLC bearer of the Uu for the DC. The RLC bearer of the Uu for the DC is the MCG bearer, the SCG bearer, or the split bearer. The number of remote UEs connected to the relay UE #1 and the relay UE #2 is not limited to one and may be plural. The number of RBs between the remote UE and the NW is not limited to one and may be plural. The RBs of the single or the plurality of remote UEs connected to the relay UEs #1 and #2 and/or the single or the plurality of RBs between the remote UE and the NW may be mapped to the RLC bearer of the Uu for the DC. An ADP of the Uu configured in the MN and the SN may have the function described above. Functions in a case where the DC is configured and functions in a case where the DC is not configured may be aggregated in the ADP. In this case, the configurations of the MN and the SN can be simplified.

The MN may add the identifier of the remote UE and the identifier of the RB between the remote UE and the NW, in the communication from the NW to the remote UE. In a case where the RB is the SRB, the RB ID may be an SRB ID. In a case where the RB is the DRB, the RB ID may be a DRB ID. In this way, the relay UE #1 can recognize the transmission destination remote UE and the RB for the communication between the remote UE and the NW.

The MN may add information about the bearer used for the DC, in the communication from the NW to the remote UE. The information about the bearer used for the DC includes, for example, an identifier indicating an end of the bearer, and/or an identifier indicating a type of the bearer, and/or an identifier indicating that the bearer is for the MN or the SN, or the like. In this way, the relay UE #1 or the remote UE can recognize the end, the type, or the like of the bearer used for the DC.

The ADP of the Uu configured in the MN may have the addition functions described above. Functions in a case where the DC is configured and functions in a case where the DC is not configured may be aggregated in the ADP. In this case, the configuration of the MN can be simplified.

The SN may add the identifier of the remote UE and the identifier of the RB between the remote UE and the NW, in the communication from the NW to the remote UE. In a case where the RB is the SRB, the RB ID may be an SRB ID. In a case where the RB is the DRB, the RB ID may be a DRB ID. In this way, the relay UE #2 can recognize the transmission destination remote UE and the RB for the communication between the remote UE and the NW.

The SN may add the information about the bearer used for the DC, in the communication from the NW to the remote UE. The information about the bearer used for the DC includes, for example, an identifier indicating an end of the bearer, and/or an identifier indicating a type of the bearer, and/or an identifier indicating that the bearer is for the MN or the SN, or the like. In this way, the relay UE #2 or the remote UE can recognize the end, the type, or the like of the bearer used for the DC.

The ADP of the Uu configured in the SN may have the addition functions described above. Functions in a case where the DC is configured and functions in a case where the DC is not configured may be aggregated in the ADP. In this case, the configuration of the SN can be simplified.

The relay UE #1 has a function for mapping the RLC bearer of the Uu for the MN to the RLC bearer of the PC5 for the MN, in the communication from the NW to the remote UE. It is preferable to appropriately apply the mapping method disclosed in the example in FIG. 46.

The relay UE #2 has a function for mapping the RLC bearer of the Uu for the SN to the RLC bearer of the PC5 for the SN, in the communication from the NW to the remote UE. It is preferable to appropriately apply the mapping method disclosed in the example in FIG. 48.

The remote UE has a function for mapping the RLC bearer of the PC5 for the MN and the RLC bearer of the PC5 for the SN to the RB between the NW and the remote UE, in the communication from the NW to the remote UE. For the mapping, the remote UE identifier and the RB identifier added by the MN may be used. For the mapping, the information about the bearer used for the DC added by the MN may be used. For the mapping, the remote UE identifier and the RB identifier added by the SN may be used. For the mapping, the information about the bearer used for the DC added by the SN may be used.

Bearer mapping in the communication from the remote UE to the NW is disclosed. The remote UE has a function for mapping the RB between the NW and the remote UE to the two RLC bearers of the PC5 for the DC, in the communication from the remote UE to the NW. The RLC bearers of the PC5 for the DC are the RLC bearers of the PC5 for the MN and for the SN. The RLC bearer of the PC5 for the MN is the MCG bearer or the split bearer. The RLC bearer of the PC5 for the SN is the SCG bearer or the split bearer. The remote UE may add the identifier of the RB between the remote UE and the NW and the identifier of the base station, in the communication from the NW to the remote UE. The number of base stations may be plural. For example, the identifiers may be added in a case where the relay UE is connected to the plurality of base stations. Information indicating whether or not the number of base stations is plural or information indicating whether or not the number of identifiers of the base stations is plural may be added. The identifier of the base station may be an identifier of the MN and/or the SN. For example, it is applicable to a case where the DC is configured. In this way, in a case where the relay UE performs transmission to the plurality of base stations, it is possible to recognize the transmission destination base station and the RB for communication between the remote UE and the NW.

The remote UE may add the information about the bearer used for the DC, in the communication from the remote UE to the NW. The information about the bearer used for the DC includes, for example, an identifier indicating an end of the bearer, and/or an identifier indicating a type of the bearer, and/or an identifier indicating that the bearer is for the MN or the SN, or the like. In this way, the relay UE, the MN, or the SN can recognize the end, the type, or the like of the bearer used for the DC.

An ADP of the SL configured in the remote UE may have the addition functions described above. Functions in a case where the DC is configured and functions in a case where the DC is not configured may be aggregated in the SL ADP. The configuration of the remote UE can be simplified.

The relay UE #1 has a function for mapping the RLC bearer of the PC5 for the MN to the RLC bearer of the Uu for the MN, in the communication from the remote UE to the NW. It is preferable to appropriately apply the mapping method disclosed in the example in FIG. 46.

The relay UE #2 has a function for mapping the RLC bearer of the PC5 for the SN to the RLC bearer of the Uu for the SN, in the communication from the remote UE to the NW. It is preferable to appropriately apply the mapping method disclosed in the example in FIG. 48.

The MN and the SN have a function for mapping the RLC bearer of the Uu for the DC to the RB between the NW and the remote UE, in the communication from the remote UE to the NW. The number of remote UEs connected to the relay UE #1 and the relay UE #2 is not limited to one and may be plural. The number of RBs between the remote UE and the NW is not limited to one and may be plural. The RLC bearer of the Uu for the DC may be mapped to the RBs of the single or the plurality of remote UEs connected to the relay UEs #1 and #2 and/or the single or the plurality of RBs between the remote UE and the NW. For the mapping, the remote UE identifier, the RB identifier, the information about the bearer used for the DC, or the like added by the remote UE or the ADP of the Uu for the MN of the relay UE #1, and the remote UE identifier, the RB identifier, the information about the bearer used for the DC, or the like added by the remote UE or the ADP of the Uu for the SN of the relay UE #2 may be used. In this way, the MN and the SN can transfer the MCG bearer, the SCG bearer, or the split bearer for the DC to the PDCP of the RB for the communication between the remote UE and the NW. An ADP of the Uu configured in the MN and the SN may have the function described above. Functions in a case where the DC is configured and functions in a case where the DC is not configured may be aggregated in the ADP. In this case, the configurations of the MN and the SN can be simplified.

For the protocol of the C-Plane, it is satisfactory if the RRC is provided instead of the SDAP of the MN and the remote UE. It is preferable to provide the RRC corresponding to the SRB. In a case where the DC is configured for the SRB, only the MN termination bearer may be configured. The DC of the SRB is enabled.

In this way, the remote UE connected to the two gNBs is enabled to communicate with the NW via the relay UE.

A configuration method for connecting the remote UE to the plurality of gNBs in the communication from the remote UE and the NW performed via the relay UE is disclosed. In the present embodiment, a method for configuring the DC in which the remote UE is connected to the two gNBs is disclosed.

A case is disclosed where the remote UE is connected to the MgNB via the relay UE #1 and is connected to the SgNB via the relay UE #2.

The MN configures the DC with respect to the remote UE. The MN configures the DC with respect to the RB between the MN and the remote UE. The RB may be used for the communication between the remote UE and the MN. The RB may be the SRB and/or the DRB. The SRB may be the SRB 2.

The MN configures the RLC bearer of the Uu for the DC between the MN and the relay UE #1. The configuration is used for the DC configuration for the RB between the MN and the remote UE. If the RLC bearer of the Uu for the DC is not modified from an existing RLC bearer of the Uu, new configuration need not be performed.

The MN configures the RLC bearer of the Uu for the DC between the SN and the relay UE #2. The configuration is used for the DC configuration for the RB between the MN and the remote UE. If the RLC bearer of the Uu for the DC is not modified from an existing RLC bearer of the Uu, new configuration need not be performed.

The MN configures the SL bearer for the DC between the relay UE #1 and the remote UE. The SL bearer for the DC may be the single SL bearer. The SL bearer may be the SL bearer for the MN. The SL bearer may be the SL RLC bearer.

The MN configures the SL bearer for the DC between the relay UE #2 and the remote UE. The SL bearer for the DC may be the single SL bearer. The SL bearer may be the SL bearer for the SN. The SL bearer may be the SL RLC bearer.

It is preferable that the relay UE #1 and the MN be RRC-connected. It is preferable that the relay UE #2 and the SN be RRC-connected. It is preferable that the remote UE and the MN be RRC-connected. Furthermore, the MN may start the DC configuration for the remote UE, in a state where the remote UE is RRC-connected to the MN. The remote UE in which the DC is configured is connected to the CN via the MN in the C-Plane.

The MN transmits the addition request of the SN to the RB for the communication between the remote UE and the MN, to the SN. It is preferable to transmit the addition request using Xn signaling. An S-Node addition request message may be used.

As the information included in the addition request of the SN, it is preferable to appropriately apply the 17 information examples included in the addition request of the SN disclosed above. It is preferable to replace the relay UE in the information example with the relay UE #1 and the relay UE #2.

Among the 17 information examples included in the addition request of the SN disclosed above, the information about the relay UE in (1) includes information about the relay UE #1 and information about the relay UE #2. The information about the relay UE #2 may include information indicating via which relay UE the SN configures the DC with the remote UE. Furthermore, the information about the configuration of the relay UE may be included.
Furthermore, the measurement result of the relay UE #2 by the remote UE may be included. Furthermore, the measurement result of the SN by the relay UE #2 may be included.

In this way, the MN can transmit the SN addition request for the DC, to the SN. Furthermore, by receiving the SN addition request from the MN, for example, the SN can recognize which remote UE the DC is for, via which relay UE the SN is connected to the remote UE, or the like. The SN may perform configuration for the DC with respect to the remote UE via the relay UE, using the information received from the MN. The configuration for the DC with respect to the remote UE via the relay UE may be the configuration for the DC between the SN and the relay UE.

The SN performs the configuration for the DC, with respect to the relay UE. The SN transmits a response message to the addition request of the SN, to the MN. In a case where the SN performs DC configuration, the SN transmits an SN addition request acknowledgment response message to the MN. It is preferable to perform transmission using the Xn signaling. An S-Node addition request acknowledge message may be used as the SN addition request acknowledgment response message. In a case where the SN cannot perform the DC configuration for the relay UE, the SN transmits an SN addition request rejection response message to the MN. It is preferable to perform transmission using the Xn signaling. An S-Node addition request reject message may be used as the SN addition request rejection response message. As the information included in the SN addition request response message, information included in the SN addition request response message disclosed above may be appropriately applied.

The MN transmits the configuration for the DC to the relay UE #1. It is preferable to appropriately apply the method disclosed above.

The MN configures the SL bearer between the remote UE and the relay UE #1, with respect to the relay UE #1. It is preferable to appropriately apply the method disclosed above.

In a case where the MN performs configuration for the DC with respect to the relay UE #1 and/or configuration of the SL bearer between the remote UE and the relay UE #1, the MN may use the configuration for the DC between the SN and the relay UE #2 received from the SN and/or the configuration information of the SL bearer between the relay UE #2 and the remote UE. It is possible to consider the load status or the like of the SN.

The SN transmits the configuration for the DC to the relay UE #2. It is preferable to appropriately apply the method disclosed above.

The SN configures the SL bearer between the remote UE and the relay UE #2, with respect to the relay UE #2. It is preferable to appropriately apply the method disclosed above.

The MN transmits the configuration for the DC to the remote UE. A single information example included in the configuration for the DC is disclosed.
(1) Information about the RB.

As the information about the RB, it is preferable to appropriately apply the information disclosed above.

The MN transmits the RB configuration to the remote UE. The MN may transmit the RB configuration with the RRC signaling. The RRC reconfiguration message including the RB configuration may be transmitted. RadioBearerConfig information including the RB configuration may be transmitted.

The MN may transmit the identifier of the SN to the remote UE. The SN connected via the relay UE #2 can be recognized with the DC.

The MN configures the SL bearers between the remote UE and the relay UE #1 and between the remote UE and the relay UE #2, with respect to the remote UE. It is preferable that the method disclosed above be appropriately applied to these configurations.

In a case where the MN performs the configuration for the DC with respect to the remote UE and/or the configuration of the SL bearer between the remote UE and the relay UE #1 and/or the configuration of the SL bearer between the remote UE and the relay UE #2, the MN may use the configuration for the DC between the relay UE #2 and the SN received from the SN and/or the configuration information of the SL bearer between the remote UE and the relay UE #2. It is possible to consider the load status or the like of the SN. For example, the MN may assume that the configuration information of the SL bearer between the remote UE and the relay UE #2 be the same as the configuration information of the SL bearer between the remote UE and the relay UE #2 transmitted from the SN to the relay UE #2. The configuration of the SL bearer of the remote UE is the same as that in the relay UE #2, and it is possible to reduce malfunctions in the SL communication.

The remote UE that has received the configuration information of the SL bearer for the DC from the MN establishes PC5 connection with the relay UE #2. The remote UE that has established the PC5 connection with the relay UE #2 configures the SL bearer for the DC between the remote UE and the relay UE #2. The relay UE #2 that has established the PC5 connection with the remote UE configures the SL bearer for the DC between the remote UE and the relay UE #2. The remote UE may notify the relay UE #2 of the SL RRC configuration. The relay UE #2 may notify the remote UE of the SL RRC configuration.

In a case where the type of the DC configuration is SN termination, the PDU session may be modified. In this case, the PDU session modification process is executed between the MN and the CN. It is preferable to appropriately apply the method disclosed above to the modification of the PDU session.

The data communication between the remote UE and the NW is performed using the MCG bearer between the remote UE and the MN via the relay UE #1, the SCG bearer between the remote UE and the SN via the relay UE #2, and the split bearers between the remote UE and the MN via the relay UE #1 and between the remote UE and the SN via the relay UE #2.

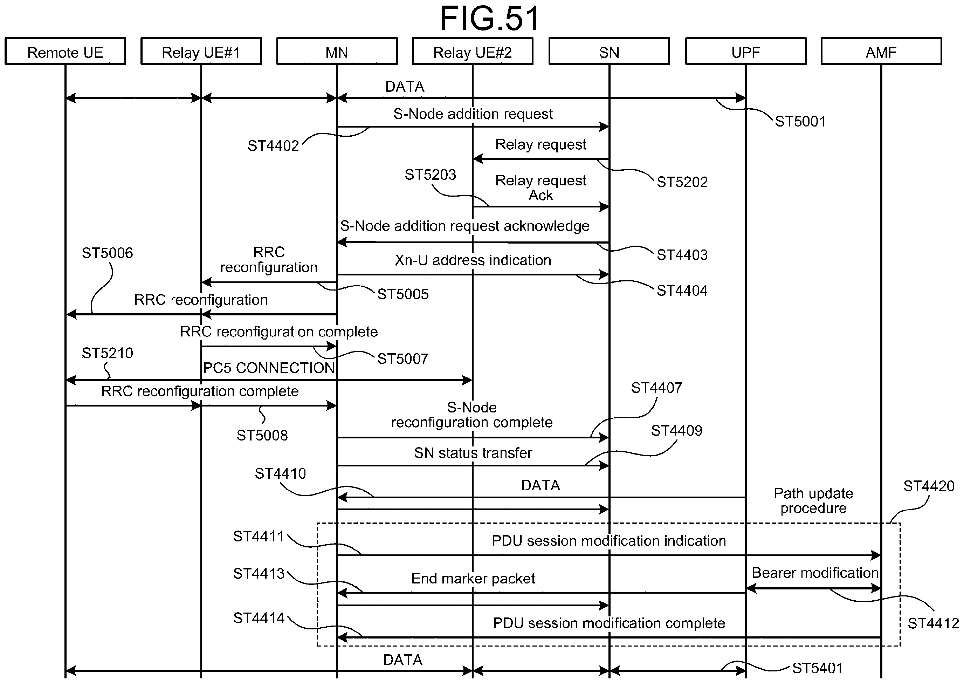

FIG. 51 is a sequence diagram illustrating an example of the method for configuring the DC in which the remote UE is connected to the two gNBs, according to the fifth embodiment. A case is disclosed where the remote UE is connected to the MgNB via the relay UE #1 and is connected to the SgNB via the relay UE #2. In FIG. 51, steps common to those in FIGS. 41, 47, and 49 are denoted by the same step numbers, and common description is omitted. In step ST5001, data communication is performed between the remote UE, the relay UE #1, the MN, and the UPF.

The MN determines the SN used for the DC, using the measurement result from the remote UE.

In steps ST4402 to ST4420, the DC is configured using the MN via the relay UE #1 and the SN via the relay UE #2, with respect to the remote UE. As a result, data communication is performed between the remote UE, the relay UE #2, the SN, and the UPF, in step ST5401.

As in FIG. 51, the DC is performed between the remote UE, the MN via the relay UE #1, and the SN via the relay UE #2. For example, in a case of the SN termination SCG bearer, data communication is performed between the remote UE, the SN via the relay UE #2, and the UPF.

For example, in a case of the MN termination SCG bearer, data communication is performed between the remote UE, the SN via the relay UE #2, the MN via the relay UE #1, and the UPF. For example, in a case of the SN termination MCG bearer, data communication is performed between the remote UE, the MN via the relay UE #1, the SN via the relay UE #2, and the UPF. For example, in a case of the MN termination split bearer, data communication is performed between the remote UE, the SN via the relay UE #2, the MN via the relay UE #1, and the UPF. For example, in a case of the SN termination split bearer, data communication is performed between the remote UE, the MN via the relay UE #1, the SN via the relay UE #2, and the UPF.

The RRC signaling may be performed between the SN and the remote UE, via the relay UE #2. The RRC signaling may be performed using an SRB3. After starting the communication between the remote UE and the relay UE #2 in step ST5210, the remote UE may transmit the RRC message to the SN via the relay UE #2 using the SRB 3, and the SN may transmit the RRC message to the remote UE via the relay UE #2. The RRC message using the SRB 3 may be, for example, a message regarding the SN. For example, the RRC message may be a message such as SCG bearer configuration change, an SN measurement report, or transmission of information about a filer of the SCG bearer. For example, the message may be a message such as configuration change of the SL bearer between the remote UE and the relay UE #2, the measurement report of the relay UE, or transmission of the information about the filer of the SL bearer. In this way, the RRC message can be directly communicated between the SN and the remote UE without communication through the MN. Therefore, it is possible to reduce a signaling amount and reduce a delay.

In this way, it is possible to configure the DC in which the remote UE is connected to the MgNB via the relay UE #1 and is connected to the SgNB via the relay UE #2.

That is, the DC is possible in indirect communication between the remote UE and the NW via the relay UE. In the indirect communication between the remote UE and the NW via the relay UE, communication using the plurality of gNBs is enabled. As a result, performance improvement such as high speed and large capacity, low delay, or high reliability is achieved. Furthermore, since the DC is for the remote UE, the relay UE does not need to connect to the plurality of gNBs. It is possible to avoid complication caused by the DC, in the configuration of the relay UE.

### Sixth Embodiment.

In a sixth embodiment, another method for solving the problems described in the fourth embodiment is disclosed.

In the communication between the remote UE and the NW performed via the relay UE, the remote UE is connected to the single base station with a plurality of paths. The plural may be two. The remote UE is connected to the base station via the relay UE, with at least the single path.

In the configuration in which the remote UE is connected to the single base station with the plurality of paths, DC in the communication between the remote UE and the NW may be configured. The DC may be configured using the relay UE instead of the SN. In the present embodiment, the relay UE that is a substitute for the SN is referred to as a relay UE #S. The relay UE #S has some or all of the functions of the SN for the DC. The remote UE is connected to the MN and the relay UE #S, for the DC. The remote UE may be directly connected to the MN or may be indirectly connected to the MN via the relay UE.

The remote UE is connected to the single gNB with the plurality of paths, with respect to a radio bearer for the communication between the remote UE and the NW. The radio bearer may be, for example, the SRB. For example, the radio bearer may be the SRB 2. The SRBs 0 and 1 can simplify a communication establishment process, by performing communication using a single gNB. The radio bearer may be, for example, the DRB. In this case, the communication quality of the bearer for the data communication can be improved.

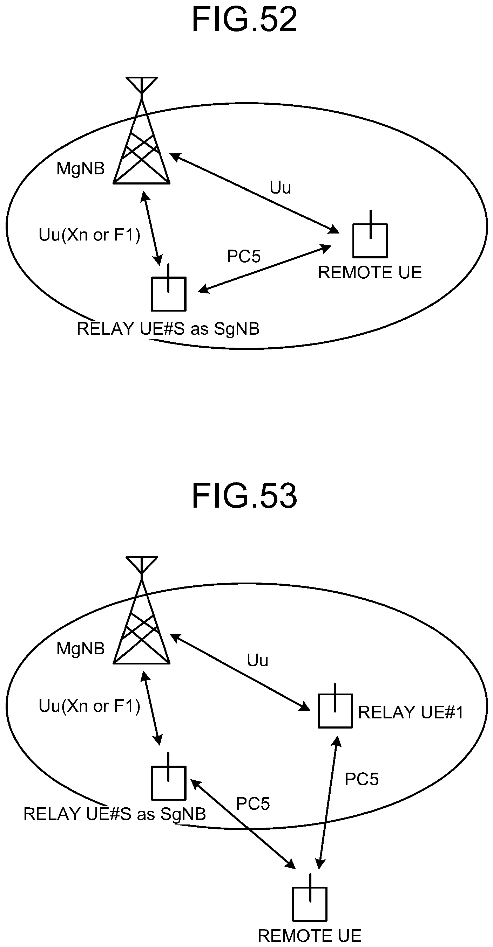

FIG. 52 is a conceptual diagram illustrating another example in a case where the remote UE is connected to the single gNB with the two paths in the communication between the remote UE and the NW via the relay UE, according to the sixth embodiment. In this configuration, in the communication between the remote UE and the NW, the remote UE configures the DC using the MN and the relay UE #S to be a substitute for the SN.

The remote UE is directly connected to the MgNB with the single path, the remote UE is connected to the relay UE #S with another path, and the relay UE #S is connected to the MgNB. The remote UE is directly connected to the MgNB by the Uu. The remote UE and the relay UE #S are connected by the PC5. The relay UE #S and the MgNB are connected by the Xn. The relay UE #S and the MgNB may be wirelessly connected. Xn connection may be performed using the Uu. It is preferable that the remote UE and the MgNB be RRC-connected. The relay UE #S may be RRC-connected to the MgNB. For example, in a case where the relay UE #S and the MgNB are wirelessly connected and the Xn connection is performed using the Uu, the RRC connection state may be made.

FIG. 53 is a conceptual diagram illustrating another example in a case where the remote UE is connected to the single gNB with the two paths in the communication between the remote UE and the NW via the relay UE, according to the sixth embodiment. In this configuration, in the communication between the remote UE and the NW, the remote UE configures the DC using the MN and the relay UE #S to be a substitute for the SN.

The remote UE is connected to the MgNB via the relay UE #1 with the single path, the remote UE is connected to the relay UE #S with another path, and the relay UE #S is connected to the MgNB. The remote UE and the relay UE #1 are connected by the PC5, and the relay UE #1 and the MgNB are connected by the Uu. The remote UE and the relay UE #S are connected by the PC5. The relay UE #S and the MgNB are connected by the Xn. The relay UE #S and the MgNB may be connected by F1. The relay UE #S and the MgNB may be wirelessly connected. The Xn or F1 connection may be performed using the Uu. It is preferable that the remote UE and the MgNB be RRC-connected. It is preferable that the relay UE #1 and the MgNB be RRC-connected. The relay UE #S may be RRC-connected to the MgNB. For example, in a case where the relay UE #S and the MgNB are wirelessly connected and the Xn or F1 connection is performed using the Uu, the RRC connection state may be made.

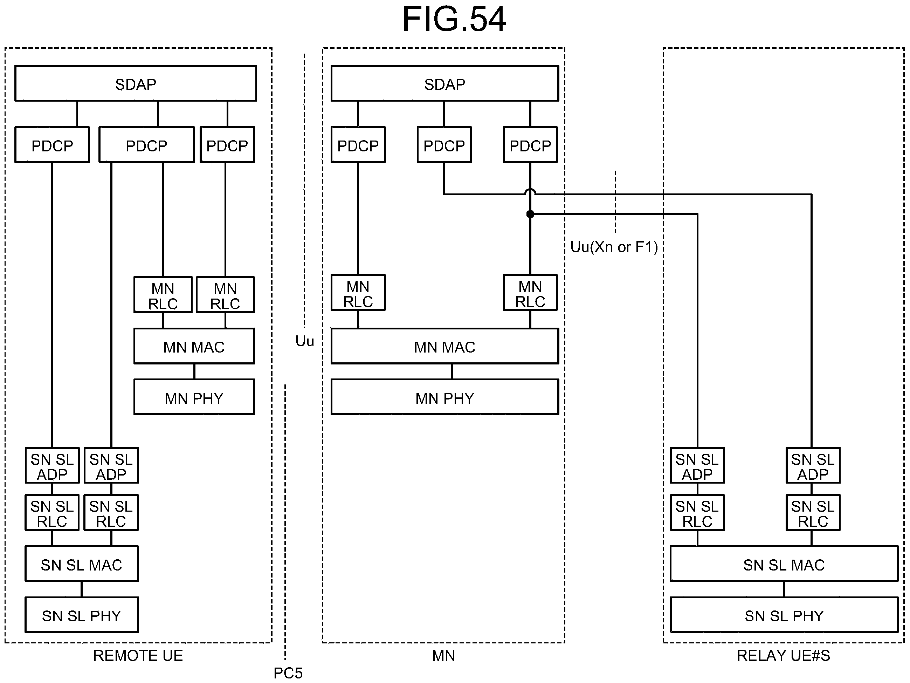

A protocol configuration in a case where the remote UE is connected to the single gNB with the two paths, in the communication between the remote UE and the NW via the relay UE, is disclosed. FIG. 54 is a diagram illustrating a protocol stack in a case where the remote UE configures the DC using the MN and the relay UE #S that is a substitute for the SN, in the communication between the remote UE and the NW, in the sixth embodiment. A case is illustrated where the remote UE is directly connected to the MgNB with the single path, the remote UE is connected to the relay UE #S with another path, and the relay UE #S is connected to the MgNB. The U-Plane is described.

The MN has a protocol of the Uu for the DC. The Uu protocols include SDAP, PDCP, RLC, MAC, and PHY. The protocol of the Uu may be for the MN. The relay UE #S has a PC5 protocol for the DC. The PC5 protocol may be used for the SN. The PC5 protocols are the PC5 RLC, the PC5 MAC, and the PC5 PHY. A PC5 ADP may be configured above the PC5 RLC. The PC5 ADP may be configured as a sublayer of the PC5 RLC. It is preferable that the PC5 ADP have, for example, a mapping function between the Uu bearer and the PC5 bearer. The PC5 SDAP and the PC5 PDCP need not be provided. In FIG. 54, the MCG bearer, the SCG bearer, and the split bearer are also illustrated. In DC configuration, these bearers can be configured.

The remote UE has the PC5 protocol between the remote UE and the relay UE #S. The PC5 protocol may be used for the SN. Similarly to the relay UE #S, the PC5 protocols are the PC5 ADP, the PC5 RLC, the PC5 MAC, and the PC5 PHY. The PC5 SDAP and the PC5 PDCP need not be provided. The bearer for the SN is the SCG bearer or the split bearer. Furthermore, the remote UE has a protocol of the Uu for the DC between the remote UE and the MN. The Uu protocols include SDAP, PDCP, RLC, MAC, and PHY. The bearer for the MN is the MCG bearer or the split bearer. The remote UE connects the ADP of the PC5 for the SN and the PDCP of the Uu and connects the RLC of the Uu for the MN and the PDCP of the Uu. The remote UE terminates the DC.

The bearer is disclosed. The RB is configured between the MN and the remote UE. In the RB, the bearer for the DC is configured. As the bearer for the DC, the MN termination bearer that terminates in the PDCP of the MN is configured. As the bearer for the DC, the bearer having the RLC bearer of the MN or the bearer having both RLC bearers of the MN and the relay UE #S is configured. Here, the bearer having the RLC bearer of the MN is referred to as an MCG bearer, the bearer having the RLC bearer of the relay UE #S is referred to as a SCG bearer, and the bearer having both RLC bearers of the MN and the relay UE #S is referred to as a split bearer.

The SL bearer is configured between the relay UE #S and the remote UE. It is preferable that the SL bearer be the SL RLC bearer. The SL bearer may be an SL RLC channel. The bearer for DC is configured between the MN and the remote UE.

Bearer mapping in communication from the NW to the remote UE is disclosed. The MN has a function for mapping the RB between the NW and the remote UE to the RLC bearer for the DC, in the communication from the NW to the remote UE. The RLC bearer for the DC is the MCG bearer, the SCG bearer, or the split bearer. The number of remote UEs connected to the relay UE #S is not limited to one and may be plural. The number of RBs between the remote UE and the NW is not limited to one and may be plural.

The MN may add the identifier of the remote UE and the identifier of the RB (RB identifier: RB ID) between the remote UE and the NW, in the communication from the NW to the remote UE. In a case where the RB is the SRB, the RB ID may be an SRB ID. In a case where the RB is the DRB, the RB ID may be a DRB ID. In this way, the relay UE #S or the remote UE can recognize the transmission destination remote UE and the RB for the communication between the remote UE and the NW.

The MN may add information about the bearer used for the DC, in the communication from the NW to the remote UE. The information about the bearer used for the DC includes, for example, an identifier indicating an end of the bearer, and/or an identifier indicating a type of the bearer, and/or an identifier indicating that the bearer is for the MN or the SN, or the like. In this way, the relay UE #S or the remote UE can recognize the end, the type, or the like of the bearer used for the DC.

In the relay UE #S, the single or the plurality of RBs between the remote UE and the NW may be mapped to the RLC bearer of the PC5 for the DC. For the mapping, the remote UE identifier, the RB identifier, the information about the bearer for the DC, or the like added by the MN may be used. An ADP of the PC5 configured in the relay UE #S may have the function described above. Functions in a case where the DC is configured and functions in a case where the DC is not configured may be aggregated in the ADP. The configuration of the relay UE #S can be simplified.

When performing mapping to the RLC bearer of the PC5, the relay UE #S may delete some or all of the remote UE identifier, the RB identifier, the information about the bearer used for the DC, and the like added by the MN. In the mapping to the RLC bearer of the PC5 to the remote UE, some or all of the identifiers and the information need not be added.

The relay UE #S may add the identifier of the remote UE and the identifier of the RB between the remote UE and the NW, in the communication from the NW to the remote UE. In a case where the RB is the SRB, the RB ID may be an SRB ID. In a case where the RB is the DRB, the RB ID may be a DRB ID. In this way, the remote UE can recognize the transmission destination remote UE and the RB for the communication between the remote UE and the NW.

The relay UE #S may add information about the bearer used for the DC, in the communication from the NW to the remote UE. The information about the bearer used for the DC includes, for example, an identifier indicating an end of the bearer, and/or an identifier indicating a type of the bearer, and/or an identifier indicating that the bearer is for the MN or the SN, or the like. In this way, the remote UE can recognize the end, the type, or the like of the bearer used for the DC.

The remote UE has a function for mapping the RLC bearer of the Uu for the MN and the RLC bearer of the PC5 for the SN to the RB between the NW and the remote UE, in the communication from the NW to the remote UE. For the mapping, the remote UE identifier, the RB identifier, the information about the bearer for the DC, or the like added by the relay UE #S may be used.

Bearer mapping in the communication from the remote UE to the NW is disclosed. The remote UE has a function for mapping the RB between the NW and the remote UE to the RLC bearer for the DC, in the communication from the remote UE to the NW. The RLC bearer for the DC includes the RLC bearer of the Uu for the MN and the RLC bearer of the PC5 for the SN. The RLC bearer for the DC is the MCG bearer, the SCG bearer, or the split bearer. The number of remote UEs connected to the relay UE #S is not limited to one and may be plural. The number of RBs between the remote UE and the NW is not limited to one and may be plural.

The remote UE may add the identifier of the base station and the identifier of the RB between the remote UE and the NW, in the communication from the remote UE to the NW. In a case where the RB is the SRB, the RB ID may be an SRB ID. In a case where the RB is the DRB, the RB ID may be a DRB ID. Information indicating whether or not the number of base stations is plural or information indicating whether or not the number of identifiers of the base stations is plural may be added. In this way, the relay UE #S or the MN can recognize the transmission destination base station and the RB for the communication between the remote UE and the NW.

The remote UE may add the information about the bearer for the DC, in the communication from the NW to the remote UE. The information about the bearer used for the DC includes, for example, an identifier indicating an end of the bearer, and/or an identifier indicating a type of the bearer, and/or an identifier indicating that the bearer is for the MN or the SN, or the like. In this way, the relay UE #S or the MN can recognize the end, the type, or the like of the bearer used for the DC.

In the relay UE #S, the RLC bearer of the PC5 for the SN is mapped to the single or the plurality of RBs between the remote UE and the NW. For the mapping, the base station identifier, the RB identifier, the information about the bearer for the DC, or the like added by the remote UE may be used. An ADP of the PC5 configured in the relay UE #S may have the function described above. Functions in a case where the DC is configured and functions in a case where the DC is not configured may be aggregated in the ADP. The configuration of the relay UE #S can be simplified.

When performing mapping to the single or plurality of RBs, the relay UE #S may delete some or all of the remote UE identifier, the RB identifier, the information about the bearer used for the DC, and the like added by the remote UE. In the mapping to the single or plurality of RBs, some or all of the identifiers and the information need not be added.

The relay UE #S may add the identifier of the remote UE and the identifier of the RB between the remote UE and the NW, in the communication from the remote UE to the NW. In a case where the RB is the SRB, the RB ID may be an SRB ID. In a case where the RB is the DRB, the RB ID may be a DRB ID. In this way, the MN can recognize the RB for the communication between the remote UE and the NW.

The relay UE #S may add the information about the bearer used for the DC, in the communication from the remote UE to the NW. The information about the bearer used for the DC includes, for example, an identifier indicating an end of the bearer, and/or an identifier indicating a type of the bearer, and/or an identifier indicating that the bearer is for the MN or the SN, or the like. In this way, the MN can recognize the end, the type, or the like of the bearer used for the DC.

The MN has a function for mapping the RLC bearer of the Uu for the MN and the RLC bearer of the PC5 for the SN to the RB between the NW and the remote UE, in the communication from the remote UE to the NW. For the mapping, the remote UE identifier, the RB identifier, the information about the bearer used for the DC, or the like added by the remote UE or the ADP of the relay UE #S may be used.

For the protocol of the C-Plane, it is satisfactory if the RRC is provided instead of the SDAP of the MN and the remote UE. It is preferable to provide the RRC corresponding to the SRB. In a case where the DC is configured for the SRB, only the MN termination bearer may be configured. The DC of the SRB is enabled.

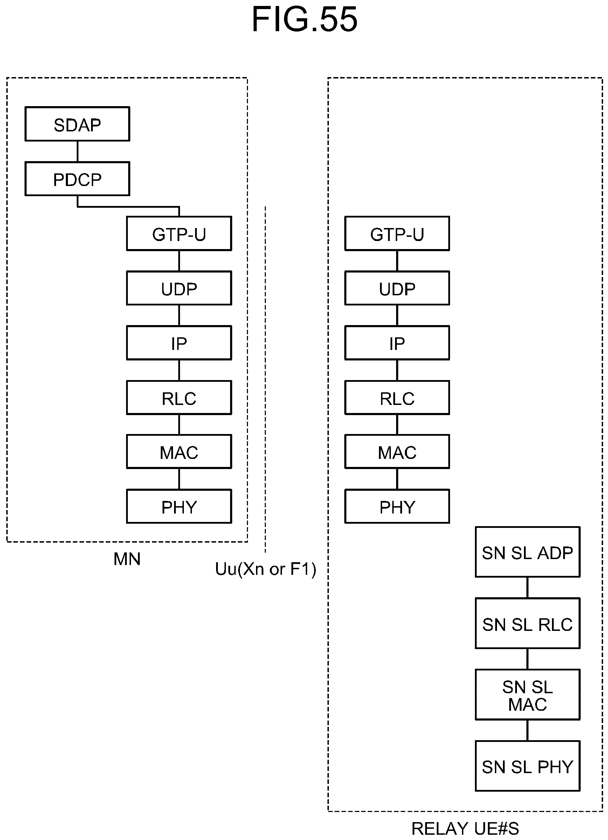

FIG. 55 is a diagram illustrating a protocol stack between the MN and the relay UE #S according to the sixth embodiment. A case is illustrated where the relay UE #S and the MgNB are Xn-connected using the Uu. The U-Plane is described.

The MN includes a GTP-U, a UDP, an IP, an RLC, a MAC, and a PHY for the Xn or F1 connection with the relay UE #S. The PDCP that is the protocol of the Uu for the DC is connected to the GTP-U. The PDCP PDU for the relay UE #S is input to the GTP-U. Data processed by the GTP-U, the UDP, and the IP and output by the IP is input to a protocol RLC of the Uu for wireless connection with the relay UE #S. Processes of the MAC and the PHY are executed on the data input to the RLC, and the data is transmitted to the relay UE #S.

The relay UE #S includes the GTP-U, the UDP, the IP, the RLC, the MAC, and the PHY, for the Xn connection with the MN. The data received from the MN is input to a protocol PHY of the Uu for wireless connection with the MN. The processes of the MAC and the RLC are executed on the data input to the PHY, and the data is input to the IP. The data input to the IP is processed by the UDP and the GTP-U, and the data is output. The data is equivalent to the PDCP PDU.

In this way, the IP, the UDP, and the GTP-U are terminated with each other, between the MN and the relay UE #S.

The output data from the GTP-U is mapped to the SL bearer for the SN of the relay UE #S. The data mapped to the SL bearer is input to the SL ADP, is processed by the SL RLC, the SL MAC, and the SL PHY, and is transmitted to the remote UE.

A communication direction from the MN to the remote UE via the relay UE #S has been disclosed. In a communication direction from the remote UE to the MN via the relay UE #S, a process reverse to the process disclosed above is executed.

For the protocol of the C-Plane, it is satisfactory if only an SCTP is provided instead of the UDP and the DTP-U of the MN and the relay UE #S. The DC of the SRB is enabled.

In this way, the remote UE connected to the single gNB with the two paths is enabled to communicate with the NW via the relay UE.

A method for configuring a DC in which the remote UE is connected to the single gNB with the two paths in the communication between the remote UE and the NW performed via the relay UE is disclosed.

A case is disclosed where the remote UE configures the DC using the MN and the relay UE #S that is a substitute for the SN. Specifically, a case is disclosed where the remote UE is directly connected to the MgNB with the single path, the remote UE is connected to the relay UE #S with another path, and the relay UE #S is connected to the MgNB.

The MN configures the DC with respect to the remote UE. The MN configures the DC with respect to the RB between the MN and the remote UE. The RB may be used for the communication between the remote UE and the MN. The RB may be the SRB and/or the DRB. For example, the SRB may be the SRB 2.

The MN configures the RLC bearer of the Uu for the DC with respect to the remote UE. The RLC bearer of the Uu for the DC may be the RLC bearer between the MN and the remote UE.

The MN configures the RLC bearer of the Uu for the DC with respect to the relay UE #S. The RLC bearer of the Uu for the DC may be the RLC bearer between the MN and the relay UE #S.

The MN configures the SL bearer for the DC between the relay UE #S and the remote UE. The SL bearer for the DC may be the single SL bearer. The SL bearer may be the SL bearer for the SN. The SL bearer may be the SL RLC bearer.

It is preferable that the relay UE #S be RRC-connected to the MN. It is preferable that the remote UE and the MN be RRC-connected. Furthermore, the MN may start the DC configuration for the remote UE, in a state where the remote UE is RRC-connected to the MN. The remote UE in which the DC is configured is connected to the CN via the MN in the C-Plane.

The MN transmits a DC configuration request to the RB for the communication between the remote UE and the MN, to the relay UE #S. The DC configuration request may be a request for adding a function as the SN. It is preferable to transmit the addition request using Xn signaling. The request may be transmitted using the F1 signaling. The request may be transmitted using the S-Node addition request message. Alternatively, a new message is provided, and the request may be transmitted using the message. The message may be, for example, a Relay (DC) request message.

As information included in the DC configuration request, it is preferable to appropriately apply the 17 information examples included in the addition request of the SN disclosed above. It is preferable to replace the SN in the information example with the relay UE #S.

However, since the MN and the remote UE are connected without communication through the relay UE, the configuration information between the MN and the relay UE need not be provided. For example, the MN does not transmit (4), (7), and (9) of the 17 information examples included in the SN addition request disclosed above, to the relay UE #S.

Among the 17 information examples included in the addition request of the SN disclosed above, it is preferable to replace the relay UE in (1), (5), and (8) with the relay UE #S. The relay #S that functions as the SN may include information used to perform the DC configuration with the remote UE. Furthermore, the information about the relay UE #S in (1) may include the measurement result of the relay UE #S by the remote UE. Furthermore, the measurement result of the MN by the relay UE #S may be included.

In this way, the MN can transmit the DC configuration request to the relay UE #S. Furthermore, by receiving the DC configuration request from the MN, for example, the relay UE #S can recognize which remote UE the DC is for. The relay UE #S performs the configuration for the DC as the SN using the information received from the MN.

The MN transmits the configuration for the DC to the relay UE #S. Five information examples included in the configuration for the DC are disclosed.
(1) Information about the RB.
(2) Information about the RLC bearer of the Uu.
(3) Identifier of the SN.
(4) Information about ADP configuration.
(5) Combination of (1) to (4).

As the five pieces of information included in the configuration for the DC, it is preferable to appropriately apply the information example included in the configuration for the DC disclosed above. It is preferable that the information included in the configuration for the DC be information for the configuration as the SN.

Note that, (1) is the information about the RB for the communication between the remote UE and the MN. The MN does not configure the RB as the configuration of the DC with respect to the relay UE #S. In a case where the RB that configures the DC is the SRB, the SRB is not configured. In a case where the RB that configures the DC is the DRB, the DRB is not configured. The information about the RB in (1) may be, for example, only the identifier of the RB.

Note that, (2) is information about the RLC bearer of the Uu for the DC. It is preferable that the information about the RLC bearer of the Uu for the DC be configuration information of the Uu RLC bearer for the Xn or the F1. The MN transmits the configuration information of the Uu RLC bearer for the Xn or the F1 to the relay UE #S. By receiving the Uu RLC bearer configuration information for the Xn or the F1 from the MN, the relay UE #S can connect with the MN for the Xn signaling or F1 signaling.

Note that, the identifier of the SN in (3) may be omitted. The identifier of the SN may be an identifier of the relay UE #S.

The MN configures the SL bearer between the remote UE and the relay UE #S, with respect to the relay UE #S. In a case where there is an existing SL bearer between the remote UE and the relay UE #S, the SL bearer may be modified. The configuration of the SL bearer may be configuration for modifying the SL bearer. Three configuration information examples of the SL bearer are disclosed.
(1) Information about the RLC bearer of the SL.
(2) Information about the ADP configuration of the SL.
(3) Combination of (1) and (2).

As the configuration information of the SL bearer, it is preferable to appropriately apply the configuration information example of the SL bearer disclosed above.

The MN does not need to configure the SL RB with respect to the relay UE #S. The information about the SL RB need not be transmitted. The configuration of the SL PDCP and the SL SDAP need not be performed. The MN may configure the single SL bearer for the DC, with respect to the relay UE #S. The configuration of the SL bearer for the DC may be the configuration of the SL bearer for the SN. The MN may configure the SL bearer for the SN with respect to the relay UE #S as the SN.

The MN is Xn- or F1-connected to the relay UE #S. The MN transmits configuration information used for the connection, to the relay UE #S. The configuration information is, for example, a GTP-u TEID, a TNL address (IP address), or the like. In this way, the MN can exchange data by the Xn or F1, not the Uu, with the relay UE #S.

The relay UE #S may configure the DC for the remote UE. The relay UE #S may perform the configuration for the DC between the relay UE #S and the remote UE, for the remote UE. The relay UE #S may configure the DC using the information included in the DC configuration request message received from the MN. The DC configuration for the remote UE may be the SL RRC configuration between the remote UE and the relay UE #S. The SL RRC configuration may be, for example, the configuration of the SL RLC bearer.

The relay UE #S transmits a response message to the DC configuration request, to the MN. In a case where the relay UE #S performs DC configuration, the relay UE #S transmits a DC configuration request acknowledgment response message to the MN. It is preferable to perform transmission using the Xn signaling. The request may be transmitted using the F1 signaling. The S-Node addition request acknowledge message may be used as the DC configuration request acknowledgment response message. Alternatively, a new message may be provided. For example, the Relay (DC) request acknowledge message may be provided. As the information included in the DC configuration request response message, information included in the SN addition request response message disclosed above may be appropriately applied.

In a case where the relay UE #S cannot perform the DC configuration, the relay UE #S transmits a DC configuration request rejection response message to the MN. It is preferable to perform transmission using the Xn signaling. The request may be transmitted using the F1 signaling. The S-Node addition request reject message may be used as the DC configuration request rejection response message. Alternatively, a new message may be provided. For example, the Relay (DC) request reject message may be provided. A notification of the message including the information about the remote UE and the cause information may be provided.

The MN transmits the configuration for the DC to the remote UE. Four information examples included in the configuration for the DC are disclosed.
(1) Information about the RB.
(2) Information about the RLC bearer of the Uu.
(3) Identifier of the SN.
(4) Combination of (1) to (3).

As the four pieces of information included in the configuration for the DC, it is preferable to appropriately apply the information example included in the configuration for the DC disclosed above.

Note that, (2) is information about the RLC bearer of the Uu for the DC. The MN does not need to perform the configuration for the SCG with respect to the remote UE. Since the remote UE is connected to the relay UE #S as the SN in the DC, the remote UE does not need to receive the information about the SCG.

Note that, the identifier of the SN in (3) may be omitted. The identifier of the SN may be an identifier of the relay UE #S.

In a case of performing the configuration for the DC with respect to the remote UE, the MN may use the configuration information of the SL bearer between the remote UE and the relay UE #S received from the relay UE #S. It is possible to consider a load status or the like of the relay UE #S.

The MN configures the SL bearer between the remote UE and the relay UE #S, with respect to the remote UE. In a case where there is an existing SL bearer between the remote UE and the relay UE #S, the SL bearer may be modified. The configuration of the SL bearer may be configuration for modifying the SL bearer. Three configuration information examples of the SL bearer are disclosed.
(1) Information about the RLC bearer of the SL.
(2) Information about the ADP configuration of the SL.
(3) Combination of (1) and (2).

As the configuration information of the SL bearer, it is preferable to appropriately apply the configuration information example of the SL bearer disclosed above.

The number of RLC bearers of the SL may be one. As the configuration of the SL bearer for the DC, the RLC bearer of the SL for the SN may be configured. The MN may configure the SL RLC bearer between the remote UE and the relay UE #S as the SN, with respect to the remote UE.

The number of ADP configurations of the SL may be one. As the ADP configuration of the SL for the DC, the ADP of the SL for the SN may be configured. The MN may configure the ADP of the SL between the remote UE and the relay UE #S as the SN, with respect to the remote UE.

The configuration of the SL bearer may be included in the configuration for the DC. The configuration information of the SL bearer may be included in the configuration information for the DC.

The MN does not need to configure the SL RB with respect to the remote UE. The information about the SL RB need not be transmitted. The configuration of the SL PDCP and the SL SDAP need not be performed. The MN may configure the single SL bearer for the DC, with respect to the remote UE. The configuration of the SL bearer for the DC may be the configuration of the SL bearer for the MN.

In a case where the MN configures the SL bearer between the remote UE and the relay UE #S, the MN may use the configuration information of the SL bearer between the remote UE and the relay UE #S received from the relay UE #S. It is possible to consider a load status or the like of the relay UE #S. For example, the MN may assume that the configuration information of the SL bearer between the remote UE and the relay UE #S be the same as the configuration information of the SL bearer between the remote UE and the relay UE #S received from the relay UE #S. The configuration of the SL bearer of the remote UE is the same as that of the relay UE #S, and it is possible to reduce malfunctions in the SL communication.

The remote UE that has received the configuration information of the SL bearer for the DC from the MN establishes PC5 connection with the relay UE #S. The remote UE that has established the PC5 connection with the relay UE #S configures the SL bearer for the DC between the remote UE and the relay UE #S. The relay UE #S that has established the PC5 connection with the remote UE configures the SL bearer for the DC between the remote UE and the relay UE #S. The remote UE may notify the relay UE #S of the SL RRC configuration. The relay UE #S may notify the remote UE of the SL RRC configuration.

The data communication between the remote UE and the NW is performed using the MCG bearer between the remote UE and the MN, the SCG bearer between the remote UE and the MN via the relay UE #S, and the split bearers between the remote UE and the MN and between the remote UE and the MN via the relay UE #S.

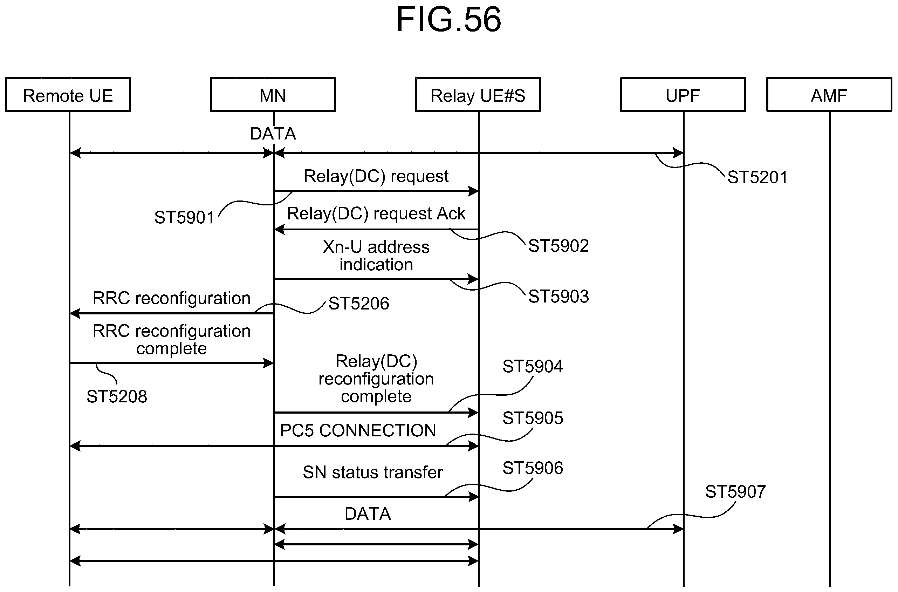

FIG. 56 is a sequence diagram illustrating an example of the method for configuring the DC in which the remote UE is connected to the single gNB with the two paths, according to the sixth embodiment. A case is disclosed where the remote UE configures the DC using the MN and the relay UE #S that is a substitute for the SN. A case is disclosed where the remote UE is directly connected to the MgNB with the single path, the remote UE is connected to the relay UE #S with another path, and the relay UE #S is connected to the MgNB. In FIG. 56, steps common to those in FIG. 49 are denoted by the same step numbers, and common description is omitted. In step ST5201, data communication is performed between the remote UE, the MN, and the UPF.

The MN determines to configure the DC with respect to the remote UE. For example, the MN determines the relay UE #S used for the DC, from the measurement result of the remote UE.

In step ST5901, the MN transmits a DC configuration request to the relay UE #S determined to be used for the DC. The MN requests the relay UE #S to add a function as the SN of the DC with respect to the remote UE. The DC configuration request message is transmitted, for example, using the Xn or F1 signaling. As the DC configuration request message, the Relay (DC) request message may be used. It is preferable to include the information example of the SN addition request disclosed above in the DC configuration request message.

The relay UE #S that has received the DC configuration request message from the MN recognizes the remote UE that performs the DC configuration, the information about the communication between the remote UE that performs the DC configuration and the NW, the bearer termination to be required, the type of the bearer for the DC to be required, or the like from the information about the DC configuration request and performs the configuration for the DC with respect to the remote UE. For example, the configuration for the DC may be the RRC configuration between the SN and the remote UE. In step ST5902, the relay UE #S transmits the DC configuration request response message to the MN. In this example, an acknowledgement response is transmitted. A Relay (DC) request Ack message may be used as the DC configuration request response message. The DC configuration request response message may include the SL RRC configuration between the relay UE #S and the remote UE. The MN that has received the DC configuration request response message recognizes that the relay UE #S has performed the DC configuration for the remote UE. Furthermore, the MN recognizes the RRC configuration between the relay UE #S and the remote UE.

In step ST5903, the MN notifies the relay UE #S of the Xn-U address indication message. A notification of an F1-D address indication message may be provided. For example, the MN configures an address used for the DC between the MN and the SN and transmits the address to the relay UE #S in step ST5903. As a result, the MN and the relay UE #S share the address used for the DC, and data is enabled to be exchanged between the MN and the relay UE #S.

In step ST5206, the MN transmits the configuration for the DC and the configuration of the SL bearer, to the remote UE. The configuration of the SL bearer and the configuration for the DC may be transmitted together, or the configuration of the SL bearer may be included in the configuration for the DC and transmitted. Alternatively, the configuration for the DC and the configuration of the SL bearer may be separately transmitted. The RRC signaling is used for the transmission. The RRC reconfiguration message may be used for the transmission. It is preferable that the configuration for the DC include the information example included in the configuration for the DC, disclosed above. As the configuration about the SCG of the information included in the configuration for the DC, the configuration for the DC received from the SN may be used. It is preferable that the configuration of the SL bearer include the configuration information of the SL bearer disclosed above. As the configuration about the SCG of the SL bearer configuration, the SL bearer configuration received from the SN may be used. As the configuration about the information of the SL bearer configuration, the RRC configuration information received from the relay UE #S may be used. By receiving the configuration for the DC and the SL bearer configuration from the MN, the remote UE can perform the configuration for the DC between the MN and the remote UE and the configuration of the SL bearer between the remote UE and the relay UE #S.

The remote UE that has performed these configurations transmits the DC configuration response and the SL bearer configuration response to the MN, in step ST5208. In this example, an acknowledgement response is transmitted. The RRC signaling is used for the transmission. In the transmission of the acknowledgement response, the RRC reconfiguration complete message may be used. The MN that has received the DC configuration response and the SL bearer configuration response recognizes that the remote UE has completed the DC configuration and the SL bearer configuration.

In step ST5904, the MN transmits a DC configuration completion message to the relay UE #S. For the transmission, the Xn or F1 signaling is used. In the transmission, a Relay (DC) reconfiguration complete message may be used. By receiving the message, the relay UE #S recognizes that the MN and the remote UE have completed the configuration for the DC.

The remote UE establishes the PC5 connection with the relay UE #S in step ST5905, while maintaining the communication with the MN. For the establishment of the PC5 connection, PC5-S signaling may be used. PC5 RRC signaling may be used. The remote UE establishes the PC5 connection using the SL bearer configuration with the relay UE #S received from the MN. This enables the data communication between the remote UE and the relay UE #S.

In step ST5906, the MN may transfer an SN status to the relay UE #S. The SN status transfer may be performed using an SN status transfer message. In step ST5907, the MN transfers the data from the UPF to the relay UE #S.

In this way, the DC is performed between the remote UE, the MN, and the relay UE #S. The configurable DC may be only the MN termination bearer. The configuration of the relay UE #S can be simplified without directly connecting the relay UE #S with the CN. For example, in a case of the MN termination SCG bearer, data communication is performed between the remote UE, the relay UE #S, the MN, and the UPF. For example, in a case of the MN termination split bearer, data communication is performed between the remote UE, the relay UE #S, the MN, and the UPF.

In this way, the remote UE can configure the DC that connects to the MgNB and the relay UE #S.

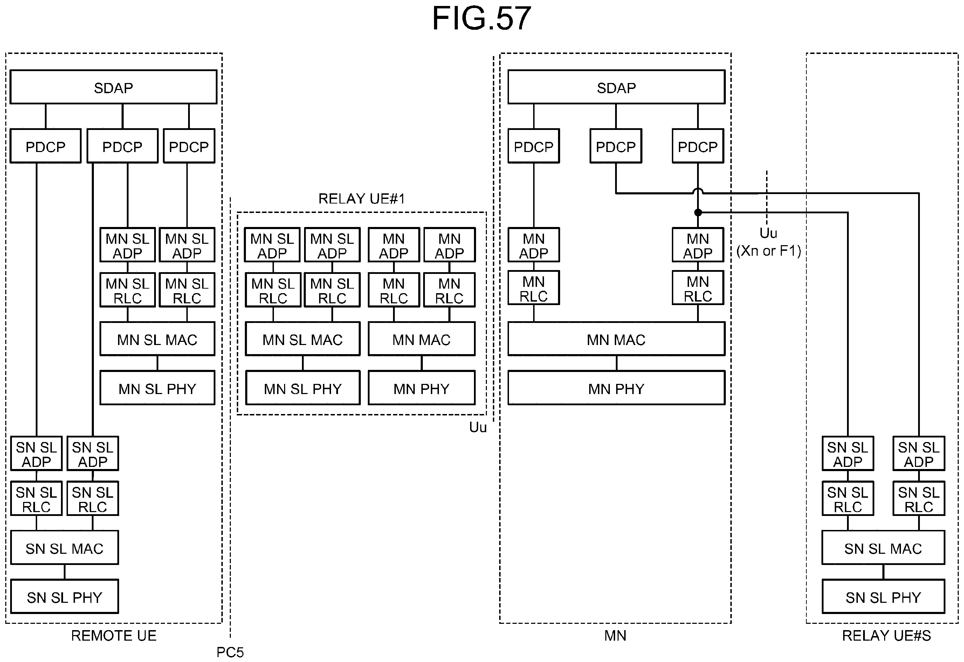

Another example of the protocol configuration in a case where the remote UE is connected to the single gNB with the two paths, in the communication between the remote UE and the NW via the relay UE, is disclosed. FIG. 57 is a diagram illustrating another configuration method of the protocol stack in a case where the remote UE configures the DC using the MN and the relay UE #S that is a substitute for the SN, in the communication between the remote UE and the NW, in the sixth embodiment. A case is illustrated where the remote UE is connected to the MgNB via the relay UE #1 with the single path, the remote UE is connected to the relay UE #S with another path, and the relay UE #S is connected to the MgNB. The U-Plane is described.

The MN has a protocol of the Uu for the DC. The Uu protocols include SDAP, PDCP, RLC, MAC, and PHY. In the protocol of the Uu, the ADP is configured between the RLC and the PDCP. The ADP may be configured as a sublayer of the RLC. The protocol of the Uu may be for the MN. The relay UE #S has a PC5 protocol for the DC. The PC5 protocol may be used for the SN. The PC5 protocols are the PC5 RLC, the PC5 MAC, and the PC5 PHY. A PC5 ADP may be configured above the PC5 RLC. It is preferable that the PC5 ADP have, for example, a mapping function between the Uu bearer and the PC5 bearer. The PC5 SDAP and the PC5 PDCP need not be provided. In FIG. 57, the MCG bearer, the SCG bearer, and the split bearer are also illustrated. In DC configuration, these bearers can be configured.

The relay UE #1 has the protocol of the Uu for the MN. The protocols of the Uu are the RLC, the MAC, and the PHY. A PC5 ADP may be configured above the PC5 RLC. The PC5 ADP may be configured as a sublayer of the PC5 RLC. The bearer for the MN is the MCG bearer or the split bearer.

The relay UE #1 has the PC5 protocol between the relay UE #1 and the remote UE. The PC5 protocol may be used for the MN. The PC5 protocols are the PC5 RLC, the PC5 MAC, and the PC5 PHY. A PC5 ADP may be configured above the PC5 RLC. The PC5 ADP may be configured as a sublayer of the PC5 RLC. It is preferable that the PC5 ADP have, for example, a mapping function between the Uu bearer and the PC5 bearer. The PC5 SDAP and the PC5 PDCP need not be provided.

The remote UE has the PC5 protocol between the remote UE and the relay UE #S. The PC5 protocol may be used for the SN. Similarly to the relay UE #S, the PC5 protocols are the PC5 ADP, the PC5 RLC, the PC5 MAC, and the PC5 PHY. The PC5 SDAP and the PC5 PDCP need not be provided. Furthermore, the remote UE has the PC5 protocol between the remote UE and the relay UE #1. The PC5 protocol may be used for the MN. Similarly to the relay UE #1, the PC5 protocols are the PC5 ADP, the PC5 RLC, the PC5 MAC, and the PC5 PHY. The PC5 SDAP and the PC5 PDCP need not be provided. Furthermore, the remote UE has the protocol of the Uu between the remote UE and the MN. The protocols of the Uu are the SDAP and the PDCP for the DC. The remote UE connects the ADP of the PC5 for the MN and the PDCP of the Uu. The remote UE terminates the DC.

The bearer is disclosed. The RB is configured between the MN and the remote UE. In the RB, the bearer for the MN is configured between the MN and the relay UE #1. The bearer for the MN is the MCG bearer or the split bearer. It is preferable that the MCG bearer or the split bearer be the RLC bearer. The RLC channel may be used. The single SL bearer is configured between the relay UE #1 and the remote UE. It is preferable that the SL bearer be the SL RLC bearer for the MN. The SL bearer may be an SL RLC channel. The SL bearer for the SN is configured between the relay UE #S and the remote UE. The bearer for the SN is the SCG bearer or the split bearer. It is preferable that the SCG bearer or the split bearer be the RLC bearer. The RLC channel may be used.

Bearer mapping in communication from the NW to the remote UE is disclosed. The MN has a function for mapping the RB between the NW and the remote UE to the RLC bearer of the Uu for the DC and the RLC bearer of the PC5, in the communication from the NW to the remote UE. The RLC bearer of the Uu for the DC is the MCG bearer or the split bearer. The RLC bearer of the PC5 for the DC is the SCG bearer or the split bearer.

The number of remote UEs connected to the relay UE #1 is not limited to one and may be plural. The number of RBs between the remote UE and the NW is not limited to one and may be plural. The RBs of the single or the plurality of remote UEs connected to the relay UE #1 and/or the single or the plurality of RBs between the remote UE and the NW may be mapped to the RLC bearer of the Uu for the DC. An ADP of the Uu configured in the MN and the SN may have the function described above. Functions in a case where the DC is configured and functions in a case where the DC is not configured may be aggregated in the ADP. In this case, the configuration of the MN can be simplified.

The MN may add the identifier of the remote UE and the identifier of the RB between the remote UE and the NW, in the communication from the NW to the remote UE. In a case where the RB is the SRB, the RB ID may be an SRB ID. In a case where the RB is the DRB, the RB ID may be a DRB ID. In this way, the relay UE #1, the relay UE #S, or the remote UE can recognize the transmission destination remote UE and the RB for the communication between the remote UE and the NW.

The MN may add information about the bearer used for the DC, in the communication from the NW to the remote UE. The information about the bearer used for the DC includes, for example, an identifier indicating an end of the bearer, and/or an identifier indicating a type of the bearer, and/or an identifier indicating that the bearer is for the MN or the SN, or the like. In this way, the relay UE #1, the relay UE #S, or the remote UE can recognize the end, the type, or the like of the bearer used for the DC.

The ADP of the Uu configured in the MN may have the addition functions described above. For example, the ADP of the Uu configured in the MN may have only an addition function in the communication with the relay UE #1. Functions in a case where the DC is configured and functions in a case where the DC is not configured may be aggregated in the ADP. In this case, the configuration of the MN can be simplified.

The relay UE #1 has a function for mapping the RLC bearer of the Uu for the MN to the RLC bearer of the PC5 for the MN, in the communication from the NW to the remote UE. For the mapping, the remote UE identifier, the RB identifier, the information about the bearer for the DC, or the like added by the MN may be used. In this way, the relay UE #1 can map the MCG bearer or the split bearer for the MN to the RLC bearer of the PC5 for the MN. An ADP of the Uu configured in the relay UE #1 may have the functions described above. Functions in a case where the DC is configured and functions in a case where the DC is not configured may be aggregated in the ADP. In this case, the configuration of the relay UE #1 can be simplified.

When performing mapping to the RLC bearer of the PC5 for the MN, the relay UE #1 may delete some or all of the remote UE identifier, the RB identifier, the information about the bearer used for the DC, and the like added by the MN. In the mapping to the RLC bearer of the PC5 for the MN, some or all of the identifiers and the information need not be added.

In the relay UE #S, the single or the plurality of RBs between the remote UE and the NW may be mapped to the RLC bearer of the PC5 for the DC. It is preferable to appropriately apply the mapping method disclosed in the example in FIG. 54.

The remote UE has a function for mapping the RLC bearer of the PC5 for the MN and the RLC bearer of the PC5 for the SN to the RB between the NW and the remote UE, in the communication from the remote UE to the NW. For the mapping, the remote UE identifier, the RB identifier, the information about the bearer for the DC, or the like added by the MN or the relay UE #S may be used.

Bearer mapping in the communication from the remote UE to the NW is disclosed. The remote UE has a function for mapping the RB between the NW and the remote UE to the RLC bearer for the DC, in the communication from the remote UE to the NW. The RLC bearer for the DC includes the RLC bearer of the PC5 for the MN and the RLC bearer of the PC5 for the SN. The RLC bearer for the DC is the MCG bearer, the SCG bearer, or the split bearer. The number of remote UEs connected to the relay UE #S is not limited to one and may be plural. The number of RBs between the remote UE and the NW is not limited to one and may be plural.

The remote UE may add the identifier of the base station and the identifier of the RB between the remote UE and the NW, in the communication from the remote UE to the NW. In a case where the RB is the SRB, the RB ID may be an SRB ID. In a case where the RB is the DRB, the RB ID may be a DRB ID. Information indicating whether or not the number of base stations is plural or information indicating whether or not the number of identifiers of the base stations is plural may be added. In this way, the relay UE #1, the relay UE #S, or the MN can recognize the transmission destination base station and the RB for the communication between the remote UE and the NW.

The remote UE may add the information about the bearer for the DC, in the communication from the NW to the remote UE. The information about the bearer used for the DC includes, for example, an identifier indicating an end of the bearer, and/or an identifier indicating a type of the bearer, and/or an identifier indicating that the bearer is for the MN or the SN, or the like. In this way, the relay UE #1, the relay UE #S, or the MN can recognize the end, the type, or the like of the bearer used for the DC.

The relay UE #1 has a function for mapping the RLC bearer of the PC5 for the MN to the RLC bearer of the Uu for the MN, in the communication from the remote UE to the NW. For the mapping, the base station identifier, the RB identifier, the information about the bearer for the DC, or the like added by the remote UE may be used. The RLC bearer of the Uu for the MN is the MCG bearer or the split bearer. The number of remote UEs connected to the relay UE #1 is not limited to one and may be plural. An ADP of the Uu configured in the relay UE #1 may have the functions described above. Functions in a case where the DC is configured and functions in a case where the DC is not configured may be aggregated in the ADP. In this case, the configuration of the relay UE #1 can be simplified.

When performing mapping to the RLC bearer of the Uu for the MN, the relay UE #1 may delete some or all of the identifier of the base station, the RB identifier, the information about the bearer used for the DC, and the like added by the remote UE. In the mapping to the RLC bearer of the Uu for the MN, some or all of the identifiers and the information need not be added.

The relay UE #1 may add the identifier of the remote UE and the identifier of the RB between the remote UE and the NW, in the communication from the remote UE to the NW. In a case where the RB is the SRB, the RB ID may be an SRB ID. In a case where the RB is the DRB, the RB ID may be a DRB ID. In this way, the MN can recognize a transmission source remote UE and the RB for the communication between the remote UE and the NW. The ADP of the Uu for the MN configured in the relay UE #1 may have the addition functions described above. Functions in a case where the DC is configured and functions in a case where the DC is not configured may be aggregated in the ADP. In this case, the configuration of the relay UE #1 can be simplified.

The relay UE #1 may add the information about the bearer for the DC, in the communication from the NW to the remote UE. The information about the bearer used for the DC includes, for example, an identifier indicating an end of the bearer, and/or an identifier indicating a type of the bearer, and/or an identifier indicating that the bearer is for the MN or the SN, or the like. In this way, the MN can recognize the end, the type, or the like of the bearer used for the DC.

In the relay UE #S, the RLC bearer of the PC5 for the SN is mapped to the single or the plurality of RBs between the remote UE and the NW. It is preferable to appropriately apply the mapping method disclosed in the example in FIG. 54.

The MN has a function for mapping the RLC bearer of the Uu for the MN and the RLC bearer of the PC5 for the SN to the RB between the NW and the remote UE, in the communication from the remote UE to the NW. For the mapping, the remote UE identifier, the RB identifier, the information about the bearer used for the DC, or the like added by the remote UE, the relay UE #1, or the relay UE #S may be used. The ADP configured in the MN or the relay UE #S may have the function described above. Functions in a case where the DC is configured and functions in a case where the DC is not configured may be aggregated in the ADP. The configuration of the MN or the relay UE #S can be simplified. In this way, the MN can map the MCG bearer, the SCG bearer, or the split bearer for the DC to the RB for the communication between the remote UE and the NW.

For the protocol of the C-Plane, it is satisfactory if the RRC is provided instead of the SDAP of the MN and the remote UE. It is preferable to provide the RRC corresponding to the SRB. In a case where the DC is configured for the SRB, only the MN termination bearer may be configured. The DC of the SRB is enabled.

To the protocol stack between the MN and the relay UE #S, it is preferable to appropriately apply the configuration disclosed in FIG. 55.

In this way, the remote UE connected to the single gNB with the two paths is enabled to communicate with the NW via the relay UE.

A method for configuring a DC in which the remote UE is connected to the single gNB with the two paths in the communication between the remote UE and the NW performed via the relay UE is disclosed.

A case is disclosed where the remote UE configures the DC using the MN and the relay UE #S that is a substitute for the SN. A case is disclosed where the remote UE is connected to the MgNB via the relay UE #1 with the single path, the remote UE is connected to the relay UE #S with another path, and the relay UE #S is connected to the MgNB.

The MN configures the DC with respect to the remote UE. The MN configures the DC with respect to the RB between the MN and the remote UE. The RB may be used for the communication between the remote UE and the MN. The RB may be the SRB and/or the DRB. For example, the SRB may be the SRB 2.

The MN configures the RLC bearer of the Uu for the DC between the MN and the relay UE #1. The configuration is used for the DC configuration for the RB between the MN and the remote UE. If the RLC bearer of the Uu for the DC is not modified from an existing RLC bearer of the Uu, new configuration need not be performed.

The MN configures the SL bearer for the DC between the relay UE #1 and the remote UE. The SL bearer for the DC may be the single SL bearer. The SL bearer may be the SL bearer for the MN. The SL bearer may be the SL RLC bearer.

The MN configures the RLC bearer of the Uu for the DC with respect to the relay UE #S. The RLC bearer of the Uu for the DC may be the RLC bearer between the MN and the relay UE #S.

The MN configures the SL bearer for the DC between the relay UE #S and the remote UE. The SL bearer for the DC may be the single SL bearer. The SL bearer may be the SL bearer for the SN. The SL bearer may be the SL RLC bearer.

It is preferable that the relay UE #1 and the MN be RRC-connected. It is preferable that the relay UE #S be RRC-connected to the MN. It is preferable that the remote UE and the MN be RRC-connected. Furthermore, the MN may start the DC configuration for the remote UE, in a state where the remote UE is RRC-connected to the MN. The remote UE in which the DC is configured is connected to the CN via the MN in the C-Plane.

The MN transmits a DC configuration request to the RB for the communication between the remote UE and the MN, to the relay UE #S. The DC configuration request may be a request for adding a function as the SN. It is preferable to transmit the addition request using Xn signaling. The request may be transmitted using the F1 signaling. The request may be transmitted using the S-Node addition request message.

As information included in the DC configuration request, it is preferable to appropriately apply the 17 information examples included in the addition request of the SN disclosed above. It is preferable to replace the SN in the information example with the relay UE #S. It is preferable to replace the relay UE in the information example with the relay UE #1 and/or the relay UE #S. In a case where the relay UE is assumed as the relay UE #S, the relay #S that functions as the SN may be the information for the DC configuration with the remote UE.

Furthermore, among the 17 information examples included in the addition request of the SN disclosed above, the information about the relay UE #1 and/or the relay UE #S in (1) may include a measurement result of the relay UE #1 and/or the relay UE #S by the remote UE. Furthermore, a measurement result of the MN by the relay UE #1 and/or the relay UE #S may be included.

In this way, the MN can transmit the DC configuration request to the relay UE #S. Furthermore, by receiving the DC configuration request from the MN, for example, the relay UE #S can recognize which remote UE the DC is for. The relay UE #S performs the configuration for the DC as the SN using the information received from the MN.

The MN transmits the configuration for the DC to the relay UE #S. For the configuration for the DC, it is preferable to appropriately apply the configuration for the DC from the MN to the relay UE #S in a case where the remote UE is directly connected to the MgNB with the single path, the remote UE is connected to the relay UE #S with another path, and the relay UE #S is connected to the MgNB.

The MN configures the SL bearer between the remote UE and the relay UE #S, with respect to the relay UE #S. In a case where there is an existing SL bearer between the remote UE and the relay UE #S, the SL bearer may be modified. The configuration of the SL bearer may be configuration for modifying the SL bearer. For the configuration for the SL bearer, it is preferable to appropriately apply the configuration for the SL bearer from the MN to the relay UE #S in a case where the remote UE is directly connected to the MgNB with the single path, the remote UE is connected to the relay UE #S with another path, and the relay UE #S is connected to the MgNB.

The MN is Xn- or F1-connected to the relay UE #S. The MN transmits configuration information used for the connection, to the relay UE #S. The configuration information is, for example, a GTP-u TEID, a TNL address (IP address), or the like. In this way, the MN can exchange data by the Xn or F1, not the Uu, with the relay UE #S.

The relay UE #S may configure the DC for the remote UE. The relay UE #S may perform the configuration for the DC between the relay UE #S and the remote UE, for the remote UE. The relay UE #S may configure the DC using the information included in the DC configuration request message received from the MN. The DC configuration for the remote UE may be the SL RRC configuration between the remote UE and the relay UE #S. The SL RRC configuration may be, for example, the SL RLC bearer configuration.

The relay UE #S transmits a response message to the DC configuration request, to the MN. In a case where the relay UE #S performs DC configuration, the relay UE #S transmits a DC configuration request acknowledgment response message to the MN. It is preferable to perform transmission using the Xn signaling. The request may be transmitted using the F1 signaling. The S-Node addition request acknowledge message may be used as the DC configuration request acknowledgment response message. Alternatively, a new message may be provided. For example, the Relay (DC) request acknowledge message may be provided. As the information included in the DC configuration request response message, information included in the SN addition request response message disclosed above may be appropriately applied.

In a case where the relay UE #S cannot perform the DC configuration, the relay UE #S transmits a DC configuration request rejection response message to the MN. It is preferable to perform transmission using the Xn signaling. The request may be transmitted using the F1 signaling. The S-Node addition request reject message may be used as the DC configuration request rejection response message. Alternatively, a new message may be provided.
For example, the Relay (DC) request reject message may be provided. A notification of the message including the information about the remote UE and the cause information may be provided.

The MN transmits the configuration for the DC to the relay UE #1. For the configuration for the DC, it is preferable to appropriately apply the configuration for the DC from the MN to the relay UE #1, disclosed in the fifth embodiment.

The MN transmits the configuration for the DC to the remote UE. Five information examples included in the configuration for the DC are disclosed.
(1) Information about the RB.
(2) Information about the RLC bearer of the Uu.
(3) Identifier of the SN.
(4) Information about ADP configuration.
(5) Combination of (1) to (4) .

As the five pieces of information included in the configuration for the DC, it is preferable to appropriately apply the information example included in the configuration for the DC disclosed above.

Note that, the information about the RLC bearer of the Uu in (2) need not be provided.

Note that, the identifier of the SN in (3) may be omitted. The identifier of the SN may be an identifier of the relay UE #S.

The MN configures the SL bearers between the remote UE and the relay UE #1 and between the remote UE and the relay UE #S, with respect to the remote UE. In a case where there is an existing SL bearer between the remote UE and the relay UE #1 and/or between the remote UE and the relay UE #S, the SL bearer may be modified. The configuration of the SL bearer may be configuration for modifying the SL bearer. Three configuration information examples of the SL bearer are disclosed.
(1) Information about the RLC bearer of the SL.
(2) Information about the ADP configuration of the SL.
(3) Combination of (1) and (2).

As the configuration information of the SL bearer, it is preferable to appropriately apply the configuration information example of the SL bearer disclosed above.

As the configuration of the SL bearer for the DC, the SL bearer between the remote UE and the relay UE #1 may be the SL bearer for the MN. The SL bearer between the remote UE and the relay UE #S may be the SL bearer for the SN.

The configuration of the SL bearer may be included in the configuration for the DC. The configuration information of the SL bearer may be included in the configuration information for the DC.

The MN does not need to configure the SL RB with respect to the remote UE. The information about the SL RB need not be transmitted. The configuration of the SL PDCP and the SL SDAP need not be performed. The MN may configure the two SL bearers for the DC, with respect to the remote UE. The configuration of the two SL bearers for the DC may be the configuration for the SL bearer for the MN and the SL bearer for the SN.

In a case where the MN performs the configuration for the DC with respect to the remote UE and/or the configuration of the SL bearers between the remote UE and the relay UE #1 and between the remote UE and the relay UE #S, the MN may use the configuration information of the SL bearer between the relay UE #S and the remote UE received from the SN. It is possible to consider the load status or the like of the SN. For example, the MN may assume that the configuration information of the SL bearer between the remote UE and the relay UE #S be the same as the configuration information of the SL bearer between the remote UE and the relay UE #S received from the relay UE #S. The configuration of the SL bearer of the remote UE is the same as that of the relay UE #S, and it is possible to reduce malfunctions in the SL communication.

The remote UE that has received the configuration information of the SL bearer for the DC from the MN establishes PC5 connection with the relay UE #S. The remote UE that has established the PC5 connection with the relay UE #S configures the SL bearer for the DC between the remote UE and the relay UE #S. The relay UE #S that has established the PC5 connection with the remote UE configures the SL bearer for the DC between the remote UE and the relay UE #S. The remote UE may notify the relay UE #S of the SL RRC configuration. The relay UE #S may notify the remote UE of the SL RRC configuration.

The data communication between the remote UE and the NW is performed using the MCG bearer between the remote UE and the MN via the relay UE #1, the SCG bearer between the remote UE and the MN via the relay UE #S, and the split bearers between the remote UE and the MN via the relay UE #1 and between the remote UE and the MN via the relay UE #S.

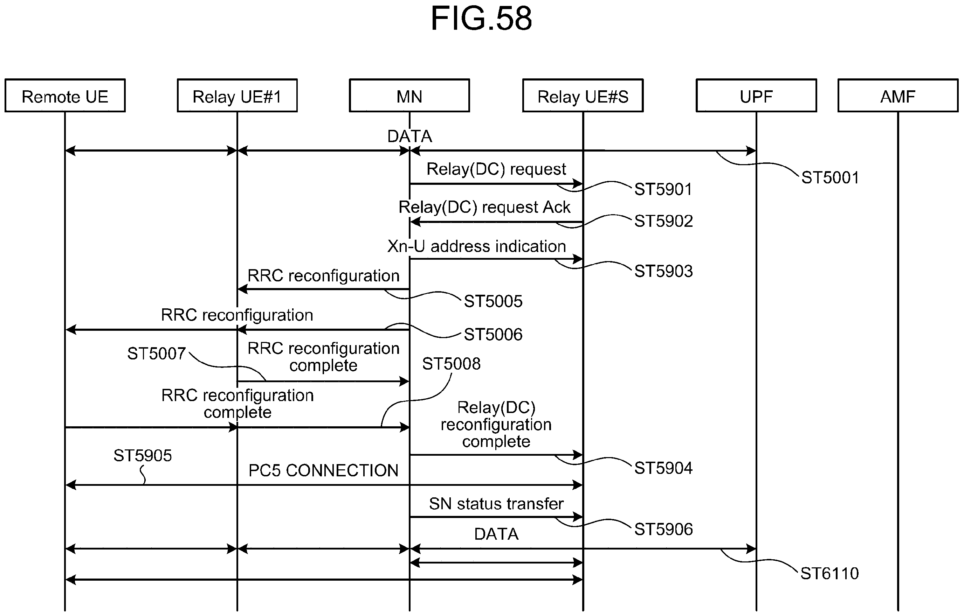

FIG. 58 is a sequence diagram illustrating an example of the method for configuring the DC in which the remote UE is connected to the single gNB with the two paths, according to the sixth embodiment. A case is disclosed where the remote UE configures the DC using the MN and the relay UE #S that is a substitute for the SN. A case is disclosed where the remote UE is connected to the MgNB via the relay UE #1 with the single path, the remote UE is connected to the relay UE #S with another path, and the relay UE #S is connected to the MgNB. In FIG. 58, steps common to those in FIGS. 47 and 56 are denoted by the same step numbers, and common description is omitted. In step ST5001, data communication is performed between the remote UE, the relay UE #1, the MN, and the UPF.

The MN determines to configure the DC with respect to the remote UE. For example, the MN determines the relay UE #S used for the DC, from the measurement result of the remote UE.

In steps ST5901 and ST5902, the DC configuration request and the DC configuration request response are exchanged between the MN and the relay UE #S. As a result, the relay UE #S performs the DC configuration to the remote UE.

In steps ST5005 and ST5007, exchange of the configuration for the DC and the configuration of the SL bearer and exchange of the DC configuration response and the SL bearer configuration response are performed between the MN and the relay UE #1. By receiving the configuration for the DC and the SL bearer configuration from the MN, the relay UE #1 can perform the configuration for the DC between the MN and the relay UE #1 and the configuration of the SL bearer between the remote UE and the relay UE #1.

In steps ST5006 and ST5008, the exchange of the configuration for the DC and the configuration of the SL bearer and the exchange of the DC configuration response and the SL bearer configuration response are performed between the MN and the remote UE. As the configuration about the information of the SL bearer configuration, the RRC configuration information received from the relay UE #S may be used. By receiving the configuration for the DC and the SL bearer configuration from the MN, the remote UE can perform the configuration for the DC between the MN and the remote UE, the configuration of the SL bearer between the remote UE and the relay UE #1, and the configuration of the SL bearer between the remote UE and the relay UE #S.

In this way, the DC is performed between the remote UE, the MN via the relay UE #1, and the relay UE #S. That is, in step ST6110, data communication is performed between the remote UE, the relay UE #1, the relay UE #S, the MN and the UPF. The configurable DC may be only the MN termination bearer. The configuration of the relay UE #S can be simplified without directly connecting the relay UE #S with the CN. For example, in a case of the MN termination SCG bearer, data communication is performed between the remote UE, the relay UE #S, the MN via the relay UE #1, and the UPF. For example, in a case of the MN termination split bearer, data communication is performed between the remote UE, the relay UE #S, the MN via the relay UE #1, and the UPF.

In this way, the remote UE can configure the DC that connects to the MgNB and the relay UE #S.

As in the present embodiment, the DC is enabled in the indirect communication between the remote UE and the NW via the relay UE. As a result, performance improvement such as high speed and large capacity, low delay, or high reliability is achieved. Furthermore, in the indirect communication between the remote UE and the NW via the relay UE, the DC is enabled without using a plurality of RAN nodes. In a case of a situation where the remote UE cannot directly or indirectly connect to the plurality of RAN nodes, the DC is enabled. Furthermore, the relay UE does not need to connect to the plurality of RAN nodes, since the DC is for the remote UE.

In the present disclosure, an operation of the multicast using the IAB base station may be applied to the communication between the remote UE and the gNB via the relay UE, for example, multicast from the gNB to the remote UE via the relay UE. The operation of the BAP layer may be performed, for example, with an adaptation protocol. As a result, for example, radio resources in the multicast from the gNB to the remote UE can be reduced.

In the present disclosure, a combination of the operation of the multicast using the IAB base station and the communication between the remote UE and the gNB via the relay UE, for example, the communication from the gNB to the remote UE via the relay UE may be used. As a result, for example, it is possible to improve flexibility of the communication system. The communication from the gNB to the remote UE may be broadcast, groupcast, or unicast. For example, a combination of the multicast using the IAB base station and the groupcast from the gNB to the remote UE can improve the efficiency of the communication system.

In the present disclosure, the gNB or the cell is described. However, the gNB or the cell may be used, unless otherwise specified.

The above-described embodiments and modifications thereof are merely examples, and the embodiments and modifications thereof can be freely combined. In addition, any component of the embodiments and modifications thereof can be appropriately changed or omitted.

For example, in the above-described embodiments and modifications thereof, the subframe is an example of a time unit of communication in the fifth generation communication system. The subframe may be a scheduling unit. In the above-described embodiments and modifications thereof, the processes described as those performed on a per subframe basis may be performed on a per TTI basis, on a per slot basis, on a per subslot basis, or on a per mini-slot basis.

For example, the methods disclosed in the above-described embodiments and modifications thereof may be applied not only to a vehicle-to-everything (V2X) service but also to a service using the SL communication. For example, the methods may be applied to the SL communication used in various services such as proximity-based service, public safety, communication between wearable terminals, and device-to-device communication in a factory.

While the present disclosure has been described in detail, the above description is in all aspects illustrative and not restrictive. It is understood that numerous modifications not illustrated can be devised.

### Reference Signs List

200, 210 communication system; 202 communication terminal device (user equipment); 203, 207, 213, 217, 223-1, 224-1, 224-2, 226-1, 226-2, 750 base station device (base station); 204 MME/S-GW unit (MME unit); 204a MME; 214 AMF/SMF/UPF unit (5GC unit); 218 central unit; 219 distributed unit; 301, 403 protocol processing unit; 302 application unit; 303, 404 transmission data buffer unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 506, 526 control unit; 401 EPC communication unit; 402 other-base-station communication unit; 412 5GC communication unit; 501 PDN GW communication unit; 502, 522 base station communication unit; 503, 523 user plane communication unit; 504 HeNBGW communication unit; 505, 525 control plane control unit; 505-1, 525-1 NAS security unit; 505-2 SAE bearer control unit; 505-3, 525-3 idle state mobility management unit; 521 data network communication unit; 525-2 PDU session control unit; 527 session management unit; 751-1 to 751-8 beam; 3110, 3130, 3220, 3221, 3320 BAP-PDU; 3115, 3215 functional unit; and 3125 routing functional unit.

## Claims

1. A communication system comprising:
a first base station to operate as a donor for integrated access and backhaul, the first base station including a central unit and a distributed unit; and
one or more second base stations to operate as nodes of the integrated access and backhaul, wherein
the central unit performs address configuration for multicasting data from the central unit toward a communication terminal in a backhaul adaptation layer in which data transmitted and received by the communication terminal is routed, on the distributed unit and the second base stations.

2. The communication system according to claim 1, wherein
the central unit allocates a multicast address in the backhaul adaptation layer, to the second base station connected to the communication terminal.

3. The communication system according to claim 1, wherein
the central unit allocates a multicast address in the backhaul adaptation layer, to the second base station to which another second base station is not connected, among the second base stations to which the communication terminal is connected.

4. The communication system according to claim 1, wherein
the central unit allocates the same address as a multicast address in the backhaul adaptation layer, to each of a plurality of the second base stations having the same connection destination.

5. The communication system according to claim 1, wherein
the central unit allocates a multicast address in the backhaul adaptation layer, to the second base station to which a communication terminal that receives multicast data is connected.

6. The communication system according to claim 1, wherein
the central unit allocates the same address, as a multicast address in the backhaul adaptation layer, to the second base stations in the same layer with reference to the distributed unit or the communication terminal.

7. The communication system according to claim 1, wherein
the central unit allocates the same address, as a multicast address in the backhaul adaptation layer, to a plurality of the second base stations that form a path to a communication terminal that is a multicast data transmission destination.

8. The communication system according to claim 1, wherein
in a case where there are a plurality of conditions to allocate the same address as a multicast address in the backhaul adaptation layer,
the central unit allocates two or more multicast addresses respectively corresponding to the conditions satisfied, to the second base station that satisfies two or more of the conditions.

9. The communication system according to any one of claims 1 to 8, wherein
the central unit duplicates data to be a multicast transmission target.

10. The communication system according to any one of claims 1 to 9, wherein
in a case of receiving multicast data, to be transmitted to the same communication terminal, from different paths, the second base station transfers multicast data received from any one of the paths.

11. A communication system comprising:
a first base station and a second base station to configure a fifth-generation radio access system;
a first communication terminal to be connected to the first base station and the second base station; and
a second communication terminal to perform, between the first communication terminal and the second communication terminal, terminal-to-terminal communication in which communication terminals directly communicate with each other and to be connected to the first base station and the second base station simultaneously via the first communication terminal.

12. A communication system comprising:
a first base station and a second base station to configure a fifth-generation radio access system;
a first communication terminal to be connected to the first base station or the second base station; and
a second communication terminal to perform, between the first communication terminal and the second communication terminal, terminal-to-terminal communication in which communication terminals directly communicate with each other, to be connected to the first base station or the second base station via the first communication terminal, and to be connected to the first base station or the second base station not via the first communication terminal.

13. The communication system according to claim 12, wherein
the second communication terminal is directly connected to the first base station or the second base station that is not connected to the first communication terminal.

14. The communication system according to claim 12, comprising:
a third communication terminal to be connected to the first base station or the second base station that is not connected to the first communication terminal, wherein
the second communication terminal performs, between the second communication terminal and the third communication terminal, the terminal-to-terminal communication and is connected to the first base station or the second base station via the third communication terminal.

15. A communication system comprising:
a base station to configure a fifth-generation radio access system;
a first communication terminal to be connected to the base station; and
a second communication terminal to perform, between the first communication terminal and the second communication terminal, terminal-to-terminal communication in which communication terminals directly communicate with each other, to be connected to the base station via the first communication terminal, and to be connected to the base station not via the first communication terminal.

16. The communication system according to claim 15, wherein
the second communication terminal is connected to the base station via the first communication terminal and is directly connected to the base station.

17. The communication system according to claim 15, comprising:
a third communication terminal to be connected to the base station, wherein
the second communication terminal is connected to the base station via the first communication terminal and is connected to the base station via the third communication terminal.

18. A base station that includes a central unit and a distributed unit and operates as a donor for integrated access and backhaul, wherein
the base station performs address configuration for multicasting data toward a communication terminal in a backhaul adaptation layer in which data transmitted and received by the communication terminal is routed, on one or more other base stations that operate as nodes of the integrated access and backhaul.
